(19) Europäisches Patentamt
European Patent Office
Office européen des brevets

(11) EP 3 151 240 B1

(12) **EUROPEAN PATENT SPECIFICATION**

(45) Date of publication and mention of the grant of the patent:
**21.12.2022 Bulletin 2022/51**

(21) Application number: **15800260.0**

(22) Date of filing: **22.05.2015**

(51) International Patent Classification (IPC):
***G10L 19/008*** (2013.01) ***G06F 13/00*** (2006.01)
***G10K 15/02*** (2006.01) ***G10L 19/00*** (2013.01)
***G11B 20/12*** (2006.01) ***H04N 21/439*** (2011.01)

(52) Cooperative Patent Classification (CPC):
G10L 19/008; **G11B 27/034; H04N 21/233; H04N 21/439; H04N 21/8106; H04N 21/85406;** G10K 15/02; G10L 19/167; G11B 20/1217; G11B 2020/10546; H04S 7/30; H04S 2400/11; H04S 2400/15

(86) International application number:
**PCT/JP2015/064673**

(87) International publication number:
**WO 2015/182491 (03.12.2015 Gazette 2015/48)**

(54) **INFORMATION PROCESSING DEVICE AND INFORMATION PROCESSING METHOD**

INFORMATIONSVERARBEITUNGSVORRICHTUNG UND INFORMATIONSVERARBEITUNGSVERFAHREN

DISPOSITIF DE TRAITEMENT D’INFORMATIONS ET PROCÉDÉ DE TRAITEMENT D’INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 JP 2014113485**
**06.06.2014 JP 2014117329**
**27.06.2014 JP 2014133131**
**01.10.2014 JP 2014203517**

(43) Date of publication of application:
**05.04.2017 Bulletin 2017/14**

(73) Proprietor: **Sony Group Corporation**
**Tokyo 108-0075 (JP)**

(72) Inventors:
- **HIRABAYASHI, Mitsuhiro**
**Tokyo 108-0075 (JP)**
- **CHINEN, Toru**
**Tokyo 108-0075 (JP)**
- **YAMAMOTO, Yuki**
**Tokyo 108-0075 (JP)**
- **SHI, Runyu**
**Tokyo 108-0075 (JP)**

(74) Representative: **D Young & Co LLP**
**120 Holborn**
**London EC1N 2DY (GB)**

(56) References cited:
**EP-A1- 2 146 522**
**WO-A1-2012/046437**
**WO-A1-2014/025752**
**WO-A2-2013/006338**
**JP-A- 2012 033 243**
**JP-A- 2013 545 391**
**JP-A- 2014 096 766**
**US-A1- 2004 146 285**
**US-A1- 2011 069 934**

- **ANONYMOUS: "Text of ISO/IEC IS 23009-1 Media Presentation Description and Segment Formats", 98. MPEG MEETING; 28-11-2011 - 2-12-2012; GENEVA; (MOTION PICTURE EXPERT GROUP OR ISO/IEC JTC1/SC29/WG11),, no. N12329, 6 January 2012 (2012-01-06), XP030018824,**
- **"Information technology Dynamic adaptive streaming over HTTP (DASH) Part 1: Media presentation description and segment formats", , 15 May 2014 (2014-05-15), XP055214031, Geneva, CH Retrieved from the Internet: URL:https://mpeg.chiariglione.org/standards/mpeg-dash [retrieved on 2015-09-17]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 151 240 B1

- JURGEN HERRE: 'MPEG-H 3D Audio-The New Standard for Coding of Immersive Spatial Audio' JOURNAL OF SELECTED TOPICS IN SIGNAL PROCESSING vol. 9, no. 5, 01 August 2015, ISSN 1932-4553 pages 770 - 779, XP055243182

## Description

### TECHNICAL FIELD

The present disclosure relates to an information processing apparatus and an information processing method, and more particularly, to an information processing apparatus and an information processing method which are capable of improving the efficiency of acquiring a predetermined type of audio data among a plurality of types of audio data.

### BACKGROUND ART

One of the recent most popular streaming services is the over-the-top video (OTT-V) via the Internet. The moving picture experts group phase-dynamic adaptive streaming over HTTP (MPEG-DASH) is widely used as its underlying technology (see, for example, Non-Patent Document 1).

In MPEG-DASH, a delivery server prepares a group of video data having different screen sizes and coding rates for one video content item, and a playback terminal requests a group of video data having an optimal screen size and coding rate depending on transmission line conditions, thus adaptive streaming delivery is achieved.

US 2011/0069934 A1 describes an apparatus and method for providing an object based audio file, and an apparatus and method for playing back the object based audio file.

### CITATION LIST

### NON-PATENT DOCUMENT

Non-Patent Document 1: MPEG-DASH (Dynamic Adaptive Streaming over HTTP)(URL:http://mpeg.chiariglione.org/standards/mpeg-das h/media-presentation-description-and-segment-formats/text -isoiec-23009-12012-dam-1)

### SUMMARY OF THE INVENTION

### PROBLEMS TO BE SOLVED BY THE INVENTION

However, no consideration is given to an improvement in efficiency of acquiring a predetermined type of audio data among a plurality of types of audio data of a video content.

The present disclosure has been made in view of the above-mentioned circumstances and is capable of improving the efficiency of acquiring a predetermined type of audio data among a plurality of types of audio data.

### SOLUTIONS TO PROBLEMS

The invention is set out solely in the appended claims. In the present disclosure, embodiments according to the invention are solely the specific combinations of features as defined in the claims.

In some examples of the present disclosure, the file in which the plurality of types of audio data are divided into the plurality of tracks depending on the types and the tracks are arranged is generated.

Note that the information processing apparatuses of the claims can be implemented by causing a computer to execute a program.

Further, in order to achieve the information processing apparatuses according to the claims, a program executed by a computer can be provided by transmitting the program via a transmission medium, or by recording the program in a recording medium.

### EFFECTS OF THE INVENTION

According to a first aspect of the present disclosure, audio data can be acquired. Further, according to the first aspect of the present disclosure, a predetermined type of audio data among a plurality of types of audio data can be acquired efficiently.

According to the second aspect of the present disclosure, a file can be generated. Further, according to the second aspect of the present disclosure, a file that improves the efficiency of acquiring a predetermined type of audio data among a plurality of types of audio data can be generated.

BRIEF DESCRIPTION OF DRAWINGS

Fig. 1 is a diagram illustrating an outline of a first example of an information processing system to which the present disclosure is applied.
Fig. 2 is a diagram showing an example of a file.
Fig. 3 is a diagram illustrating an object.
Fig. 4 is a diagram illustrating object position information.
Fig. 5 is a diagram illustrating image frame size information.
Fig. 6 is a diagram showing a structure of an MPD file.
Fig. 7 is a diagram showing a relationship among "Period", "Representation", and "Segment".
Fig. 8 is a diagram showing a hierarchical structure of an MPD file.
Fig. 9 is a diagram showing a relationship between a structure of an MPD file and a time axis.
Fig. 10 is a diagram illustrating an exemplary description of the MPD file.
Fig. 11 is a block diagram showing a configuration example of a file generation device.
Fig. 12 is a flowchart illustrating file generation process of the file generation device.
Fig. 13 is a block diagram showing a configuration example of a streaming playback unit.
Fig. 14 is a flowchart illustrating a streaming playback process of the streaming playback unit.
Fig. 15 is a diagram illustrating an exemplary description of the MPD file.
Fig. 16 is a diagram illustrating another exemplary description of the MPD file.
Fig. 17 is a diagram showing an arrangement example of an audio stream.
Fig. 18 is a diagram showing an exemplary description of gsix.
Fig. 19 is a diagram showing an example of information indicating a correspondence relation between a sample group entry and object ID.
Fig. 20 is a diagram showing an exemplary description of AudioObjectSampleGroupEntry.
Fig. 21 is a diagram showing an exemplary description of a type assignment box.
Fig. 22 is a diagram illustrating an outline of a second example of the information processing system to which the present disclosure is applied.
Fig. 23 is a block diagram showing a configuration example of the streaming playback unit of the information processing system to which the present disclosure is applied.
Fig. 24 is a diagram illustrating a method of determining a position of an object.
Fig. 25 is a diagram illustrating a method of determining a position of an object.
Fig. 26 is a diagram illustrating a method of determining a position of an object.
Fig. 27 is a diagram showing a relationship between a horizontal angle $\theta_{Ai}$ and a horizontal angle $\theta_{Ai}'$.
Fig. 28 is a flowchart illustrating the streaming playback process of the streaming playback unit shown in Fig. 23.
Fig. 29 is a flowchart illustrating details of a position determination process shown in Fig. 28.
Fig. 30 is a flowchart illustrating details of a horizontal angle $\theta_{Ai}'$ estimation process shown in Fig. 29.
Fig. 31 is a diagram illustrating an outline of tracks of a 3D audio file format of MP4.
Fig. 32 is a diagram showing a structure of a moov box.
Fig. 33 is a diagram illustrating an outline of tracks according to a first embodiment to which the present disclosure is applied.
Fig. 34 is a diagram showing an exemplary syntax of a sample entry of a base track shown in Fig. 33.
Fig. 35 is a diagram showing an exemplary syntax of a sample entry of a channel audio track shown in Fig. 33.
Fig. 36 is a diagram showing an exemplary syntax of a sample entry of an object audio track shown in Fig. 33.
Fig. 37 is a diagram showing an exemplary syntax of a sample entry of an HOA audio track shown in Fig. 33.
Fig. 38 is a diagram showing an exemplary syntax of a sample entry of an object metadata track shown in Fig. 33.
Fig. 39 is a diagram showing a first example of a segment structure.
Fig. 40 is a diagram showing a second example of the segment structure.
Fig. 41 is a diagram showing an exemplary description of a level assignment box.
Fig. 42 is a diagram showing an exemplary description of the MPD file in the first embodiment to which the present disclosure is applied.
Fig. 43 is a diagram showing a definition of Essential Property.
Fig. 44 is a diagram illustrating an outline of an information processing system in the first embodiment to which the present disclosure is applied.
Fig. 45 is a block diagram showing a configuration example of a file generation device shown in Fig. 44.
Fig. 46 is a flowchart illustrating a file generation process of the file generation device shown in Fig. 45.
Fig. 47 is a block diagram showing a configuration example of a streaming playback unit implemented by a video playback terminal shown in Fig. 44.

Fig. 48 is a flowchart illustrating a channel audio playback process of the streaming playback unit shown in Fig. 47.

Fig. 49 is a flowchart illustrating an object specifying process of the streaming playback unit shown in Fig. 47.

Fig. 50 is a flowchart illustrating a specific object audio playback process of the streaming playback unit shown in Fig. 47.

Fig. 51 is a diagram illustrating an outline of tracks in a second embodiment to which the present disclosure is applied.

Fig. 52 is a diagram showing an exemplary syntax of a sample entry of a base track shown in Fig. 51.

Fig. 53 is a diagram showing a structure of a base sample.

Fig. 54 is a diagram showing an exemplary syntax of a base sample.

Fig. 55 is a diagram showing an example of data of an extractor.

Fig. 56 is a diagram illustrating an outline of tracks in a third embodiment to which the present disclosure is applied.

Fig. 57 is a diagram illustrating an outline of tracks in a fourth embodiment to which the present disclosure is applied.

Fig. 58 is a diagram showing an exemplary description of an MPD file in the fourth embodiment to which the present disclosure is applied.

Fig. 59 is a diagram illustrating an outline of an information processing system in the fourth embodiment to which the present disclosure is applied.

Fig. 60 is a block diagram showing a configuration example of the file generation device shown in Fig. 59.

Fig. 61 is a flowchart illustrating a file generation process of the file generation device shown in Fig. 60.

Fig. 62 is a block diagram showing a configuration example of a streaming playback unit implemented by a video playback terminal shown in Fig. 59.

Fig. 63 is a flowchart illustrating an example of a channel audio playback process of the streaming playback unit shown in Fig. 62.

Fig. 64 is a flowchart illustrating a first example of an object audio playback process of the streaming playback unit shown in Fig. 62.

Fig. 65 is a flowchart illustrating a second example of the object audio playback process of the streaming playback unit shown in Fig. 62.

Fig. 66 is a flowchart illustrating a third example of the object audio playback process of the streaming playback unit shown in Fig. 62.

Fig. 67 is a diagram showing an example of an object selected on the basis of a priority.

Fig. 68 is a diagram illustrating an outline of tracks in a fifth embodiment to which the present disclosure is applied.

Fig. 69 is a diagram illustrating an outline of tracks in a sixth embodiment to which the present disclosure is applied.

Fig. 70 is a diagram showing a hierarchical structure of 3D audio.

Fig. 71 is a diagram illustrating a first example of a Web server process.

Fig. 72 is a flowchart illustrating a track division process of a Web server.

Fig. 73 is a diagram illustrating a first example of a process of an audio decoding processing unit.

Fig. 74 is a flowchart illustrating details of a first example of a decoding process of the audio decoding processing unit.

Fig. 75 is a diagram illustrating a second example of a process of the audio decoding processing unit.

Fig. 76 is a flowchart illustrating details of the second example of the decoding process of the audio decoding processing unit.

Fig. 77 is a diagram illustrating a second example of the Web server process.

Fig. 78 is a diagram illustrating a third example of the process of the audio decoding processing unit.

Fig. 79 is a flowchart illustrating details of the third example of the decoding process of the audio decoding processing unit.

Fig. 80 is a diagram showing a second example of syntax of Config information disposed in a base sample.

Fig. 81 is an exemplary syntax of Config information for Ext element shown in Fig. 80.

Fig. 82 is a diagram showing an exemplary syntax of Config information for Extractor shown in Fig. 81.

Fig. 83 is a diagram showing a second example of syntax of data of a frame unit disposed in a base sample.

Fig. 84 is a diagram showing an exemplary syntax of data of Extractor shown in Fig. 83.

Fig. 85 is a diagram showing a third example of syntax of Config information disposed in a base sample.

Fig. 86 is a diagram showing a third example of syntax of data of a frame unit disposed in a base sample.

Fig. 87 is a diagram showing a configuration example of an audio stream in a seventh embodiment of the information processing system to which the present disclosure is applied.

Fig. 88 is a diagram illustrating an outline of tracks in the seventh embodiment.

Fig. 89 is a flowchart illustrating a file generation process in the seventh embodiment.

Fig. 90 is a flowchart illustrating an audio playback process in the seventh embodiment.

Fig. 91 is a diagram illustrating an outline of tracks in an eighth embodiment of the information processing system to which the present disclosure is applied.

Fig. 92 is a diagram showing a configuration example of an audio file.

Fig. 93 is a diagram showing another configuration example of the audio file.
Fig. 94 is a diagram showing still another configuration example of the audio file.
Fig. 95 is a block diagram showing a configuration example of hardware of a computer.

MODE FOR CARRYING OUT THE INVENTION

Modes for carrying out the present disclosure (hereinafter referred to as embodiments) will be described below in the following order.

0. Premise of the present disclosure (Figs. 1 to 30)
1. First embodiment (Figs. 31 to 50)
2. Second embodiment (Figs. 51 to 55)
3. Third embodiment (Fig. 56)
4. Fourth embodiment (Figs. 57 to 67)
5. Fifth embodiment (Fig. 68)
6. Sixth embodiment (Fig. 69)
7. Explanation of Hierarchical Structure of 3D Audio (Fig. 70)
8. Explanation of First Example of Web Server Process (Figs. 71 and 72)
9. Explanation of First Example of Process of Audio Decoding Processing Unit (Figs. 73 and 74)
10. Explanation of Second Example of Process of Audio Decoding Processing Unit (Figs. 75 and 76)
11. Explanation of Second Example of Web Server Process (Fig. 77)
12. Explanation of Third Example of Process of Audio Decoding Processing Unit (Figs. 78 and 79)
13. Second Example of Syntax of Base Sample (Figs. 80 to 84)
14. Third Example of Syntax of Base Sample (Figs. 85 and 86)
15. Seventh embodiment (Figs. 87 to 90)
16. Eighth embodiment (Figs. 91 to 94)
17. Ninth embodiment (Fig. 95)

<Premise of Present Disclosure>

(Outline of First Example of Information Processing System)

Fig. 1 is a diagram illustrating an outline of a first example of an information processing system to which the present disclosure is applied.
An information processing system 10 shown in Fig. 1 has a configuration in which a Web server 12, which is connected to a file generation device 11, and a video playback terminal 14 are connected via the Internet 13.
In the information processing system 10, the Web server 12 delivers (tiled streaming) image data of video content to the video playback terminal 14 in units of tiles by a method compliant with MPEG-DASH.
Specifically, the file generation device 11 acquires the image data of video content and encodes the image data in units of tiles to generate a video stream. The file generation device 11 processes the video stream of each tile into a file format at time intervals ranging from several seconds to approximately ten seconds, which is called a segment. The file generation device 11 uploads the resulting image file of each tile to the Web server 12.
Further, the file generation device 11 acquires audio data of video content for each object (to be described in detail later) and encodes the image data in units of objects to generate an audio stream. The file generation device 11 processes the audio stream of each object into a file format in units of segments, and uploads the resulting audio file of each object to the Web server 12.
Note that the object is a sound source. The audio data of each object is acquired through a microphone or the like attached to the object. The object may be an object such as a fixed microphone stand, or may be a moving body such as a person.
The file generation device 11 encodes audio metadata including object position information (audio position information) indicating the position of each object (the position at which audio data is acquired) and an object ID that is an ID unique to the object. The file generation device 11 processes the encoded data obtained by encoding the audio metadata into a file format in unit of segments, and uploads the resulting audio metafile to the Web server 12.
Further, the file generation device 11 generates a media presentation description (MPD) file (control information) managing an image file and audio file and including image frame size information that indicates the frame size of images of video content and tile position information that indicates the position of each tile on an image. The file generation device 11 uploads the MPD file to the Web server 12.
The Web server 12 stores the image file, audio file, audio metafile, and MPD file which are uploaded from the file generation device 11.

In the example shown in Fig. 1, the Web server 12 stores a segment group of a plurality of segments composed of image files of a tile with a tile ID "1" and a segment group of a plurality of segments composed of image files of a tile with a tile ID "2". The Web server 12 also stores a segment group of a plurality of segments composed of audio files of an object with an object ID "1" and a segment group of a plurality of segments composed of audio files of an object with an object ID "2". Although not shown, a segment group composed of audio metafiles is similarly stored.

Note that a file with a tile ID of i is hereinafter referred to as "tile #i", and an object with an object ID of i is hereinafter referred to as "object #i".

The Web server 12 functions as a transmitter and transmits the stored image file, audio file, audio metafile, MPD file, and the like to the video playback terminal 14 in response to a request from the video playback terminal 14.

The video playback terminal 14 executes, for example, software for control of streaming data (hereinafter referred to as control software) 21, video playback software 22, and client software for hypertext transfer protocol (HTTP) access (hereinafter referred to as access software) 23.

The control software 21 is software to control data delivered via streaming from the Web server 12. Specifically, the control software 21 allows the video playback terminal 14 to acquire the MPD file from the Web server 12.

Further, the control software 21 specifies a tile in a display area on the basis of the display area that is an area in an image used to display a video content indicated by the video playback software 22 and the tile position information included in the MPD file. The control software 21 instructs the access software 23 to issue a request to transmit an image file of the specified tile.

Further, the control software 21 instructs the access software 23 to issue a request to transmit the audio metafile. The control software 21 specifies an object corresponding to an image in the display area, on the basis of the display area, the image frame size information included in the MPD file, and the object position information included in the audio metafile. The control software 21 instructs the access software 23 to issue a request to transmit an audio file of the specified object.

The video playback software 22 is software to play back the image file and audio file acquired from the Web server 12. Specifically, when a user specifies a display area, the video playback software 22 indicates the specified display area to the control software 21. The video playback software 22 decodes the image file and audio file acquired from the Web server 12 in response to the indication, and the video playback software 22 synthesizes and outputs the decoded files.

The access software 23 is software to control communication with the Web server 12 via the Internet 13 using HTTP. Specifically, the access software 23 allows the video playback terminal 14 to transmit the request to transmit the image file, audio file, and audio metafile in response to the instruction from the control software 21. Further, the access software 23 allows the video playback terminal 14 to receive the image file, audio file, and audio metafile transmitted from the Web server 12 in response to the transmission request.

(Example of Tile)

Fig. 2 is a diagram showing an example of a tile.

As shown in Fig. 2, an image of video content is divided into a plurality of tiles. A tile ID that is a sequential number starting from 1 is assigned to each tile. In the example shown in Fig. 2, an image of video content is divided into four tiles #1 to #4.

(Explanation of Object)

Fig. 3 is a diagram illustrating an object.

The example of Fig. 3 illustrates eight audio objects in an image acquired as an audio of video content. An object ID that is a sequential number starting from 1 is assigned to each object. Objects #1 to #5 are moving bodies, and objects #6 to #8 are fixed material bodies. Further, in the example of Fig. 3, the image of video content is divided into 7 (width) $\times$ 5 (height) tiles.

In this case, as shown in Fig. 3, when the user specifies a display area 31 composed of 3 (width) $\times$ 2 (height) tiles, the display area 31 includes only objects #1, #2, and #6. Thus, the video playback terminal 14 acquires and plays back, for example, only the audio files of the objects #1, #2, and #6 from the Web server 12.

The objects in the display area 31 can be specified on the basis of the image frame size information and the object position information as described below.

(Explanation of Object Position Information)

Fig. 4 is a diagram illustrating the object position information.

As shown in Fig. 4, the object position information includes a horizontal angle $\theta_A$ ($-180° \leq \theta_A \leq 180°$), a vertical angle $\gamma_A$ ($-90° \leq \gamma_A \leq 90°$), and a distance $r_A$ ($0 < r_A$) of an object 40. The horizontal angle $\theta_A$ is the angle in the horizontal direction formed by the straight line connecting the object 40 and an origin O and a YZ plane, for example, when a shooting position in the center of an image may be set to the origin (base point) O; the horizontal direction of the image is set to an X direction; the vertical direction of the image is set to a Y direction; and the depth direction perpendicular to the XY plane is set to a Z direction. The vertical angle $\gamma_A$ is the angle in the vertical direction formed by the straight line connecting the object 40 and the origin O and the XZ plane. The distance $r_A$ is the distance between the object 40 and the origin O.

Furthermore, assume herein that the angle of the left and up rotation is set to a positive angle, and the angle of the right and down rotation is set to a negative angle.

(Explanation of Image Frame Size Information)

Fig. 5 is a diagram illustrating the image frame size information.

As shown in Fig. 5, the image frame size information includes a horizontal angle $\theta_{v1}$ of the left end, a horizontal angle $\theta_{v2}$ of the right end, a vertical angle $\gamma_{v1}$ of the upper end, a vertical angle $\gamma_{v2}$ of the lower end, and a distance $r_v$ in the image frame.

The horizontal angle $\theta_{v1}$ is the angle in the horizontal direction formed by the straight line connecting the left end of an image frame and the origin O and the YZ plane, for example, when a shooting position in the center of an image is set to the origin O; the horizontal direction of the image is set to the X direction; the vertical direction of the image is set to the Y direction; and the depth direction perpendicular to the XY plane is set to the Z direction. The horizontal angle $\theta_{v2}$ is the angle in the horizontal direction formed by the straight line connecting the right end of an image frame and the origin O and the YZ plane. Thus, an angle obtained by combining the horizontal angle $\theta_{v1}$ and the horizontal angle $\theta_{v2}$ is a horizontal angle of view.

The vertical angle $\gamma_{V1}$ is the angle formed by the XZ plane and the straight line connecting the upper end of the image frame and the origin O, and the vertical angle $\gamma_{v2}$ is the angle formed by the XZ plane and the straight line connecting the lower end of the image frame and the origin O. An angle obtained by combining the vertical angles $\gamma_{V1}$ and $\gamma_{v2}$ becomes a vertical angle of view. The distance $r_v$ is the distance between the origin O and the image plane.

As described above, the object position information represents the positional relationship between the object 40 and the origin O, and the image frame size information represents the positional relationship between the image frame and the origin O. Thus, it is possible to detect (recognize) the position of each object on the image on the basis of the object position information and the image frame size information. As a result, it is possible to specify an object in the display area 31.

(Explanation of Structure of MPD File)

Fig. 6 is a diagram illustrating the structure of an MPD file.

In the analysis (parsing) of an MPD file, the video playback terminal 14 selects an optimum one among attributes of "Representation" included in "Period" of the MPD file (Media Presentation in Fig. 6).

The video playback terminal 14 acquires a file by referring to a uniform resource locator (URL) or the like of "Initialization Segment" at the head of the selected "Representation", and processes the acquired file. Then, the video playback terminal 14 acquires a file by referring to the URL or the like of the subsequent "Media Segment", and plays back the acquired file.

Note that in the MPD file, the relationship among "Period", "Representation", and "Segment" becomes as shown in Fig. 7. In other words, a single video content item can be managed in a longer time unit than the segment by "Period", and can be managed in units of segments by "Segment" in each "Period". Further, in each "Period", it is possible to manage the video content in units of stream attributes by "Representation".

Thus, the MPD file has a hierarchical structure shown in Fig. 8, starting from the "Period". Further, the structure of the MPD file arranged on the time axis becomes the configuration as shown in Fig. 9. As is clear from Fig. 9, there are a plurality of "Representation" elements in the same segment. The video playback terminal 14 selects any one from among these elements adaptively, and thus it is possible to acquire an image file and audio file in the display area selected by the user and to play back the acquired file.

(Explanation of Description of MPD File)

Fig. 10 is a diagram illustrating the description of an MPD file.

As described above, in the information processing system 10, the image frame size information is included in the MPD file to allow an object in the display area to be specified by the video playback terminal 14. As shown in Fig.

10, Scheme (urn:mpeg:DASH:viewingAngle:2013) used to define new image frame size information (viewing angle) is extended by utilizing a DescriptorType element of Viewpoint, and thus the image frame size information is arranged in an "Adaptation Set" for audio and an "Adaptation Set" for image. The image frame size information may be arranged only in the "Adaptation Set" for image.

Further, the "Representation" for audio metafile is described in the "Adaptation Set" for audio of the MPD file. A URL or the like as information for specifying the audio metafile (audiometadata.mp4) is described in "Segment" of the "Representation". In this case, it is described that the file to be specified in "Segment" is the audio metafile (objectaudiometadata) by utilizing Role element.

The "Representation" for audio file of each object is also described in "Adaptation Set" for audio of the MPD file. A URL or the like as information for specifying the audio file (audioObje1.mp4, audioObje5.mp4) of each object is described in "Segment" of the "Representation". In this case, object IDs (1 and 5) of the objects corresponding to the audio file are also described by extending Viewpoint.

Note that, although not shown, the tile position information is arranged in the "Adaptation Set" for image.

(Configuration Example of File Generation Device)

Fig. 11 is a block diagram showing a configuration example of the file generation device 11 shown in Fig. 1.

The file generation device 11 shown in Fig. 11 includes a screen split processing unit 51, an image coding processing unit 52, an image file generation unit 53, an image information generation unit 54, an audio coding processing unit 55, an audio file generation unit 56, an MPD generation unit 57, and a server upload processing unit 58.

The screen split processing unit 51 of the file generation device 11 splits image data of video content input from the outside into tile units . The screen split processing unit 51 supplies the image information generation unit 54 with the tile position information. Further, the screen split processing unit 51 supplies the image coding processing unit 52 with the image data configured in units of tiles.

The image coding processing unit 52 encodes the image data, which is configured in units of tiles and is supplied from the screen split processing unit 51, for each tile to generate a video stream. The image coding processing unit 52 supplies the image file generation unit 53 with the video stream of each tile.

The image file generation unit 53 processes the video stream of each tile supplied from the image coding processing unit 52 into a file format in units of segments and supplies the MPD generation unit 57 with the resulting image file of each tile.

The image information generation unit 54 supplies the MPD generation unit 57 with the tile position information supplied from the screen split processing unit 51 and with the image frame size information input from the outside as image information.

The audio coding processing unit 55 encodes audio data, which is configured in units of objects of video content input from the outside, for each object, and generates an audio stream. Further, the audio coding processing unit 55 encodes the object position information of each object input from the outside and the audio metadata including the object ID and the like to generate encoded data. The audio coding processing unit 55 supplies the audio file generation unit 56 with the audio stream of each object and the encoded data of the audio metadata.

The audio file generation unit 56 functions as an audio file generation unit, processes the audio stream of each object supplied from the audio coding processing unit 55 into a file format in units of segments, and supplies the MPD generation unit 57 with the resulting audio file of each object.

Further, the audio file generation unit 56 functions as a metafile generation unit, processes the encoded data of audio metadata supplied from the audio coding processing unit 55 into a file format in units of segments, and supplies the MPD generation unit 57 with the resulting audio metafile.

The MPD generation unit 57 determines the URL or the like of the Web server 12 for storing the image file of each tile supplied from the image file generation unit 53. Further, the MPD generation unit 57 determines the URL or the like of the Web server 12 for storing the audio file of each object and the audio metafile which are supplied from the audio file generation unit 56.

The MPD generation unit 57 arranges the image information supplied from the image information generation unit 54 in "AdaptationSet" for an image of the MPD file. Further, the MPD generation unit 57 arranges the image frame size information among the pieces of image information in "AdaptationSet" for audio of the MPD file. The MPD generation unit 57 arranges the URL or the like of the image file of each tile in "Segment" of "Representation" for the image file of the tile.

The MPD generation unit 57 arranges the URL or the like of the audio file of each object in "Segment" of "Representation" for audio file of the object. Further, the MPD generation unit 57 functions as an information generation unit, and arranges a URL or the like as information for specifying an audio metafile in "Segment" of "Representation" for audio metafile. The MPD generation unit 57 supplies the server upload processing unit 58 with the MPD file in which various types of information are arranged as described above, the image file, the audio file, and the audio metafile.

The server upload processing unit 58 uploads the image file of each tile, the audio file of each object, the audio metafile, and the MPD file, which are supplied from the MPD generation unit 57, to the Web server 12.

(Explanation of Process of File Generation Device)

Fig. 12 is a flowchart illustrating a file generation process of the file generation device 11 shown in Fig. 11.
In step S11 of Fig. 12, the screen split processing unit 51 of the file generation device 11 splits image data of video content input from the outside into tile units. The screen split processing unit 51 supplies the image information generation unit 54 with the tile position information. Further, the screen split processing unit 51 supplies the image coding processing unit 52 with the image data configured in units of tiles.
In step S12, the image coding processing unit 52 encodes the image data, which is configured in units of tiles and is supplied from the screen split processing unit 51, for each tile to generate a video stream of each tile. The image coding processing unit 52 supplies the image file generation unit 53 with the video stream of each tile.
In step S13, the image file generation unit 53 processes the video stream of each tile supplied from the image coding processing unit 52 into a file format in units of segments to generate an image file of each tile. The image file generation unit 53 supplies the MPD generation unit 57 with the image file of each tile.
In step S14, the image information generation unit 54 acquires the image frame size information from the outside. In step S15, the image information generation unit 54 generates image information including the tile position information supplied from the screen split processing unit 51 and the image frame size information, and supplies the MPD generation unit 57 with the image information.
In step S16, the audio coding processing unit 55 encodes audio data, which is configured in units of objects of video content input from the outside, for each object, and generates an audio stream of each object. Further, the audio coding processing unit 55 encodes the object position information of each object input from the outside and the audio metadata including the object ID to generate encoded data. The audio coding processing unit 55 supplies the audio file generation unit 56 with the audio stream of each object and the encoded data of the audio metadata.
In step S17, the audio file generation unit 56 processes the audio stream of each object supplied from the audio coding processing unit 55 into a file format in units of segments to generate an audio file of each object. Further, the audio file generation unit 56 processes the encoded data of the audio metadata supplied from the audio coding processing unit 55 into a file format in units of segments to generate an audio metafile. The audio file generation unit 56 supplies the MPD generation unit 57 with the audio file of each object and the audio metafile.
In step S18, the MPD generation unit 57 generates an MPD file including the image information supplied from the image information generation unit 54, the URL or the like of each file. The MPD generation unit 57 supplies the server upload processing unit 58 with the MPD file, the image file of each tile, the audio file of each object, and the audio metafile.
In step S19, the server upload processing unit 58 uploads the image file of each tile, the audio file of each object, the audio metafile, and the MPD file, which are supplied from the MPD generation unit 57, to the Web server 12. Then, the process is terminated.

(Functional Configuration Example of Video Playback Terminal)

Fig. 13 is a block diagram showing a configuration example of the streaming playback unit which is implemented in such a manner that the video playback terminal 14 shown in Fig. 1 executes the control software 21, the video playback software 22, and the access software 23.
A streaming playback unit 90 shown in Fig. 13 includes an MPD acquisition unit 91, an MPD processing unit 92, a metafile acquisition unit 93, an audio selection unit 94, an audio file acquisition unit 95, an audio decoding processing unit 96, an audio synthesis processing unit 97, an image selection unit 98, an image file acquisition unit 99, an image decoding processing unit 100, and an image synthesis processing unit 101.
The MPD acquisition unit 91 of the streaming playback unit 90 functions as a receiver, acquires an MPD file from the Web server 12, and supplies the MPD processing unit 92 with the MPD file.
The MPD processing unit 92 extracts information such as a URL, which is described in "Segment" for audio metafile, from the MPD file supplied from the MPD acquisition unit 91, and supplies the metafile acquisition unit 93 with the extracted information. Further, the MPD processing unit 92 extracts image frame size information, which is described in "AdaptationSet" for image, from the MPD file, and supplies the audio selection unit 94 with the extracted information. The MPD processing unit 92 extracts information such as a URL, which is described in "Segment" for audio file of the object requested from the audio selection unit 94, from the MPD file, and supplies the audio selection unit 94 with the extracted information.
The MPD processing unit 92 extracts the tile position information described in "AdaptationSet" for image from the MPD file and supplies the image selection unit 98 with the extracted information. The MPD processing unit 92 extracts information such as a URL, which is described in "Segment" for the image file of the tile requested from the image selection unit 98, from the MPD file, and supplies the image selection unit 98 with the extracted information.

On the basis of the information such as a URL supplied from the MPD processing unit 92, the metafile acquisition unit 93 requests the Web server 12 to send an audio metafile specified by the URL, and acquires the audio metafile. The metafile acquisition unit 93 supplies the audio selection unit 94 with object position information included in the audio metafile.

The audio selection unit 94 functions as a position determination unit, and calculates a position of each object on the image on the basis of the image frame size information supplied from the MPD processing unit 92 and the object position information supplied from the metafile acquisition unit 93. The audio selection unit 94 selects an object in the display area designated by the user on the basis of the position of each object on the image. The audio selection unit 94 requests the MPD processing unit 92 to send information such as the URL of the audio file of the selected object. The audio selection unit 94 supplies the audio file acquisition unit 95 with the information such as the URL supplied from the MPD processing unit 92 in response to the request.

The audio file acquisition unit 95 functions as a receiver. On the basis of the information such as a URL supplied from the audio selection unit 94, the audio file acquisition unit 95 requests the Web server 12 to send an audio file, which is specified by the URL and configured in units of objects, and acquires the audio file. The audio file acquisition unit 95 supplies the audio decoding processing unit 96 with the acquired audio file in units of objects.

The audio decoding processing unit 96 decodes an audio stream included in the audio file, which is supplied from the audio file acquisition unit 95 and configured in units of objects, to generate audio data in units of objects. The audio decoding processing unit 96 supplies the audio synthesis processing unit 97 with the audio data in units of objects.

The audio synthesis processing unit 97 synthesizes the audio data, which is supplied from the audio decoding processing unit 96 and configured in units of objects, and outputs the synthesized data.

The image selection unit 98 selects a tile in the display area designated by the user on the basis of the tile position information supplied from the MPD processing unit 92. The image selection unit 98 requests the MPD processing unit 92 to send information such as a URL for the image file of the selected tile. The image selection unit 98 supplies the image file acquisition unit 99 with the information such as a URL supplied from the MPD processing unit 92 in response to the request.

On the basis of the information such as a URL supplied from the image selection unit 98, the image file acquisition unit 99 requests the Web server 12 to send an image file, which is specified by the URL and configured in units of tiles, and acquires the image file. The image file acquisition unit 99 supplies the image decoding processing unit 100 with the acquired image file in units of tiles.

The image decoding processing unit 100 decodes a video stream included in the image file, which is supplied from the image file acquisition unit 99 and configured in units of tiles, to generate image data in units of tiles. The image decoding processing unit 100 supplies the image synthesis processing unit 101 with the image data in units of tiles.

The image synthesis processing unit 101 synthesizes the image data, which is supplied from the image decoding processing unit 100 and configured in units of tiles, and outputs the synthesized data.

(Explanation of Process of Moving Image Playback Terminal)

Fig. 14 is a flowchart illustrating a streaming playback process of the streaming playback unit 90 (Fig. 13) of the video playback terminal 14.

In step S31 of Fig. 14, the MPD acquisition unit 91 of the streaming playback unit 90 acquires the MPD file from the Web server 12 and supplies the MPD processing unit 92 with the MPD file.

In step S32, the MPD processing unit 92 acquires the image frame size information and the tile position information, which are described in "AdaptationSet" for image, from the MPD file supplied from the MPD acquisition unit 91. The MPD processing unit 92 supplies the audio selection unit 94 with the image frame size information and supplies the image selection unit 98 with the tile position information. Further, the MPD processing unit 92 extracts information such as a URL described in "Segment" for audio metafile and supplies the metafile acquisition unit 93 with the extracted information.

In step S33, on the basis of the information such as a URL supplied from the MPD processing unit 92, the metafile acquisition unit 93 requests the Web server 12 to send an audio metafile specified by the URL, and acquires the audio metafile . The metafile acquisition unit 93 supplies the audio selection unit 94 with object position information included in the audio metafile.

In step S34, the audio selection unit 94 selects an object in the display area designated by the user on the basis of the image frame size information supplied from the MPD processing unit 92 and the object position information supplied from the metafile acquisition unit 93. The audio selection unit 94 requests the MPD processing unit 92 to send the information such as a URL for the audio file of the selected object.

The MPD processing unit 92 extracts information such as a URL, which is described in "Segment" for audio file of the object requested from the audio selection unit 94, from the MPD file, and supplies the audio selection unit 94 with the extracted information. The audio selection unit 94 supplies the audio file acquisition unit 95 with the information such as a URL supplied from the MPD processing unit 92.

In step S35, on the basis of the information such as a URL supplied from the audio selection unit 94, the audio file acquisition unit 95 requests the Web server 12 to send an audio file of the selected object which is specified by the URL, and acquires the audio file. The audio file acquisition unit 95 supplies the audio decoding processing unit 96 with the acquired audio file in units of objects.

In step S36, the image selection unit 98 selects a tile in the display area designated by the user on the basis of the tile position information supplied from the MPD processing unit 92. The image selection unit 98 requests the MPD processing unit 92 to send information such as a URL for the image file of the selected tile.

The MPD processing unit 92 extracts information such as a URL, which is described in "Segment" for image file of the object requested from the image selection unit 98, from the MPD file, and supplies the image selection unit 98 with the extracted information. The image selection unit 98 supplies the image file acquisition unit 99 with the information such as a URL supplied from the MPD processing unit 92.

In step S37, on the basis of the information such as a URL supplied from the image selection unit 98, the image file acquisition unit 99 requests the Web server 12 to send an image file of the selected tile which is specified by the URL, and acquires the image file. The image file acquisition unit 99 supplies the image decoding processing unit 100 with the acquired image file in units of tiles.

In step S38, the audio decoding processing unit 96 decodes an audio stream included in the audio file, which is supplied from the audio file acquisition unit 95 and configured in units of objects, to generate audio data in units of objects. The audio decoding processing unit 96 supplies the audio synthesis processing unit 97 with the audio data in units of objects.

In step S39, the image decoding processing unit 100 decodes a video stream included in the image file, which is supplied from the image file acquisition unit 99 and configured in units of tiles, to generate image data in units of tiles. The image decoding processing unit 100 supplies the image synthesis processing unit 101 with the image data in units of tiles.

In step S40, the audio synthesis processing unit 97 synthesizes the audio data, which is supplied from the audio decoding processing unit 96 and configured in units of objects, and outputs the synthesized data. In step S41, the image synthesis processing unit 101 synthesizes the image data, which is supplied from the image decoding processing unit 100 and configured in units of tiles, and outputs the synthesized data. Then, the process is terminated.

As described above, the Web server 12 transmits the image frame size information and the object position information. Thus, the video playback terminal 14 can specify, for example, an object in the display area to selectively acquire an audio file of the specified object so that the audio file corresponds to the image in the display area. This allows the video playback terminal 14 to acquire only a necessary audio file, which leads to an improvement in transmission efficiency.

Note that as shown in Fig. 15, an object ID (object specifying information) may be described in "AdaptationSet" for an image of the MPD file as information for specifying an object corresponding to audio to play back at the same time with the image. The object ID may be described by extending Scheme (urn:mpeg:DASH:audioObj:2013) for defining new object ID information (audioObj) by utilizing a DescriptorType element of Viewpoint. In this case, the video playback terminal 14 selects an audio file of the object corresponding to the object ID described in "AdaptationSet" for image, and acquires the audio file for playback.

Instead of generating an audio file in units of objects, the encoded data of all objects may be multiplexed into a single audio stream to generate a single audio file.

In this case, as shown in Fig. 16, one "Representation" for audio file is provided in "AdaptationSet" for audio of the MPD file, and a URL or the like for the audio file (audioObje.mp4) including the encoded data of all objects is described in "Segment". At this time, object IDs (1, 2, 3, 4, and 5) of all objects corresponding to the audio file are described by extending Viewpoint.

In addition, in this case, as shown in Fig. 17, the encoded data (Audio object) of each object is arranged, as a sub-sample, in an mdat box of the audio file (hereinafter also referred to as an audio media file, as appropriate) acquired by referring to "Media Segment" of the MPD file.

Specifically, data is arranged in the audio media file in units of subsegments that are any time shorter than a segment. The position of data in units of subsegments is specified by an sidx box. Further, the data in units of subsegments is composed of a moof box and an mdat box. The mdat box is composed of a plurality of samples, and the encoded data of each object is arranged as each sub-sample of the sample.

Further, a gsix box in which information on a sample is described is arranged next to the sidx box of the audio media file. In this manner, the gsix box in which the information on the sample is described is provided separately from the moof box, and thus the video playback terminal 14 can acquire the information on the sample rapidly.

As shown in Fig. 18, grouping_type representing the types of Sample group entries each composed of one or more samples or sub-samples managed by the gsix box is described in the gsix box. For example, when the Sample group entry is a sub-sample of the encoded data in units of objects, the type of the Sample group entry is "obja" as shown in Fig. 17. A plurality of gsix boxes of grouping_type are arranged in the audio media file.

Further, as shown in Fig. 18, an index (entry_index) of each Sample group entry and a byte range (range_size) as data position information indicating the position in the audio media file are described in the gsix box. Note that when the index (entry_index) is 0, the corresponding byte range indicates a byte range of the moof box (a1 in the example of Fig. 17).

Information indicating which object is used for allowing each Sample group entry to correspond to a sub-sample of encoded data is described in the audio file acquired by referring to "Initialization Segment" of the MPD file (hereinafter also referred to as an audio initialization file, as appropriate).

Specifically, as shown in Fig. 19, this information is indicated by using a type assignment box (typa) of an mvex box that is associated with AudioObjectSampleGroupEntry of a sample group description box (sgpd) in an sbtl box of the audio initialization file.

In other words, as shown in A of Fig. 20, an object ID (audio_object_id) corresponding to the encoded data included in the sample is described in each AudioObjectSampleGroupEntry box. For example, as shown in B of Fig. 20, object IDs 1, 2, 3, and 4 are described in each of four AudioObjectSampleGroupEntry boxes.

On the other hand, as shown in Fig. 21, in the type assignment box, an index as a parameter (grouping_type_parameter) of the Sample group entry corresponding to the AudioObjectSampleGroupEntry is described for each AudioObjectSampleGroupEntry.

The audio media file and the audio initialization file are configured as described above. Thus, when the video playback terminal 14 acquires the encoded data of the object selected as an object in the display area, the AudioObjectSampleGroupEntry in which the object ID of the selected object is described is retrieved from the stbl box of the audio initialization file. Then, the index of the Sample group entry corresponding to the retrieved AudioObjectSampleGroupEntry is read from the mvex box. Then, the position of data in units of subsegments is read from the sidx of the audio file, and the byte range of the Sample group entry of the read index is read from the gsix. Then, the encoded data arranged in the mdat is acquired on the basis of the position of data in units of subsegments and the byte range. Thus, the encoded data of the selected object is acquired.

Although, in the above description, the index of Sample group entry and the object ID of AudioObjectSampleGroupEntry are associated with each other through the mvex box, they may be associated with each other directly. In this case, the index of Sample group entry is described in the AudioObjectSampleGroupEntry.

Further, when the audio file is composed of a plurality of tracks, the sgpd can be stored in the mvex, which allows the sgpd to be shared among the tracks.

(Outline of Second Example of Information Processing System)

Fig. 22 is a diagram illustrating an outline of a second example of the information processing system to which the present disclosure is applied.

Note that the elements shown in Fig. 22 that are the same as those in Fig. 3 are denoted by the same reference numerals.

In the example shown in Fig. 22, as is the case with Fig. 3, the image of video content is divided into 7 (width) × 5 (height) tiles, and audios of objects #1 to #8 are acquired as the audio of video content.

In this case, when the user specifies the display area 31 composed of 3 (width) × 2 (height) tiles, the display area 31 is converted (extended) to an area having the same size as the size of the image of video content, thereby obtaining a display image 111 in a second example as shown in Fig. 22. The audios of the objects #1 to #8 are synthesized on the basis of the positions of the objects #1 to #8 in a display image 111 and are output together with the display image 111. In other words, the audios of the objects #3 to #5, #7, and #8, which are outside the display area 31, are output, in addition to the audios of the objects #1, #2, and #6, which are inside the display area 31.

(Configuration Example of Streaming Playback Unit)

The configuration of the second example of the information processing system to which the present disclosure is applied is the same as the configuration of the information processing system 10 shown in Fig. 1 except for the configuration of the streaming playback unit, and thus only of the streaming playback unit will be described below.

Fig. 23 is a block diagram showing a configuration example of the streaming playback unit of the information processing system to which the present disclosure is applied.

The components shown in Fig. 23 that are the same as those in Fig. 13 are denoted by the same reference numerals, and repeated explanation is omitted as appropriate.

The configuration of the streaming playback unit 120 shown in Fig. 23 differs from the configuration of the streaming playback unit 90 shown in Fig. 13 in that an MPD processing unit 121, an audio synthesis processing unit 123, and an image synthesis processing unit 124 are newly provided instead of the MPD processing unit 92, the audio synthesis processing unit 97, and the image synthesis processing unit 101, respectively, and a position determination unit 122 is additionally provided.

The MPD processing unit 121 of the streaming playback unit 120 extracts information such as a URL, which is described in "Segment" for audio metafile, from the MPD file supplied from the MPD acquisition unit 91, and supplies the metafile acquisition unit 93 with the extracted information. Further, the MPD processing unit 121 extracts image frame size information of an image of the video content (hereinafter referred to as content image frame size information) that is described in "AdaptationSet" for image from the MPD file and supplies the position determination unit 122 with the extracted information. The MPD processing unit 121 extracts information such as a URL, which is described in "Segment" for audio file of all objects, from the MPD file, and supplies the audio file acquisition unit 95 with the extracted information.

The MPD processing unit 121 extracts the tile position information described in "AdaptationSet" for image from the MPD file and supplies the image selection unit 98 with the extracted information. The MPD processing unit 121 extracts information such as a URL, which is described in "Segment" for the image file of the tile requested from the image selection unit 98, from the MPD file, and supplies the image selection unit 98 with the extracted information.

The position determination unit 122 acquires the object position information that is included in the audio metafile obtained by the metafile acquisition unit 93 and the content image frame size information that is supplied from the MPD processing unit 121. Further, the position determination unit 122 acquires display area image frame size information that is the image frame size information of the display area designated by the user. The position determination unit 122 determines (recognizes) the position of each object in the display area on the basis of the object position information, the content image frame size information, and the display area image frame size information. The position determination unit 122 supplies the audio synthesis processing unit 123 with the determined position of each object.

The audio synthesis processing unit 123 synthesizes audio data in units of objects supplied from the audio decoding processing unit 96 on the basis of the object position supplied from the position determination unit 122. Specifically, the audio synthesis processing unit 123 determines audio data to be allocated to each speaker for each object on the basis of the object position and the position of each speaker that outputs sound. The audio synthesis processing unit 123 synthesizes audio data of each object for each speaker and outputs the synthesized audio data as audio data for each speaker. A detailed description of the method of synthesizing audio data of each object on the basis of the object position is disclosed in, for example, Ville Pulkki, "Virtual Sound Source Positioning Using Vector Base Amplitude Panning", Journal of AES, vol. 45, no. 6, pp. 456-466, 1997.

The image synthesis processing unit 124 synthesizes image data in units of tiles supplied from the image decoding processing unit 100. The image synthesis processing unit 124 functions as a converter, and converts the size of the image corresponding to the synthesized image data to the size of the video content to generate a display image. The image synthesis processing unit 124 outputs the display image.

(Explanation of Object Position Determination Method)

Figs. 24 to 26 are diagrams each illustrating the object position determination method by the position determination unit 122 shown in Fig. 23.

The display area 31 is extracted from the video content and the size of the display area 31 is converted to the size of the video content, so that the display image 111 is generated. Thus, the display image 111 has a size equivalent to the size obtained by shifting the center C of the display area 31 to the center C' of the display image 111 as shown in Fig. 24 and by converting the size of the display area 31 to the size of the video content as shown in Fig. 25.

Thus, the position determination unit 122 calculates, by the following Formula (1), a shift amount $\theta_{shift}$ in horizontal direction when the center O of the display area 31 is shifted to the center O' of the display image 111.

[Mathematical Formula 1]

$$\theta_{shift} = \frac{\theta_{v1}' + \theta_{v2}' - \theta_{v1} - \theta_{v2}}{2} \quad \cdots (1)$$

In Formula (1), $\theta_{v1}'$ represents a horizontal angle at a left end of the display area 31 included in the display area image frame size information, and $\theta_{v2}'$ represents a horizontal angle at a right end of the display area 31 included in the display area image frame size information. Further, $\theta_{v1}$ represents a horizontal angle at a left end in the content image frame size information, and $\theta_{v2}$ represents a horizontal angle at a right end in the content image frame size information.

Next, the position determination unit 122 calculates, by the following Formula (2), a horizontal angle $\theta_{v1_shift}'$

at the left end of the display area 31 and a horizontal angle $\theta_{v2_shift}$' at the right end thereof after the center O of the display area 31 is shifted to the center O' of the display image 111 by using the shift mount $\theta_{shift}$.

[Mathematical Formula 2]

$$\theta_{v1_shift}' = \mathrm{mod}(\theta_{v1}' + \theta_{shift} + 180°, 360°) - 180°$$
$$\theta_{v2_shift}' = \mathrm{mod}(\theta_{v2}' + \theta_{shift} + 180°, 360°) - 180° \quad \ldots (2)$$

According to Formula (2), the horizontal angle $\theta_{v1_shift}$' and the horizontal angle $\theta_{v2_shift}$' are calculated so as not to exceed the range of -180° to 180°.

Note that, as described above, the display image 111 has a size equivalent to the size obtained by shifting the center O of the display area 31 to the center O' of the display image 111 and by converting the size of the display area 31 to the size of the video content. Thus, the following Formula (3) is satisfied for the horizontal angles $\theta_{V1}$ and $\theta_{V2}$.

[Mathematical Formula 3]

$$\theta_{v1} = \frac{\theta_{v1} - \theta_{v2}}{\theta_{v1_shift}' - \theta_{v2_shift}'} * \theta_{v1_shift}'$$
$$\theta_{v2} = \frac{\theta_{v1} - \theta_{v2}}{\theta_{v1_shift}' - \theta_{v2_shift}'} * \theta_{v2_shift}' \quad \cdots (3)$$

The position determination unit 122 calculates the shift amount $\theta_{shift}$, the horizontal angle $\theta_{v1_shift}$', and the horizontal angles $\theta_{v2_shift}$' , in the manner as described above, and then calculates a horizontal angle of each object in the display image 111. Specifically, the position determination unit 122 calculates, by the following Formula (4), a horizontal angle $\theta_{Ai_shift}$ of the object #i after the center C of the display area 31 is shifted to the center C' of the display image 111 by using the shift mount $\theta_{shift}$.

[Mathematical Formula 4]

$$\theta_{Ai_shift} = \mathrm{mod}(\theta_{Ai} + \theta_{shift} + 180°, 360°) - 180° \quad \ldots (4)$$

In Formula (4), $\theta_{Ai}$ represents the horizontal angle of the object #i included in the object position information. Further, according to Formula (4), the horizontal angle $\theta_{Ai_shift}$ is calculated so as not to exceed the range of -180° to 180°.

Next, when the object #i is present in the display area 31, that is, when the condition of $\theta_{v2_shif}' < \theta_{Ai_shift} < \theta_{v1_shift}'$ is satisfied, the position determination unit 122 calculates a horizontal angle $\theta_{A1}$' of the object #i in the display image 111 by the following Formula (5).

[Mathematical Formula 5]

$$\theta_{Ai}' = \frac{\theta_{v1} - \theta_{v2}}{\theta_{v1_shift}' - \theta_{v2_shift}'} \cdot \left(\theta_{Ai_shift} - \frac{\theta_{v1} + \theta_{v2}}{2}\right) \quad \cdots (5)$$

According to Formula (5), the horizontal angle $\theta_{A1}$' is calculated by extending the distance between the position of the object #i in the display image 111 and the center C' of the display image 111 according to the ratio between the size of the display area 31 and the size of the display image 111.

On the other hand, when no object #i is present in the display area 31, that is, when the condition of $-180° \leq \theta_{Ai_shift} \leq \theta_{v2_shift}'$ or $\theta_{v1_shift}' \leq \theta_{Ai_shift} \leq 180°$ is satisfied, the position determination unit 122 calculates the horizontal angle $\theta_{Ai}$' of the object #i in the display image 111 by the following Formula (6).

[Mathematical Formula 6]

$$\theta_{Ai}' = \frac{\theta_{v2}+180°}{\theta_{v2_shift}'+180°} \cdot (\theta_{Ai_shift}+180°) - 180° \quad \textbf{(when } -180° \le \theta_{Ai_shift} \le \theta_{v2_shift}'\textbf{)}$$

$$\theta_{Ai}' = \frac{180°-\theta_{v1}}{180°-\theta_{v1_shift}'} \cdot (\theta_{Ai_shift}-180°) + 180° \quad \textbf{(when } \theta_{v1_shift}' \le \theta_{Ai_shift} \le 180°\textbf{)}$$

$$\cdots (6)$$

According to Formula (6), when the object #i is present at a position 151 on the right side of the display area 31 ($-180° \le \theta_{Ai_shift} \le \theta_{v2_shift}'$) as shown in Fig. 26, the horizontal angle $\theta_{Ai}'$ is calculated by extending the horizontal angle $\theta_{A1_shift}$ according to the ratio between an angle R1 and an angle R2. Note that the angle R1 is the angle measured from the right end of the display image 111 to a position 154 just behind a viewer 153, and the angle R2 is the angle measured from the right end of the display area 31 whose center is shifted to the position 154.

Further, according to Formula (6), when the object #i is present at a position 155 on the left side of the display area 31 ($\theta_{v1_shift}' \le \theta_{Ai_shift} \le 180°$), the horizontal angle $\theta_{Ai}'$ is calculated by extending the horizontal angle $\theta_{Ai_shift}$ according to the ratio between an angle R3 and an angle R4. Note that the angle R3 is the angle measured from the left end of the display image 111 to the position 154, and the angle R4 is the angle measured from the left end of the display area 31 whose center is shifted to the position 154.

Further, the position determination unit 122 calculates a vertical angle $\gamma_{Ai}'$ in a similar manner to the horizontal angle $\theta_{Ai}'$. Specifically, the position determination unit 122 calculates, by the following Formula (7), a movement amount $\gamma_{shift}$ in the vertical direction when the center C of the display area 31 is shifted to the center C' of the display image 111.

[Mathematical Formula 7]

$$\gamma_{shift} = \frac{\gamma_{v1}' + \gamma_{v2}' - \gamma_{v1} - \gamma_{v2}}{2} \quad \cdots (7)$$

In Formula (7), $\gamma_{v1}'$ represents the vertical angle at an upper end of the display area 31 included in the display area image frame size information, and $\gamma_{v2}'$ represents the vertical angle at a lower end thereof. Further, $\gamma_{v1}$ represents the vertical angle at an upper end in the content image frame size information, and $\gamma_{v2}$ represents the vertical angle at a lower end in the content image frame size information.

Next, the position determination unit 122 calculates, by the following Formula (8), a vertical angle $\gamma_{v1_shift}'$ at an upper end of the display area 31 and a vertical angle $\gamma_{v2_shift}'$ at a lower end thereof after the center C of the display area 31 is shifted to the center C' of the display image 111 by using the movement amount $\gamma_{shift}$.

[Mathematical Formula 8]

$$\gamma_{v1_shift}' = \mathrm{mod}(\gamma_{v1}' + \gamma_{shift} + 90°, 180°) - 90°$$

$$\gamma_{v2_shift}' = \mathrm{mod}(\gamma_{v2}' + \gamma_{shift} + 90°, 180°) - 90° \quad \ldots (8)$$

According to Formula (8), the vertical angle $\gamma_{v1_shift}'$ and the vertical angle $\gamma_{v2_shift}'$ are calculated so as not to exceed the range of -90° to 90°.

The position determination unit 122 calculates the movement amount $\gamma_{shift}$, the vertical angle $\gamma_{v1_shift}'$, and the vertical angle $\gamma_{v2_shift}'$ in the manner as described above, and then calculates the position of each object in the display image 111. Specifically, the position determination unit 122 calculates, by the following Formula (9), a vertical angle $\gamma_{Ai_shift}$ of the object #i after the center C of the display area 31 is shifted to the center C' of the display image 111 by using the movement amount $\gamma_{shift}$.

[Mathematical Formula 9]

$$\gamma_{Ai_shift} = \mathrm{mod}(\gamma_{Ai} + \gamma_{shift} + 90°, 180°) - 90° \quad \cdots (9)$$

In Formula (9), $\gamma_{Ai}$ represents the vertical angle of the object #i included in the object position information. Further, according to Formula (9), the vertical angle $\gamma_{Ai_shift}$ is calculated so as not to exceed the range of -90° to 90°.
Next, the position determination unit 122 calculates a vertical angle $\gamma_{A1}$' of the object #i in the display image 111 by the following Formula (10).

[Mathematical Formula 10]

$$\gamma_{Ai}' = \begin{cases} \dfrac{\gamma_{v2}+90°}{\gamma_{v2_shift}'+90°}\cdot(\gamma_{Ai_shift}+90°)-90° \\ \quad (\text{when } -90° \leq \gamma_{Ai_shift} \leq \gamma_{v2_shift}') \\ \dfrac{\gamma_{v1}-\gamma_{v2}}{\gamma_{v1_shift}'-\gamma_{v2_shift}'}\cdot\left(\gamma_{Ai_shift}-\dfrac{\gamma_{v1}+\gamma_{v2}}{2}\right) \\ \quad (\text{when } \gamma_{v2_shift}' < \gamma_{Ai_shift} < \gamma_{v1_shift}') \\ \dfrac{90°-\gamma_{v1}}{90°-\gamma_{v1_shift}'}\cdot(\gamma_{Ai_shift}-90°)+90° \\ \quad (\text{when } \gamma_{v1_shift}' \leq \gamma_{Ai_shift} < 90°) \end{cases} \quad \cdots (10)$$

Further, the position determination unit 122 determines a distance $r_{A1}$' of the object #i in the display image 111 to be a distance $r_{A1}$ of the object #i included in the object position information. The position determination unit 122 supplies the audio synthesis processing unit 123 with the horizontal angle $\theta_{Ai}$', the vertical angle $\gamma_{A1}$', and the distance $r_{A1}$ of the object #i, which are obtained as described above, as the position of the object #i.
Fig. 27 is a diagram showing the relationship between the horizontal angle $\theta_{Ai}$ and the horizontal angle $\theta_{Ai}$'.
In the graph of Fig. 27, the horizontal axis represents the horizontal angle $\theta_{Ai}$, and the vertical axis represents the horizontal angle $\theta_{Ai}$'.
As shown in Fig. 27, when the condition of $\theta_{V2}' < \theta_{Ai} < \theta_{V1}'$ is satisfied, the horizontal angle $\theta_{Ai}$ is shifted by the movement amount $\theta_{shift}$ and is extend, and then the horizontal angle $\theta_{Ai}$ becomes equal to the horizontal angle $\theta_{Ai}$'. Further, when the condition of $-180° \leq \theta_{Ai} \leq \theta_{V2}'$ or $\theta_{V1}' \leq \theta_{Ai} \leq 180°$ is satisfied, the horizontal angle $\theta_{Ai}$ is shifted by the movement amount $\theta_{shift}$ and is reduced, and then the horizontal angle $\theta_{Ai}$ becomes equal to the horizontal angle $\theta_{Ai}$'.

(Explanation of Process of Streaming Playback Unit)

Fig. 28 is a flowchart illustrating a streaming playback process of the streaming playback unit 120 shown in Fig. 23.
In step S131 of Fig. 28, the MPD acquisition unit 91 of the streaming playback unit 120 acquires the MPD file from the Web server 12 and supplies the MPD processing unit 121 with the MPD file.
In step S132, the MPD processing unit 121 acquires the content image frame size information and the tile position information, which are described in "AdaptationSet" for image, from the MPD file supplied from the MPD acquisition unit 91. The MPD processing unit 121 supplies the position determination unit 122 with the image frame size information, and supplies the image selection unit 98 with the tile position information. Further, the MPD processing unit 121 extracts information such as a URL described in "Segment" for audio metafile, and supplies the extracted information to the metafile acquisition unit 93.

In step S133, the metafile acquisition unit 93 requests the Web server 12 to send the audio metafile specified by the URL on the basis of the information such as the URL supplied from the MPD processing unit 121, and acquires the audio metafile. The metafile acquisition unit 93 supplies the position determination unit 122 with the object position information included in the audio metafile.

In step S134, the position determination unit 122 performs a position determination process for determining the position of each object in the display image on the basis of the object position information, the content image frame size information, and the display area image frame size information. The position determination process will be described in detail with reference to Fig. 29 which is described later.

In step S135, the MPD processing unit 121 extracts information such as a URL described in "Segment" for audio file of all objects from the MPD file, and supplies the audio file acquisition unit 95 with the extracted information.

In step S136, the audio file acquisition unit 95 requests the Web server 12 to send an audio file of all objects specified by the URL on the basis of the information such as the URL supplied from the MPD processing unit 121, and acquires the audio file. The audio file acquisition unit 95 supplies the audio decoding processing unit 96 with the acquired audio file in units of objects.

The process of steps S137 to S140 is similar to the process of steps S36 to S39 shown in Fig. 14, and thus the descriptions thereof will be omitted.

In step S141, the audio synthesis processing unit 123 synthesizes and outputs the audio data in units of objects supplied from the audio decoding processing unit 96 on the basis of the position of each object supplied from the position determination unit 122.

In step S142, the image synthesis processing unit 124 synthesizes the image data in units of tiles supplied from the image decoding processing unit 100.

In step S143, the image synthesis processing unit 124 converts the size of the image corresponding to the synthesized image data into the size of the video content, and generates the display image. Then, the image synthesis processing unit 124 outputs the display image, and the process is terminated.

Fig. 29 is a flowchart illustrating details of the position determination process in step S134 of Fig. 28. This position determination process is carried out, for example, for each object.

In step S151 of Fig. 29, the position determination unit 122 performs a horizontal angle $\theta_{Ai}$' estimation process for estimating the horizontal angle $\theta_{Ai}$' in the display image. Details of the horizontal angle $\theta_{Ai}$' estimation process will be described with reference to Fig. 30 which is described later.

In step S152, the position determination unit 122 performs a vertical angle $\gamma_{Ai}$' estimation process for estimating the vertical angle $\gamma_{Ai}$' in the display image. Details of the vertical angle $\gamma_{Ai}$' estimation process are similar to those of the horizontal angle $\theta_{Ai}$' estimation process in step S151, except that the vertical direction is used in place of the horizontal direction, and thus a detailed description thereof will be omitted.

In step S153, the position determination unit 122 determines a distance $r_{Ai}$' in the display image to be a distance $r_{Ai}$ included in the object position information supplied from the metafile acquisition unit 93.

In step S154, the position determination unit 122 outputs, to the audio synthesis processing unit 123, the horizontal angle $\theta_{A1}$', the vertical angle $\gamma_{A1}$', and the distance $r_{Ai}$, as the position of the object #i. Then, the process returns to step S134 of Fig. 28 and proceeds to step S135.

Fig. 30 is a flowchart illustrating details of the horizontal angle $\theta_{Ai}$' estimation process in step S151 of Fig. 29.

In step S171 shown in Fig. 30, the position determination unit 122 acquires the horizontal angle $\theta_{Ai}$ included in the object position information supplied from the metafile acquisition unit 93.

In step S172, the position determination unit 122 acquires the content image frame size information supplied from the MPD processing unit 121 and the display area image frame size information specified by the user.

In step S173, the position determination unit 122 calculates the movement amount $\theta_{shift}$ by the above-mentioned Formula (1) on the basis of the content image frame size information and the display area image frame size information.

In step S174, the position determination unit 122 calculates horizontal angles $\theta_{v1_shift}$' and $\theta_{v2_shift}$' by the above-mentioned Formula (2) using the movement amount $\theta_{shift}$ and the display area image frame size.

In step S175, the position determination unit 122 calculates the horizontal angle $\theta_{Ai_shift}$ by the above-mentioned Formula (4) using the horizontal angle $\theta_{Ai}$ and the movement amount $\theta_{shift}$.

In step S176, the position determination unit 122 determines whether the object #i is present in the display area 31 (the horizontal angle of the object #i is between the horizontal angles at both ends of the display area 31), i.e., whether the condition of $\theta_{v2_shift}' < \theta_{Ai_shift} < \theta_{v1_shift}'$ is satisfied or not.

When it is determined in step S176 that the object #i is present in the display area 31, that is, when the condition of $\theta_{v2_shift}' < \theta_{Ai_shift} < \theta_{v1_shift}'$ is satisfied, the process proceeds to step S177. In step S177, the position determination unit 122 calculates the horizontal angle $\theta_{A1}$' by the above-mentioned Formula (5) on the basis of the content image frame size information, the horizontal angles $\theta_{v1_shift}$' and $\theta_{v2_shift}$', and the horizontal angle $\theta_{Ai_shift}$.

On the other hand, when it is determined in step S176 that the object #i is not present in the display area 31, that is, when the condition of -180° ≤ $\theta_{Ai_shift}$ ≤ $\theta_{v2_shift}$' or $\theta_{v1_shift}$' ≤ $\theta_{Ai_shift}$ ≤ 180° is satisfied, the process proceeds to step S178. In step S178, the position determination unit 122 calculates the horizontal angle $\theta_{Ai}$' by the above-mentioned Formula (6) on the basis of the content image frame size information, the horizontal angle $\theta_{v1_shift}$' or $\theta_{v2_shift}$', and the horizontal angle $\theta_{Ai_shift}$.

After the process of step S177 or step S178, the process returns to step S151 of Fig. 29 and proceeds to step S152.

Note that in the second example, the size of the display image is the same as the size of the video content, but instead the size of the display image may be different from the size of the video content.

Further, in the second example, the audio data of all objects is not synthesized and output, but instead only the audio data of some objects (for example, an object in the display area, an object in a predetermined range from the display area, etc.). The method for selecting an object of audio data to be output may be determined in advance, or may be specified by the user.

Further, in the above description, only the audio data in units objects is used, but the audio data may include audio data of channel audio, audio data of higher-order ambisonics (HOA) audio, audio data of spatial audio object coding (SAOC), and metadata (scene information, dynamic or static metadata) of audio data. In this case, for example, not only the coded data of each object, but also the coded data of these pieces of data are arranged as sub-samples.

<First Embodiment>

(Outline of 3D Audio File Format)

Prior to the description of the first embodiment to which the present disclosure is applied, the outline of tracks of the 3D audio file format of MP4 will be described with reference to Fig. 31.

In the MP4 file, the codec information of the video content and the position information indicating the position in the file can be managed for each track. In the 3D audio file format of MP4, all audio streams (elementary stream (ES)) of 3D audio (Channel audio/Object audio/HOA audio/metadata) are recorded as one track in units of samples (frames). Further, the codec information (Profile/level/audio configuration) of 3D audio is stored as a sample entry.

Channel audio constituting the 3D audio is audio data in units of channels; Object audio is audio data in units of objects; HOA audio is spherical audio data; and metadata is metadata of Channel audio/Object audio/HOA audio. In this case, audio data in units of objects is used as Object audio, but instead audio data of SAOC may be used.

(Structure of moov box)

Fig. 32 shows a structure of a moov box of an MP4 file.

As shown in Fig. 32, in the MP4 file, the image data and the audio data are recorded in different tracks. Fig. 32 does not illustrate the details of the track of the audio data, but the track of the audio data is similar to the track of the image data. The sample entry is included in the sample description arranged in an stsd box within the moov box.

Incidentally, in broadcasting or local storage playback, the Web server delivers all audio streams, and the video playback terminal (client) decodes audio streams of necessary 3D audio, while parsing all audio streams, and outputs (rendering) the audio streams. When the bit rate (Bitrate) is high, or when there is a limitation on the rate of reading of a local storage, there is a demand for reducing the load on the decode process by acquiring only the audio stream of necessary 3D audio.

Further, in stream playback, there is a demand for the video playback terminal (client) to acquire only the coded data of necessary 3D audio to thereby acquire an audio stream of a coding rate optimum for the playback environment.

Accordingly, in the present disclosure, the coded data of 3D audio is divided into tracks for each type of the data and the tracks are arranged in the audio file, which makes it possible to efficiently acquire only a predetermined type of coded data. Thus, the load on the system can be reduced in broadcasting and local storage playback. Further, in stream playback, the highest-quality coded data of necessary 3D audio can be played back according to the frequency band. Further, since it is only necessary to record the position information of the audio stream of 3D audio within the audio file in units of tracks of subsegments, the amount of position information can be reduced as compared with the case where the coded data in units of objects are arranged in the sub-sample.

(Outline of Tracks)

Fig. 33 is a diagram illustrating the outline of tracks in the first embodiment to which the present disclosure is applied.

As shown in Fig. 33, in the first embodiment, the Channel audio/Object audio/HOA audio/metadata constituting the 3D audio are respectively set as audio streams of different tracks (Channel audio track/Object audio track (s) /HOA audio track/Object metadata track). The audio stream of audio metadata is arranged in the object metadata track.

Further, as a track for arranging information about the entire 3D audio, a base track (Base Track) is provided. In the base track shown in Fig. 33, the information about the entire 3D audio is arranged in the sample entry, while no sample is arranged in the sample entry. Further, the Base track, Channel audio track, Object audio track (s), HOA audio track, and Object metadata track are recorded as the same audio file (3dauio.mp4).

Track Reference is arranged in, for example, a track box, and represents a reference relationship between a corresponding track and another track. Specifically, Track Reference represents an ID unique to a track in other referred tracks (hereinafter referred to as a track ID). In the example shown in Fig. 33, the track IDs of Base track, Channel audio track, HOA audio track, Object metadata track, and Object audio track(s) are 1, 2, 3, 4, 10 ..., respectively. Track References of Base track are 2, 3, 4, 10 ..., and Track References of Channel audio track/HOA audio track/Object metadata track/Object audio track (s) are 1 which corresponds to the track ID of Base track.

Accordingly, Base track and Channel audio track/HOA audio track/Object metadata track/Object audio track (s) have a reference relationship. Specifically, Base track is referred to during playback of Channel audio track/HOA audio track/Object metadata track/Object audio track(s).

(Exemplary Syntax of Sample Entry of Base Track)

Fig. 34 is a diagram showing an exemplary syntax of a sample entry of the base track shown in Fig. 33.

As information about the entire 3D audio, configurationVersion, MPEGHAudioProfile, and MPEGHAudioLevel shown in Fig. 34 represent config information, profile information, and level information, respectively, of the entire audio stream of 3D audio (audio stream of normal 3D audio) . Further, as information about the entire 3D audio, the width and the height shown in Fig. 34 represent the number of pixels in the horizontal direction of the video content and the number of pixels in the vertical direction of the video content, respectively. As information about the entire 3D audio, theta1, theta2, gamma1, and gamma2 represent the horizontal angle $\theta_{v1}$ at the left end of the image frame, the horizontal angle $\theta_{v2}$ at the right end of the image frame, the vertical angle $\gamma_{v1}$ at the upper end of the image frame, and the vertical angle $\gamma_{v2}$ at the lower end of the image frame, respectively, in the image frame size information of the video content.

(Exemplary Syntax of Sample Entry of Channel Audio Track)

Fig. 35 is a diagram showing an exemplary syntax of a sample entry of the channel audio track (Channel audio track) shown in Fig. 33.

Fig. 35 shows configurationVersion, MPEGHAudioProfile, and MPEGHAudioLevel represent config information, profile information, and level information, respectively, of Channel Audio.

(Exemplary Syntax of Sample Entry of Object Audio Track)

Fig. 36 is a diagram showing an exemplary syntax of a sample entry of the object audio track (Object audio track) shown in Fig. 33.

ConfigurationVersion, MPEGHAudioProfile, and MPEGHAudioLevel shown in Fig. 36 represent config information, profile information, and level information, respectively, in one or more Object audios included in the object audio track. object_is_fixed indicates whether one or more Object audio objects included in the object audio track are fixed or not. When object_is_fixed indicates 1, it indicates that the object is fixed, and when object_is_fixed indicates 0, it indicates that the object is shifted. mpegh3daConfig represents config of identification information of one or more Object audio objects included in the object audio track.

Further, objectTheta1/objectTheta2/objectGamma1/objectGamma2/objec tRength represents object information of one or more Object audios included in the object audio track. This object information is information which is valid when Object_is_fixed = 1 holds.

maxobjectTheta1, maxobjectTheta2, maxobjectGamma1, maxobjectGamma2/, and maxobjectRength represent maximum values of object information when one or more Object audio objects included in the object audio track are shifted.

(Exemplary Syntax of Sample Entry of HOA Audio Track)

Fig. 37 is a diagram showing an exemplary syntax of a sample entry of the HOA audio track shown in Fig. 33.

ConfigurationVersion, MPEGHAudioProfile, and MPEGHAudioLevel shown in Fig. 37 represent config information, profile information, and level information, respectively, of HOA audio.

(Exemplary Syntax of Sample Entry of Object Metadata Track)

Fig. 38 is a diagram showing an exemplary syntax of a sample entry of the object metadata track (Object metadata track) shown in Fig. 33.
ConfigurationVersion shown in Fig. 38 represents config information of metadata.

(First Example of Segment Structure of Audio File of 3D Audio)

Fig. 39 is a diagram showing a first example of a segment structure of an audio file of 3D audio in the first embodiment to which the present disclosure is applied.
In the segment structure shown in Fig. 39, Initial segment is composed of an ftyp box and a moov box. trak boxes for each track included in the audio file are arranged in the moov box. An mvex box including information indicating the correspondence relation between the track ID of each track and the level used in an ssix box within the media segment is arranged in the moov box.
Further, the media segment is composed of the sidx box, the ssix box, and one or more subsegments. Position information indicating a position in the audio file of each subsegment is arranged in the sidx box. The ssix box includes position information of an audio stream at each level arranged in the mdat box. Note that each level corresponds to each track. Further, the position information of a first track is the position information of data composed of audio streams of the moof box and the first track.
The subsegment is provided for any length of time. A pair of a moof box and an mdat box which are common to all tracks is provided in the subsegment. In the mdat box, audio streams of all tracks are collectively arranged for any length of time. In the moof box, management information of the audio streams is arranged. The audio streams of each track arranged in the mdat box are continuous for each track.
In the example of Fig. 39, Track1 having the track ID of 1 is a base Track, and Track2 to trackN having track IDs of 2 to N are Channel Audio Track, Object audio track (s), HOA audio track, and object metadata track, respectively. The same holds true for Fig. 40 to be described later.

(Second Example of Segment Structure of Audio File of 3D Audio)

Fig. 40 is a diagram showing a second example of the segment structure of the audio file of 3D audio in the first embodiment to which the present disclosure is applied.
The segment structure shown in Fig. 40 is different from the segment structure shown in Fig. 39 in that a moof box and an mdat box are provided for each track.
Specifically, Initial segment shown in Fig. 40 is similar to Initial segment shown in Fig. 39. Like the media segment shown in Fig. 39, the media segment shown in Fig. 40 is composed of the sidx box, the ssix box, and one or more subsegments. Further, like the sidx box shown in Fig. 39, the position information of each subsegment is arranged in the sidx box. The ssix box includes the position information of data of each level that is composed of the moof box and the mdat box.
The subsegment is provided for any length of time. A pair of a moof box and an mdat box is provided for each track in the subsegment. Specifically, audio streams of each track are collectively arranged (interleaved and stored) for any length of time in the mdat box of each track, and management information of the audio streams is arranged in the moof box.
As shown in Figs. 39 and 40, the audio streams for each track are collectively arranged for any length of time, so that the efficiency of acquiring audio streams via HTTP or the like is improved as compared with the case where audio streams are collectively arranged in units of samples.

(Exemplary Description of mvex Box)

Fig. 41 is a diagram showing an exemplary description of a level assignment box arranged in the mvex box shown in Figs. 39 and 40.
The level assignment box is a box for associating the track ID of each track with the level used in the ssix box. In the example of Fig. 41, the base track having the track ID of 1 is associated with the level 0, and the channel audio track having the track ID of 2 is associated with the level 1. Further, the HOA audio track having the track ID of 3 is associated with the level 2, and the object metadata track having the track ID of 4 is associated with the level 3. Furthermore, the object audio track having the track ID of 10 is associated with the level 4.

(Exemplary Description of MPD File)

Fig. 42 is a diagram showing an exemplary description of an MPD file in the first embodiment to which the present disclosure is applied.
As shown in Fig. 42, "Representation" for managing the segment of the audio file (3daudio.mp4) of 3D audio, "SubRepresentation" for managing the tracks included in the segment, and the like are described in the MPD file.
In "Representation" and "SubRepresentation", "codecs" representing a type of codec of a corresponding segment or track in a code defined in a 3D audio file format is included. Further, "id", "associationId", and "assciationType" are included in "Representation".
"id" represents the ID of "Representation" in which "id" is included. "associationId" represents information indicating a reference relationship between a corresponding track and another track, and represents "id" of the reference track. "assciationType" represents a code indicating the meaning of a reference relationship (dependent relationship) with respect to the reference track. For example, the same value as the value of the track reference of MP4 is used.
Further, in "SubRepresentation", "level" which is a value set in the level assignment box as the value representing the corresponding track and the corresponding level is included. In "SubRepresentation", "dependencyLevel" which is a value representing a level corresponding to another track having a reference relationship (dependency) (hereinafter referred to as a reference track) is included.
Further, "SubRepresentation" includes <EssentialProperty schemeIdUri= "urn:mpeg:DASH:3daudio:2014" value= "audioType, contentkind, priority"> as information necessary for selection of 3D audio.
Further, "SubRepresentation" in the Object audio track includes <EssentialProperty schemeIdUri= "urn:mpeg:DASH:viewingAngle:2014" value= "$\theta$, $\gamma$, r">. When the object corresponding to "SubRepresentation" is fixed, $\theta$, $\gamma$, and r represent a horizontal angle, a vertical angle, and a distance, respectively, in the object position information. On the other hand, when the object is shifted, the values $\theta$, $\gamma$, and r represent the maximum value of the horizontal angle, the maximum value of the vertical angle, and the maximum value of the distance, respectively, among the maximum values of the object position information.
Fig. 43 is a diagram showing a definition of Essential Property shown in Fig. 42.
On the upper left side of Fig. 43, AudioType of <EssentialProperty schemeIdUri= "urn:mpeg:DASH:3daudio:2014" value= " audioType, contentkind, priority"> is defined. AudioType represents the type of 3D audio of the corresponding track.
In the example of Fig. 43, when AudioType indicates 1, it indicates that the audio data of the corresponding track is Channel audio of 3D audio, and when AudioType indicates 2, it indicates that the audio data of the corresponding track is HOA audio. Further, when AudioType indicates 3, it indicates that the audio data of the corresponding track is Object audio, and when AudioType is 4, it indicates that the audio data of the corresponding track is metadata.
Further, on the right side of Fig. 43, contentkind of <EssentialProperty schemeIdUri= "urn:mpeg:DASH:3daudio:2014" value= " audioType, contentkind, priority"> is defined. The contentkind represents the content of the corresponding audio. In the example of Fig. 43, for example, when the contentkind indicates 3, the corresponding audio is music.
As shown in the lower left of Fig. 43, Priority is defined by 23008-3 and represents the processing priority of the corresponding Object. A value representing the processing priority of Object is described as Priority only when the value is not changed during the audio stream, while when the value is changed during the audio stream, a value "0" is described.

(Outline of Information Processing System)

Fig. 44 is a diagram illustrating an outline of an information processing system according to the first embodiment to which the present disclosure is applied.
The components shown in Fig. 44 that are the same as the components shown in Fig. 1 are denoted by the same reference numerals. Repeated explanation is omitted as appropriate.
An information processing system 140 shown in Fig. 44 has a configuration in which a Web server 142, which is connected to a file generation device 141 is connected to a video playback terminal 144 via the Internet 13.
In the information processing system 140, the Web server 142 delivers (tiled streaming) a video stream of video content to the video playback terminal 144 in units of tiles by a method in conformity with MPEG-DASH. Further, in the information processing system 140, the Web server 142 delivers an audio stream of Object audio, Channel audio, or HOA audio corresponding to the tile to be played back to the video playback terminal 144.
The file generation device 141 of the information processing system 140 is similar to the file generation device 11 shown in Fig. 11, except that, for example, the audio file generation unit 56 generates an audio file in the first embodiment and the MPD generation unit 57 generates the MPD file in the first embodiment.
Specifically, the file generation device 141 acquires the image data of video content and encodes the image data in units of tiles to generate a video stream. The file generation device 141 processes the video stream of each tile into a file format. The file generation device 141 uploads the image file of each tile obtained as a result of the process to the Web server 142.

Further, the file generation device 141 acquires 3D audio of video content and encodes the 3D audio for each type (Channel audio/Object audio/HOA audio/metadata) of 3D audio to generate an audio stream. The file generation device 141 allocates tracks to the audio stream for each type of 3D audio. The file generation device 141 generates the audio file of the segment structure shown in Fig. 39 or 40 in which the audio stream of each track is arranged in units of subsegments, and uploads the audio file to the Web server 142.

The file generation device 141 generates an MPD file including image frame size information, tile position information, and object position information. The file generation device 141 uploads the MPD file to the Web server 142.

The Web server 142 stores the image file, the audio file, and the MPD file which are uploaded from the file generation device 141.

In the example of Fig. 44, the Web server 142 stores a segment group formed of image files of a plurality of segments of the tile #1 and a segment group formed of image files of a plurality of segments of the tile #2. The Web server 142 also stores a segment group formed of audio files of 3D audio.

The Web server 142 transmits, to the video playback terminal 144, the image file, the audio file, the MPD file, and the like stored in the Web server, in response to a request from the video playback terminal 144.

The video playback terminal 144 executes control software 161, video playback software 162, access software 163, and the like.

The control software 161 is software for controlling data to be streamed from the Web server 142. Specifically, the control software 161 causes the video playback terminal 144 to acquire the MPD file from the Web server 142.

Further, the control software 161 specifies a tile in the display area on the basis of the display area instructed from the video playback software 162 and the tile position information included in the MPD file. Then, the control software 161 instructs the access software 163 to transmit a request for the image file of the tile.

When Object audio is to be played back, the control software 161 instructs the access software 163 to transmit a request for the image frame size information in the audio file. Further, the control software 161 instructs the access software 163 to transmit a request for the audio stream of metadata. The control software 161 specifies the object corresponding to the image in the display area on the basis of the image frame size information and the object position information included in the audio stream of metadata, which are transmitted from the Web server 142 according to the instruction, and the display area. Then, the control software 161 instructs the access software 163 to transmit a request for the audio stream of the object.

Further, when Channel audio or HOA audio is to be played back, the control software 161 instructs the access software 163 to transmit a request for the audio stream of Channel audio or HOA audio.

The video playback software 162 is software for playing back the image file and the audio file which are acquired from the Web server 142. Specifically, when the display area is specified by the user, the video playback software 162 instructs the control software 161 to transmit the display area. Further, the video playback software 162 decodes the image file and the audio file which are acquired from the Web server 142 according to the instruction. The video playback software 162 synthesizes and outputs the image data in units of tiles obtained as a result of decoding. Further, the video playback software 162 synthesizes and outputs, as needed, the Object audio, Channel audio, or HOA audio, which are obtained as a result of decoding.

The access software 163 is software for controlling the communication with the Web server 142 via the Internet 13 using HTTP. Specifically, the access software 163 causes the video playback terminal 144 to transmit a request for the image frame size information or predetermined audio stream in the image file and audio file in response to the instruction from the control software 161. Further, the access software 163 causes the video playback terminal 144 to receive the image frame size information or predetermined audio stream in the image file and audio file, which are transmitted from the Web server 142, in response to the transmission request.

(Configuration Example of File Generation Device)

Fig. 45 is a block diagram showing a configuration example of the file generation device 141 shown in Fig. 44.

The components shown in Fig. 45 that are the same as the components shown in Fig. 11 are denoted by the same reference numerals. Repeated explanation is omitted as appropriate.

The configuration of the file generation device 141 shown in Fig. 45 is different from the configuration of the file generation device 11 shown in Fig. 11 in that an audio coding processing unit 171, an audio file generation unit 172, an MPD generation unit 173, and a server upload processing unit 174 are provided instead of the audio coding processing unit 55, the audio file generation unit 56, the MPD generation unit 57, and the server upload processing unit 58.

Specifically, the audio coding processing unit 171 of the file generation device 141 encodes the 3D audio of video content input from the outside for each type (Channel audio/Object audio/HOA audio/metadata) to generate an audio stream. The audio coding processing unit 171 supplies the audio file generation unit 172 with the audio stream for each type of the 3D audio.

The audio file generation unit 172 allocates tracks to the audio stream, which is supplied from the audio coding processing unit 171, for each type of the 3D audio. The audio file generation unit 172 generates the audio file of the segment structure shown in Fig. 39 or 40 in which the audio stream of each track is arranged in units of subsegments. At this time, the audio file generation unit 172 stores the image frame size information input from the outside in the sample entry. The audio file generation unit 172 supplies the MPD generation unit 173 with the generated audio file.

The MPD generation unit 173 determines the URL or the like of the Web server 142 that stores the image file of each tile supplied from the image file generation unit 53. Further, the MPD generation unit 173 determines the URL or the like of the Web server 142 that stores the audio file supplied from the audio file generation unit 172.

The MPD generation unit 173 arranges the image information supplied from the image information generation unit 54 in "AdaptationSet" for image of the MPD file. Further, the MPD generation unit 173 arranges the URL or the like of the image file of each tile in "Segment" of "Representation" for the image file of the tile.

The MPD generation unit 173 arranges the URL or the like of the audio file in "Segment" of "Representation" for the audio file. Further, the MPD generation unit 173 arranges the object position information or the like of each object input from the outside in "Sub Representation" for the Object metadata track of the object. The MPD generation unit 173 supplies the server upload processing unit 174 with the MPD file, in which various pieces of information arranged as described above, and the image file and audio file.

The server upload processing unit 174 uploads the image file, the audio file, and the MPD file of each tile supplied from the MPD generation unit 173 to the Web server 142.

(Explanation of Process of File Generation Device)

Fig. 46 is a flowchart illustrating a file generation process of the file generation device 141 shown in Fig. 45.

The process of steps S191 to S195 shown in Fig. 46 is similar to the process of steps S11 to S15 shown in Fig. 12, and thus the description thereof is omitted.

In step S196, the audio coding processing unit 171 encodes the 3D audio of video content input from the outside for each type (Channel audio/Object audio/HOA audio/metadata) to generate an audio stream. The audio coding processing unit 171 supplies the audio file generation unit 172 with the audio stream for each type of the 3D audio.

In step S197, the audio file generation unit 172 allocates tracks to the audio stream, which is supplied from the audio coding processing unit 171, for each type of the 3D audio.

In step S198, the audio file generation unit 172 generates the audio file of the segment structure shown in Fig. 39 or 40 in which the audio stream of each track is arranged in units of subsegments. At this time, the audio file generation unit 172 stores the image frame size information input from the outside in the sample entry. The audio file generation unit 172 supplies the MPD generation unit 173 with the generated audio file.

In step S199, the MPD generation unit 173 generates the MPD file including the image information supplied from the image information generation unit 54, the URL of each file, and the object position information. The MPD generation unit 173 supplies the server upload processing unit 174 with the image file, the audio file, and the MPD file.

In step S200, the server upload processing unit 174 uploads the image file, the audio file, and the MPD file, which are supplied from the MPD generation unit 173, to the Web server 142. Then, the process is terminated.

(Functional Configuration Example of Video Playback Terminal)

Fig. 47 is a block diagram showing a configuration example of the streaming playback unit which is implemented in such a manner that the video playback terminal 144 shown in Fig. 44 executes the control software 161, the video playback software 162, and the access software 163.

The components shown in Fig. 47 that are the same as the components shown in Fig. 13 are denoted by the same reference numerals. Repeated explanation is omitted as appropriate.

The configuration of the streaming playback unit 190 shown in Fig. 47 is different from the configuration of the streaming playback unit 90 shown in Fig. 13 in that an MPD processing unit 191, an audio selection unit 193, an audio file acquisition unit 192, an audio decoding processing unit 194, and an audio synthesis processing unit 195 are provided instead of the MPD processing unit 92, the audio selection unit 94, the audio file acquisition unit 95, the audio decoding processing unit 96, and the audio synthesis processing unit 97 and the metafile acquisition unit 93 is not provided.

The streaming playback unit 190 is similar to the streaming playback unit 90 shown in Fig. 13, except for, for example, the method of acquiring the audio data to be played back of the selected object.

Specifically, the MPD processing unit 191 of the streaming playback unit 190 extracts information, such as the URL of the audio file of the segment to be played back that is described in "Segment" for audio file, from the MPD file supplied from the MPD acquisition unit 91, and supplies the audio file acquisition unit 192 with the extracted information.

The MPD processing unit 191 extracts the tile position information described in "AdaptationSet" for image from the MPD file, and supplies the image selection unit 98 with the extracted information. The MPD processing unit 191 extracts information, such as the URL described in "Segment" for the image file of the tile requested from the image selection unit 98, from the MPD file, and supplies the image selection unit 98 with the extracted information.
When Object audio is to be played back, the audio file acquisition unit 192 requests the Web server 142 to transmit Initial Segment of Base track in the audio file specified by the URL on the basis of the information such as the URL supplied from the MPD processing unit 191, and acquires the Initial Segment of Base track.
Further, on the basis of the information such as the URL of the audio file, the audio file acquisition unit 192 requests the Web server 142 to transmit the audio stream of the object metadata track in the audio file specified by the URL, and acquires the audio stream of the object metadata track. The audio file acquisition unit 192 supplies the audio selection unit 193 with the object position information included in the audio stream of the object metadata track, the image frame size information included in Initial Segment of Base track, and the information such as the URL of the audio file.
Further, when Channel audio is to be played back, the audio file acquisition unit 192 requests the Web server 142 to transmit the audio stream of Channel audio track in the audio file specified by the URL on the basis of the information such as the URL of the audio file, and acquires the audio stream of Channel audio track. The audio file acquisition unit 192 supplies the audio decoding processing unit 194 with the acquired audio stream of Channel audio track.
When HOA audio is to be played back, the audio file acquisition unit 192 performs a process similar to that performed when Channel audio is to be played back. As a result, the audio stream of the HOA audio track is supplied to the audio decoding processing unit 194.
Note that it is determined which one of Object audio, Channel audio, and HOA audio is to be played back, for example, according to an instruction from a user.
The audio selection unit 193 calculates the position of each object on the image on the basis of the image frame size information and object position information supplied from the audio file acquisition unit 192. The audio selection unit 193 selects an object in the display area designated by the user on the basis of the position of each object on the image. On the basis of the information such as the URL of the audio file supplied from the audio file acquisition unit 192, the audio selection unit 193 requests the Web server 142 to transmit the audio stream of the Object audio track of the selected object in the audio file specified by the URL, and acquires the audio stream of the Object audio track. The audio selection unit 193 supplies the audio decoding processing unit 194 with the acquired audio stream of the Object audio track.
The audio decoding processing unit 194 decodes the audio stream of the Channel audio track or HOA audio track supplied from the audio file acquisition unit 192, or decodes the audio stream of the Object audio track supplied from the audio selection unit 193. The audio decoding processing unit 194 supplies the audio synthesis processing unit 195 with one of the Channel audio, the HOA audio, and the Object audio which are obtained as a result of decoding.
The audio synthesis processing unit 195 synthesizes and outputs the Object audio, the Channel audio, or the HOA audio supplied from the audio decoding processing unit 194, as needed.

(Explanation of Process of Video Playback Terminal)

Fig. 48 is a flowchart illustrating the channel audio playback process of the streaming playback unit 190 shown in Fig. 47. This channel audio playback process is performed, for example, when the user selects the Channel audio as an object to be played back.
In step S221 of Fig. 48, the MPD processing unit 191 analyzes the MPD file supplied from the MPD acquisition unit 91, and specifies "SubRepresentation" of Channel audio of the segment to be played back on the basis of the essential property and codec described in "SubRepresentation". Further, the MPD processing unit 191 extracts, from the MPD file, information such as the URL described in "Segment" for the audio file of the segment to be played back, and supplies the audio file acquisition unit 192 with the extracted information.
In step S222, the MPD processing unit 191 specifies the level of the Base track, which is a reference track, on the basis of the dependencyLevel of "SubRepresentation" specified in step S221, and supplies the audio file acquisition unit 192 with the specified level of the Base track.
In step S223, the audio file acquisition unit 192 requests the Web server 142 to transmit Initial Segment of the segment to be played back on the basis of the information such as the URL supplied from the MPD processing unit 191, and acquires the Initial Segment.
In step S224, the audio file acquisition unit 192 acquires, from the Level assignment box in the Initial Segment, the track IDs corresponding to the levels of the channel audio track and the Base track which is a reference track.
In step S225, the audio file acquisition unit 192 acquires the sample entry of the Initial Segment in the trak box corresponding to the track ID of Initial Segment, on the basis of the track IDs of the channel audio track and the Base track which is a reference track. The audio file acquisition unit 192 supplies the audio decoding processing unit 194 with the codec information included in the acquired sample entry.

In step S226, on the basis of the information such as the URL supplied from the MPD processing unit 191, the audio file acquisition unit 192 sends a request to the Web server 142 and acquires the sidx box and the ssix box from the head of the audio file of the segment to be played back.

In step S227, the audio file acquisition unit 192 acquires the position information of the reference track and the channel audio track of the segment to be played back, from the sidx box and the ssix box which are acquired in step S223. In this case, since the Base track which is a reference track does not include any audio stream, there is no position information of the reference track.

In step S228, the audio file acquisition unit 192 requests the Web server 142 to transmit the audio stream of the channel audio track arranged in the mdat box, on the basis of the position information of the channel audio track and the information such as the URL of the audio file of the segment to be played back, and acquires the audio stream of the channel audio track. The audio file acquisition unit 192 supplies the audio decoding processing unit 194 with the acquired audio stream of the channel audio track.

In step S229, the audio decoding processing unit 194 decodes the audio stream of the channel audio track on the basis of the codec information supplied from the audio file acquisition unit 192. The audio file acquisition unit 192 supplies the audio synthesis processing unit 195 with the channel audio obtained as a result of decoding.

In step S230, the audio synthesis processing unit 195 outputs the channel audio. Then, the process is terminated.

Note that, although not shown, an HOA audio playback process for playing back the HOA audio by the streaming playback unit 190 is performed in a manner similar to the channel audio playback process shown in Fig. 48.

Fig. 49 is a flowchart illustrating the object specifying process of the streaming playback unit 190 shown in Fig. 47. This object specifying process is performed, for example, when the user selects the Object audio as an object to be played back and the playback area is changed.

In step S251 of Fig. 49, the audio selection unit 193 acquires the display area designated by the user through the user's operation or the like.

In step S252, the MPD processing unit 191 analyzes the MPD file supplied from the MPD acquisition unit 91, and specifies "SubRepresentation" of metadata of the segment to be played back, on the basis of the essential property and codec described in "SubRepresentation". Further, the MPD processing unit 191 extracts, from the MPD file, information such as the URL of the audio file of the segment to be played back that is described in "Segment" for audio file, and supplies the audio file acquisition unit 192 with the extracted information.

In step S253, the MPD processing unit 191 specify the level of the Base track, which is a reference track, on the basis of the dependencyLevel of "SubRepresentation" specified in step S252, and supplies the audio file acquisition unit 192 with the specified level of the Base track.

In step S254, the audio file acquisition unit 192 requests the Web server 142 to transmit Initial Segment of the segment to be played back, on the basis of the information such as the URL supplied from the MPD processing unit 191, and acquires the Initial Segment.

In step S255, the audio file acquisition unit 192 acquires, from the Level assignment box in the Initial Segment, the track IDs corresponding to the levels of the object metadata track and the Base track which is a reference track.

In step S256, the audio file acquisition unit 192 acquires the sample entry of Initial Segment in the trak box corresponding to the track ID of the Initial Segment on the basis of the track IDs of the object metadata track and the Base track which is a reference track. The audio file acquisition unit 192 supplies the audio selection unit 193 with the image frame size information included in the sample entry of the Base track which is a reference track. Further, the audio file acquisition unit 192 supplies the audio selection unit 193 with the Initial Segment.

In step S257, on the basis of the information such as the URL supplied from the MPD processing unit 191, the audio file acquisition unit 192 sends a request to the Web server 142 and acquires the sidx box and the ssix box from the head of the audio file of the segment to be played back.

In step S258, the audio file acquisition unit 192 acquires, from the sidx box and ssix box acquired in step S257, the position information of the reference track and the object metadata track of the subsegment to be played back. In this case, since the Base track which is a reference track does not include any audio stream, there is no position information of the reference track. The audio file acquisition unit 192 supplies the audio selection unit 193 with the sidx box and the ssix box.

In step S259, the audio file acquisition unit 192 requests the Web server 142 to transmit the audio stream of the object metadata track arranged in the mdat box, on the basis of the position information of the object metadata track and the information such as the URL of the audio file of the segment to be played back, and acquires the audio stream of the object metadata track.

In step S260, the audio file acquisition unit 192 decodes the audio stream of the object metadata track acquired in step S259, on the basis of the codec information included in the sample entry acquired in step S256. The audio file acquisition unit 192 supplies the audio selection unit 193 with the object position information included in the metadata obtained as a result of decoding. Further, the audio file acquisition unit 192 supplies the audio selection unit 193 with the information such as the URL of the audio file supplied from the MPD processing unit 191.

In step S261, the audio selection unit 193 selects an object in the display area on the basis of the image frame size information and object position information supplied from the audio file acquisition unit 192 and on the basis of the display area designated by the user. Then, the process is terminated.

Fig. 50 is a flowchart illustrating a specific object audio playback process performed by the streaming playback unit 190 after the object specifying process shown in Fig. 49.

In step S281 of Fig. 50, the MPD processing unit 191 analyzes the MPD file supplied from the MPD acquisition unit 91, and specifies "SubRepresentation" of the object audio of the selected object on the basis of the essential property and codec described in "SubRepresentation".

In step S282, the MPD processing unit 191 specifies the level of the Base track, which is a reference track, on the basis of the dependencyLevel of "SubRepresentation" specified in step S281, and supplies the audio file acquisition unit 192 with the specified level of the Base track.

In step S283, the audio file acquisition unit 192 acquires, from the Level assignment box in the Initial Segment, the track IDs corresponding to the levels of the object audio track and the Base track which is a reference track, and supplies the audio selection unit 193 with the track IDs.

In step S284, the audio selection unit 193 acquires the sample entry of Initial Segment in the trak box corresponding to the track ID of the Initial Segment, on the basis of the track IDs of the object audio track and the Base track which is a reference track. This Initial Segment is supplied from the audio file acquisition unit 192 in step S256 shown in Fig. 49. The audio selection unit 193 supplies the audio decoding processing unit 194 with the codec information included in the acquired sample entry.

In step S285, the audio selection unit 193 acquires, from the sidx box and ssix box supplied from the audio file acquisition unit 192 in step S258, the position information of the reference track and the object audio track of the selected object of the subsegment to be played back. In this case, since the Base track which is a reference track does not include any audio stream, there is no position information of the reference track.

In step S286, the audio selection unit 193 requests the Web server 142 to transmit the audio stream of the object audio track of the selected object, which is arranged in the mdat box, on the basis of the position information of the object audio track and the information such as the URL of the audio file of the segment to be played back, and acquires the audio stream of the object audio track. The audio selection unit 193 supplies the audio decoding processing unit 194 with the acquired audio stream of the object audio track.

In step S287, the audio decoding processing unit 194 decodes the audio stream of the object audio track on the basis of the codec information supplied from the audio selection unit 193. The audio selection unit 193 supplies the audio synthesis processing unit 195 with the object audio obtained as a result of decoding.

In step S288, the audio synthesis processing unit 195 synthesizes and outputs the object audio supplied from the audio decoding processing unit 194. Then, the process is terminated.

As described above, in the information processing system 140, the file generation device 141 generates an audio file in which 3D audio is divided into a plurality of tracks depending on the types of the 3D audio and the tracks are arranged. The video playback terminal 144 acquires the audio stream of a predetermined type of 3D audio in the audio file. Accordingly, the video playback terminal 144 can efficiently acquire the audio stream of the predetermined types of 3D audio. Therefore, it can be said that the file generation device 141 generates the audio file capable of improving the efficiency of acquiring the audio stream of the predetermined type of 3D audio.

<Second Embodiment>

(Outline of Tracks)

Fig. 51 is a diagram illustrating the outline of tracks in a second embodiment to which the present disclosure is applied.

As shown in Fig. 51, the second embodiment differs from the first embodiment in that the base sample is recorded as a sample of Base track. The base sample is formed of information to be referred to for the sample of Channel audio/Object audio/HOA audio/metadata. The sample of Channel audio/Object audio/HOA audio/metadata to be referred to by the reference information included in the base sample is arranged in the order of arrangement of the reference information, thereby making it possible to generate the audio stream of 3D audio before the 3D audio is divided into tracks .

(Exemplary Syntax of Sample Entry of Base Track)

Fig. 52 is a diagram showing an exemplary syntax of the sample entry of the base track shown in Fig. 51.

The syntax shown in Fig. 52 is the same as the syntax shown in Fig. 34, except that "mha2" representing that the sample entry is the sample entry of the Base track shown in Fig. 51 is described instead of "mha1" representing that the sample entry is the sample entry of the Base track shown in Fig. 33.

(Exemplary Structure of Base Sample)

Fig. 53 is a diagram showing an exemplary structure of the base sample.

As shown in Fig. 53, the base sample is configured using the extractor of Channel audio/Object audio/HOA audio/metadata in units of samples as a sub-sample. The extractor of Channel audio/Object audio/HOA audio/metadata is composed of the type of the extractor, and the offset and size of the sub-sample of the corresponding Channel audio track/Object audio track (s)/HOA audio track/Object metadata track. This offset is a difference between the position of the base sample in the file of sub-sample of the base sample and the position of Channel audio track/Object audio track(s)/HOA audio track/Object metadata track in the file of the sample. In other words, the offset is information indicating the position within the file of a sample of another track corresponding to the sub-sample of the base sample including the offset.

Fig. 54 is a diagram showing an exemplary syntax of the base sample.

As shown in Fig. 54, in the base sample, SCE element for storing the object audio in the sample of the Object audio track is replaced by EXT element for storing the extractor.

Fig. 55 is a diagram showing an example of extractor data.

As shown in Fig. 55, the type of the extractor and the offset and size of the sub-sample of the corresponding Channel audio track/Object audio track(s)/HOA audio track/Object metadata track are described in the extractor.

Note that the extractor may be extended by utilizing Network Abstraction Layer (NAL) structure, which is defined in Advanced Video Coding (AVC)/High Efficiency Video Coding (HEVC), so that audio elementary and config information can be stored.

The information processing system and the process performed by the information processing system in the second embodiment are similar to those of the first embodiment, and thus the descriptions thereof are omitted.

<Third Embodiment>

(Outline of Tracks)

Fig. 56 is a diagram illustrating the outline of tracks in a third embodiment to which the present disclosure is applied.

As shown in Fig. 56, the third embodiment differs from the first embodiment in that the base sample and the sample of metadata are recorded as the sample of the Base track and the Object metadata track is not provided.

The information processing system and the process performed by the information processing system in the third embodiment are similar to those of the first embodiment, except that the audio stream of the Base track is acquired instead of the Object metadata track so as to acquire the object position information. Accordingly, the descriptions thereof are omitted.

<Fourth Embodiment>

(Outline of Tracks)

Fig. 57 is a diagram illustrating the outline of tracks in a fourth embodiment to which the present disclosure is applied.

As shown in Fig. 57, the fourth embodiment differs from the first embodiment in that the tracks are recoded as different files (3da_base.mp4/3da_channel.mp4/3da_object_1.mp4/3da_hoa.mp 4/3da_meta.mp4). In this case, only the audio data of a desired track can be acquired by acquiring a file of a desired track via HTTP. Accordingly, the audio data of a desired track can be efficiently acquired via HTTP.

(Exemplary Description of MPD File)

Fig. 58 is a diagram showing an exemplary description of the MPD file according to the fourth embodiment to which the present disclosure is applied.

As shown in Fig. 58, "Representation" or the like that manages the segment of each audio file (3da_base.mp4/3da_channel.mp4/3da_object_1.mp4/3da_hoa.mp 4/3da_meta.mp4) of 3D audio is described in the MPD file.

The "Representation" includes "codecs", "id", "associationId", and "assciationType". Further, the "Representation" of Channel audio track/Object audio track (s) /HOA audio track/Object metadata track also includes "<EssentialProperty schemeIdUri= "urn:mpeg:DASH:3daudio:2014" value=" audioType, contentkind, priority">". Further, the "Representation" of Object audio track(s) includes <EssentialProperty schemeIdUri="urn:mpeg:DASH:viewingAngle:2014" value="θ, γ, r">.

(Outline of Information Processing System)

Fig. 59 is a diagram illustrating the outline of the information processing system in the fourth embodiment to which the present disclosure is applied.

The components shown in Fig. 59 that are the same as the components shown in Fig. 1 are denoted by the same reference numerals. Repeated explanation is omitted as appropriate.

The information processing system 210 shown in Fig. 59 has a configuration in which a Web server 212, which is connected to a file generation device 211, and a video playback terminal 214 are connected via the Internet 13.

In the information processing system 210, the Web server 212 delivers (tiled streaming) a video stream of video content to the video playback terminal 214 in units of tiles by a method in conformity with MPEG-DASH. Further, in the information processing system 210, the Web server 212 delivers the audio file of Object audio, Channel audio, or HOA audio corresponding to the file to be played back to the video playback terminal 214.

Specifically, the file generation device 211 acquires the image data of video content and encodes the image data in units of tiles to generate a video stream. The file generation device 211 processes the video stream of each tile into a file format for each segment. The file generation device 211 uploads the image file of each file obtained as a result of the above process to the Web server 212.

Further, the file generation device 211 acquires the 3D audio of video content, and encodes the 3D audio for each type (Channel audio/Object audio/HOA audio/metadata) of the 3D audio to generate an audio stream. The file generation device 211 allocates the tracks to the audio stream for each type of the 3D audio. The file generation device 211 generates an audio file in which the audio stream is arranged for each track, and uploads the generated audio file to the Web server 212.

The file generation device 211 generates the MPD file including the image frame size information, the tile position information, and the object position information. The file generation device 211 uploads the MPD file to the Web server 212.

The Web server 212 stores the image file uploaded from the file generation device 211, the audio file for each type of 3D audio, and the MPD file.

In the example of Fig. 59, the Web server 212 stores a segment group formed of image files of a plurality of segments of the tile #1, and a segment group formed of image files of a plurality of segments of the tile #2. The Web server 212 also stores a segment group formed of the audio file of Channel audio and a segment group of the audio file of the object #1.

The Web server 212 transmits, to the video playback terminal 214, the image file, the predetermined type of audio file of 3D audio, the MPD file, and the like, which are stored in the Web server, in response to a request from the video playback terminal 214.

The video playback terminal 214 executes control software 221, video playback software 222, access software 223, and the like.

The control software 221 is software for controlling data to be streamed from the Web server 212. Specifically, the control software 221 causes the video playback terminal 214 to acquire the MPD file from the Web server 212.

Further, the control software 221 specifies a tile in the MPD file on the basis of the display area instructed from the video playback software 222 and the tile position information included in the MPD file. Then, the control software 221 instructs the access software 223 to send a request for transmitting the image file of the tile.

When Object audio is to be played back, the control software 221 instructs the access software 223 to send a request for transmitting the audio file of the Base track. Further, the control software 221 instructs the access software 223 to send a request for transmitting the audio file of the Object metadata track. The control software 221 acquires the image frame size information in the audio file of the Base track, which is transmitted from the Web server 142 according to the instruction, and the object position information included in the audio file of metadata. The control software 221 specifies the object corresponding to the image in the display area on the basis of the image frame size information, the object position information, and the display area. Further, the control software 221 instructs the access software 223 to send a request for transmitting the audio file of the object.

Further, when Channel audio or HOA audio is to be played back, the control software 221 instructs the access software 223 to send a request for transmitting the audio file of the Channel audio or HOA audio.

The video playback software 222 is software for playing back the image file and audio file acquired from the Web server 212. Specifically, when the display area is specified by the user, the video playback software 222 gives an instruction on the display area to the control software 221. Further, the video playback software 222 decodes the image file and audio file acquired from the Web server 212 according to the instruction. The video playback software 222 synthesizes and outputs the image data in units of tiles obtained as a result of decoding. Further, the video playback software 222 synthesizes and outputs, as needed, the Object audio, Channel audio, or HOA audio obtained as a result of decoding.

The access software 223 is software for controlling the communication with the Web server 212 via the Internet 13 using HTTP. Specifically, the access software 223 causes the video playback terminal 214 to transmit a request for transmitting the image file and the predetermined audio file in response to an instruction from the control software 221. Further, the access software 223 causes the video playback terminal 214 to receive the image file and the predetermined audio file, which are transmitted from the Web server 212, according to the transmission request.

(Configuration Example of File Generation Device)

Fig. 60 is a block diagram of the file generation device 211 shown in Fig. 59.

The components shown in Fig. 60 that are the same as the components shown in Fig. 45 are denoted by the same reference numerals. Repeated explanation is omitted as appropriate.

The configuration of the file generation device 211 shown in Fig. 60 is different from the configuration of the file generation device 141 shown in Fig. 45 in that an audio file generation unit 241, an MPD generation unit 242, and a server upload processing unit 243 are provided instead of the audio file generation unit 172, the MPD generation unit 173, and the server upload processing unit 174, respectively.

Specifically, the audio file generation unit 241 of the file generation device 211 allocates the tracks to the audio stream, which is supplied from the audio coding processing unit 171, for each type of the 3D audio. The audio file generation unit 241 generates an audio file in which the audio stream is arranged for each track. At this time, the audio file generation unit 241 stores the image frame size information input from the outside in the sample entry of the Base track. The audio file generation unit 241 supplies the MPD generation unit 242 with the audio file for each type of the 3D audio.

The MPD generation unit 242 determines the URL or the like of the Web server 212 that stores the image file of each tile supplied from the image file generation unit 53. Further, the MPD generation unit 242 determines, for each type of the 3D audio, the URL or the like of the Web server 212 that stores the audio file supplied from the audio file generation unit 241.

The MPD generation unit 242 arranges, in "AdaptationSet" for the image of the MPD file, the image information supplied from the image information generation unit 54. Further, the MPD generation unit 242 arranges the URL or the like of the image file of each tile in "Segment" of "Representation" for the image file of the tile.,

The MPD generation unit 242 arranges, for each type of the 3D audio, the URL or the like of the audio file in "Segment" of "Representation" for the audio file. Further, the MPD generation unit 242 arranges the object position information or the like of each object input from the outside in "Representation" for the Object metadata track of the object. The MPD generation unit 242 supplies the server upload processing unit 243 with the MPD file, in which various pieces of information are arranged as described above, the image file, and the audio file for each type of the 3D audio.

The server upload processing unit 243 uploads the image file of each tile supplied from the MPD generation unit 242, the audio file for each type of the 3D audio, and the MPD file to the Web server 212.

(Explanation of Process of File Generation Device)

Fig. 61 is a flowchart illustrating a file generation process of the file generation device 211 shown in Fig. 60.

The process of steps S301 to S307 shown in Fig. 61 is similar to the process of steps S191 to S197 shown in Fig. 46, and thus the description thereof is omitted.

In step S308, the audio file generation unit 241 generates an audio file in which an audio stream is arranged for each track. At this time, the audio file generation unit 241 stores the image frame size information input from the outside in the sample entry in the audio file of the Base track. The audio file generation unit 241 supplies the MPD generation unit 242 with the generated audio file for each type of the 3D audio.

In step S309, the MPD generation unit 242 generates an MPD file including the image information supplied from the image information generation unit 54, the URL of each file, and the object position information. The MPD generation unit 242 supplies the server upload processing unit 243 with the image file, the audio file for each type of the 3D audio, and the MPD file.

In step S310, the server upload processing unit 243 uploads the image file supplied from the MPD generation unit 242, the audio file for each type of the 3D audio, and the MPD file to the Web server 212. Then, the process is terminated.

(Functional Configuration Example of Video Playback Terminal)

Fig. 62 is a block diagram showing a configuration example of a streaming playback unit which is implemented in such a manner that the video playback terminal 214 shown in Fig. 59 executes the control software 221, the video playback software 222, and the access software 223.
The components shown in Fig. 62 that are the same as the components shown in Figs. 13 and 47 are denoted by the same reference numerals. Repeated explanation is omitted as appropriate.
The configuration of the streaming playback unit 260 shown in Fig. 62 is different from the configuration of the streaming playback unit 90 shown in Fig. 13 in that an MPD processing unit 261, a metafile acquisition unit 262, an audio selection unit 263, an audio file acquisition unit 264, an audio decoding processing unit 194, and an audio synthesis processing unit 195 are provided instead of the MPD processing unit 92, the metafile acquisition unit 93, the audio selection unit 94, the audio file acquisition unit 95, the audio decoding processing unit 96, and the audio synthesis processing unit 97, respectively.
Specifically, when Object audio is to be played back, the MPD processing unit 261 of the streaming playback unit 260 extracts, from the MPD file supplied from the MPD acquisition unit 91, information such as the URL described in "Segment" of the audio file of the object metadata track of the segment to be played back, and supplies the metafile acquisition unit 262 with the extracted information. Further, the MPD processing unit 261 extracts, from the MPD file, information such as the URL described in "Segment" of the audio file of the object audio track of the object requested from the audio selection unit 263, and supplies the audio selection unit 263 with the extracted information. Furthermore, the MPD processing unit 261 extracts, from the MPD file, information such as the URL described in "Segment" of the audio file of the Base track of the segment to be played back, and supplies the metafile acquisition unit 262 with the extracted information.
Further, when Channel audio or HOA audio is to be played back, the MPD processing unit 261 extracts, from the MPD file, information such as the URL described in "Segment" of the audio file of the Channel audio track or HOA audio track of the segment to be played back. The MPD processing unit 261 supplies the audio file acquisition unit 264 with the information such as the URL via the audio selection unit 263.
Note that it is determined which one of Object audio, Channel audio, and HOA audio is to be played back, for example, according to an instruction from a user.
The MPD processing unit 261 extracts, from the MPD file, the tile position information described in "AdaptationSet" for image, and supplies the image selection unit 98 with the extracted tile position information. The MPD processing unit 261 extracts, from the MPD file, information such as the URL described in "Segment" for the image file of the tile requested from the image selection unit 98, and supplies the image selection unit 98 with the extracted information.
On the basis of the information such as the URL supplied from the MPD processing unit 261, the metafile acquisition unit 262 requests the Web server 212 to transmit the audio file of the object metadata track specified by the URL, and acquires the audio file of the object metadata track. The metafile acquisition unit 93 supplies the audio selection unit 263 with the object position information included in the audio file of the object metadata track.
Further, on the basis of the information such as the URL of the audio file, the metafile acquisition unit 262 requests the Web server 142 to transmit the Initial Segment of the audio file of the Base track specified by the URL, and acquires the Initial Segment. The metafile acquisition unit 262 supplies the audio selection unit 263 with the image frame size information included in the sample entry of the Initial Segment.
The audio selection unit 263 calculates the position of each object on the image on the basis of the image frame size information and the object position information supplied from the metafile acquisition unit 262. The audio selection unit 263 selects an object in the display area designated by the user, on the basis of the position of each object on the image. The audio selection unit 263 requests the MPD processing unit 261 to transmit the information such as the URL of the audio file of the object audio track of the selected object. The audio selection unit 263 supplies the audio file acquisition unit 264 with the information such as the URL supplied from the MPD processing unit 261 according to the request.
On the basis of the information, such as the URL of the audio file of the object audio track, Channel audio track, or HOA audio track supplied from the audio selection unit 263, the audio file acquisition unit 264 requests the Web server 12 to transmit the audio stream of the audio file specified by the URL, and acquires the audio stream of the audio file. The audio file acquisition unit 95 supplies the audio decoding processing unit 194 with the acquired audio file in units of objects.

(Explanation of Process of Video Playback Terminal)

Fig. 63 is a flowchart illustrating a channel audio playback process of the streaming playback unit 260 shown in Fig. 62. This channel audio playback process is performed, for example, when Channel audio is selected by the user as an object to be played back.

In step S331 of Fig. 63, the MPD processing unit 261 analyzes the MPD file supplied from the MPD acquisition unit 91, and specifies "Representation" of the Channel audio of the segment to be played back on the basis of the essential property and codec described in "Representation". Further, the MPD processing unit 261 extracts information such as the URL of the audio file of the Channel audio track of the segment to be played back that is described in "Segment" included in the "Representation", and supplies the audio file acquisition unit 264 with the extracted information via the audio selection unit 263.

In step S332, the MPD processing unit 261 specifies "Representation" of the Base track, which is a reference track, on the basis of the associationId of "Representation" specified in step S331. The MPD processing unit 261 extracts information such as the URL of the audio file of the reference track described in "Segment" included in the "Representation", and supplies the audio file acquisition unit 264 with the extracted file via the audio selection unit 263.

In step S333, the audio file acquisition unit 264 requests the Web server 212 to transmit the Initial Segment of the audio files of the Channel audio track of the segment to be played back and the reference track on the basis of the information such as the URL supplied from the audio selection unit 263, and acquires the Initial Segment.

In step S334, the audio file acquisition unit 264 acquires the sample entry in the trak box of the acquired Initial Segment. The audio file acquisition unit 264 supplies the audio decoding processing unit 194 with the codec information included in the acquired sample entry.

In step S335, the audio file acquisition unit 264 sends a request to the Web server 142 on the basis of the information such as the URL supplied from the audio selection unit 263, and acquires the sidx box and the ssix box from the head of the audio file of the Channel audio track of the segment to be played back.

In step S336, the audio file acquisition unit 264 acquires the position information of the subsegment to be played back from the sidx box and ssix box acquired in step S333.

In step S337, the audio selection unit 263 requests the Web server 142 to transmit the audio stream of the channel audio track arranged in the mdat box in the audio file, on the basis of the position information acquired in step S337 and the information such as the URL of the audio file of the channel audio track of the segment to be played back, and acquires the audio stream of the channel audio track. The audio selection unit 263 supplies the audio decoding processing unit 194 with the acquired audio stream of the channel audio track.

In step S338, the audio decoding processing unit 194 decodes the audio stream of the channel audio track supplied from the audio selection unit 263 on the basis of the codec information supplied from the audio file acquisition unit 264. The audio selection unit 263 supplies the audio synthesis processing unit 195 with the channel audio obtained as a result of decoding.

In step S339, the audio synthesis processing unit 195 outputs the channel audio. Then, the process is terminated.

Although not shown, the HOA audio playback process for playing back HOA audio by the streaming playback unit 260 is performed in a manner similar to the channel audio playback process shown in Fig. 63.

Fig. 64 is a flowchart illustrating an object audio playback process of the streaming playback unit 260 shown in Fig. 62. This object audio playback process is performed, for example, when the user selects Object audio as an object to be played back and the playback area is changed.

In step S351 of Fig. 64, the audio selection unit 263 acquires the display area designated by the user through the user's operation or the like.

In step S352, the MPD processing unit 261 analyzes the MPD file supplied from the MPD acquisition unit 91, and specifies "Representation" of the metadata of the segment to be played back, on the basis of the essential property and codec described in "Representation". Further, the MPD processing unit 261 extracts information such as the URL of the audio file of the object metadata track of the segment to be played back that is described in "Segment" included in the "Representation", and supplies the metafile acquisition unit 262 with the extracted information.

In step S353, the MPD processing unit 261 specifies "Representation" of the Base track, which is a reference track, on the basis of the associationId of "Representation" specified in step S352. The MPD processing unit 261 extracts information such as the URL of the audio file of the reference track described in "Segment" included in the "Representation", and supplies the metafile acquisition unit 262 with the extracted information.

In step S354, the metafile acquisition unit 262 requests the Web server 212 to transmit the Initial Segment of the audio files of the object metadata track of the segment to be played back and the reference track, on the basis of the information such as the URL supplied from the MPD processing unit 261, and acquires the Initial Segment.

In step S355, the metafile acquisition unit 262 acquires the sample entry in the trak box of the acquired Initial Segment. The metafile acquisition unit 262 supplies the audio file acquisition unit 264 with the image frame size information included in the sample entry of the Base track which is a reference track.

In step S356, the metafile acquisition unit 262 sends a request to the Web server 142 on the basis of the information such as the URL supplied from the MPD processing unit 261, and acquires the sidx box and the ssix box from the head of the audio file of the object metadata track of the segment to be played back.

In step S357, the metafile acquisition unit 262 acquires the position information of the subsegment to be played back from the sidx box and ssix box acquired in step S356.

In step S358, the metafile acquisition unit 262 requests the Web server 142 to transmit the audio stream of the object metadata track arranged in the mdat box in the audio file, on the basis of the position information acquired in step S357 and the information such as the URL of the audio file of the object metadata track of the segment to be played back, acquires the audio stream of the object metadata track.

In step S359, the metafile acquisition unit 262 decodes the audio stream of the object metadata track acquired in step S358, on the basis of the codec information included in the sample entry acquired in step S355. The metafile acquisition unit 262 supplies the audio selection unit 263 with the object position information included in the metadata obtained as a result of decoding.

In step S360, the audio selection unit 263 selects an object in the display area on the basis of the image frame size information and object position information supplied from the metafile acquisition unit 262 and on the basis of the display area designated by the user. The audio selection unit 263 requests the MPD processing unit 261 to transmit the information such as the URL of the audio file of the object audio track of the selected object.

In step S361, the MPD processing unit 261 analyzes the MPD file supplied from the MPD acquisition unit 91, and specifies "Representation" of the object audio of the selected object on the basis of the essential property and codec described in "Representation". Further, the MPD processing unit 261 extracts information such as the URL of the audio file of the object audio track of the selected object of the segment to be played back that is described in "Segment" included in the "Representation", and supplies the audio file acquisition unit 264 with the extracted information via the audio selection unit 263.

In step S362, the MPD processing unit 261 specifies "Representation" of the Base track, which is a reference track, on the basis of the associationId of "Representation" specified in step S361. The MPD processing unit 261 extracts information such as the URL of the audio file of the reference track described in "Segment" included in the "Representation", and supplies the audio file acquisition unit 264 with the extracted information via the audio selection unit 263.

In step S363, the audio file acquisition unit 264 requests the Web server 212 to transmit the Initial Segment of the audio files of the object audio track of the segment to be played back and the reference track, on the basis of the information such as the URL supplied from the audio selection unit 263, and acquires the Initial Segment.

In step S364, the audio file acquisition unit 264 acquires the sample entry in the trak box of the acquired Initial Segment. The audio file acquisition unit 264 supplies the audio decoding processing unit 194 with the codec information included in the sample entry.

In step S365, the audio file acquisition unit 264 sends a request to the Web server 142 on the basis of the information such as the URL supplied from the audio selection unit 263, and acquires the sidx box and the ssix box from the head of the audio file of the object audio track of the segment to be played back.

In step S366, the audio file acquisition unit 264 acquires the position information of the subsegment to be played back from the sidx box and ssix box acquired in step S365.

In step S367, the audio file acquisition unit 264 requests the Web server 142 to transmit the audio stream of the object audio track arranged in the mdat box within the audio file, on the basis of the position information acquired in step S366 and the information such as the URL of the audio file of the object audio track of the segment to be played back, and acquires the audio stream of the object audio track. The audio file acquisition unit 264 supplies the audio decoding processing unit 194 with the acquired audio stream of the object audio track.

The process of steps S368 and S369 is similar to the process of steps S287 and S288 shown in Fig. 50, and thus the description thereof is omitted.

Note that in the above description, the audio selection unit 263 selects all objects in the display area. However, the audio selection unit 263 may select only objects with a high processing priority in the display area, or may select only an audio object of a predetermined content.

Fig. 65 is a flowchart illustrating an object audio playback process when the audio selection unit 263 selects only objects with a high processing priority among the objects in the display area.

The object audio playback process shown in Fig. 65 is similar to the object audio playback process shown in Fig. 64, except that the process of step S390 shown in Fig. 65 is performed instead of step S360 shown in Fig. 64. Specifically, the process of steps S381 to S389 and steps S391 to S399 shown in Fig. 65 is similar to the process of steps S351 to S359 and steps S361 to S369 shown in Fig. 64. Accordingly, only the process of step S390 will be described below.

In step S390 shown in Fig. 65, the audio file acquisition unit 264 selects an object with a high processing priority in the display area on the basis of the image frame size information, the object position information, the display area, and the priority of each object. Specifically, the audio file acquisition unit 264 specifies each object with the display area on the basis of the image frame size information, the object position information, and the display area. The audio file acquisition unit 264 selects, from among the specified objects, an object having a priority equal to or higher than a predetermined value. Note that, for example, the MPD processing unit 261 analyzes the MPD file, thereby acquiring the priority from "Representation" of the object audio of the specified object. The audio selection unit 263 requests the MPD processing unit 261 to transmit information such as the URL of the audio file of the object audio track of the selected object.

Fig. 66 is a flowchart illustrating the object audio playback process when the audio selection unit 263 selects only the audio object of the predetermined content with a high processing priority among the objects in the display area.

The object audio playback process shown in Fig. 66 is similar to the object audio playback process shown in Fig. 64, except that the process of step S420 shown in Fig. 66 is performed instead of step S360 shown in Fig. 64. Specifically, the process of steps S381 to S389 and steps S391 to S399 shown in Fig. 66 is similar to the process of steps S411 to S419 and steps S421 to S429 shown in Fig. 64. Accordingly, only the process of step S420 will be described below.

In step S420 shown in Fig. 66, the audio file acquisition unit 264 selects the audio object of the predetermined content with a high processing priority in the display area on the basis of the image frame size information, the object position information, the display area, the priority of each object, and the contentkind of each object. Specifically, the audio file acquisition unit 264 specifies each object in the display area on the basis of the image frame size information, the object position information, and the display area. The audio file acquisition unit 264 selects, from among the specified objects, an object that has a priority equal to or higher than a predetermined value and has a contentkind indicated by a predetermined value.

Note that, for example, the MPD processing unit 261 analyzes the MPD file, thereby acquiring the priority and contentkind from "Representation" of the object audio of the specified object. The audio selection unit 263 requests the MPD processing unit 261 to transmit information such as the URL of the audio file of the object audio track of the selected object.

Fig. 67 is a diagram showing an example of the object selected on the basis of the priority.

In the example of Fig. 67, the objects #1 (object1) to #4 (object4) are objects in the display area, and objects having a priority equal to or lower than 2 are selected from among the objects in the display area. Assume that the smaller the number, the higher the processing priority. Further, in Fig. 67, the circled number represents the value of the priority of the corresponding object.

In the example shown in Fig. 67, when the priorities of the objects #1 to #4 are 1, 2, 3, and 4, respectively, the object #1 and the object #2 are selected. Further, the priorities of the objects #1 to #4 are changed to 3, 2, 1, and 4, respectively, the object #2 and the object #3 are selected. Further, when the priorities of the objects #1 to #4 are changed to 3, 4, 1, and 2, the object #3 and the object #4 are selected.

As described above, only the audio stream of the object audio of objects having a high processing priority are selectively acquired from among the objects in the display area, the frequency band between the Web server 142 (212) and the video playback terminal 144 (214) is efficiently utilized. The same holds true when an object is selected on the basis of the contentkind of the object.

<Fifth Embodiment>

(Outline of Tracks)

Fig. 68 is a diagram illustrating the outline of tracks in a fifth embodiment to which the present disclosure is applied.

As shown in Fig. 68, the fifth embodiment differs from the second embodiment in that the tracks are recorded as different files (3da_base.mp4/3da_channel.mp4/3da_object_1.mp4/3da_hoa.mp 4/3da_meta.mp4).

The information processing system and the process performed by the information processing system according to the fifth embodiment are similar to those of the fourth embodiment, and thus the descriptions thereof are omitted.

<Sixth Embodiment>

(Outline of Tracks)

Fig. 69 is a diagram illustrating the outline of tracks in a sixth embodiment to which the present disclosure is applied.

As shown in Fig. 69, the sixth embodiment differs from the third embodiment in that the tracks are recorded as different files (3da_basemeta.mp4/3da_channel.mp4/3da_object_1.mp4/3da_ho a.mp4) .

The information processing system and the process performed by the information processing system according to the sixth embodiment are similar to those of the fourth embodiment, except that the audio stream of the Base track is acquired instead of the Object metadata track so as to acquire the object position information. Accordingly, the descriptions thereof are omitted.

Note that also in the first to third embodiments, the fifth embodiment, and the sixth embodiment, an object in the display area can be selected on the basis of the priority or contentkind of the object.

Further, in the first to sixth embodiments, the streaming playback unit may acquire the audio stream of objects outside the display area and synthesize and output the object audio of the objects, like the streaming playback unit 120 shown in Fig. 23.

Further, in the first to sixth embodiments, the object position information is acquired from the metadata, but instead the object position information may be acquired from the MPD file.

<Explanation of Hierarchical Structure of 3D Audio>

Fig. 70 is a diagram showing a hierarchical structure of 3D audio.

As shown in Fig. 70, audio elements (Elements) which are different for each audio data are used as the audio data of 3D audio. As the types of the audio elements, there are Single Channel Element (SCE) and Channel Pair Element (CPE). The type of the audio element of audio data for one channel is SCE, and the type of the audio element corresponding to the audio data for two channels is CPE.

The audio elements of the same audio type (Channel/Object/SAOC Objects/HOA) form a group. Examples of the group type (GroupType) include Channels, Objects, SAOC Objects, and HOA. Two or more groups can form a switch Group or a group Preset, as needed.

The switch Group defines a group of audio elements to be exclusively played back. Specifically, as shown in Fig. 70, when an Object audio group for English (EN) and an Object audio group for French (FR) are present, one of the groups is to be played back. Accordingly, a switch Group is formed of the Object audio group for English having a group ID of 2 and the Object audio group for French having a group ID of 3. Thus, the Object audio for English and the Object audio for French are exclusively played back.

On the other hand, the group Preset defines a combination of groups intended by a content producer.

Ext elements (Ext Elements) which are different for each metadata are used as the metadata of 3D audio. Examples of the type of the Ext elements include Object Metadata, SAOC 3D Metadata, HOA Metadata, DRC Metadata, SpatialFrame, and SaocFrame. Ext elements of Object Metadata are all metadata of Object audio, and Ext elements of SAOC 3D Metada are all metadata of SAOC audio. Further, Ext elements of HOA Metadata are all metadata of HOA audio, and Ext elements of Dinamic Range Control (DRC) Metadata are all metadata of Object audio, SAOC audio, and HOA audio.

As described above, the audio data of 3D audio is divided in units of audio elements, group types, groups, switch Groups, and group Presets. Accordingly, the audio data may be divided into audio elements, groups, switch Groups, or group Presets, instead of dividing the audio data into tracks for each group type (in this case, however, the object audio is divided for each object) like in the first to sixth embodiments.

Further, the metadata of 3D audio is divided in units of Ext element type (ExtElementType) or audio element corresponding to the metadata. Accordingly, the metadata may be divided for each audio element corresponding to the metadata, instead of dividing the metadata for each type of Ext element like in the first to sixth embodiments.

Assume that, in the following description, audio data is divided for each audio element; metadata is divided for each type of Ext element; and data of different tracks are arranged. The same holds true when other division units are used.

<Explanation of First Example of Web Server Process>

Fig. 71 is a diagram illustrating a first example of the process of the Web server 142 (212).

In the example of Fig. 71, the 3D audio corresponding to the audio file uploaded from the file generation device 141 (211) is composed of the channel audio of five channels, the object audio of three objects, and metadata of the object audio (Object Metadata).

The channel audio of five channels is divided into a channel audio of a front center (FC) channel, a channel audio of front left/right (FL, FR) channels, and a channel audio of rear left/right (RL, RR) channels, which are arranged as data of different tracks. Further, the object audio of each object is arranged as data of different tracks. Furthermore, Object Metadata is arranged as data of one track.

Further, as shown in Fig. 71, each audio stream of 3D audio is composed of config information and data in units of frames (samples). In the example of Fig. 71, in the audio stream of the audio file, a channel audio of five channels, an object audio of three objects, and config information of Object Metadata are collectively arranged, and data items of each frame are collectively arranged.

In this case, as shown in Fig. 71, the Web server 142 (212) divides, for each track, the audio stream of the audio file uploaded from the file generation device 141 (211), and generates the audio stream of seven tracks. Specifically, the Web server 142 (212) extracts, from the audio stream of the audio file, the config information of each track and audio data according to the information such as the ssix box, and the audio stream of each track is generated. The audio stream of each track is composed of the config information of the track and the audio data of each frame.

Fig. 72 is a flowchart illustrating a track division process of the Web server 142 (212). This track division process is started, for example, when the audio file is uploaded from the file generation device 141 (211).

In step S441 shown in Fig. 72, the Web server 142 (212) stores the audio file uploaded from the file generation device 141.

In step S442, the Web server 142 (212) divides the audio stream constituting the audio file for each track according to the information such as the ssix box of the audio file.

In step S443, the Web server 142 (212) holds the audio stream of each track. Then, the process is terminated. This audio stream is transmitted to the video playback terminal 144 (214) from the Web server 142 (212) when the audio stream is requested from the audio file acquisition unit 192 (264) of the video playback terminal 144 (214).

<Explanation of First Example of Process of Audio Decoding Processing Unit>

Fig. 73 is a diagram illustrating a first example of the process of the audio decoding processing unit 194 when the Web server 142 (212) performs the process described above with reference to Figs. 71 and 72.

In the example of Fig. 73, the Web server 142 (212) holds the audio stream of each track shown in Fig. 71. The tracks to be played back are the tracks of the channel audio of the front left/right channels, the channel audio of the rear left/right channels, the object audio of a first object, and Object Metadata. The same holds true for Fig. 75 to be described later.

In this case, the audio file acquisition unit 192 (264) acquires the tracks of the channel audio of the front left/right channels, the channel audio of the rear left/right channels, the object audio of the first object, and Object Metadata.

The audio decoding processing unit 194 first extracts the audio stream of the metadata of the object audio of the first object from the audio stream of the track of Object Metadata acquired by the audio file acquisition unit 192 (264) .

Next, as shown in Fig. 73, the audio decoding processing unit 194 synthesizes the audio stream of the track of the audio to be played back and the extracted audio stream of the metadata. Specifically, the audio decoding processing unit 194 generates the audio stream in which Config information items included in all audio streams are collectively arranged and the data items of each frame are collectively arranged. Further, the audio decoding processing unit 194 decodes the generated audio stream.

As described above, when the audio streams to be played back include an audio stream other than the audio stream of one channel audio track, audio streams of two or more tracks are to be played back. Accordingly, the audio streams are synthesized before decoding.

On the other hand, when only the audio stream of the track of one channel audio is to be played back, there is no need to synthesize the audio stream. Accordingly, the audio decoding processing unit 194 directly decodes the audio stream acquired by the audio file acquisition unit 192 (264) .

Fig. 74 is a flowchart illustrating details of the first example of a decoding process of the audio decoding processing unit 194 when the Web server 142 (212) performs the process described above with reference to Figs. 71 and 72. This decoding process is at least one of the processes of step S229 shown in Fig. 48 and step S287 shown in Fig. 50 which are carried out when the tracks to be played back include a track other than one channel audio track.

In step S461 of Fig. 74, the audio decoding processing unit 194 sets "0" to all element numbers representing the number of elements included in the generated audio stream. In step S462, the audio decoding processing unit 194 resets (clears) all element type information indicating the type of elements included in the generated audio stream.

In step S463, the audio decoding processing unit 194 sets, as a track to be processed, the track which has not been determined to be the track to be processed among the tracks to be played back. In step S464, the audio decoding processing unit 194 acquires the number and type of elements included in the track to be processed from, for example, the audio stream of the track to be processed.

In step S465, the audio decoding processing unit 194 adds the number of acquired elements to the total number of elements. In step S466, the audio decoding processing unit 194 adds the type of acquired elements to the all element type information.

In step S467, the audio decoding processing unit 194 determines whether all tracks to be played back are set as tracks to be processed. When it is determined in step S467 that not all the tracks to be played back are set as the track to be processed, the process returns to step S463 and the process of steps S463 to S467 is repeated until all tracks to be played back are set as the track to be processed.

On the other hand, when it is determined in step S467 that all tracks to be played back are set as tracks to be processed, the process proceeds to step S468. In step S468, the audio decoding processing unit 194 arranges the total number of elements and all element type information at a predetermined position on the generated audio stream.

In step S469, the audio decoding processing unit 194 sets, as a track to be processed, the track which has not been determined to be the track to be processed among the tracks to be played back. In step S470, the audio decoding processing unit 194 sets, as an element to be processed, the element which has not been determined to be the element to be processed among the elements included in the track to be processed.

In step S471, the audio decoding processing unit 194 acquires, from the audio stream of tracks to be processed, Config information of the elements to be processed, and arranges the Config information on the generated audio stream.

At this time, the Config information items of all elements of all tracks to be played back are successively arranged.

In step S472, the audio decoding processing unit 194 determines whether all elements included in the track to be processed are set as elements to be processed. When it is determined in step S472 that not all the elements are set as the element to be processed, the process returns to step S470 and the process of steps S470 to S472 is repeated until all elements are set as the element to be processed.

On the other hand, when it is determined in step S472 that all elements are set as elements to be processed, the process proceeds to step S473. In step S473, the audio decoding processing unit 194 determines whether all tracks to be played back are set as tracks to be processed. When it is determined in step S473 that not all the tracks to be played back are set as the track to be processed, the process returns to step S469 and the process of steps S469 to S473 is repeated until all tracks to be played back are set as the track to be processed.

On the other hand, when it is determined in step S473 that all tracks to be played back are set as tracks to be processed, the process proceeds to step S474. In step S474, the audio decoding processing unit 194 determines a frame to be processed. In the process of step S474 of the first time, the head frame is determined to be the frame to be processed. In the process of step S474 of the second and subsequent times, the frame next to the current frame to be processed is determined to be a new frame to be processed.

In step S475, the audio decoding processing unit 194 sets, as a track to be processed, the track which has not been determined to be the track to be processed among the tracks to be played back. In step S476, the audio decoding processing unit 194 sets, as an element to be processed, the element which has not been determined to be the element to be processed among the elements included in the track to be processed.

In step S477, the audio decoding processing unit 194 determines whether the element to be processed is an EXT element. When it is determined in step S477 that the element to be processed is not the EXT element, the process proceeds to step S478.

In step S478, the audio decoding processing unit 194 acquires, from the audio stream of tracks to be processed, the audio data of the frame to be processed of the element to be processed, and arranges the audio data on the generated audio stream. At this time, the data in the same frame of all elements of all tracks to be played back are successively arranged. After the process of step S478, the process proceeds to step S481.

On the other hand, when it is determined in step S477 that the element to be processed is the EXT element, the process proceeds to step S479. In step S479, the audio decoding processing unit 194 acquires, from the audio stream of tracks to be processed, the metadata of all objects in the frame to be processed of the element to be processed.

In step S480, the audio decoding processing unit 194 arranges the metadata of objects to be played back among the acquired metadata of all objects on the generated audio stream. At this time, the data items in the same frame of all elements of all tracks to be played back are successively arranged. After the process of step S480, the process proceeds to step S481.

In step S481, the audio decoding processing unit 194 determines whether all elements included in the track to be processed are set as elements to be processed. When it is determined in step S481 that not all the elements are set as the element to be processed, the process returns to step S476 and the process of steps S476 to S481 is repeated until all elements are set as the element to be processed.

On the other hand, when it is determined in step S481 that all elements are set as elements to be processed, the process proceeds to step S482. In step S482, the audio decoding processing unit 194 determines whether all tracks to be played back are set as tracks to be processed. When it is determined in step S482 that not all the tracks to be played back are set as the track to be processed, the process returns to step S475 and the process of steps S475 to S482 is repeated until all tracks to be played back are set as the track to be processed.

On the other hand, when it is determined in step S482 that all tracks to be played back are set as tracks to be processed, the process proceeds to step S483.

In step S483, the audio decoding processing unit 194 determines whether all frames are set as frames to be processed. When it is determined in step S483 that not all the frames are set as the frame to be processed, the process returns to step S474 and the process of steps S474 to S483 is repeated until all frames are set as the frame to be processed.

On the other hand, when it is determined in step S483 that all frames are set as frames to be processed, the process proceeds to step S484. In step S484, the audio decoding processing unit 194 decodes the generated audio stream. Specifically, the audio decoding processing unit 194 decodes the audio stream in which the total number of elements, all element type information, Config information, audio data, and metadata of objects to be played back are arranged. The audio decoding processing unit 194 supplies the audio synthesis processing unit 195 with the audio data (Object audio, Channel audio, HOA audio) obtained as a result of decoding. Then, the process is terminated.

<Explanation of Second Example of Process of Audio Decoding Processing Unit>

Fig. 75 is a diagram illustrating a second example of the process of the audio decoding processing unit 194 when the Web server 142 (212) performs the process described above with reference to Figs. 71 and 72.

As shown in Fig. 75, the second example of the process of the audio decoding processing unit 194 differs from the first example thereof in that audio streams of all tracks are arranged on the generated audio stream and a stream or flag indicating a decoding result of zero (hereinafter referred to as a zero stream) is arranged as an audio stream of tracks which are not to be played back.

Specifically, the audio file acquisition unit 192 (264) acquires Config information included in the audio streams of all tracks held in the Web server 142 (212), and data of each frame included in the audio streams of tracks to be played back.

As shown in Fig. 75, the audio decoding processing unit 194 arranges the Config information items of all tracks collectively on the generated audio stream. Further, the audio decoding processing unit 194 arranges, on the generated audio stream, the data of each frame of tracks to be played back and the zero stream as data of each frame of tracks which are not to be played back.

As described above, since the audio decoding processing unit 194 arranges, on the generated audio stream, the zero stream as the audio stream of tracks which are not to be played back, the audio stream of objects which are not to be played back is also present. Accordingly, it is possible to include the metadata of objects which are not to be played back in the generated audio stream. This eliminates the need for the audio decoding processing unit 194 to extract the audio stream of the metadata of objects to be played back from the audio stream of the track of Object Metadata.

Note that the zero stream may be arranged as Config information of tracks which are not to be played back.

Fig. 76 is a flowchart illustrating details of the second example of the decoding process of the audio decoding processing unit 194 when the Web server 142 (212) performs the process described above with reference to Figs. 71 and 72. This decoding process is at least one of the process of step S229 shown in Fig. 48 and the process of step S287 shown in Fig. 50 which are carried out when the tracks to be played back include a track other than one channel audio track.

The process of steps S501 and S502 shown in Fig. 76 is similar to the process of steps S461 and S462 shown in Fig. 74, and thus the description thereof is omitted.

In step S503, the audio decoding processing unit 194 sets, as a track to be processed, the track which has not been determined to be the track to be processed among the tracks corresponding to the audio streams held in the Web server 142 (212) .

The process of steps S504 to S506 is similar to the process of steps S464 to S466, and thus the description thereof is omitted.

In step S507, the audio decoding processing unit 194 determines whether all tracks corresponding to the audio streams held in the Web server 142 (212) are set as tracks to be processed. When it is determined in step S507 that not all the tracks are set as the track to be processed, the process returns to step S503 and the process of steps S503 to S507 is repeated until all tracks are set as the track to be processed.

On the other hand, when it is determined in step S507 that all tracks are set as tracks to be processed, the process proceeds to step S508. In step S508, the audio decoding processing unit 194 arranges the total number of elements and all element type information at a predetermined position of the generated audio stream.

In step S509, the audio decoding processing unit 194 sets, as a track to be processed, the track which has not been determined to be the track to be processed among the tracks corresponding to the audio streams held in the Web server 142 (212). In step S510, the audio decoding processing unit 194 sets, as an element to be processed, the element which has not been determined to be the element to be processed among the elements included in the track to be processed.

In step S511, the audio decoding processing unit 194 acquires Config information of an element to be processed from the audio stream of the track to be processed, and generates the Config information on the generated audio stream. At this time, the Config information items of all elements of all tracks corresponding to the audio streams held in the Web server 142 (212) are successively arranged.

In step S512, the audio decoding processing unit 194 determines whether all elements included in the tracks to be processes are set as elements to be processed. When it is determined in step S512 that not all the elements are set as the element to be processed, the process returns to step S510 and the process of steps S510 to S512 is repeated until all elements are set as the element to be processed.

On the other hand, when it is determined in step S512 that all elements are set as elements to be processed, the process proceeds to step S513. In step S513, the audio decoding processing unit 194 determines whether all tracks corresponding to the audio streams held in the Web server 142 (212) are set as tracks to be processed. When it is determined in step S513 that not all the tracks are set as the track to be processed, the process returns to step S509 and the process of steps S509 to S513 is repeated until all tracks are set as the track to be processed.

On the other hand, when it is determined in step S513 that all tracks are set as tracks to be processed, the process proceeds to step S514. In step S514, the audio decoding processing unit 194 determines a frame to be processed. In the process of step S514 of the first time, the head frame is determined to be the frame to be processed. In the process of step S514 of the second and subsequent times, the frame next to the current frame to be processed is determined to be a new frame to be processed.

In step S515, the audio decoding processing unit 194 sets, as a track to be processed, the track which has not been determined to be the track to be processed among the tracks corresponding to the audio streams held in the Web server 142 (212) .

In step S516, the audio decoding processing unit 194 determines whether the track to be processed is the track to be played back. When it is determined in step S516 that the track to be processed is the track to be played back, the process proceeds to step S517.

In step S517, the audio decoding processing unit 194 sets, as an element to be processed, the element which has not been determined to be the element to be processed among the elements included in the track to be processed.

In step S518, the audio decoding processing unit 194 acquires, from the audio stream of the track to be processed, the audio data of the frame to be processed of the element to be processed, and arranges the audio stream on the generated audio stream. At this time, the data items in the same frame of all elements of all tracks corresponding to the audio streams held in the Web server 142 (212) are successively arranged.

In step S519, the audio decoding processing unit 194 determines whether all elements included in the track to be processed are set as the element to be processed. When it is determined in step S519 that not all the elements are set as the element to be processed, the process returns to step S517 and the process of steps S517 to S519 is repeated until all elements are set as the element to be processed.

On the other hand, when it is determined in step S519 that all elements are set as the element to be processed, the process proceeds to step S523.

Further, when it is determined in step S516 that the track to be processed is not the track to be played back, the process proceeds to step S520. In step S520, the audio decoding processing unit 194 sets, as an element to be processed, the element which has not been determined to be the element to be processed among the elements included in the track to be processed.

In step S521, the audio decoding processing unit 194 arranges the zero stream as the data of the frame to be processed of the element to be processed on the generated audio stream. At this time, the data items in the same frame of all elements of all tracks corresponding to the audio streams held in the Web server 142 (212) are successively arranged.

In step S522, the audio decoding processing unit 194 determines whether all elements included in the track to be processed are set as the element to be processed. When it is determined in step S522 that not all the elements are set as the element to be processed, the process returns to step S520 and the process of steps S520 to S522 is repeated until all elements are set as the element to be processed.

On the other hand, when it is determined in step S522 that all elements are set as the element to be processed, the process proceeds to step S523.

In step S523, the audio decoding processing unit 194 determines whether all tracks corresponding to the audio streams held in the Web server 142 (212) are set as the track to be processed. When it is determined in step S522 that not all the tracks are set as the track to be processed, the process returns to step S515 and the process of steps S515 to S523 is repeated until all tracks to be played back are set as the track to be processed.

On the other hand, when it is determined in step S523 that all tracks are set as the track to be processed, the process proceeds to step S524.

In step S524, the audio decoding processing unit 194 determines whether all frames are set as the frame to be processed. When it is determined in step S524 that not all the frames are set as the frame to be processed, the process returns to step S514 and the process of steps S514 to S524 is repeated until all frames are set as the frame to be processed.

On the other hand, when it is determined in step S524 that all frames are set as the frame to be processed, the process proceeds to step S525. In step S525, the audio decoding processing unit 194 decodes the generated audio stream. Specifically, the audio decoding processing unit 194 decodes the audio stream in which the total number of elements, all element type information, and Config information and data of all tracks corresponding to the audio streams held in the Web server 142 (212) are arranged. The audio decoding processing unit 194 supplies the audio synthesis processing unit 195 with the audio data (Object audio, Channel audio, HOA audio) obtained as a result of decoding. Then, the process is terminated.

<Explanation of Second Example of Web Server Process>

Fig. 77 is a diagram illustrating a second example of the process of the Web server 142 (212).

The second example of the process of the Web server 142 (212) shown in Fig. 77 is the same as the first example shown in Fig. 71, except that Object Metadata of each object is arranged in the audio file as data of different tracks.

Accordingly, as shown in Fig. 77, the Web server 142 (212) divides, for each track, the audio stream of the audio file uploaded from the file generation device 141 (211), and generates the audio stream of nine tracks.

In this case, the track division process of the Web server 142 (212) is similar to the track division process shown in Fig. 72, and thus the description thereof it omitted.

<Explanation of Third Example of Audio Decoding Processing Unit>

Fig. 78 is a diagram illustrating the process of the audio decoding processing unit 194 when the Web server 142 (212) performs the process described above with reference to Fig. 77.

In the example of Fig. 78, the Web server 142 (212) holds the audio stream of each track shown in Fig. 77. The tracks to be played back are the tracks of the channel audio of the front left/right channels, the channel audio of the rear left/right channels, the object audio of the first object, and the Object Metadata of the first object.

In this case, the audio file acquisition unit 192 (264) acquires the audio streams of the tracks of the channel audio of the front left/right channels, the channel audio of the rear left/right channels, the object audio of the first object, and the Object Metadata of the first object. The audio decoding processing unit 194 synthesizes the acquired audio streams of the tracks to be played back, and decodes the generated audio stream.

As described above, when the Object Metadata is arranged as data of different tracks for each object, there is no need for the audio decoding processing unit 194 to extract the audio stream of the Object Metadata of objects to be played back. Accordingly, audio decoding processing unit 194 can easily generate the audio stream to be decoded.

Fig. 79 is a flowchart illustrating details of the decoding process of the audio decoding processing unit 194 when the Web server 142 (212) performs the process described above with reference to Fig. 77. This decoding process is one of the process of step S229 shown in Fig. 48 and the process of step S287 shown in Fig. 50 which are carried out when the tracks to be played back include a track other than one channel audio track.

The decoding process shown in Fig. 79 is similar to the decoding process shown in Fig. 74, except that processes in steps S477, S479, and S480 are not carried out and not only audio data but also metadata are arranged in the process of step S478. Specifically, the process of steps S541 to S556 shown in Fig. 79 is similar to steps S461 to S476 shown in Fig. 74. In the process of step S557 shown in Fig. 79, the data of the frame to be processed of the element to be processed is arranged, like in the process of step S478. Further, the process of steps S558 to S561 is similar to the process of steps S481 to S484 shown in Fig. 74.

Note that in the above description, the video playback terminal 144 (214) generates the audio stream to be decoded, but instead the Web server 142 (212) may generate a combination of audio streams which are assumed as a combination of tracks to be played back. In this case, the video playback terminal 144 (214) can play back the audio of the tracks to be played back only by acquiring the audio streams with a combination of tracks to be played back from the Web server 142 (212) and decoding the audio streams.

Further, the audio decoding processing unit 194 may decode, for each track, the audio streams of the tracks to be played back that are acquired from the Web server 142 (212) . In this case, the audio decoding processing unit 194 needs to synthesize the audio data and metadata obtained as a result of decoding.

<Second Example of Syntax of Base Sample>

(Second Example of Syntax of Config information Arranged in Base Sample)

Fig. 80 is a diagram showing a second example of syntax of Config information arranged in a base sample.

In the example of Fig. 80, the number of elements (numElements) arranged in the base sample is described as Config information. Further, as the type of each element (usacElementType) arranged in the base sample, "ID_USAC_EXT" representing the Ext element is described and Config information for Ext element of each element (mpegh3daExtElementCongfig) is also described.

Fig. 81 is a diagram showing an exemplary syntax of Config information (mpegh3daExtElementCongfig) for Ext element shown in Fig. 80.

As shown in Fig. 81, "ID_EXT_ELE_EXTRACTOR" representing Extractor as the type of the Ext element is described as Config information for Ext element (mpegh3daExtElementCongfig) shown in Fig. 80. Further, Config information for Extractor (ExtractorConfig) is described.

Fig. 82 is a diagram showing an exemplary syntax of Config information for Extractor (ExtractorConfig) shown in Fig. 81.

As shown in Fig. 82, as Config information for Extractor (ExtractorConfig) shown in Fig. 81, the type of the element (usac Element Type Extractor) to be referred to by the Extractor is described. Further, when the type of the element (usac Element Type Extractor) is "ID_USAC_EXT" which represents the Ext element, the type of the Ext element (usacExtElementTypeExtractor) is described. Furthermore, the size (configLength) and position (configOffset) of the Config information of the element (sub-sample) to be referred to are described.

(Second Example of Syntax of Data of Frame Unit Arranged in Base Sample)

Fig. 83 is a diagram showing a second example of syntax of data in units of frames arranged in the base sample.
As shown in Fig. 83, as the data in units of frames arranged in the base sample, "ID_EXT_ELE_EXTRACTOR" which represents Extractor as the type of the Ext element which is the data element is described. Extractor data (Extractor Metadata) is also described.
Fig. 84 is a diagram showing an exemplary syntax of Extractor data (Extractor Metadata) shown in Fig. 83.
As shown in Fig. 84, the size (elementLength) and position (elementOffset) of the data of the element to be referred to by the Extractor are described as Extractor data (Extractor Metadata) shown in Fig. 83.

<Third Example of Syntax of Base Sample>

(Third Example of Syntax of Config Information Arranged in Base Sample)

Fig. 85 is a diagram showing a third example of syntax of Config information arranged in the base sample.
In the example of Fig. 85, the number of elements (numElements) arranged in the base sample is described as Config information. Further, "1" indicating Extractor is described as an Extractor flag (flag Extractor) indicating whether the sample in which Config information is arranged is Extractor. Furthermore, "1" is described as elementLengthPresent.
Further, the type of the element to be referred to by the element is described as the type of each element (usacElementType) arranged in the base sample. When the type of the element (usacElementType) is "ID_USAC_EXT" which represents the Ext element, the type of the Ext element (usacExtElementType) is described. Furthermore, the size (configLength) and position (configOffset) of Config information of the element to be referred to are described.

(Third Example of Syntax of Data in Units of Frames Arranged in Base Sample)

Fig. 86 is a diagram showing a third example of syntax of data in units of frames arranged in the base sample.
As shown in Fig. 86, as the data in units of frames arranged in the base sample, the size (elementLength) and position (elementOffset) of the data of the element to be referred to by the data are described.

<Seventh Embodiment>

(Configuration Example of Audio Stream)

Fig. 87 is a diagram showing a configuration example of the audio stream stored in the audio file in a seventh embodiment of an information processing system to which the present disclosure is applied.
As shown in Fig. 87, in the seventh embodiment, the audio file stores coded data in units of samples of 3D audio for each group type (in this case, however, the object audio is stored for each object) and an audio stream (3D audio stream) arranged as a sub-sample.
Further, the audio file stores a clue stream (3D audio hint stream) in which the extractor including the size, position, and group type of the coded data in units of samples of 3D audio for each group type is set as a sub-sample. The configuration of the extractor is similar to the configuration described above, and the group type is described as the type of the extractor.

(Outline of Tracks)

Fig. 88 is a diagram illustrating the outline of tracks in the seventh embodiment.
As shown in Fig. 88, in the seventh embodiment, different tracks are allocated to an audio stream and a clue stream, respectively. The track ID "2" of the track of the corresponding clue stream is described as Track Reference of the track of the audio stream. Further, the track ID "1" of the track of the corresponding audio stream is described as Track Reference of the track of the clue stream.
The syntax of the sample entry of the track of the audio stream is the syntax shown in Fig. 34, and the syntax of the sample entry of the track of the clue stream includes the syntax shown in Figs. 35 to 38.

(Explanation of Process of File Generation Device)

Fig. 89 is a flowchart illustrating a file generation process of the file generation device in the seventh embodiment.
Note that the file generation device according to the seventh embodiment is the same as the file generation device 141 shown in Fig. 45, except for the processes of the audio coding processing unit 171 and the audio file generation unit 172. Accordingly, the file generation device, the audio coding processing unit, and the audio file generation unit according to the seventh embodiment are hereinafter referred to as a file generation device 301, an audio coding processing unit 341, and an audio file generation unit 342, respectively.

The process of steps S601 to S605 shown in Fig. 89 is similar to the process of steps S191 to S195 shown in Fig. 46, and thus the description thereof is omitted.

In step S606, the audio coding processing unit 341 encodes, for each group type, the 3D audio of the video content input from the outside, and generates the audio stream shown in Fig. 87. The audio coding processing unit 341 supplies the audio file generation unit 342 with the generated audio stream.

In step S607, the audio file generation unit 342 acquires sub-sample information from the audio stream supplied from the audio coding processing unit 341. The sub-sample information indicates the size, position, and group type of the coded data in units of samples of the 3D audio of each group type.

In step S608, the audio file generation unit 342 generates the clue stream shown in Fig. 87 on the basis of the sub-sample information. In step S609, the audio file generation unit 342 multiplexes the audio stream and the clue stream as different tracks, and generates an audio file. At this time, the audio file generation unit 342 stores the image frame size information input from the outside in the sample entry. The audio file generation unit 342 supplies the MPD generation unit 173 with the generated audio file.

The process of steps S610 and S611 is similar to the process of steps S199 and S200 shown in Fig. 46, and thus the description thereof is omitted.

(Explanation of Process of Video Playback Terminal)

Fig. 90 is a flowchart illustrating an audio playback process of the stream playback unit of the video playback terminal in the seventh embodiment.

Note that the streaming playback unit according to the seventh embodiment is the same as the streaming playback unit 190 shown in Fig. 47, except that the processes of the MPD processing unit 191, the audio file acquisition unit 192, and the audio decoding processing unit 194 are different and the audio selection unit 193 is not provided. Accordingly, the streaming playback unit, the MPD processing unit, the audio file acquisition unit, and the audio decoding processing unit according to the seventh embodiment are hereinafter referred to as a streaming playback unit 360, an MPD processing unit 381, an audio file acquisition unit 382, and an audio decoding processing unit 383, respectively.

In step S621 shown in Fig. 90, the MPD processing unit 381 of the streaming playback unit 360 analyzes the MPD file supplied from the MPD acquisition unit 91, acquires information such as the URL of the audio file of the segment to be played back, and supplies the audio file acquisition unit 382 with the acquired information.

In step S622, the audio file acquisition unit 382 requests the Web server to transmit Initial Segment of the segment to be played back on the basis of the information such as the URL supplied from the MPD processing unit 381, and acquires the Initial Segment.

In step S623, the audio file acquisition unit 382 acquires the track ID of the track of the audio stream as the reference track from the sample entry of the track of the clue stream (hereinafter referred to as a clue track) of the moov box in the Initial Segment.

In step S624, the audio file acquisition unit 382 requests the Web server to transmit the sidx box and the ssix box from the head of the media segment of the segment to be played back on the basis of the information such as the URL supplied from the MPD processing unit 381, and acquires the sidx box and the ssix box.

In step S625, the audio file acquisition unit 382 acquires the position information of the clue track from the sidx box and the ssix box which are acquired in step S624.

In step S626, the audio file acquisition unit 382 requests the Web server to transmit the clue stream on the basis of the position information of the clue track acquired in step S625, and acquires the clue stream. Further, the audio file acquisition unit 382 acquires, from the clue stream, the extractor of the group type of the 3D audio to be played back. Note that when the 3D audio to be played back is the object audio, the object to be played back is selected on the basis of the image frame size information and object position information.

In step S627, the audio file acquisition unit 382 acquires the position information of the reference track from the sidx box and the ssix box which are acquired in step S624. In step S628, the audio file acquisition unit 382 determines the position information of the audio stream of the group type of the 3D audio to be played back on the basis of the position information of the reference track acquired in step S627 and the sub-sample information included in the acquired extractor.

In step S629, the audio file acquisition unit 382 requests the Web server to transmit the audio stream of the group type of the 3D audio to be played back on the basis of the position information determined in step S627, and acquires the audio stream. The audio file acquisition unit 382 supplies the audio decoding processing unit 383 with the acquired audio stream.

In step S630, the audio decoding processing unit 383 decodes the audio stream supplied from the audio file acquisition unit 382, and supplies the audio synthesis processing unit 195 with the audio data obtained as a result of decoding.

In step S631, the audio synthesis processing unit 195 outputs the audio data. Then, the process is terminated.

Note that in the seventh embodiment, the track of the audio stream and the clue track are stored in the same audio file, but may be stored in different files.

<Eighth Embodiment>

(Outline of Tracks)

Fig. 91 is a diagram illustrating the outline of tracks in an eighth embodiment of an information processing system to which the present disclosure is applied.

The audio file of the eighth embodiment is different from the audio file of the seventh embodiment in that the stored clue stream is a stream for each group type. Specifically, the clue stream of the eighth embodiment is generated for each group type, and the extractor including the size, position, and group type of the coded data in units of samples of the 3D audio of each group type is arranged as a sample in each clue stream. Note that when the 3D audio includes object audios of a plurality of objects, the extractor is arranged as a sub-sample for each object.

Further, as shown in Fig. 91, in the eighth embodiment, different tracks are allocated to the audio stream and each clue stream. The track of the audio stream is the same as the track of the audio stream shown in Fig. 88, and thus the description thereof is omitted.

As Track Reference of the clue track of the group types of "Channels", "Objects", "HOA", and "metadata", the track ID "1" of the track of the corresponding audio stream is described.

The syntax of the sample entry of the clue track of each of the group types of "Channels", "Objects", "HOA", and "metadata" is the same as the syntax shown in Figs. 35 to 38, except for the information indicating the type of the sample entry. The information indicating the type of the sample entry of the clue track of each of the group types of "Channels", "Objects", "HOA", and "metadata" is similar to the information shown in Figs. 35 to 38, except that the number "1" of the information is replaced by "2". The number "2" represents the sample entry of the clue track.

(Configuration Example of Audio File)

Fig. 92 is a diagram showing a configuration example of the audio file.

As shown in Fig. 92, the audio file stores all tracks shown in Fig. 91. Specifically, the audio file stores the audio stream and the clue stream of each group type.

The file generation process of the file generation device according to the eighth embodiment is similar to the file generation process shown in Fig. 89, except that the clue stream is generated for each group type, instead of the clue stream shown in Fig. 87.

Further, the audio playback process of the streaming playback unit of the video playback terminal according to the eighth embodiment is similar to the audio playback process shown in Fig. 90, except that the track ID of the clue track of the group type to be played back, as well as the track ID of the reference track is acquired in step S623; the position information of the clue track of the group type to be played back in step S625 is acquired; and the clue stream of the group type to be played back is acquired in step S626.

Note that in the eighth embodiment, the track of the audio stream and the clue track are stored in the same audio file, but may be stored in different files.

For example, as shown in Fig. 93, the track of the audio stream may be stored in one audio file (3D audio stream MP4 File), and the clue track may be stored in one audio file (3D audio hint stream MP4 File) . Further, as shown in Fig. 94, the clue track may be divided into a plurality of audio files to be stored. In the example of Fig. 94, the clue tracks are stored in different audio files.

Further, in the eighth embodiment, the clue stream is generated for each group type even when the group type indicates objects. However, when the group type indicates objects, the clue stream may be generated for each object. In this case, different tracks are allocated to the clue streams of each object.

As described above, in the audio file of the seventh and eighth embodiments, all the audio streams of 3D audio are stored in one track. Accordingly, the video playback terminal can play back all the audio streams of 3D audios by acquiring the track.

Further, the clue stream is stored in the audio file of the seventh and eighth embodiments. Accordingly, the video playback terminal acquires only the audio stream of a desired group type among all the audio streams of 3D audio without referring to the moof box in which a table that associates a sub-sample with the size or position of the sub-sample is described, thereby making it possible to play back the audio stream.

Further, in the audio file of the seventh and eighth embodiments, the video playback terminal can be caused to acquire the audio stream for each group type, only by storing all the audio streams of 3D audio and the clue stream. Accordingly, there is no need to prepare the audio stream of 3D audio for each group type separately from all the generated audio streams of 3D audio for the purpose of broadcasting or local storage so as to enable acquisition of the audio stream for each group type.

Note that in the seventh and eighth embodiments, the extractor is generated for each group type, but may be generated in units of audio elements, groups, switch Groups, or group Presets.

When the extractor is generated in units of groups, the sample entry of each clue track of the eighth embodiment includes information about the corresponding group. The information about the group is composed of, for example, information indicating the ID of the group and the content of data of the element classified as the group. When the group forms the switch Group, the sample entry of the clue track of the group also includes information about the switch Group. The information about the switch Group is composed of, for example, the ID of the switch Group and the ID of the group that forms the switch Group. The sample entry of the clue track of the seventh embodiment includes the information included in the sample entries of all clue tracks of the eighth embodiment.

Further, the segment structures in the seventh and eighth embodiments are the same as the segment structures shown in Figs. 39 and 40.

<Ninth Embodiment>

(Explanation of Computer to Which The Present Disclosure Is Applied)

A series of processes of the Web server described above can also be executed by hardware or software. When the series of processes is executed by software, a program constituting the software is installed in a computer. Examples of the computer include a computer incorporated in dedicated hardware and a general-purpose personal computer capable of executing various functions by installing various programs therein.

Fig. 95 is a block diagram showing a configuration example of hardware of a computer that executes a series of processes for the Web server by using a program.

In the computer, a central processing unit (CPU) 601, a read only memory (ROM) 602, and a random access memory (RAM) 603 are interconnected via a bus 604.

The bus 604 is also connected to an input/output interface 605. The input/output interface 605 is connected to each of an input unit 606, an output unit 607, a storage unit 608, a communication unit 609, and a drive 610.

The input unit 606 is formed with a keyboard, a mouse, a microphone, and the like. The output unit 607 is formed with a display, a speaker, and the like. The storage unit 608 is formed with hardware, a non-volatile memory, and the like. The communication unit 609 is formed with a network interface and the like. The drive 610 drives a removable medium 611 such as a magnetic disk, an optical disk, a magneto-optical disk, or a semiconductor memory.

In the computer configured as described above, a CPU 601 loads, for example, the program stored in the storage unit 608 in the RAM 603 via the input/output interface 605 and the bus 604, and executes the program, thereby performing the series of processes described above.

The program executed by the computer (CPU 601) can be provided by being recorded in the removable medium 611 serving as, for example, a package medium or the like. In addition, the program can be provided via a wired or wireless transmission medium such as a local area network, the Internet, or digital satellite broadcasting.

The program can be installed in the storage unit 608 via the input/output interface 605 by loading the removable medium 611 in the drive 610. Further, the program can be received by the communication unit 609 and installed in the storage unit 608 via the wired or wireless transmission medium. In addition, the program can be installed in advance in the ROM 602 or the storage unit 608.

Note that the program executed by the computer may be a program which performs the processes in a time series manner in the order described in the present description, or may be a program which performs the processes in parallel or at necessary timings when they are invoked, for example.

The video playback terminal described above may have a hardware configuration that is similar to that of the computer shown in Fig. 95. In this case, for example, the CPU 601 can execute the control software 161 (221), the video playback software 162 (222), and the access software 163 (223) . The process of the video playback terminal 144 (214) may be executed by hardware.

In the present description, a system has the meaning of a set of a plurality of components (such as an apparatus or a module (part)), and does not take into account whether or not all the components are in the same casing. Therefore, the system may be either a plurality of apparatuses, which are stored in separate casings and connected through a network, or a plurality of modules within a single casing.

Note that embodiments of the present disclosure are not limited to the above-described embodiments, and can be modified in various ways without departing from the scope of the claims.

For example, the file generation device 141 (211) may generate the video stream by multiplexing the coded data of all tiles to generate one image file, instead of generating the image file in units of tiles.

The present disclosure can be applied not only to MPEG-H 3D audio, but also to general audio codecs capable of creating a stream for each object.

Further, the present disclosure can also be applied to an information processing system that performs broadcasting and local storage playback, as well as streaming playback.

REFERENCE SIGNS LIST

141 File generation device
144 Moving image playback terminal
172 Audio file generation unit
192 Audio file acquisition unit
193 Audio selection unit
211 File generation device
214 Moving image playback terminal
241 Audio file generation unit
264 Audio file acquisition unit

**Claims**

1. An information processing apparatus comprising a file generation unit (11) configured to generate an audio file comprising audio data of video content for at least one object, the audio data comprising audio data of a plurality of types, the file generation unit being configured to:

   allocate a plurality of audio tracks to the audio file, wherein one type of audio data from said plurality of types is arranged in each audio track, and wherein at least one audio track is allocated to the audio file for each of the plurality of types of audio data; and
   to further allocate to the audio file a base track including information about the audio data,
   wherein:

      the audio file is configured to include information indicating a reference relationship of the base track with one of the plurality of audio tracks;
      the plurality of types of audio data comprise Channel audio, Object audio, and HOA audio;
      Channel audio comprises audio data in units of channels, Object audio comprises audio in data in units of objects, and HOA audio comprises spherical audio data, wherein an object is a sound source; and
      the file generation unit is further configured to generate:

         an audio metafile associated with the audio file and comprising, for the at least one object, an object ID and object position information indicating a positional relationship between the at least one object and an origin; and
         a media presentation description file associated with the audio file and comprising image frame size information indicating a positional relationship between an image frame of the video content and the origin, to thereby enable detection of the position of each object on the image frame on the basis of the object position information and the image frame size information.

2. The information processing apparatus of claim 1, wherein the file generation unit is further configured to allocate to the audio file a metadata track comprising metadata of the audio data.

3. The information processing apparatus according to claim 1, further comprising a coding unit configured to encode the plurality of types of audio data for each type of audio data.

4. The information processing apparatus according to claim 2, wherein the file generation unit is configured to:

   allocate different audio tracks to the audio file for the audio data of each of a plurality of objects; and
   allocate, to the metadata track, metadata of the audio data of the plurality of objects.

5. The information processing apparatus according to claim 1, wherein the information about the audio data in the base track is configured to include information indicating a position of the audio data in the audio file.

6. The information processing apparatus according to claim 2, wherein the base track is configured to include information indicating a position of the audio data and a position of the metadata in the audio file.

7. The information processing apparatus according to any of claims 4 to 6, when dependent on claim 4, wherein a processing priority of each of the plurality of objects is defined according to ISOBMFF 23008-3.

8. The information processing apparatus according to any preceding claim, wherein the audio file is configured to include codec information of the audio data.

9. An information processing method for generating an audio file comprising audio data of video content for at least one object, the audio data comprising audio data of a plurality of types, the method comprising a file generation step of:

allocating a plurality of audio tracks to the audio file, wherein one type of audio data from said plurality of types is arranged in each audio track, and wherein at least one audio track is allocated to the audio file for each of the plurality of types of audio data; and
further allocating to the audio file a base track including information about the audio data,
wherein:

the audio file is configured to include information indicating a reference relationship of the base track with one of the plurality of audio tracks;
the plurality of types of audio data are configured as Channel audio, Object audio, and HOA audio;
Channel audio comprises audio data in units of channels, Object audio comprises audio in data in units of objects, and HOA audio comprises spherical audio data, wherein an object is a sound source; and
the method further comprises generating:

an audio metafile associated with the audio file and comprising, for the at least one object, an object ID and object position information indicating a positional relationship between the at least one object and an origin; and
a media presentation description file associated with the audio file and comprising image frame size information indicating a positional relationship between an image frame of the video content and the origin, to thereby enable detection of the position of each object on the image frame on the basis of the object position information and the image frame size information.

## Patentansprüche

1. Informationsverarbeitungsvorrichtung, umfassend eine Dateierzeugungseinheit (11), die dafür ausgelegt ist, eine Audiodatei zu erzeugen, die Audiodaten von Videoinhalten für mindestens ein Objekt umfasst, wobei die Audiodaten Audiodaten einer Vielzahl von Arten umfassen, wobei die Dateierzeugungseinheit für folgende Vorgänge ausgelegt ist:

Zuweisen einer Vielzahl von Audiotracks zur Audiodatei, wobei eine Art von Audiodaten aus der Vielzahl von Arten in jedem Audiotrack angeordnet ist, und wobei zumindest ein Audiotrack der Audiodatei für jede der Vielzahl von Arten von Audiodaten zugewiesen wird; und
weiteres Zuweisen, zur Audiodatei, eines Basistracks, der Informationen über die Audiodaten beinhaltet,
wobei:

die Audiodatei dafür ausgelegt ist, Informationen zu beinhalten, die eine Referenzbeziehung des Basistracks zu einem der Vielzahl von Audiotracks angeben;
die Vielzahl von Arten von Audiodaten Channel-Audio, Object-Audio und HOA-Audio umfassen;
Channel-Audio Audiodaten in Einheiten von Kanälen umfasst, Object-Audio Audiodaten in Einheiten von Objekten umfasst und HOA-Audio sphärische Audiodaten umfasst, wobei ein Objekt eine Schallquelle ist; und
die Dateierzeugungseinheit ferner zum Erzeugen folgender Dateien ausgelegt ist:

einer Audio-Metadatei, die der Audiodatei zugeordnet ist und, für das mindestens eine Objekt, eine Objekt-ID und Objektpositionsinformationen umfasst, die eine Positionsbeziehung zwischen dem mindestens einen Objekt und einem Ursprung angeben; und
einer Medienpräsentationsbeschreibungsdatei, die der Audiodatei zugeordnet ist und Bildframegrößeninformationen umfasst, die eine Positionsbeziehung zwischen einem Bildframe der Videoinhalte und dem Ursprung angeben, zu dem Zweck, dadurch eine Erfassung der Position jedes Objekts im Bildframe auf der Grundlage der Objektpositionsinformationen und der Bildframegrößeninformationen zu ermöglichen.

2. Informationsverarbeitungsvorrichtung nach Anspruch 1, wobei die Dateierzeugungseinheit ferner dafür ausgelegt ist, der Audiodatei einen Metadatentrack zuzuweisen, der Metadaten der Audiodaten umfasst.

3. Informationsverarbeitungsvorrichtung nach Anspruch 1, ferner umfassend eine Kodiereinheit, die dafür ausgelegt ist, die Vielzahl von Arten von Audiodaten für jede Art von Audiodaten zu kodieren.

4. Informationsverarbeitungsvorrichtung nach Anspruch 2, wobei die Dateierzeugungseinheit für folgende Vorgänge ausgelegt ist:

Zuweisen, zur Audiodatei, verschiedener Audiotracks für die Audiodaten jedes einer Vielzahl von Objekten; und
Zuweisen, zum Metadatentrack, von Metadaten der Audiodaten aus der Vielzahl von Objekten.

5. Informationsverarbeitungsvorrichtung nach Anspruch 1, wobei die Informationen über die Audiodaten im Basistrack dafür ausgelegt ist, Informationen zu beinhalten, die eine Position der Audiodaten in der Audiodatei angeben.

6. Informationsverarbeitungsvorrichtung nach Anspruch 2, wobei der Basistrack dafür ausgelegt ist, Informationen zu beinhalten, die eine Position der Audiodaten und eine Position der Metadaten in der Audiodatei angeben.

7. Informationsverarbeitungsvorrichtung nach einem der Ansprüche 4 bis 6 bei Abhängigkeit von Anspruch 4, wobei eine Verarbeitungspriorität für jedes der Vielzahl von Objekten gemäß ISOBMFF 23008-3 definiert ist.

8. Informationsverarbeitungsvorrichtung nach einem der vorhergehenden Ansprüche, wobei die Audiodatei dafür ausgelegt ist, Codec-Informationen der Audiodaten zu beinhalten.

9. Informationsverarbeitungsverfahren zum Erzeugen einer Audiodatei, die Audiodaten von Videoinhalten für mindestens ein Objekt umfasst, wobei die Audiodaten Audiodaten einer Vielzahl von Arten umfassen, wobei das Verfahren den folgenden Dateierzeugungsschritt umfasst:

Zuweisen einer Vielzahl von Audiotracks zur Audiodatei, wobei eine Art von Audiodaten aus der Vielzahl von Arten in jedem Audiotrack angeordnet ist, und wobei zumindest ein Audiotrack der Audiodatei für jede der Vielzahl von Arten von Audiodaten zugewiesen wird; und
weiteres Zuweisen, zur Audiodatei, eines Basistracks, der Informationen über die Audiodaten beinhaltet, wobei:

die Audiodatei dafür ausgelegt ist, Informationen zu beinhalten, die eine Referenzbeziehung des Basistracks zu einem der Vielzahl von Audiotracks angeben;
die Vielzahl von Arten von Audiodaten als Channel-Audio, Object-Audio und HOA-Audio ausgelegt ist;
Channel-Audio Audiodaten in Einheiten von Kanälen umfasst, Object-Audio Audiodaten in Einheiten von Objekten umfasst und HOA-Audio sphärische Audiodaten umfasst, wobei ein Objekt eine Schallquelle ist; und
das Verfahren ferner das Erzeugen der folgenden Dateien umfasst:

einer Audio-Metadatei, die der Audiodatei zugeordnet ist und, für das mindestens eine Objekt, eine Objekt-ID und Objektpositionsinformationen umfasst, die eine Positionsbeziehung zwischen dem mindestens einen Objekt und einem Ursprung angeben; und
einer Medienpräsentationsbeschreibungsdatei, die der Audiodatei zugeordnet ist und Bildframegrößeninformationen umfasst, die eine Positionsbeziehung zwischen einem Bildframe der Videoinhalte und dem Ursprung angeben, zu dem Zweck, dadurch eine Erfassung der Position jedes Objekts im Bildframe auf der Grundlage der Objektpositionsinformationen und der Bildframegrößeninformationen zu ermöglichen.

## Revendications

1. Appareil de traitement d'informations comprenant une unité de génération de fichiers (11) configurée pour générer un fichier audio comprenant des données audio de contenu vidéo pour au moins un objet, les données audio comprenant des données audio d'une pluralité de types, l'unité de génération de fichiers étant configurée pour :

   allouer une pluralité de pistes audio au fichier audio, où un type de données audio de ladite pluralité de types est disposé dans chaque piste audio, et où au moins une piste audio est allouée au fichier audio pour chacun de la pluralité de types de données audio ; et
   allouer en outre au fichier audio une piste de base comprenant des informations sur les données audio, où :

      le fichier audio est configuré pour inclure des informations indiquant une relation de référence de la piste de base avec l'une de la pluralité de pistes audio ;
      la pluralité de types de données audio comprend l'audio de canal, l'audio d'objet et l'audio HOA ;
      l'audio de canal comprend des données audio en unités de canaux, l'audio d'objet comprend des données audio en unités d'objets, et l'audio HOA comprend des données audio sphériques, où un objet est une source sonore ; et
      l'unité de génération de fichiers est en outre configurée pour générer :

         un métafichier audio associé au fichier audio et comprenant, pour l'au moins un objet, un ID d'objet et des informations de position d'objet indiquant une relation de position entre l'au moins un objet et une origine ; et
         un fichier de description de présentation de média associé au fichier audio et comprenant des informations de taille de trame d'image indiquant une relation de position entre une trame d'image du contenu vidéo et l'origine, pour permettre ainsi la détection de la position de chaque objet sur la trame d'image sur la base des informations de position d'objet et des informations de taille de trame d'image.

2. Appareil de traitement d'informations selon la revendication 1, dans lequel l'unité de génération de fichiers est en outre configurée pour allouer au fichier audio une piste de métadonnées comprenant des métadonnées des données audio.

3. Appareil de traitement d'informations selon la revendication 1, comprenant en outre une unité de codage configurée pour coder la pluralité de types de données audio pour chaque type de données audio.

4. Appareil de traitement d'informations selon la revendication 2, dans lequel l'unité de génération de fichiers est configurée pour :

   allouer différentes pistes audio au fichier audio pour les données audio de chacun d'une pluralité d'objets ; et
   allouer, à la piste de métadonnées, des métadonnées des données audio de la pluralité d'objets.

5. Appareil de traitement d'informations selon la revendication 1, dans lequel les informations concernant les données audio dans la piste de base sont configurées pour inclure des informations indiquant une position des données audio dans le fichier audio.

6. Appareil de traitement d'informations selon la revendication 2, dans lequel la piste de base est configurée pour inclure des informations indiquant une position des données audio et une position des métadonnées dans le fichier audio.

7. Appareil de traitement d'informations selon l'une quelconque des revendications 4 à 6, lorsqu'elles dépendent de la revendication 4, dans lequel une priorité de traitement de chacun de la pluralité d'objets est définie selon la norme ISOBMFF 23008-3.

8. Appareil de traitement d'informations selon l'une quelconque des revendications précédentes, dans lequel le fichier audio est configuré pour inclure des informations de codec des données audio.

**9.** Procédé de traitement d'informations pour générer un fichier audio comprenant des données audio de contenu vidéo pour au moins un objet, les données audio comprenant des données audio d'une pluralité de types, le procédé comprenant une étape de génération de fichiers pour :

allouer une pluralité de pistes audio au fichier audio, où un type de données audio de ladite pluralité de types est disposé dans chaque piste audio, et où au moins une piste audio est allouée au fichier audio pour chacun de la pluralité de types de données audio ; et
allouer en outre au fichier audio une piste de base comprenant des informations sur les données audio, où :

le fichier audio est configuré pour inclure des informations indiquant une relation de référence de la piste de base avec l'une de la pluralité de pistes audio ;
la pluralité des types de données audio se présentent sous la forme d'audio de canal, d'audio d'objet et d'audio HOA ;
l'audio de canal comprend des données audio en unités de canaux, l'audio d'objet comprend des données audio en unités d'objets, et l'audio HOA comprend des données audio sphériques, où un objet est une source sonore ; et le procédé comprend en outre de générer :

un métafichier audio associé au fichier audio et comprenant, pour l'au moins un objet, un ID d'objet et des informations de position d'objet indiquant une relation de position entre l'au moins un objet et une origine ; et
un fichier de description de présentation de média associé au fichier audio et comprenant des informations de taille de trame d'image indiquant une relation de position entre une trame d'image du contenu vidéo et l'origine, pour permettre ainsi la détection de la position de chaque objet sur la trame d'image sur la base des informations de position d'objet et des informations de taille de trame d'image.

FIG. 1

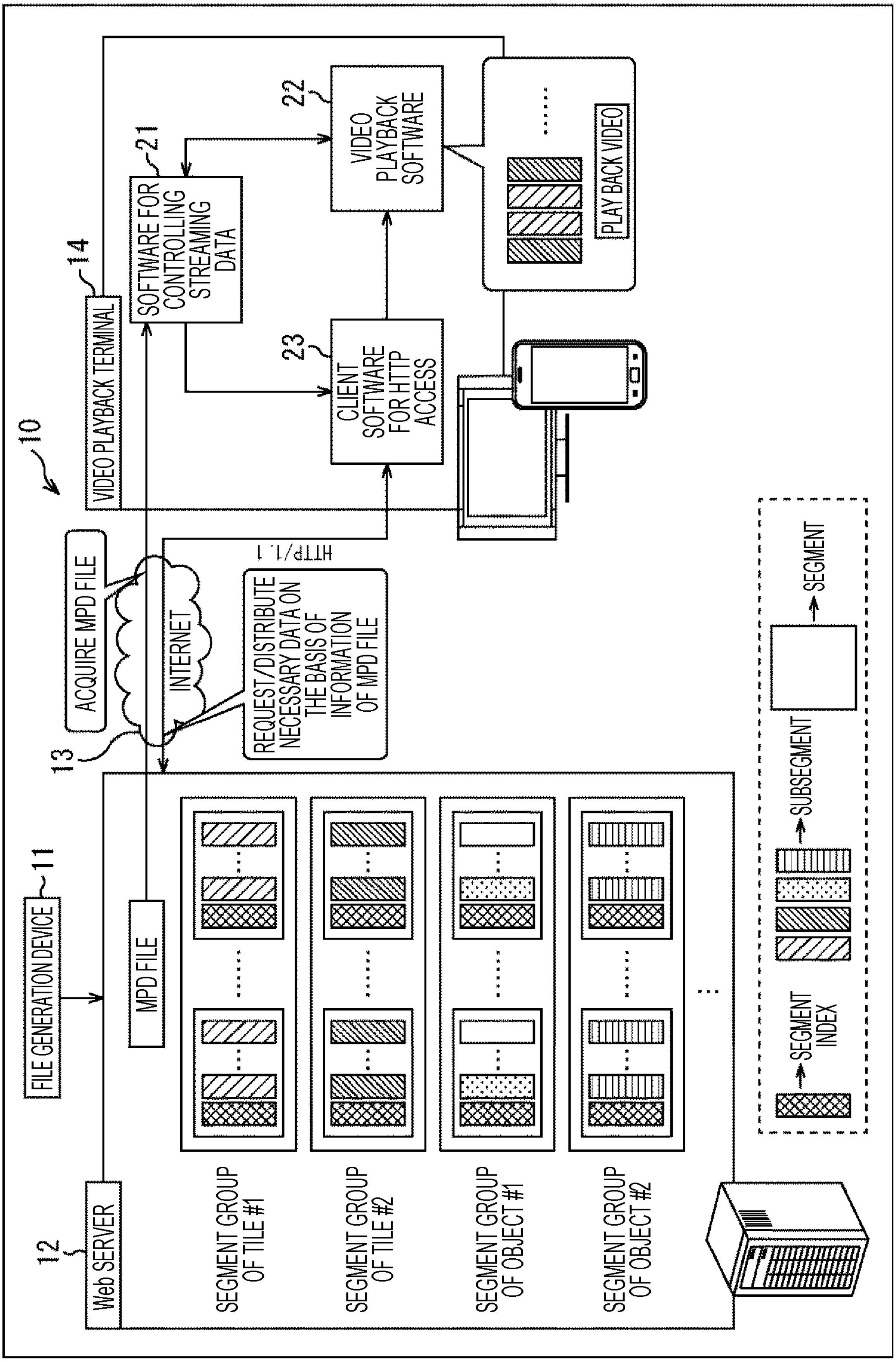
10
FILE GENERATION DEVICE
11
MPD FILE
Web SERVER
12
SEGMENT GROUP OF TILE #1
SEGMENT GROUP OF TILE #2
SEGMENT GROUP OF OBJECT #1
SEGMENT GROUP OF OBJECT #2
13
INTERNET
ACQUIRE MPD FILE
REQUEST/DISTRIBUTE NECESSARY DATA ON THE BASIS OF INFORMATION OF MPD FILE
HTTP/1.1
VIDEO PLAYBACK TERMINAL
14
SOFTWARE FOR CONTROLLING STREAMING DATA
21
VIDEO PLAYBACK SOFTWARE
22
CLIENT SOFTWARE FOR HTTP ACCESS
23
PLAY BACK VIDEO
SEGMENT INDEX
SUBSEGMENT
SEGMENT

FIG. 2

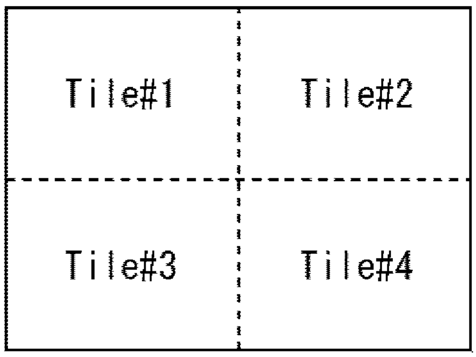

FIG. 3

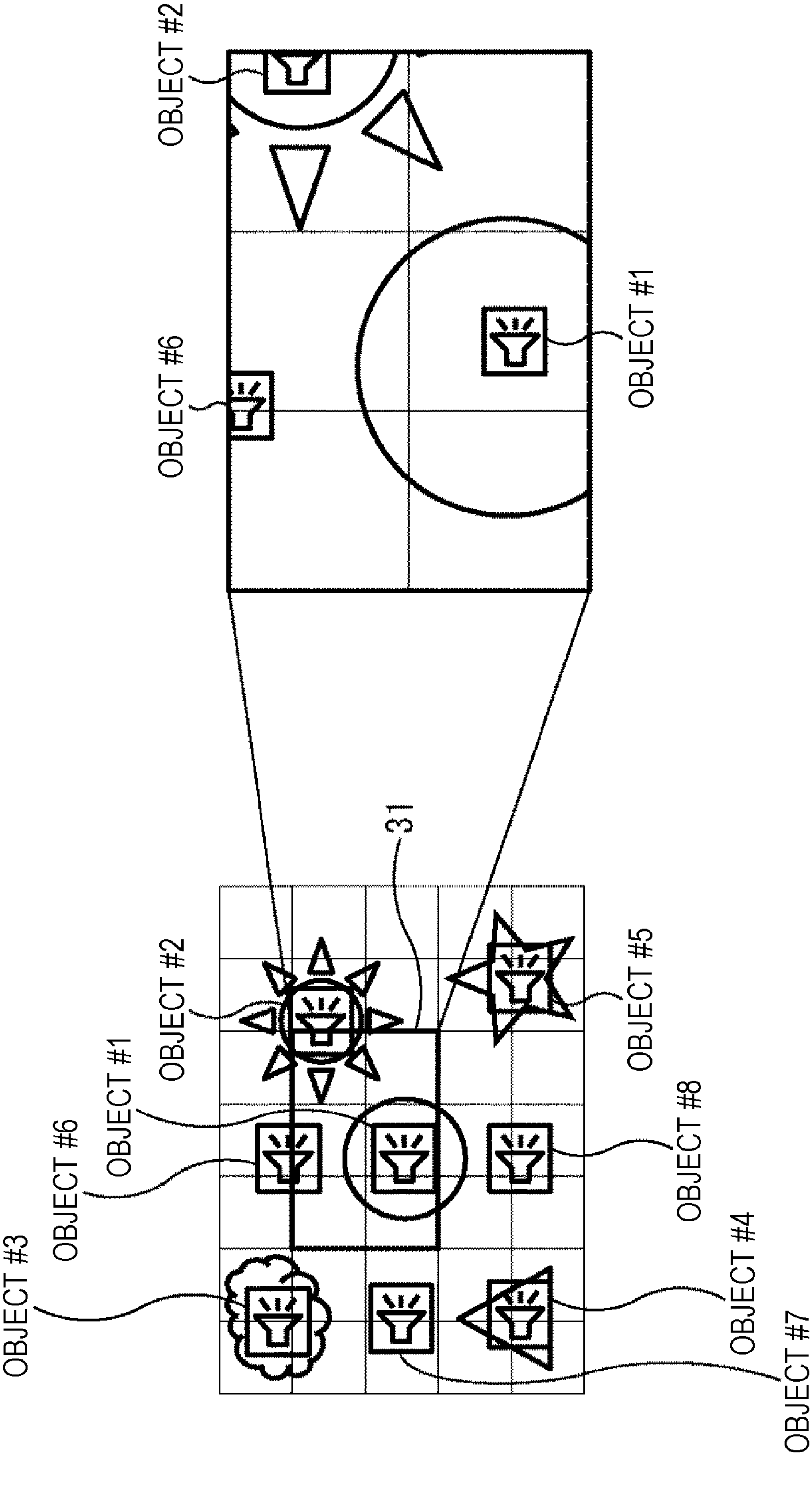
OBJECT #2
OBJECT #6
OBJECT #1
31
OBJECT #3
OBJECT #6
OBJECT #1
OBJECT #2
OBJECT #5
OBJECT #8
OBJECT #4
OBJECT #7

FIG. 4

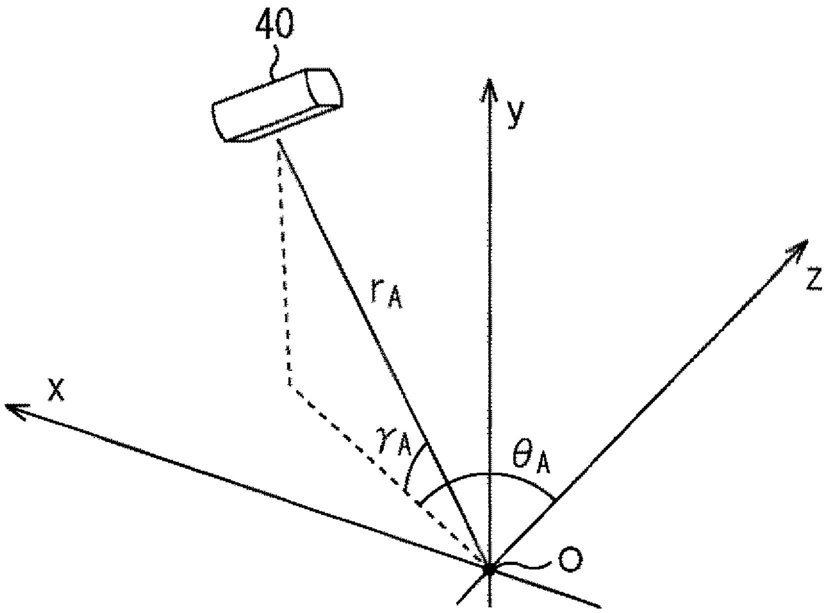

FIG. 5

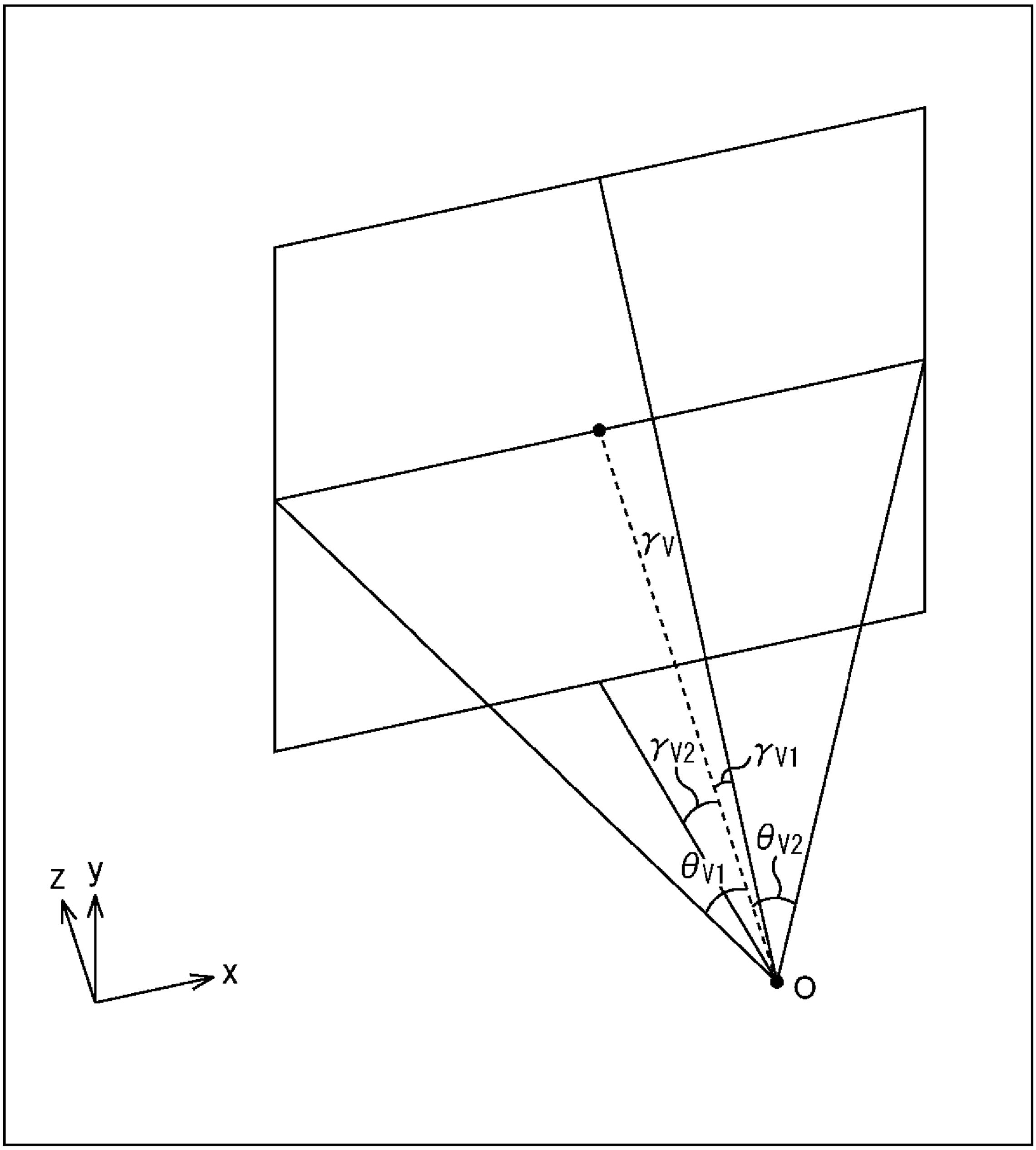

FIG. 6

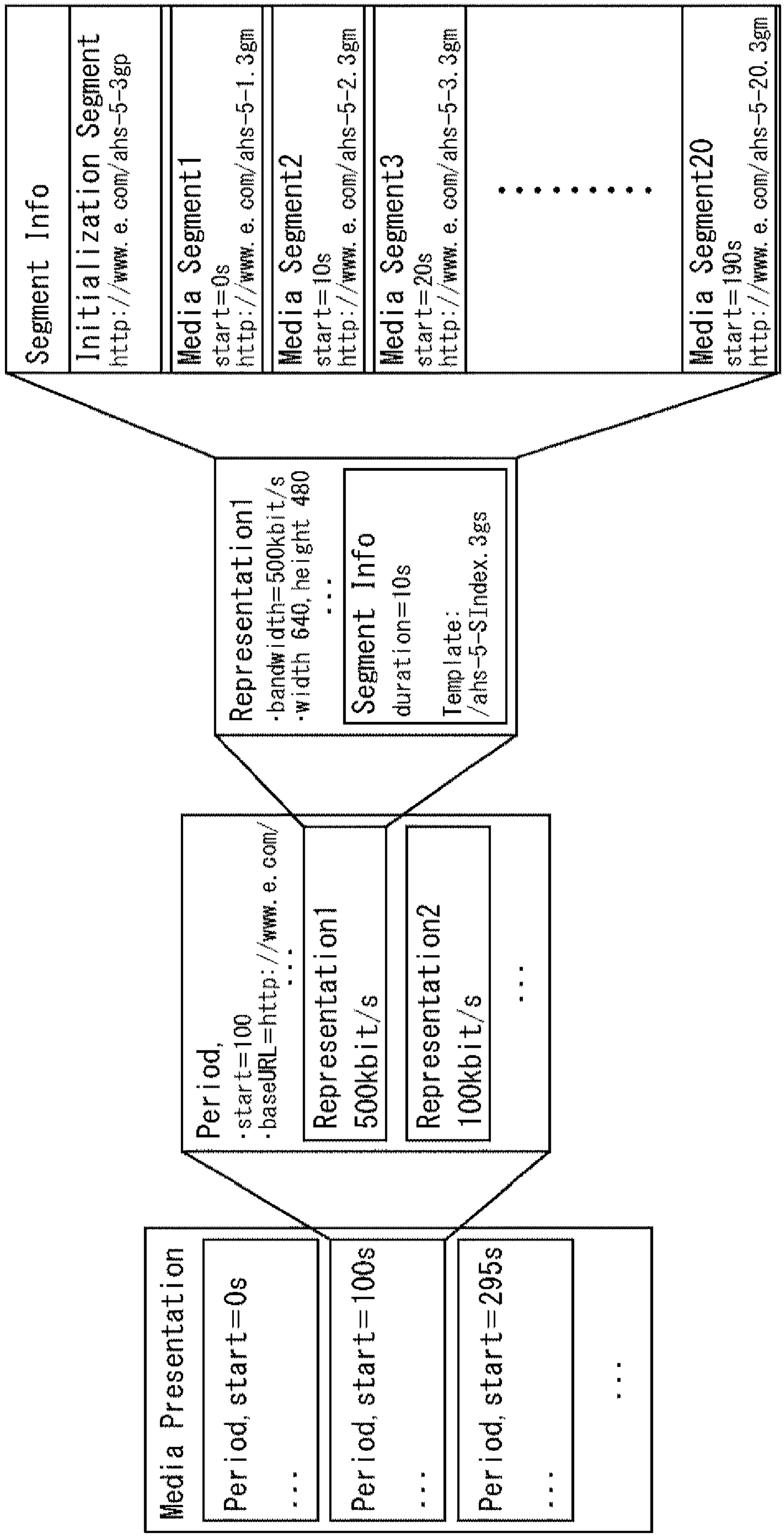
Segment Info
Initialization Segment
http://www.e.com/ahs-5-3gp
Media Segment1
start=0s
http://www.e.com/ahs-5-1.3gm
Media Segment2
start=10s
http://www.e.com/ahs-5-2.3gm
Media Segment3
start=20s
http://www.e.com/ahs-5-3.3gm
Media Segment20
start=190s
http://www.e.com/ahs-5-20.3gm
Representation1
·bandwidth=500kbit/s
·width 640, height 480
...
Segment Info
duration=10s
Template:
/ahs-5-SIndex.3gs
Period,
·start=100
·baseURL=http://www.e.com/
...
Representation1
500kbit/s
Representation2
100kbit/s
...
Media Presentation
Period, start=0s
...
Period, start=100s
...
Period, start=295s
...
...

FIG. 7

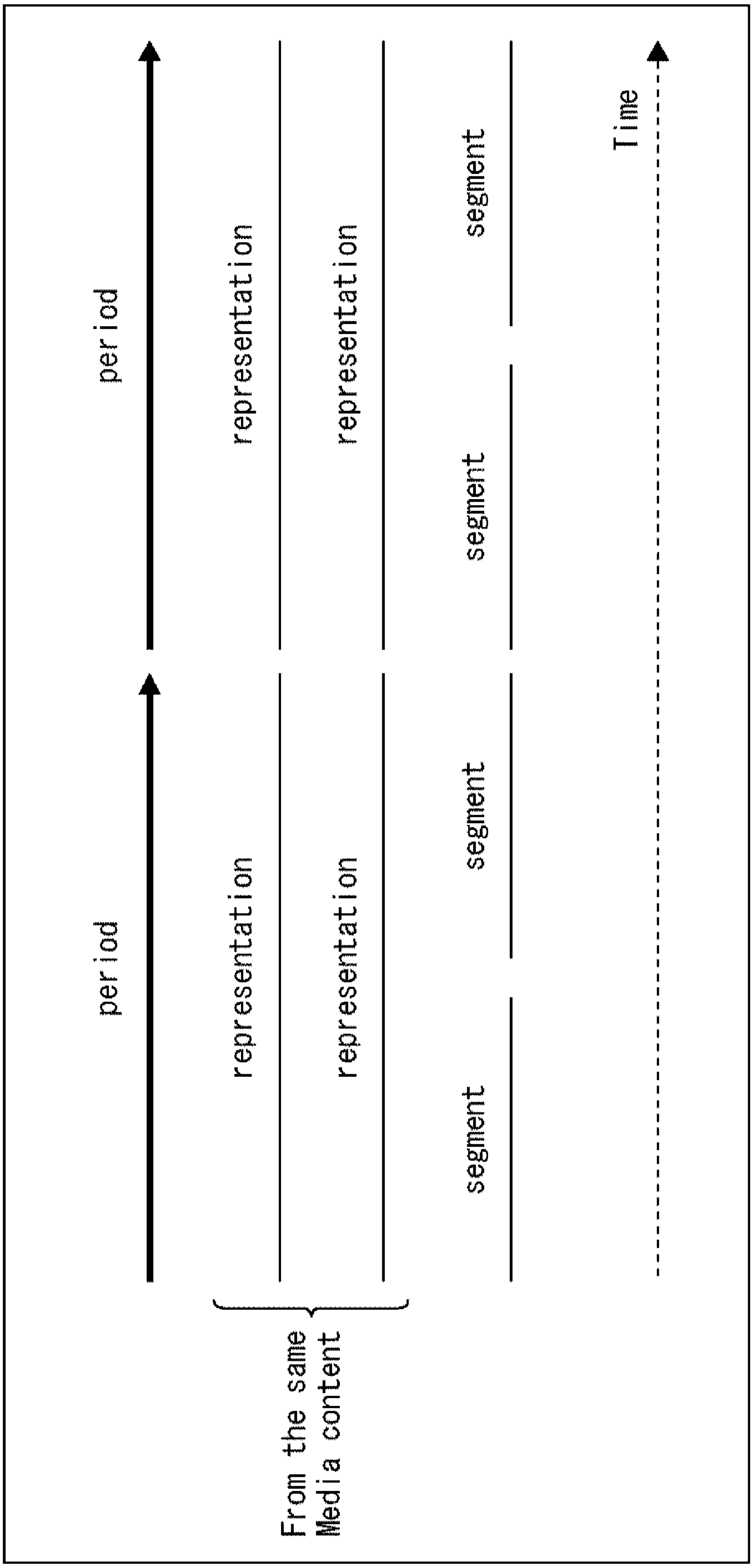
period
period
representation
representation
representation
representation
segment
segment
segment
segment
Time
From the same
Media content

FIG. 8

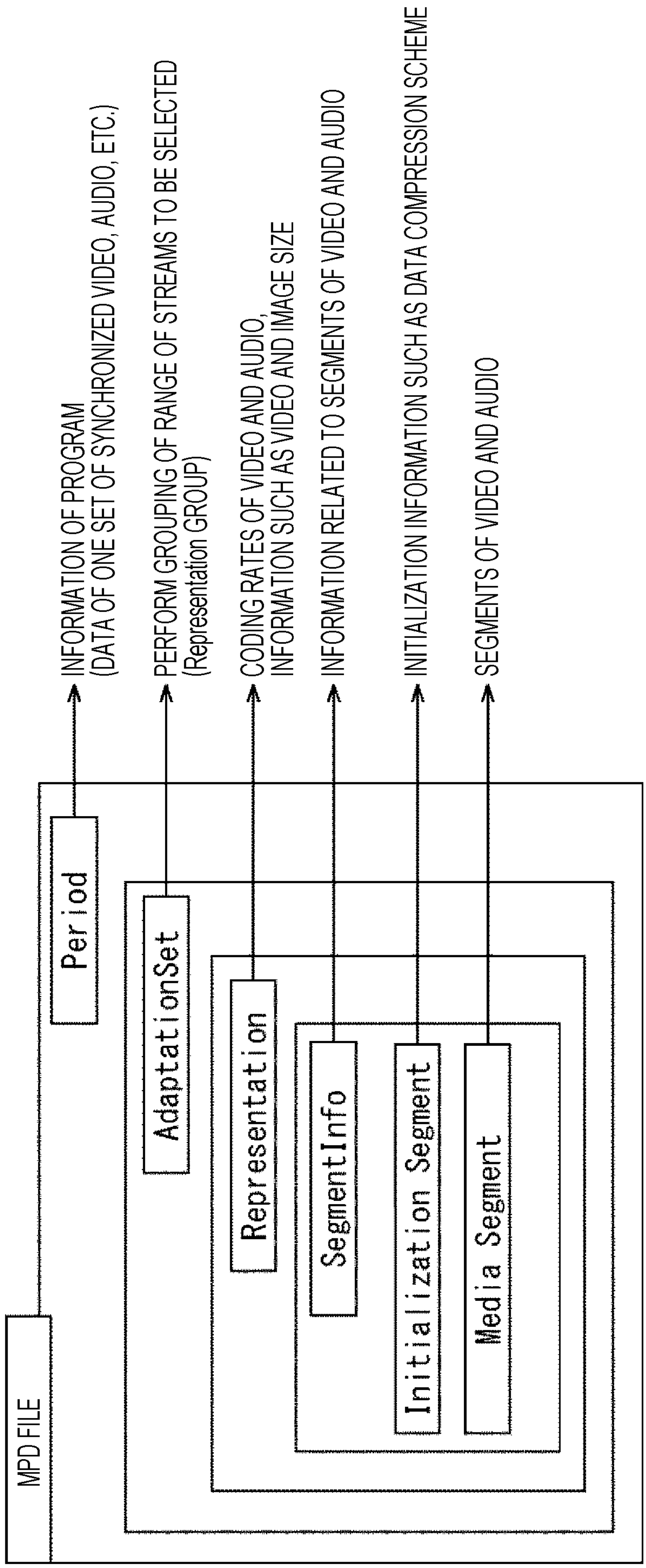
MPD FILE
Period
AdaptationSet
Representation
SegmentInfo
Initialization Segment
Media Segment
INFORMATION OF PROGRAM
(DATA OF ONE SET OF SYNCHRONIZED VIDEO, AUDIO, ETC.)
PERFORM GROUPING OF RANGE OF STREAMS TO BE SELECTED
(Representation GROUP)
CODING RATES OF VIDEO AND AUDIO,
INFORMATION SUCH AS VIDEO AND IMAGE SIZE
INFORMATION RELATED TO SEGMENTS OF VIDEO AND AUDIO
INITIALIZATION INFORMATION SUCH AS DATA COMPRESSION SCHEME
SEGMENTS OF VIDEO AND AUDIO

FIG. 9

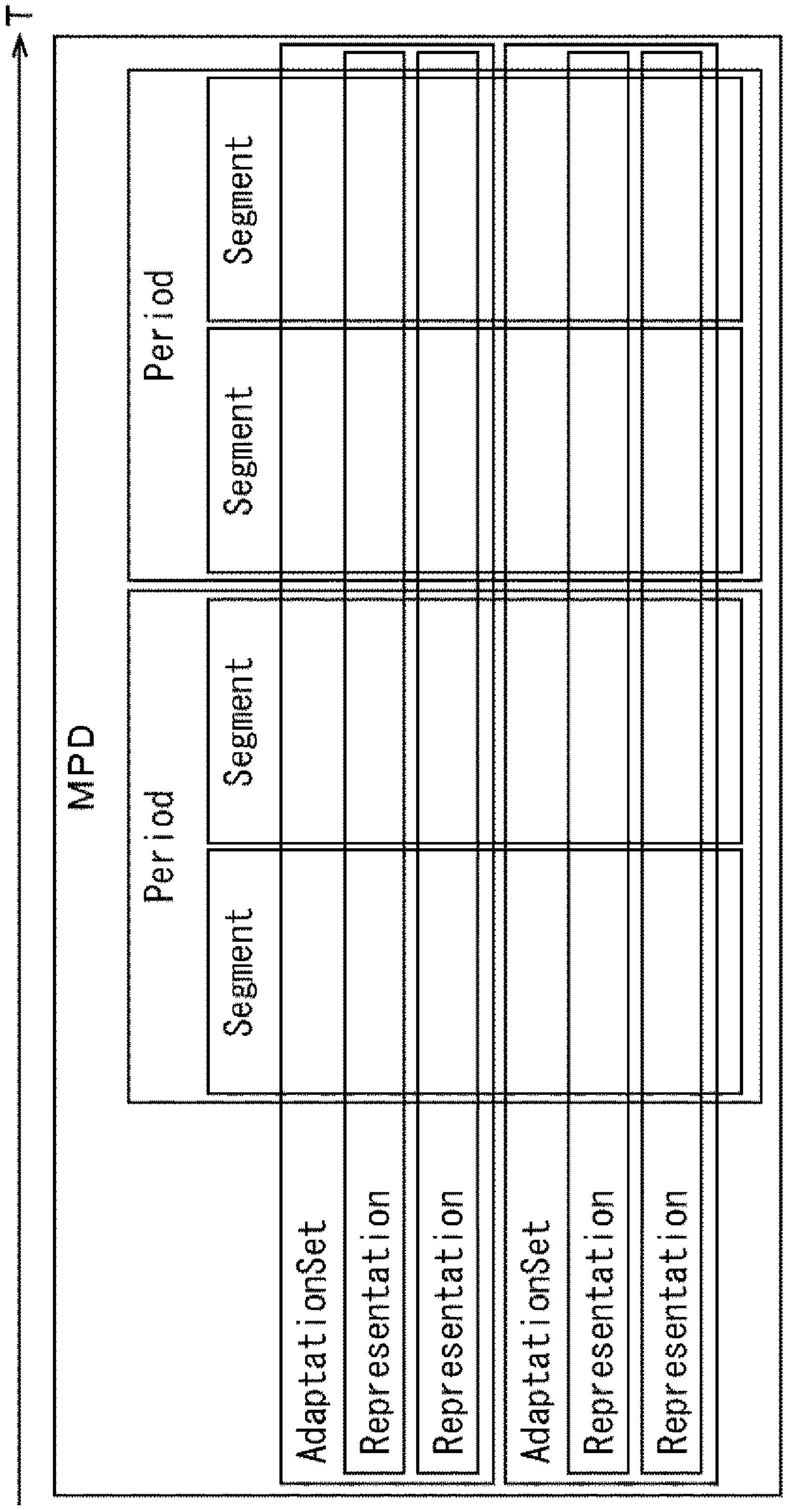
T
MPD
Period
Period
Segment
Segment
Segment
Segment
Segment
AdaptationSet
Representation
Representation
AdaptationSet
Representation
Representation

FIG. 10

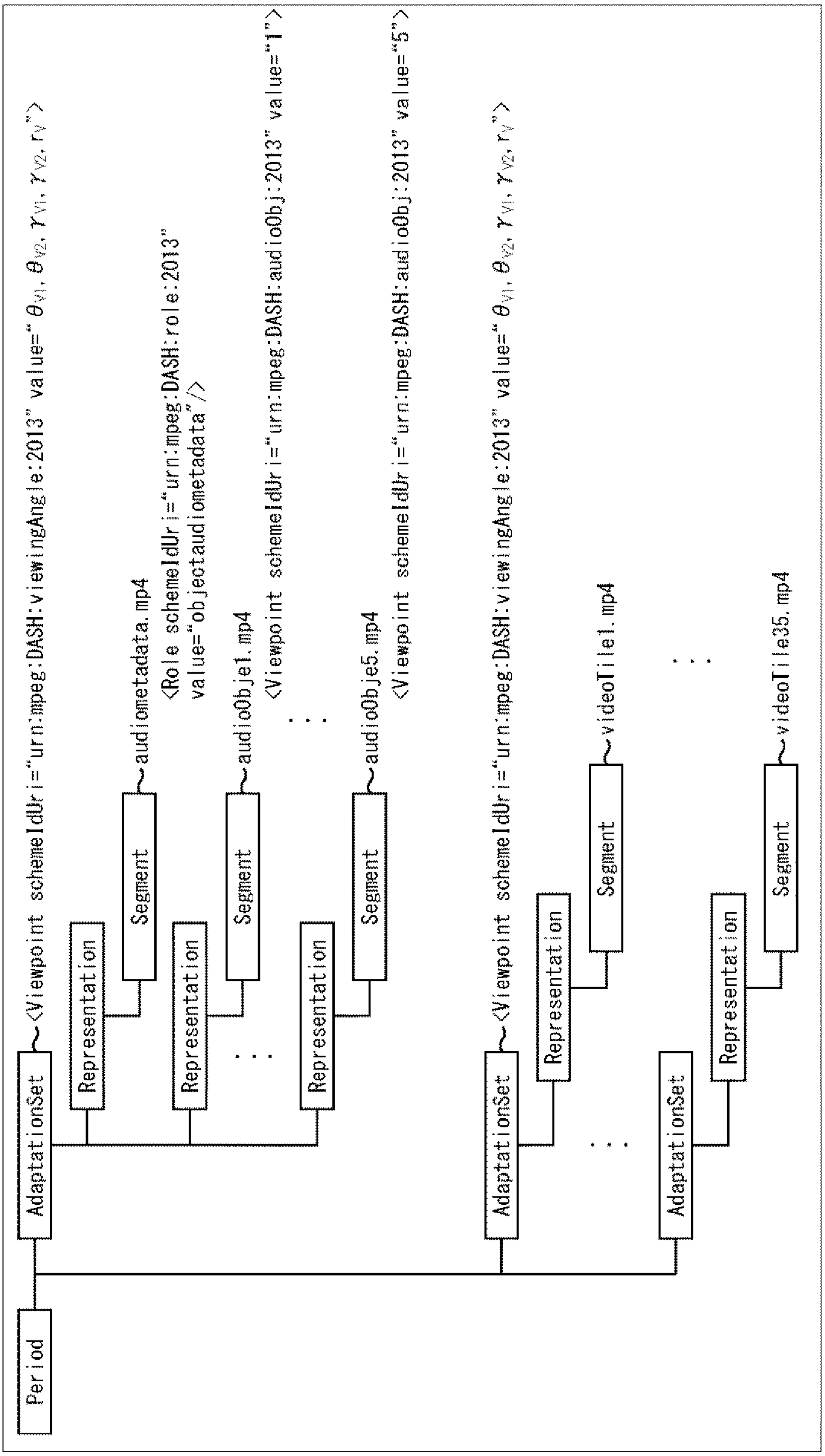
Period
AdaptationSet
<Viewpoint schemeIdUri="urn:mpeg:DASH:viewingAngle:2013" value="θv1, θv2, γv1, γv2, rv">
Representation
Segment
audiometadata.mp4
<Role schemeIdUri="urn:mpeg:DASH:role:2013" value="objectaudiometadata"/>
Representation
Segment
audioObje1.mp4
<Viewpoint schemeIdUri="urn:mpeg:DASH:audioObj:2013" value="1">
...
Representation
Segment
audioObje5.mp4
<Viewpoint schemeIdUri="urn:mpeg:DASH:audioObj:2013" value="5">
AdaptationSet
<Viewpoint schemeIdUri="urn:mpeg:DASH:viewingAngle:2013" value="θv1, θv2, γv1, γv2, rv">
Representation
Segment
videoTile1.mp4
...
AdaptationSet
Representation
Segment
videoTile35.mp4

FIG. 11

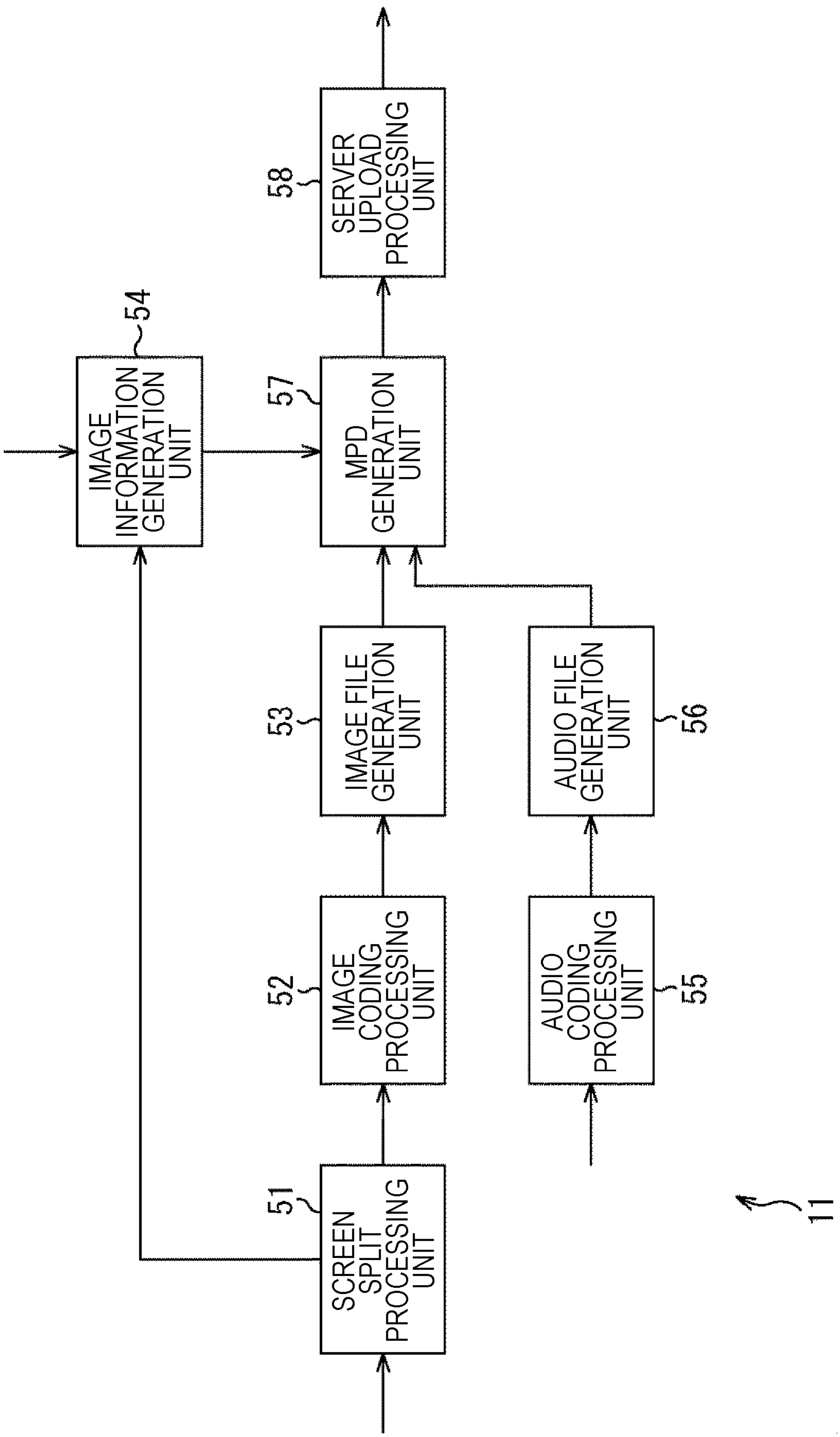
11
SCREEN SPLIT PROCESSING UNIT
51
IMAGE CODING PROCESSING UNIT
52
IMAGE FILE GENERATION UNIT
53
IMAGE INFORMATION GENERATION UNIT
54
AUDIO CODING PROCESSING UNIT
55
AUDIO FILE GENERATION UNIT
56
MPD GENERATION UNIT
57
SERVER UPLOAD PROCESSING UNIT
58

FIG. 12

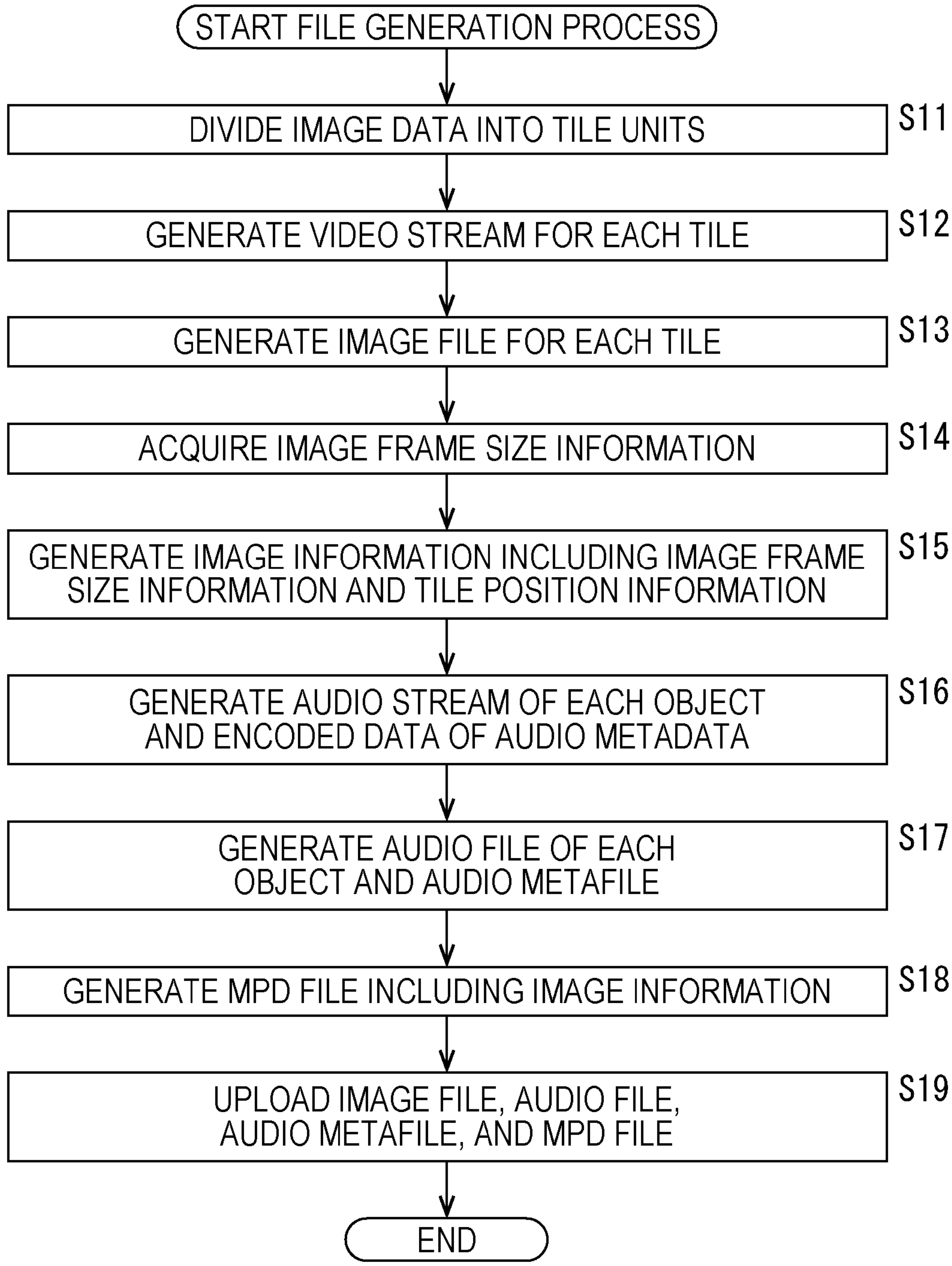
START FILE GENERATION PROCESS
DIVIDE IMAGE DATA INTO TILE UNITS
S11
GENERATE VIDEO STREAM FOR EACH TILE
S12
GENERATE IMAGE FILE FOR EACH TILE
S13
ACQUIRE IMAGE FRAME SIZE INFORMATION
S14
GENERATE IMAGE INFORMATION INCLUDING IMAGE FRAME SIZE INFORMATION AND TILE POSITION INFORMATION
S15
GENERATE AUDIO STREAM OF EACH OBJECT AND ENCODED DATA OF AUDIO METADATA
S16
GENERATE AUDIO FILE OF EACH OBJECT AND AUDIO METAFILE
S17
GENERATE MPD FILE INCLUDING IMAGE INFORMATION
S18
UPLOAD IMAGE FILE, AUDIO FILE, AUDIO METAFILE, AND MPD FILE
S19
END

FIG. 13

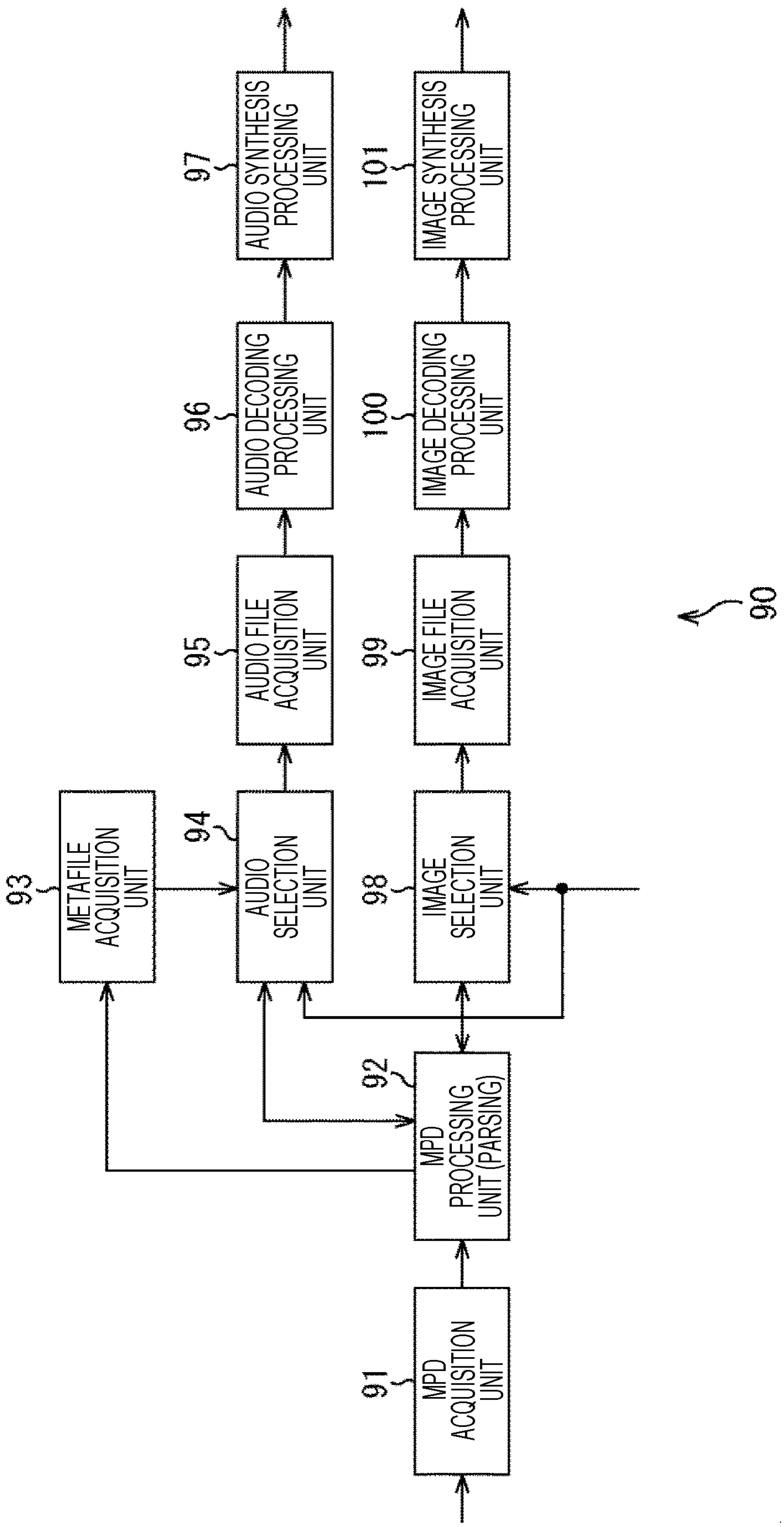
91
MPD ACQUISITION UNIT
92
MPD PROCESSING UNIT (PARSING)
93
METAFILE ACQUISITION UNIT
94
AUDIO SELECTION UNIT
95
AUDIO FILE ACQUISITION UNIT
96
AUDIO DECODING PROCESSING UNIT
97
AUDIO SYNTHESIS PROCESSING UNIT
98
IMAGE SELECTION UNIT
99
IMAGE FILE ACQUISITION UNIT
100
IMAGE DECODING PROCESSING UNIT
101
IMAGE SYNTHESIS PROCESSING UNIT
90

FIG. 14

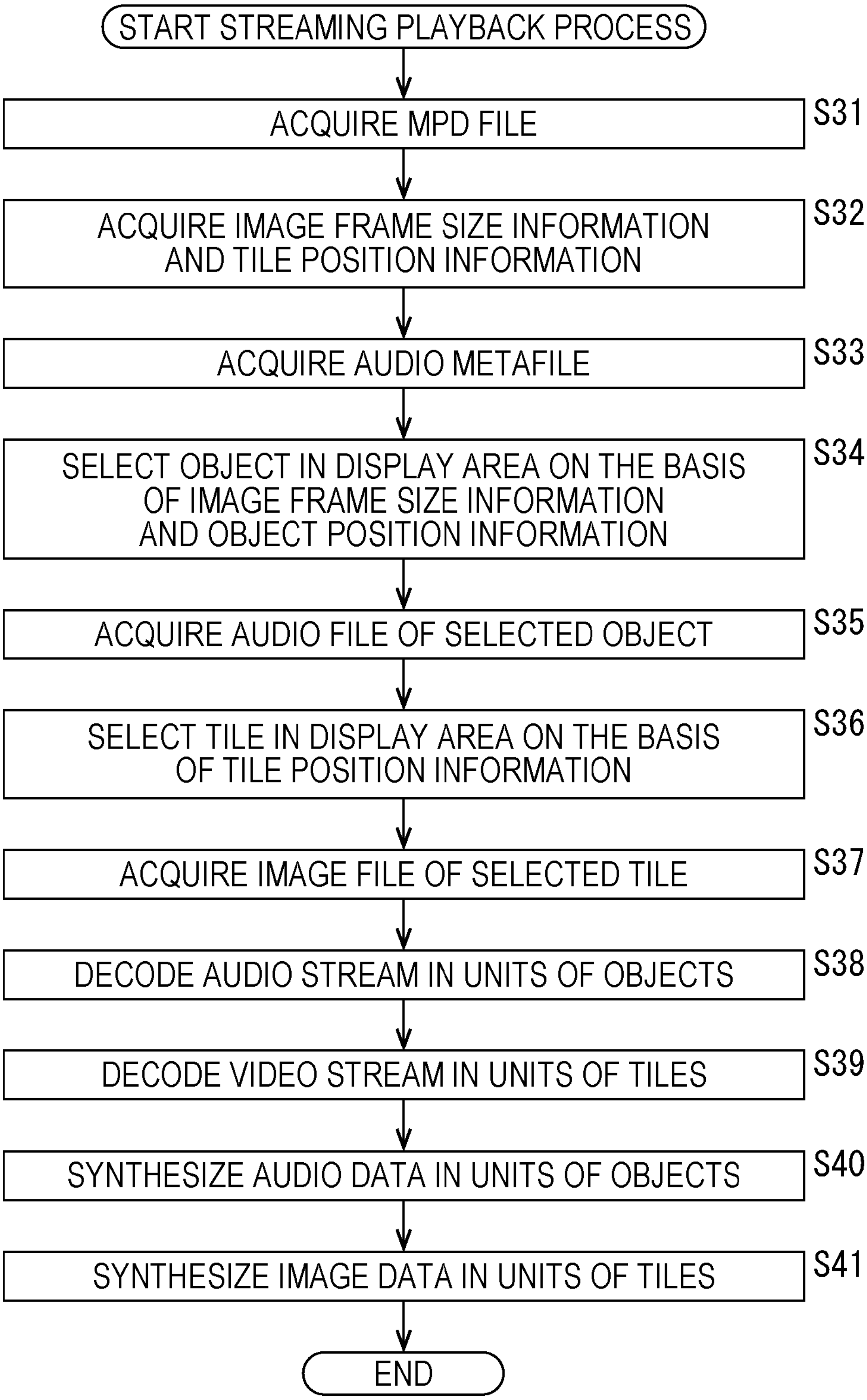
START STREAMING PLAYBACK PROCESS
ACQUIRE MPD FILE
S31
ACQUIRE IMAGE FRAME SIZE INFORMATION AND TILE POSITION INFORMATION
S32
ACQUIRE AUDIO METAFILE
S33
SELECT OBJECT IN DISPLAY AREA ON THE BASIS OF IMAGE FRAME SIZE INFORMATION AND OBJECT POSITION INFORMATION
S34
ACQUIRE AUDIO FILE OF SELECTED OBJECT
S35
SELECT TILE IN DISPLAY AREA ON THE BASIS OF TILE POSITION INFORMATION
S36
ACQUIRE IMAGE FILE OF SELECTED TILE
S37
DECODE AUDIO STREAM IN UNITS OF OBJECTS
S38
DECODE VIDEO STREAM IN UNITS OF TILES
S39
SYNTHESIZE AUDIO DATA IN UNITS OF OBJECTS
S40
SYNTHESIZE IMAGE DATA IN UNITS OF TILES
S41
END

FIG. 15

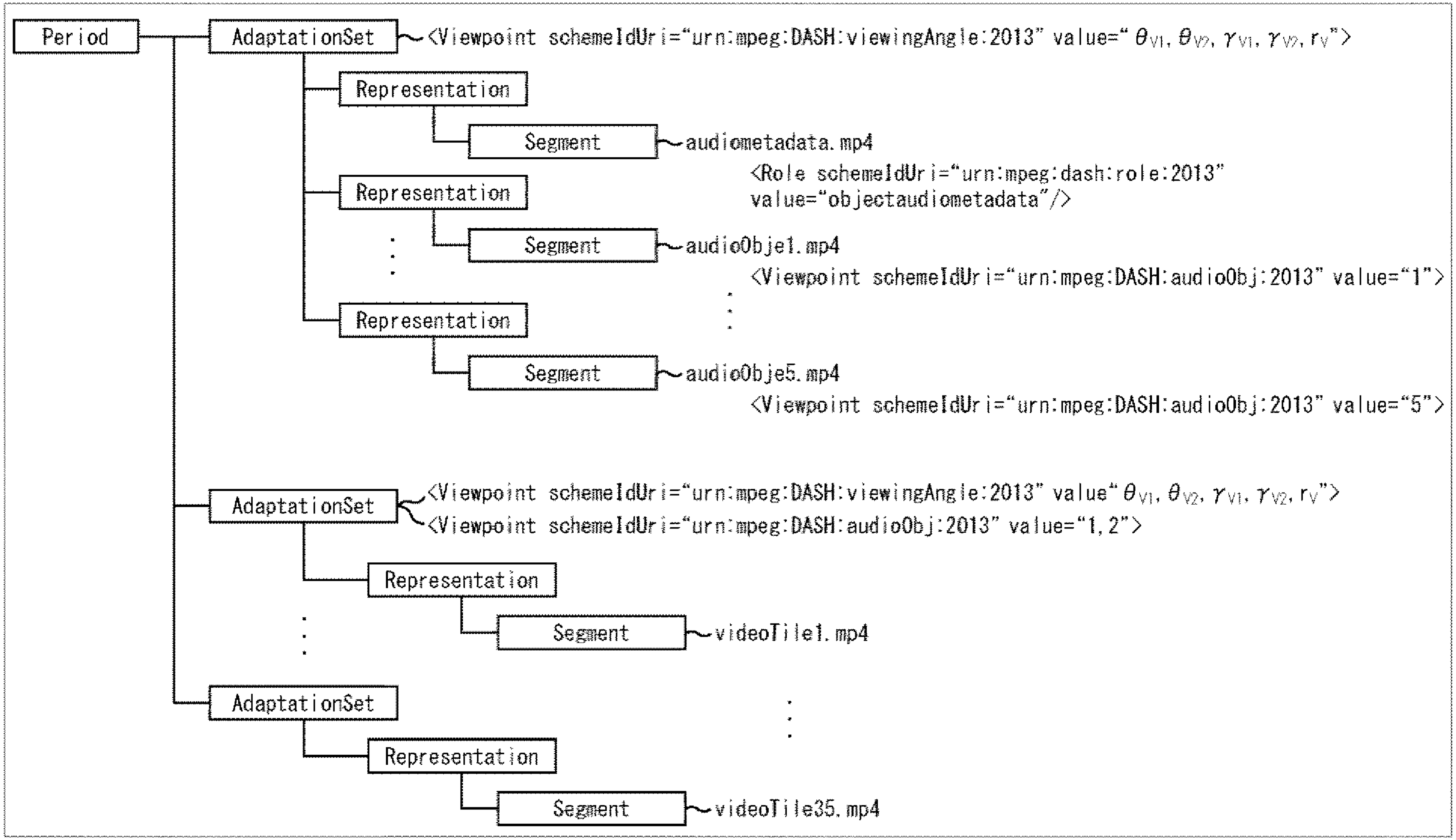
Period
AdaptationSet
<Viewpoint schemeIdUri="urn:mpeg:DASH:viewingAngle:2013" value="θV1, θV2, γV1, γV2, rV">
Representation
Segment
audiometadata.mp4
<Role schemeIdUri="urn:mpeg:dash:role:2013" value="objectaudiometadata"/>
Representation
Segment
audioObje1.mp4
<Viewpoint schemeIdUri="urn:mpeg:DASH:audioObj:2013" value="1">
Representation
Segment
audioObje5.mp4
<Viewpoint schemeIdUri="urn:mpeg:DASH:audioObj:2013" value="5">
AdaptationSet
<Viewpoint schemeIdUri="urn:mpeg:DASH:viewingAngle:2013" value"θV1, θV2, γV1, γV2, rV">
<Viewpoint schemeIdUri="urn:mpeg:DASH:audioObj:2013" value="1,2">
Representation
Segment
videoTile1.mp4
AdaptationSet
Representation
Segment
videoTile35.mp4

FIG. 16

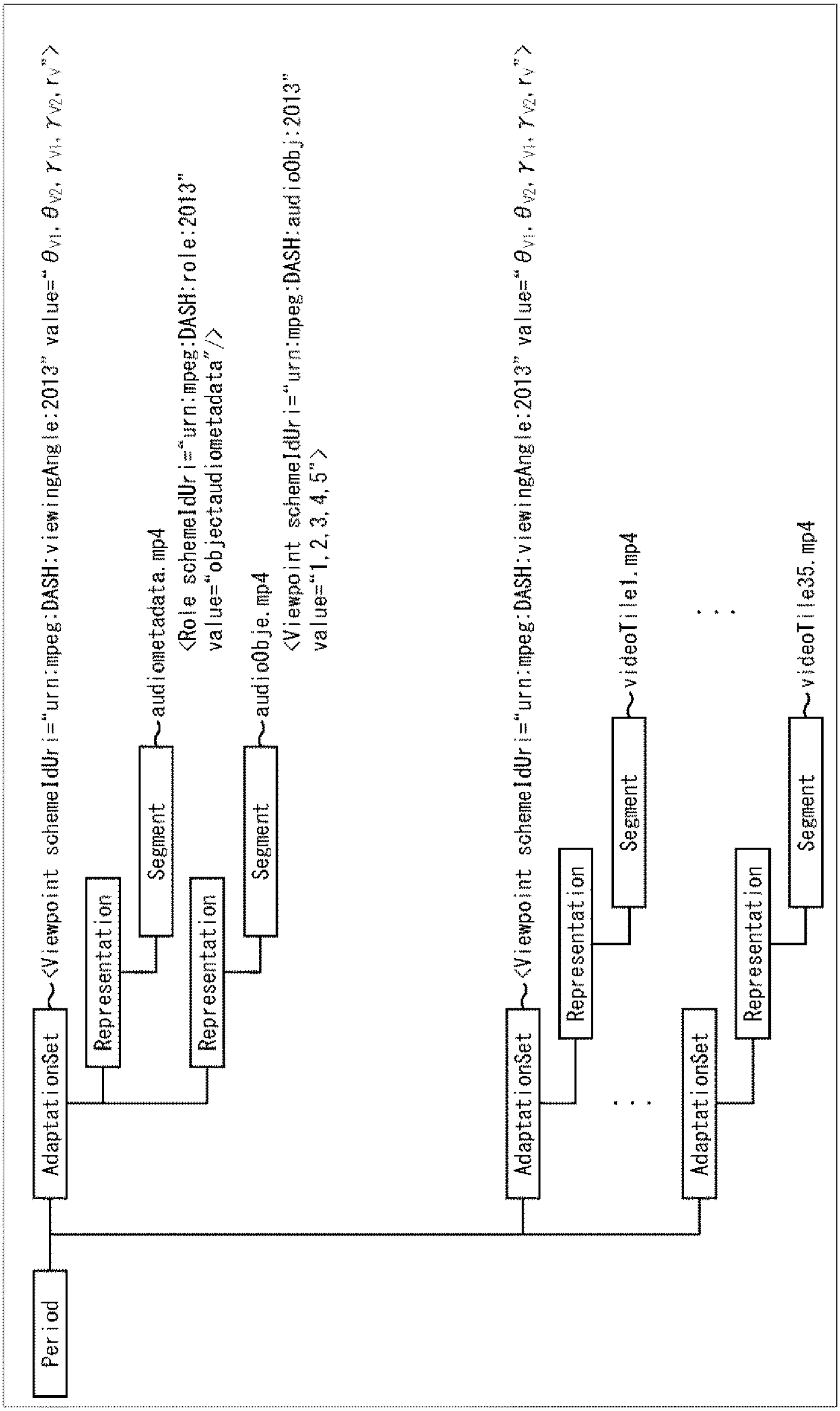
Period
AdaptationSet
<Viewpoint schemeIdUri="urn:mpeg:DASH:viewingAngle:2013" value="$\theta_{V1}$, $\theta_{V2}$, $\gamma_{V1}$, $\gamma_{V2}$, rv">
Representation
Segment
audiometadata.mp4
<Role schemeIdUri="urn:mpeg:DASH:role:2013" value="objectaudiometadata"/>
Representation
Segment
audioObje.mp4
<Viewpoint schemeIdUri="urn:mpeg:DASH:audioObj:2013" value="1, 2, 3, 4, 5">
AdaptationSet
<Viewpoint schemeIdUri="urn:mpeg:DASH:viewingAngle:2013" value="$\theta_{V1}$, $\theta_{V2}$, $\gamma_{V1}$, $\gamma_{V2}$, rv">
Representation
Segment
videoTile1.mp4
AdaptationSet
Representation
Segment
videoTile35.mp4

FIG. 17

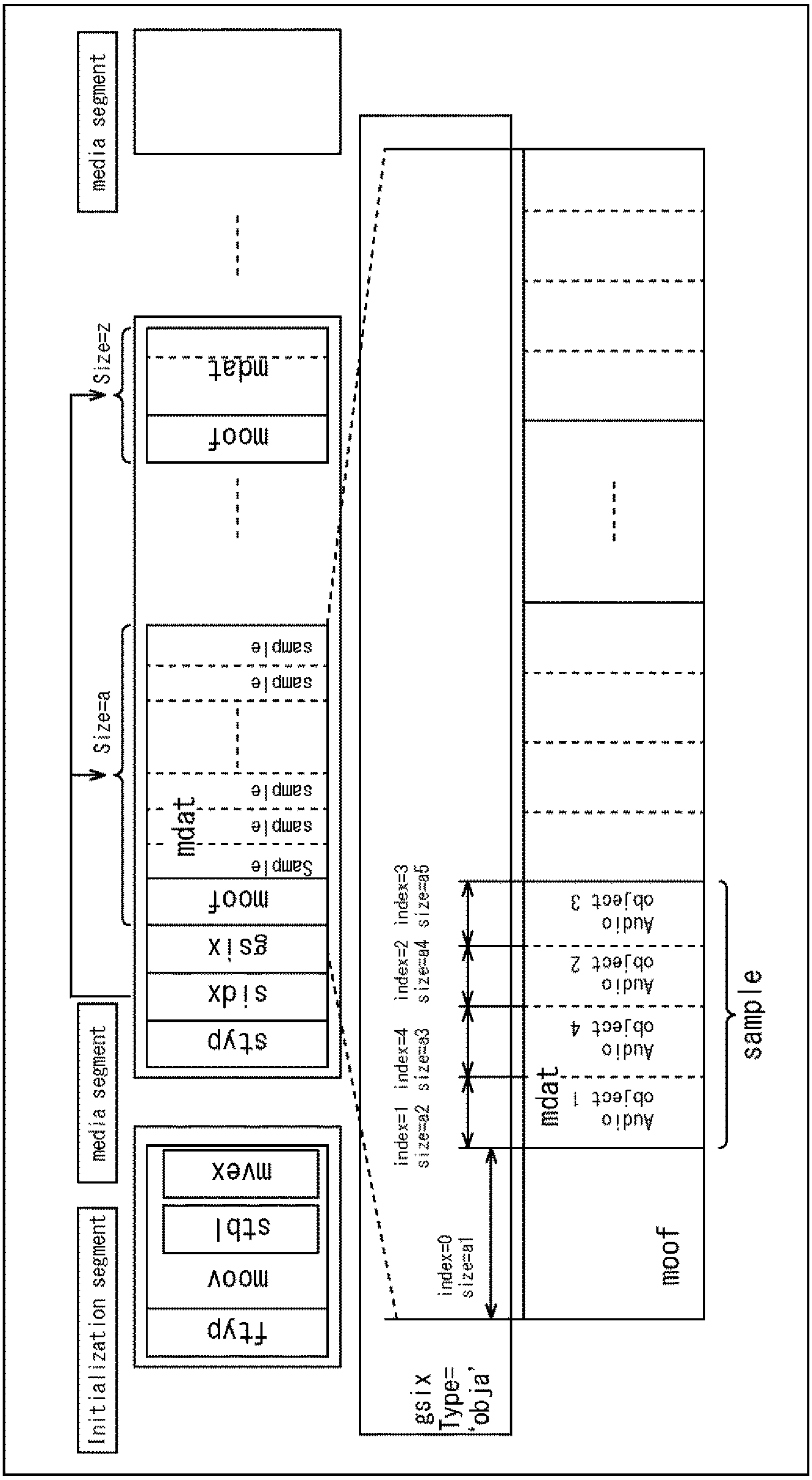
Initialization segment
media segment
media segment
ftyp
moov
stbl
mvex
styp
sidx
gsix
moof
mdat
Sample
sample
Size=a
Size=z
gsix
Type=
'obja'
index=0
size=a1
index=1
size=a2
index=4
size=a3
index=2
size=a4
index=3
size=a5
Audio
object 1
Audio
object 4
Audio
object 2
Audio
object 3

FIG. 18

```
aligned(8) class GeneralSubsegmentIndexBox extends FullBox('gsix',0,0){
   grouping_type int(32);
   unsigned int(32) subsegment_count;
   for(i=1;i<=subsegment_count;i++)
   {
      unsigned int(32) entry_count;
      for(j=1;j<= entry_count;j++){
         unsigned int(8) entry_index;
         unsigned int(24)range_size;
      }
   }
}
```

FIG. 19

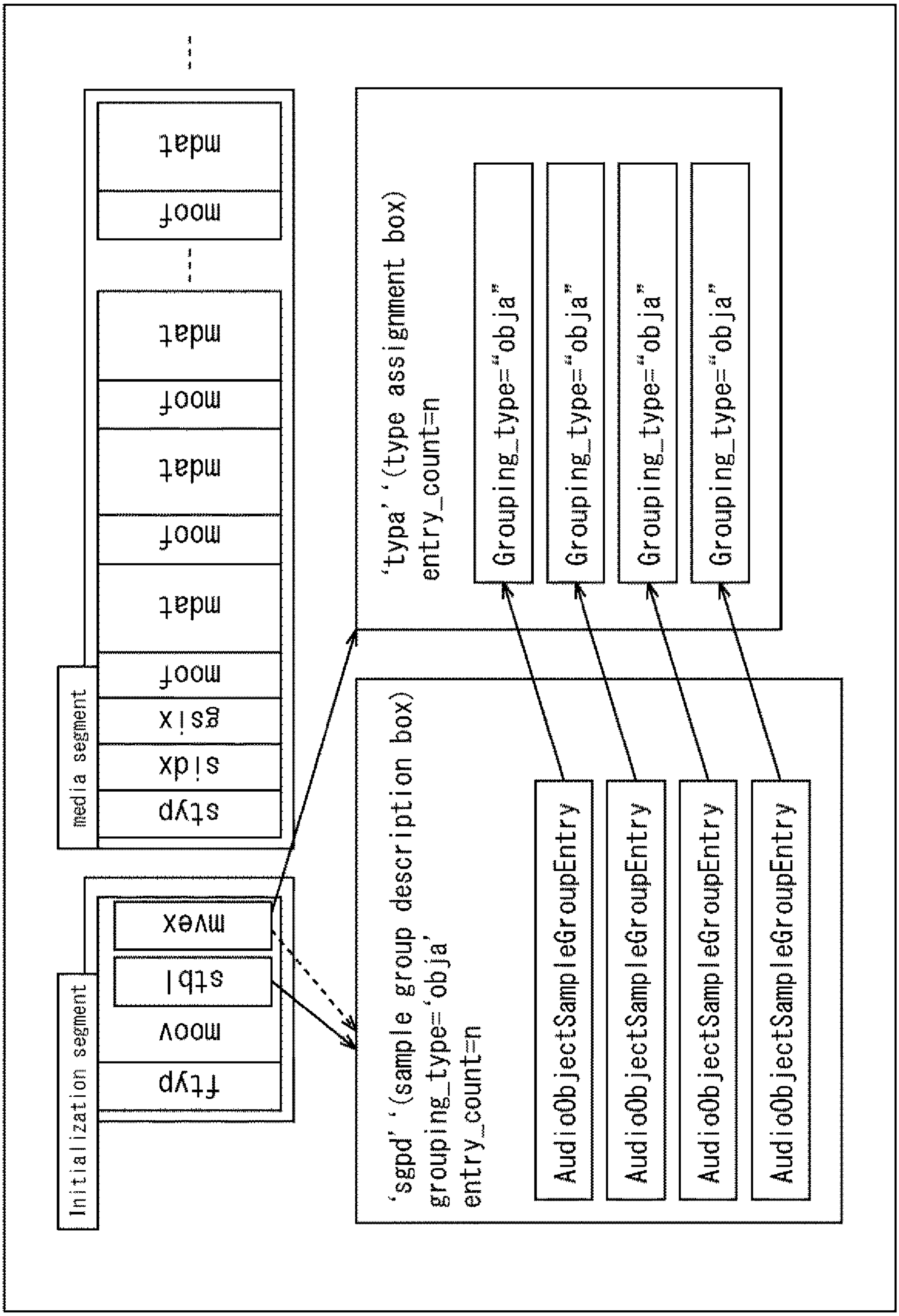
Initialization segment
ftyp
moov
stbl
mvex
media segment
styp
sidx
gsix
moof
mdat
'sgpd' '(sample group description box)
grouping_type='obja'
entry_count=n
AudioObjectSampleGroupEntry
'typa' '(type assignment box)
entry_count=n
Grouping_type="obja"

FIG. 20

A

```
Class  AudioObjectSampleGroupEntry extends AudioSampleGroupEntry('obja'){

            unsigned int(32)audio_object_id;
            unsigned int(32)reserved=0;

}
```

B

```
Sample Group Description Box("sgpd")
Grouping_type="obja"
Entry_count=4

AudioObjectSampleGroupEntry("obja) "1"
AudioObjectSampleGroupEntry("obja) "2"
AudioObjectSampleGroupEntry("obja) "3"
AudioObjectSampleGroupEntry("obja) "4"
```

FIG. 21

```
aligned(8)class TypeAssignmentBox extends FullBox('typa', 0,0)
{
   unsigned int(8) entry_count;
      for (j=1;j<= entry_count;j++){
      unsigned int(32)track_id;
      unsigned int(7)assignment_type;
         if(assignment_type == 0){
         unsigned int(32) grouping_type;
         }
         else if (assignment_type == 1){
            unsigned int(32)grouping_type;
            unsigned int(32)grouping_type_parameter;
         }
   }
// other assignment_type values are reserved
}
```

FIG. 22

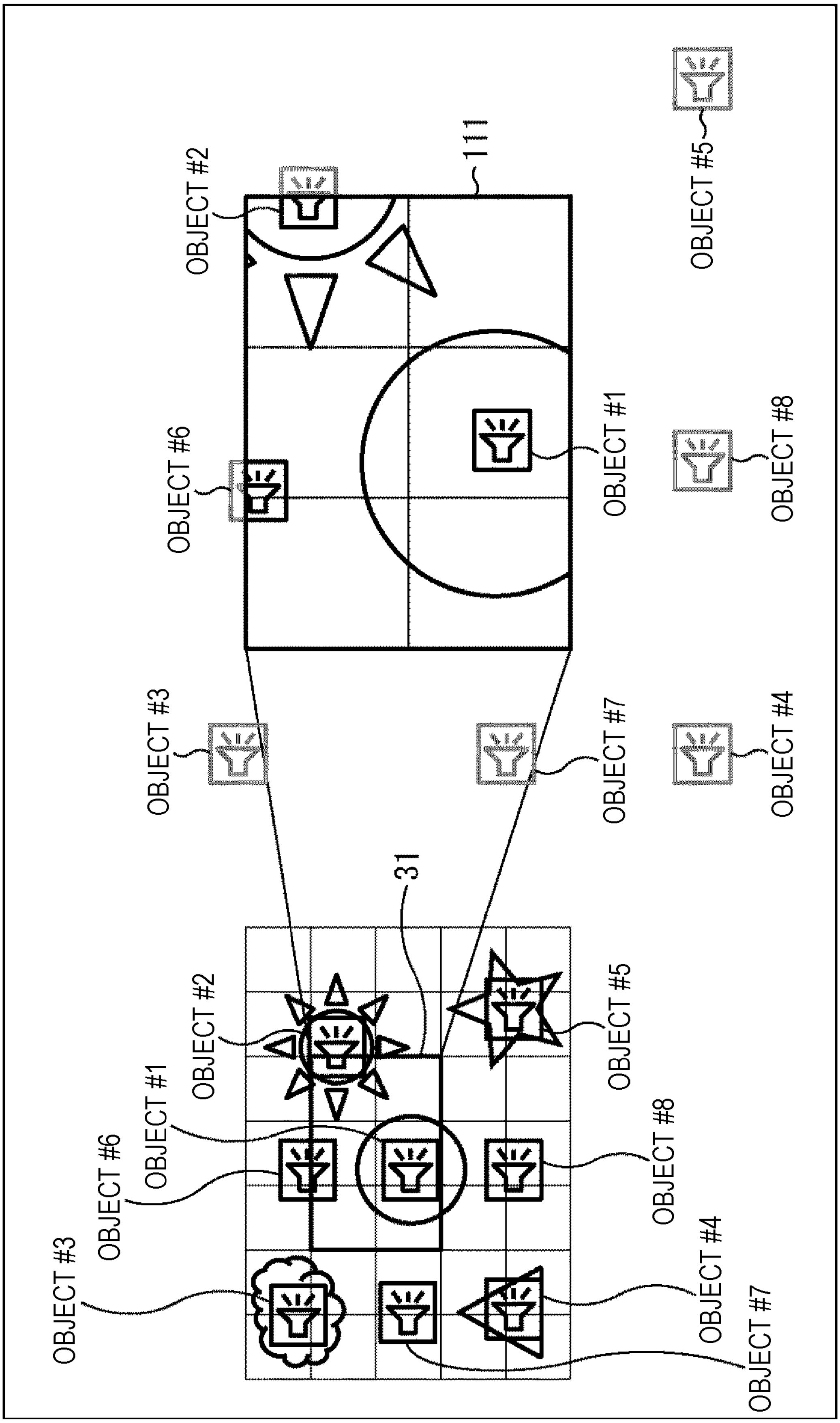
OBJECT #3
OBJECT #6
OBJECT #1
OBJECT #2
31
OBJECT #5
OBJECT #8
OBJECT #4
OBJECT #7
OBJECT #3
OBJECT #7
OBJECT #4
OBJECT #6
OBJECT #1
OBJECT #8
OBJECT #2
111
OBJECT #5

FIG. 23

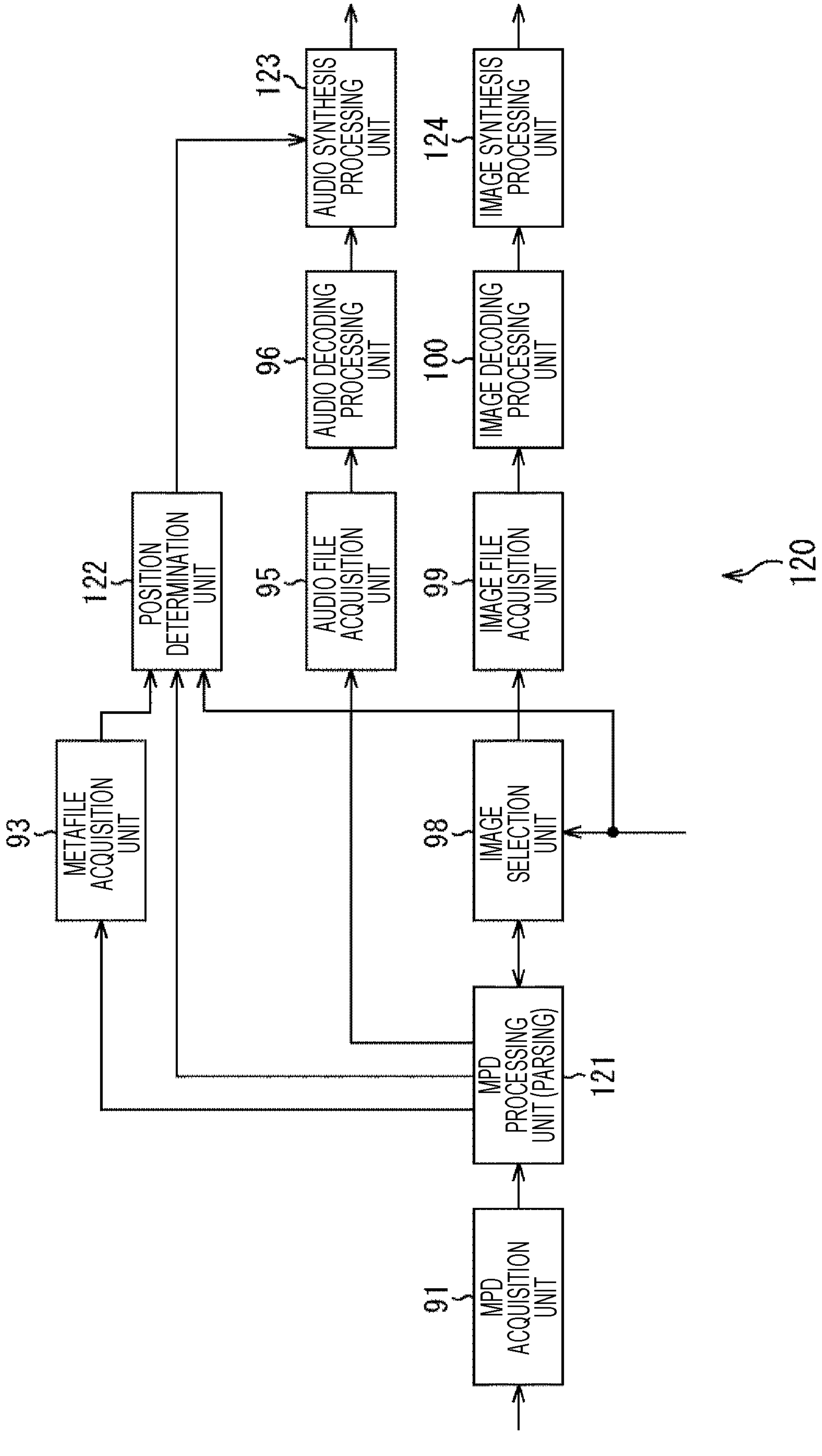
91
MPD ACQUISITION UNIT
121
MPD PROCESSING UNIT (PARSING)
93
METAFILE ACQUISITION UNIT
98
IMAGE SELECTION UNIT
122
POSITION DETERMINATION UNIT
95
AUDIO FILE ACQUISITION UNIT
99
IMAGE FILE ACQUISITION UNIT
96
AUDIO DECODING PROCESSING UNIT
100
IMAGE DECODING PROCESSING UNIT
123
AUDIO SYNTHESIS PROCESSING UNIT
124
IMAGE SYNTHESIS PROCESSING UNIT
120

FIG. 24

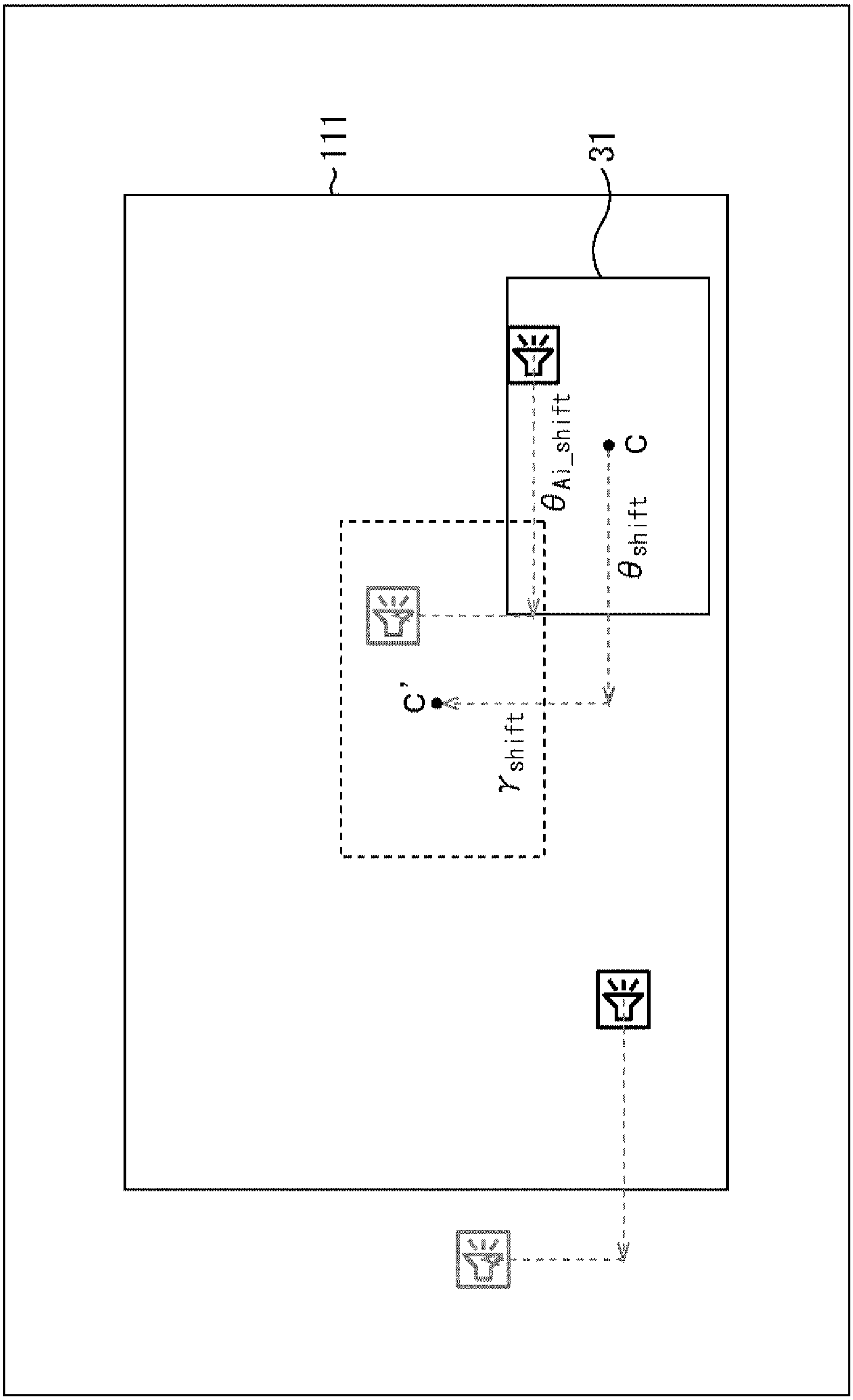

FIG. 25

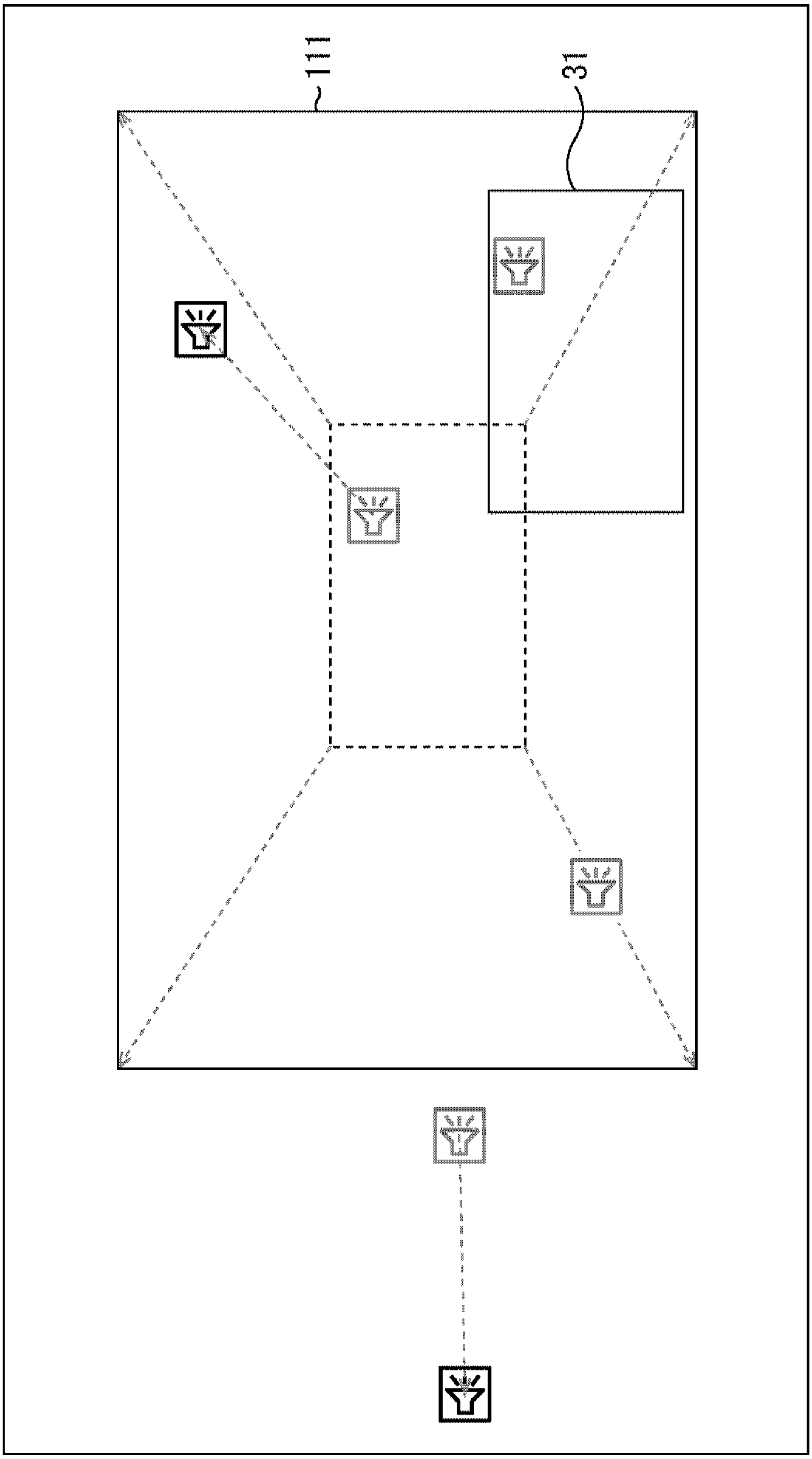

# FIG. 26

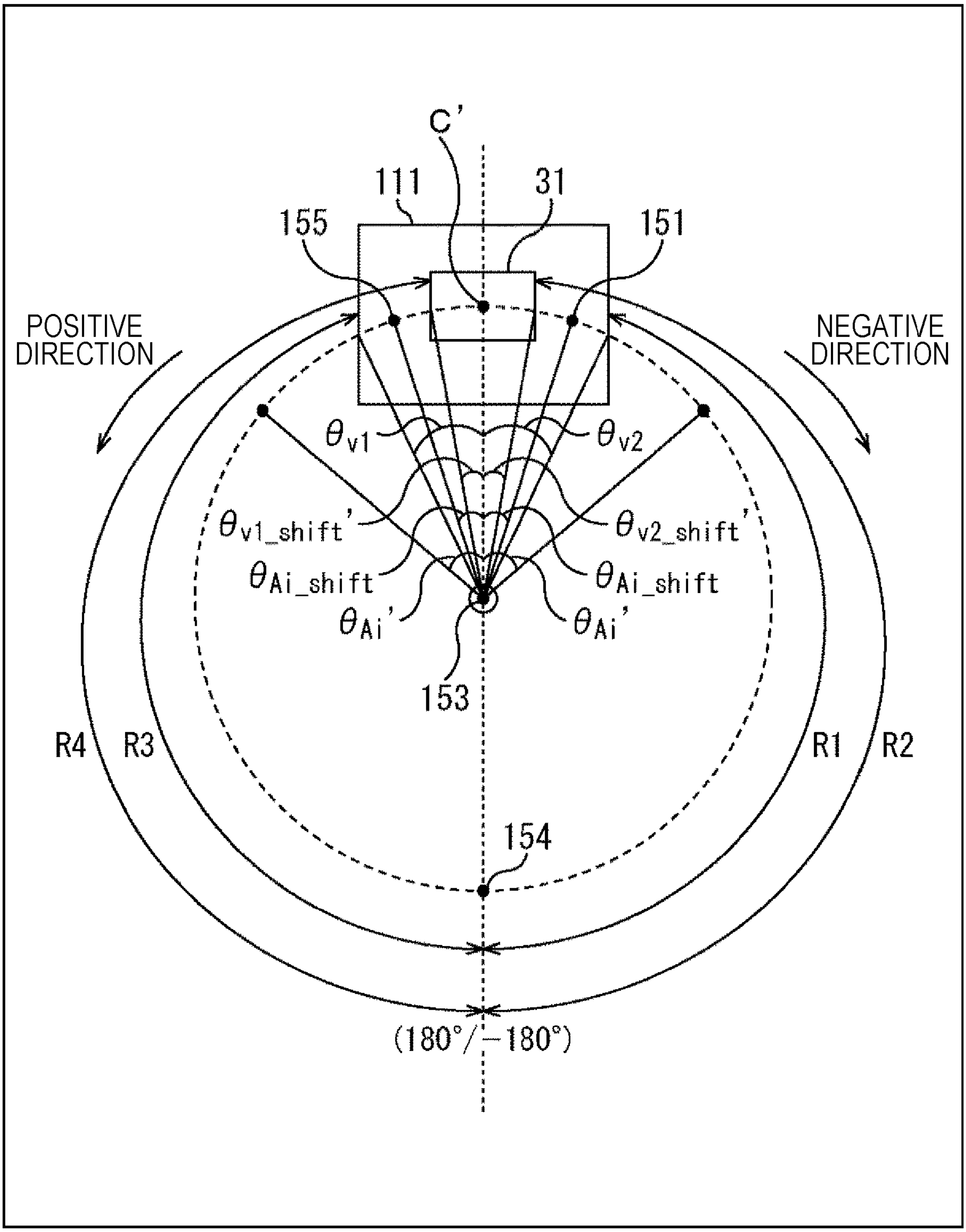

C'
111
31
155
151
POSITIVE DIRECTION
NEGATIVE DIRECTION
θv1
θv2
θv1_shift'
θv2_shift'
θAi_shift
θAi_shift
θAi'
θAi'
153
R4
R3
R1
R2
154
(180°/−180°)

FIG. 27

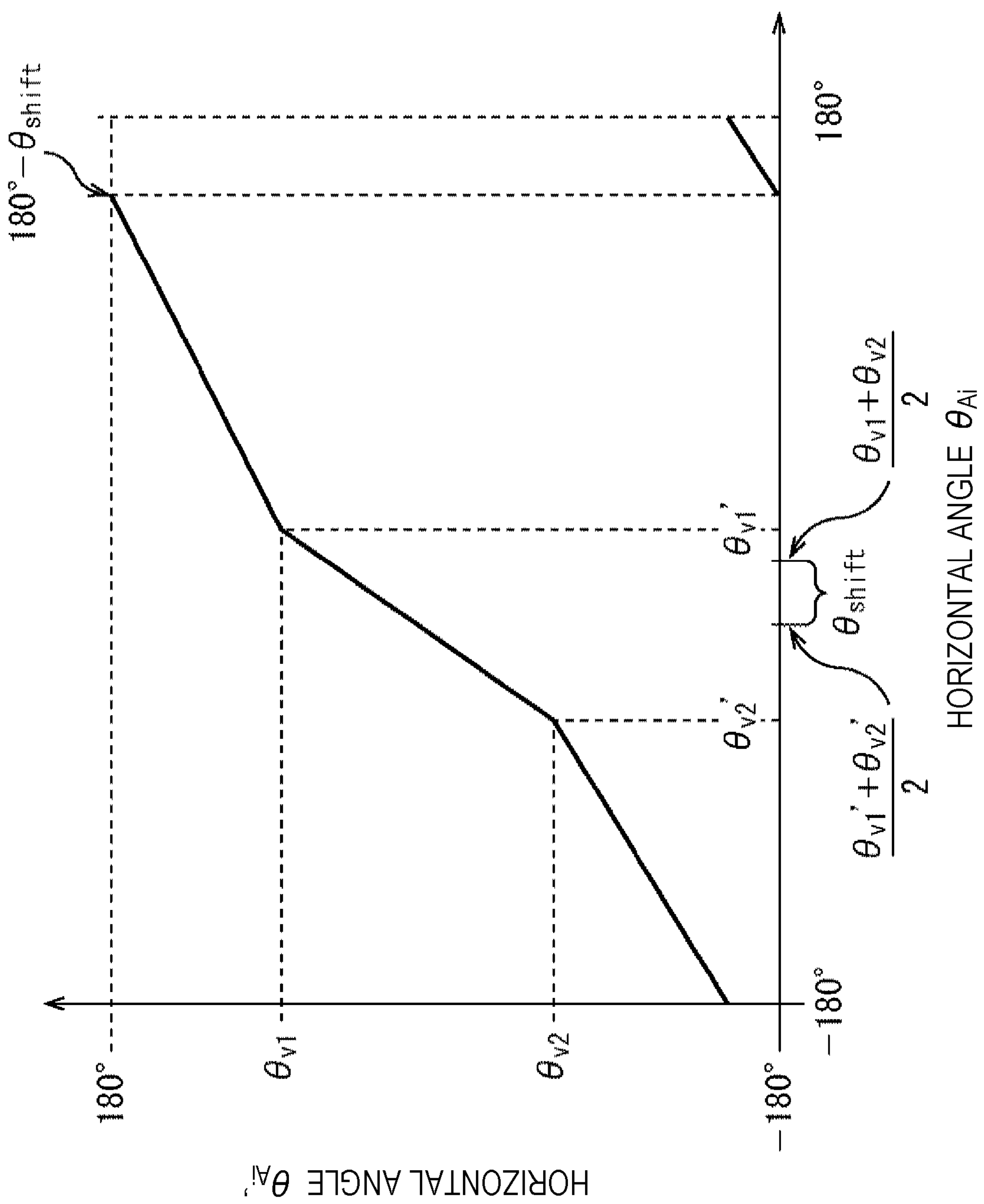

180°−θshift
180°
θv1
θv2
−180°
HORIZONTAL ANGLE θAi'
−180°
θv2'
θv1'
θshift
180°
(θv1'+θv2')/2
(θv1+θv2)/2
HORIZONTAL ANGLE θAi

FIG. 28

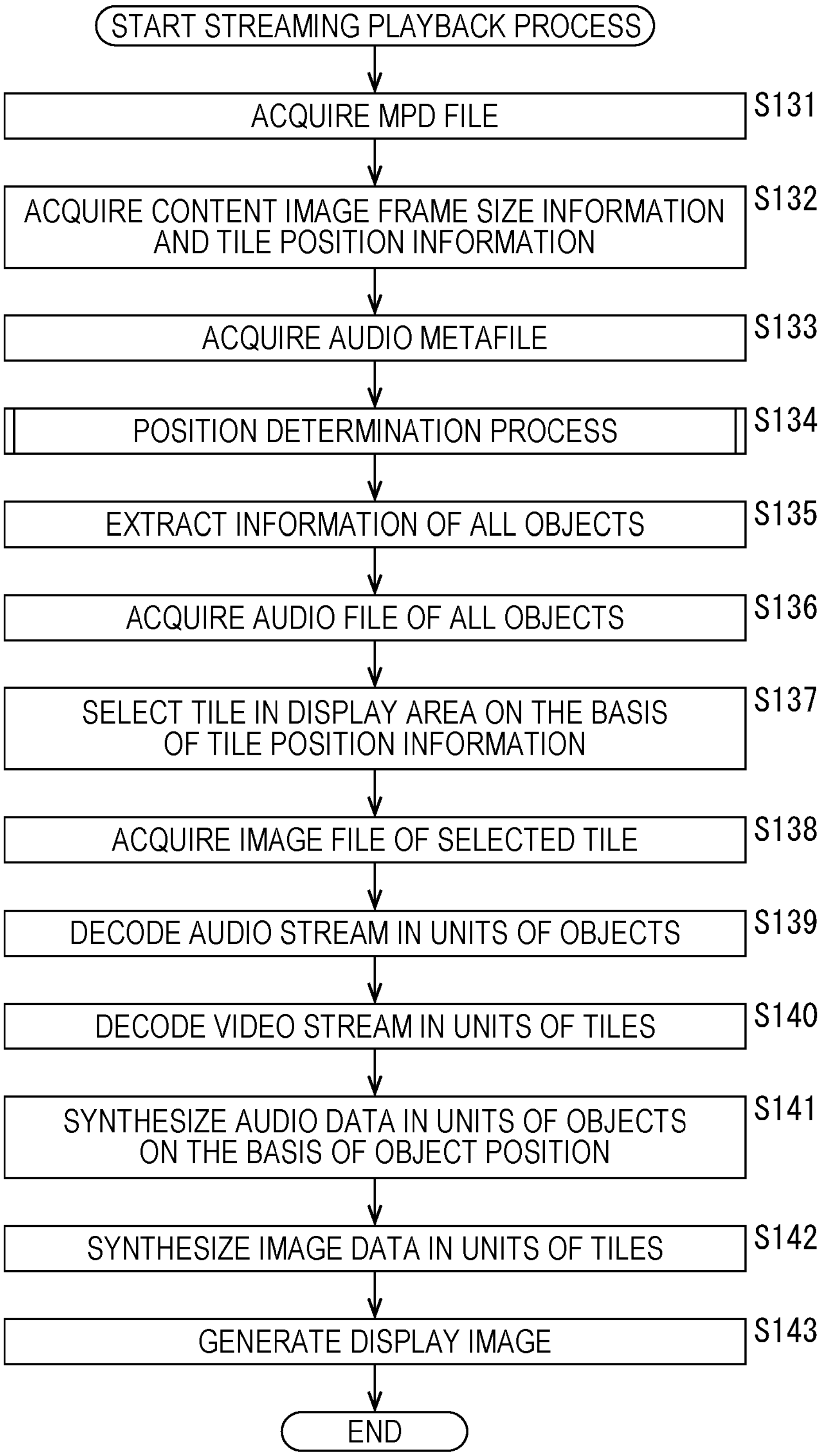
START STREAMING PLAYBACK PROCESS
ACQUIRE MPD FILE
S131
ACQUIRE CONTENT IMAGE FRAME SIZE INFORMATION AND TILE POSITION INFORMATION
S132
ACQUIRE AUDIO METAFILE
S133
POSITION DETERMINATION PROCESS
S134
EXTRACT INFORMATION OF ALL OBJECTS
S135
ACQUIRE AUDIO FILE OF ALL OBJECTS
S136
SELECT TILE IN DISPLAY AREA ON THE BASIS OF TILE POSITION INFORMATION
S137
ACQUIRE IMAGE FILE OF SELECTED TILE
S138
DECODE AUDIO STREAM IN UNITS OF OBJECTS
S139
DECODE VIDEO STREAM IN UNITS OF TILES
S140
SYNTHESIZE AUDIO DATA IN UNITS OF OBJECTS ON THE BASIS OF OBJECT POSITION
S141
SYNTHESIZE IMAGE DATA IN UNITS OF TILES
S142
GENERATE DISPLAY IMAGE
S143
END

FIG. 29

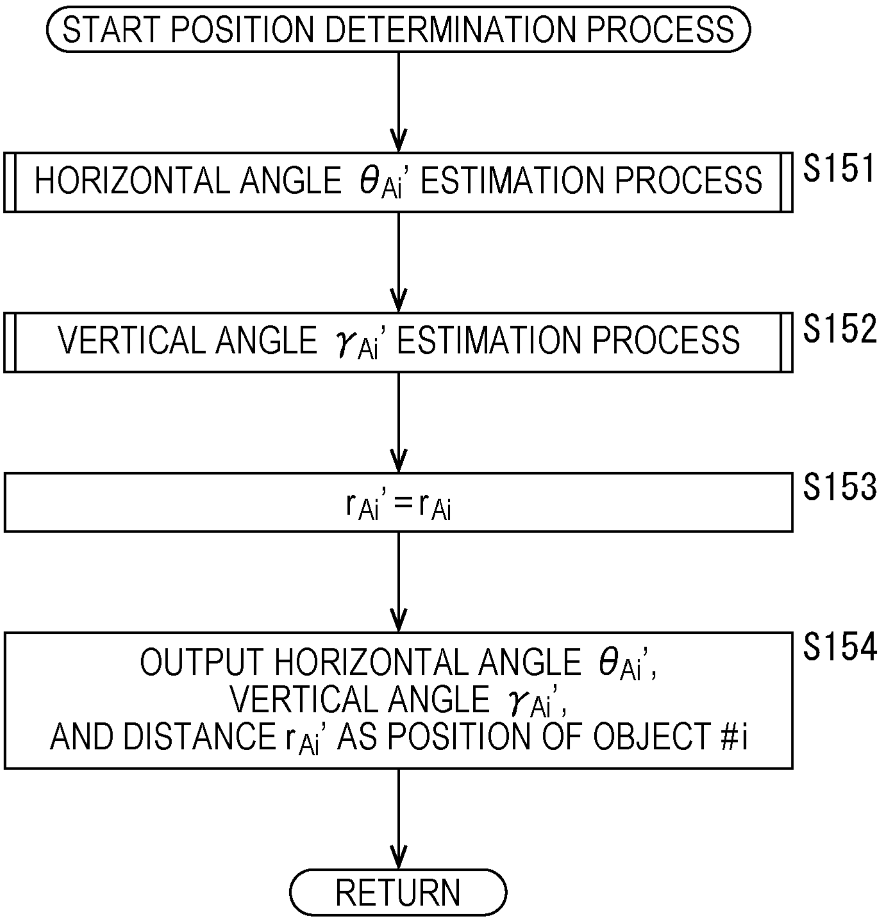
START POSITION DETERMINATION PROCESS
HORIZONTAL ANGLE $\theta_{Ai}$' ESTIMATION PROCESS
S151
VERTICAL ANGLE $\gamma_{Ai}$' ESTIMATION PROCESS
S152
$r_{Ai}' = r_{Ai}$
S153
OUTPUT HORIZONTAL ANGLE $\theta_{Ai}$', VERTICAL ANGLE $\gamma_{Ai}$', AND DISTANCE $r_{Ai}$' AS POSITION OF OBJECT #i
S154
RETURN

FIG. 30

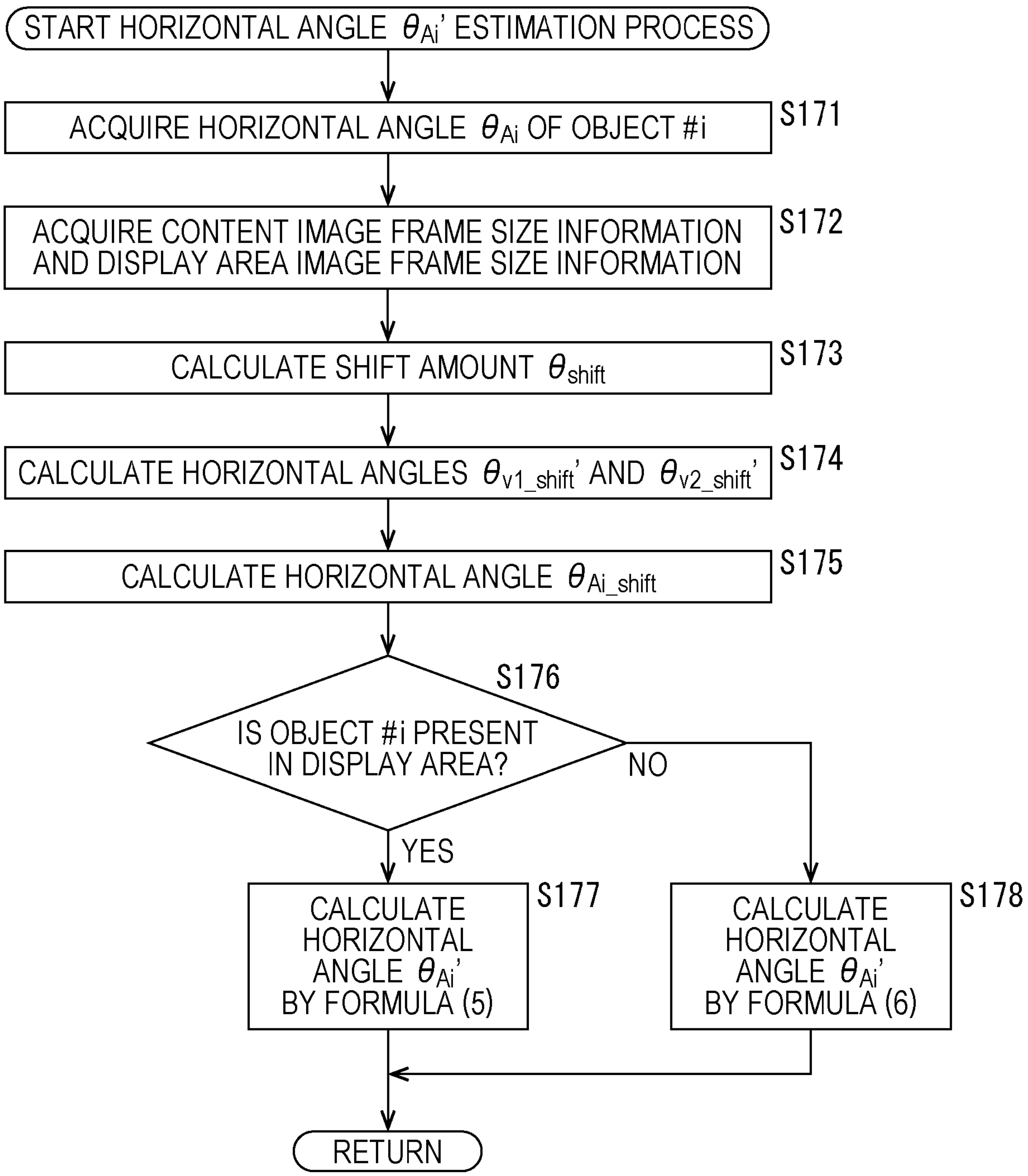
START HORIZONTAL ANGLE $\theta_{Ai}'$ ESTIMATION PROCESS
ACQUIRE HORIZONTAL ANGLE $\theta_{Ai}$ OF OBJECT #i
S171
ACQUIRE CONTENT IMAGE FRAME SIZE INFORMATION AND DISPLAY AREA IMAGE FRAME SIZE INFORMATION
S172
CALCULATE SHIFT AMOUNT $\theta_{shift}$
S173
CALCULATE HORIZONTAL ANGLES $\theta_{v1_shift}'$ AND $\theta_{v2_shift}'$
S174
CALCULATE HORIZONTAL ANGLE $\theta_{Ai_shift}$
S175
S176
IS OBJECT #i PRESENT IN DISPLAY AREA?
NO
YES
CALCULATE HORIZONTAL ANGLE $\theta_{Ai}'$ BY FORMULA (5)
S177
CALCULATE HORIZONTAL ANGLE $\theta_{Ai}'$ BY FORMULA (6)
S178
RETURN

FIG. 31

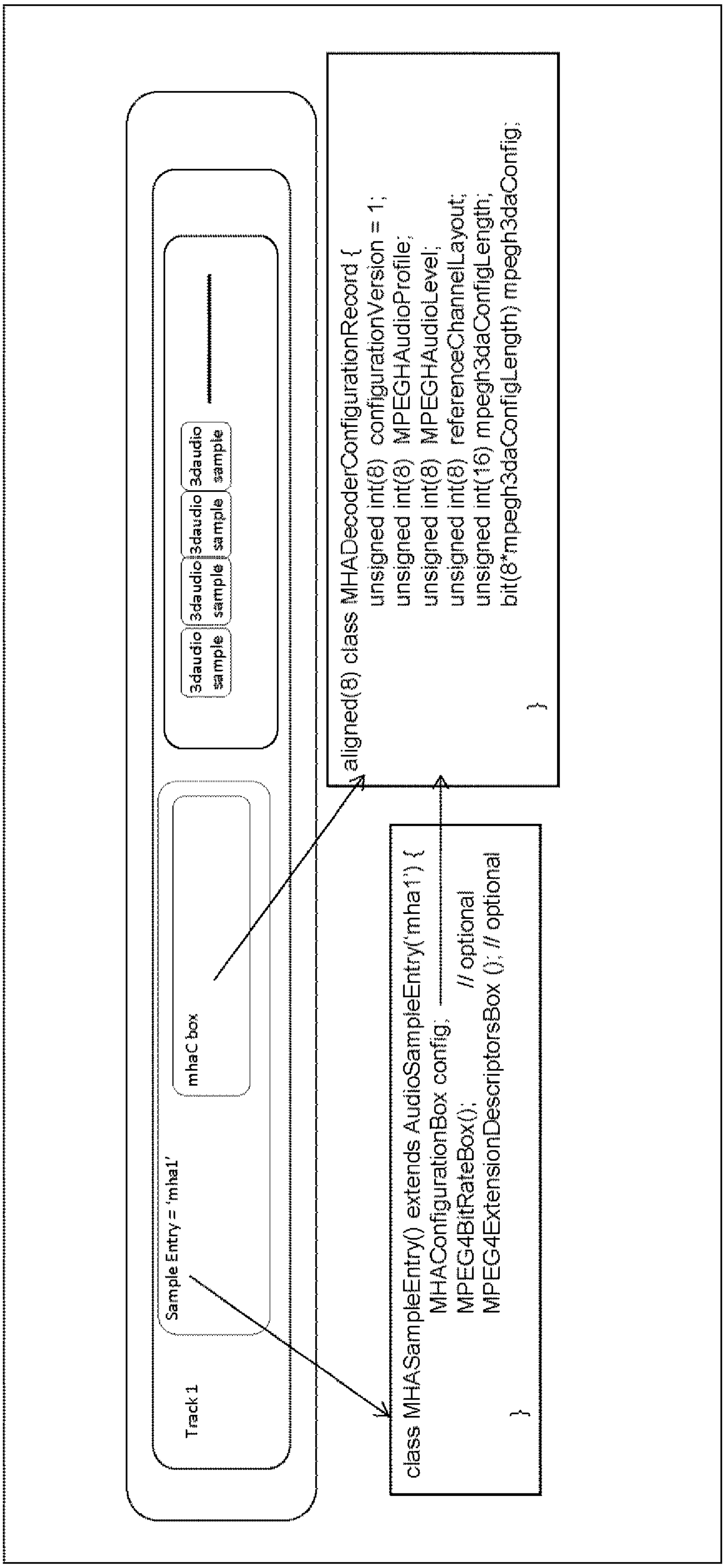
Track 1
Sample Entry = 'mha1'
mhaC box
3daudio sample
3daudio sample
3daudio sample
3daudio sample
class MHASampleEntry() extends AudioSampleEntry('mha1') {
MHAConfigurationBox config;
MPEG4BitRateBox(); // optional
MPEG4ExtensionDescriptorsBox (); // optional
}
aligned(8) class MHADecoderConfigurationRecord {
unsigned int(8) configurationVersion = 1;
unsigned int(8) MPEGHAudioProfile;
unsigned int(8) MPEGHAudioLevel;
unsigned int(8) referenceChannelLayout;
unsigned int(16) mpegh3daConfigLength;
bit(8*mpegh3daConfigLength) mpegh3daConfig;
}

FIG. 32

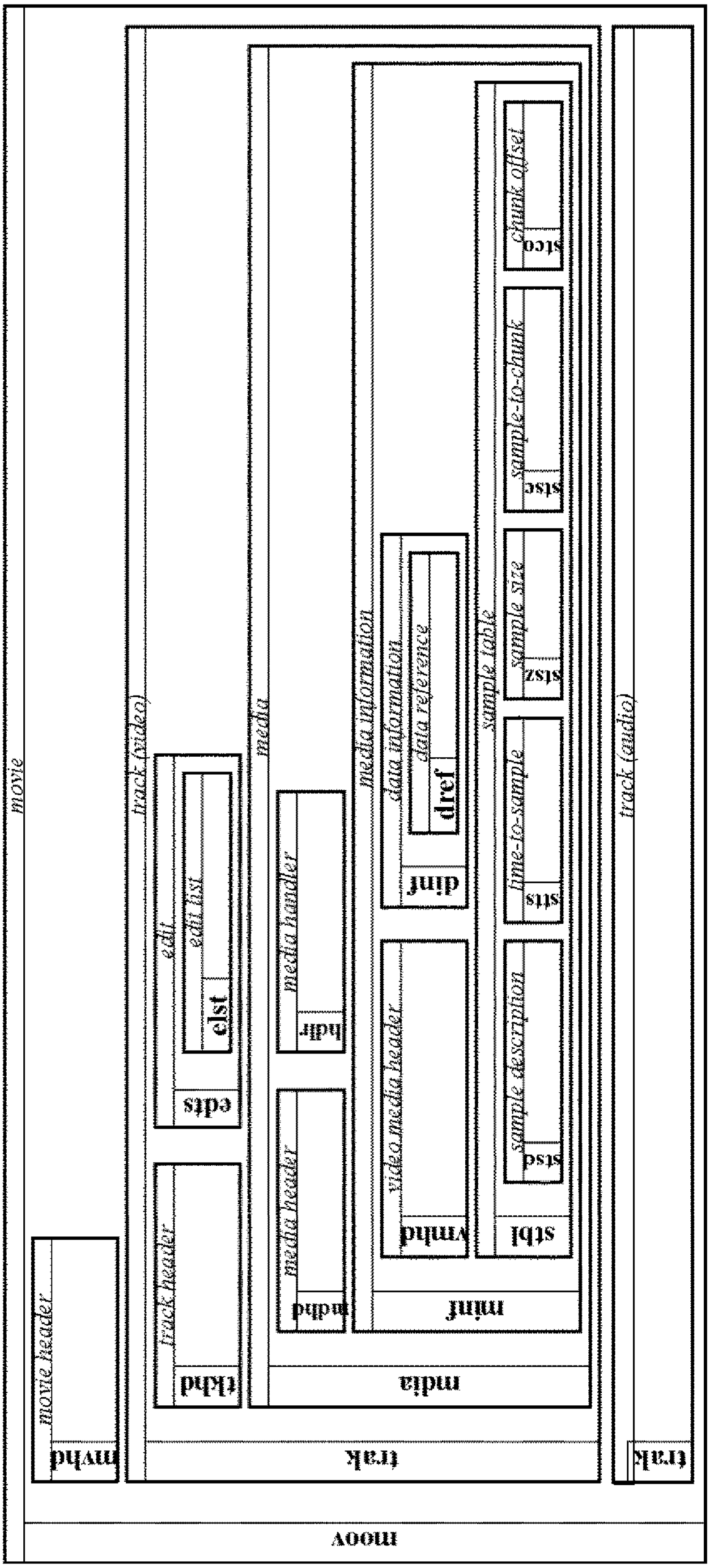
moov
movie
mvhd
movie header
trak
track (video)
tkhd
track header
edts
edit
elst
edit list
mdia
media
mdhd
media header
hdlr
media handler
minf
media information
vmhd
video media header
dinf
data information
dref
data reference
stbl
sample table
stsd
sample description
stts
time-to-sample
stsz
sample size
stsc
sample-to-chunk
stco
chunk offset
trak
track (audio)

FIG. 33

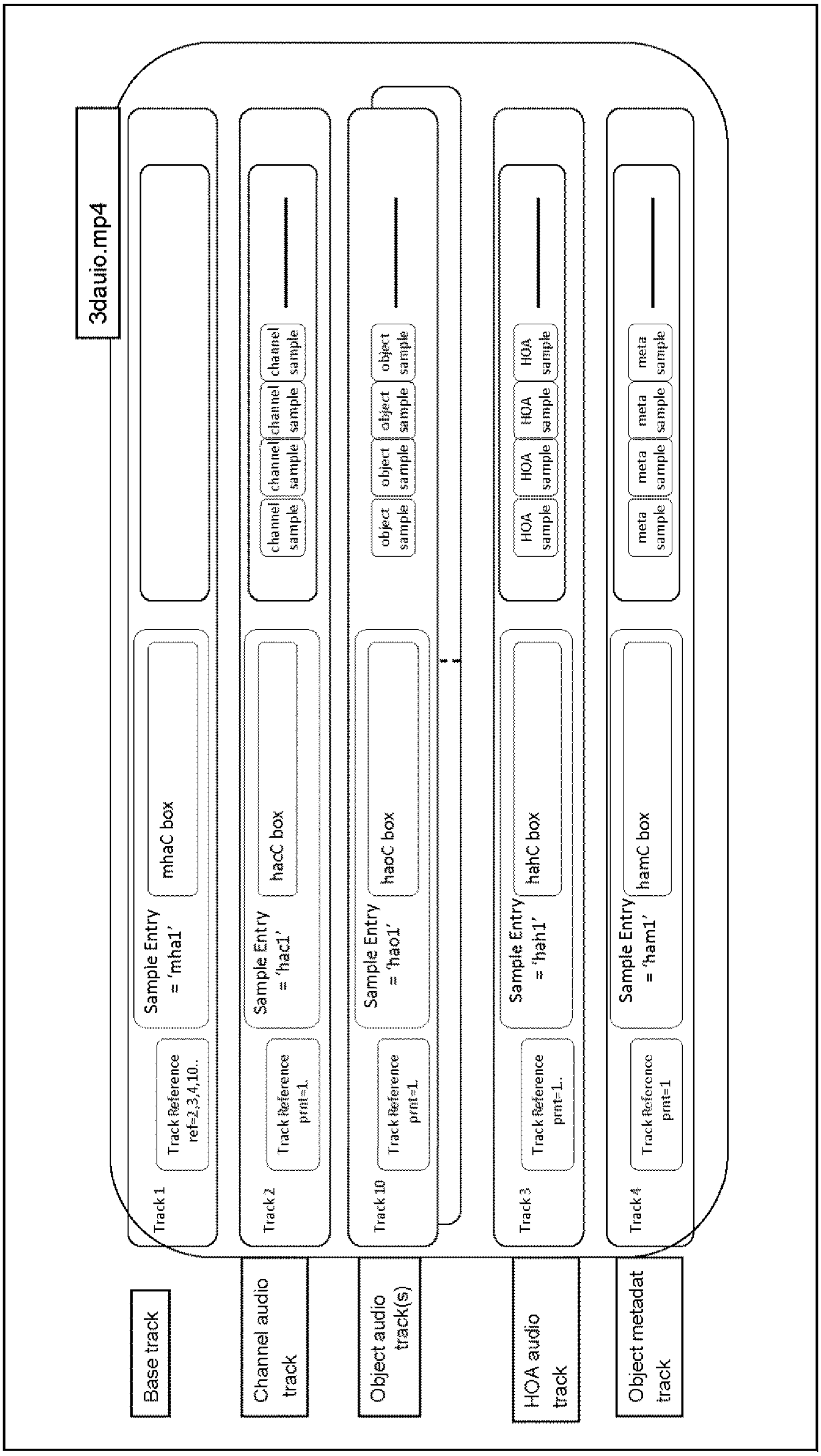
3dauio.mp4
Base track
Channel audio track
Object audio track(s)
HOA audio track
Object metadat track
Track 1
Track Reference ref=2,3,4,10..
Sample Entry = 'mha1'
mhaC box
Track 2
Track Reference prnt=1.
Sample Entry = 'hac1'
hacC box
channel sample
Track 10
Track Reference prnt=1.
Sample Entry = 'hao1'
haoC box
object sample
Track 3
Track Reference prnt=1.
Sample Entry = 'hah1'
hahC box
HOA sample
Track 4
Track Reference prnt=1
Sample Entry = 'ham1'
hamC box
meta sample

FIG. 34

```
class MHASampleEntry() extends AudioSampleEntry('mha1') {
                        MHAConfigurationBox config;
                        MHAViewingAngleBox config;                //optional
                        MPEG4BitRateBox();                        // optional
                        MPEG4ExtensionDescriptorsBox ();          // optional
         }

class MHAConfigurationBox() extends Box('mhaC') {
                        MHADecoderConfigurationRecord() MHAConfig;
         }

aligned(8) class MHADecoderConfigurationRecord {
                        unsigned int(8)  configurationVersion = 1;
                        unsigned int(8)  MPEGHAudioProfile;
                        unsigned int(8)  MPEGHAudioLevel;
                        unsigned int(8)  referenceChannelLayout;
                        unsigned int(16) mpegh3daConfigLength;
                        bit(8*mpegh3daConfigLength) mpegh3daConfig;
         }

class MHAViewingAngleConfigurationBox() extends Box('mhaV') {
                        MHAViewingAngleConfigurationRecord() MHAVConfig;
         }

aligned(8) class MHAViewingAngleConfigurationRecord {
                        unsigned int(8)  configurationVersion = 1;
                        unsigned int(16)  width;
                        unsigned int(16)  height;
                        unsigned int(16)  theta1;
                        unsigned int(16)  theta2;
                        unsigned int(16)  gamma1;
                        unsigned int(16)  gamma2

         }
```

ASSUMPTION FOR CALCULATION OF COORDINATES OF THIS track
WidthxHeight INFORMATION USING pixels OF Video,
LIKELIHOOD INFORMATION IN VERTICAL AND HORIZONTAL DIRECTIONS OF Audio
=> ON THE BASIS OF THESE PIECES OF INFORMATION,
audio IS MAPPED TO VIDEO pixel COORDINATES

# FIG. 35

```
class MHAChannelAudioSampleEntry() extends AudioSampleEntry('hac1') {
        MHAChannelAudioConfigurationBox config;
        MPEG4BitRateBox();                      // optional
        MPEG4ExtensionDescriptorsBox ();        // optional
    }

class MHAChannelAudioConfigurationBox() extends Box('hacC') {
        MHAChannelAudioDecoderConfigurationRecord() MHACAConfig;
    }

aligned(8) class MHAChannelAudioDecoderConfigurationRecord {
        unsigned int(8)  configurationVersion = 1;
        unsigned int(8)  MPEGHAudioProfile;
        unsigned int(8)  MPEGHAudioLevel;
    }
```

Profile/Level INFORMATION NECESSARY FOR decoding Channel Audio

FIG. 36

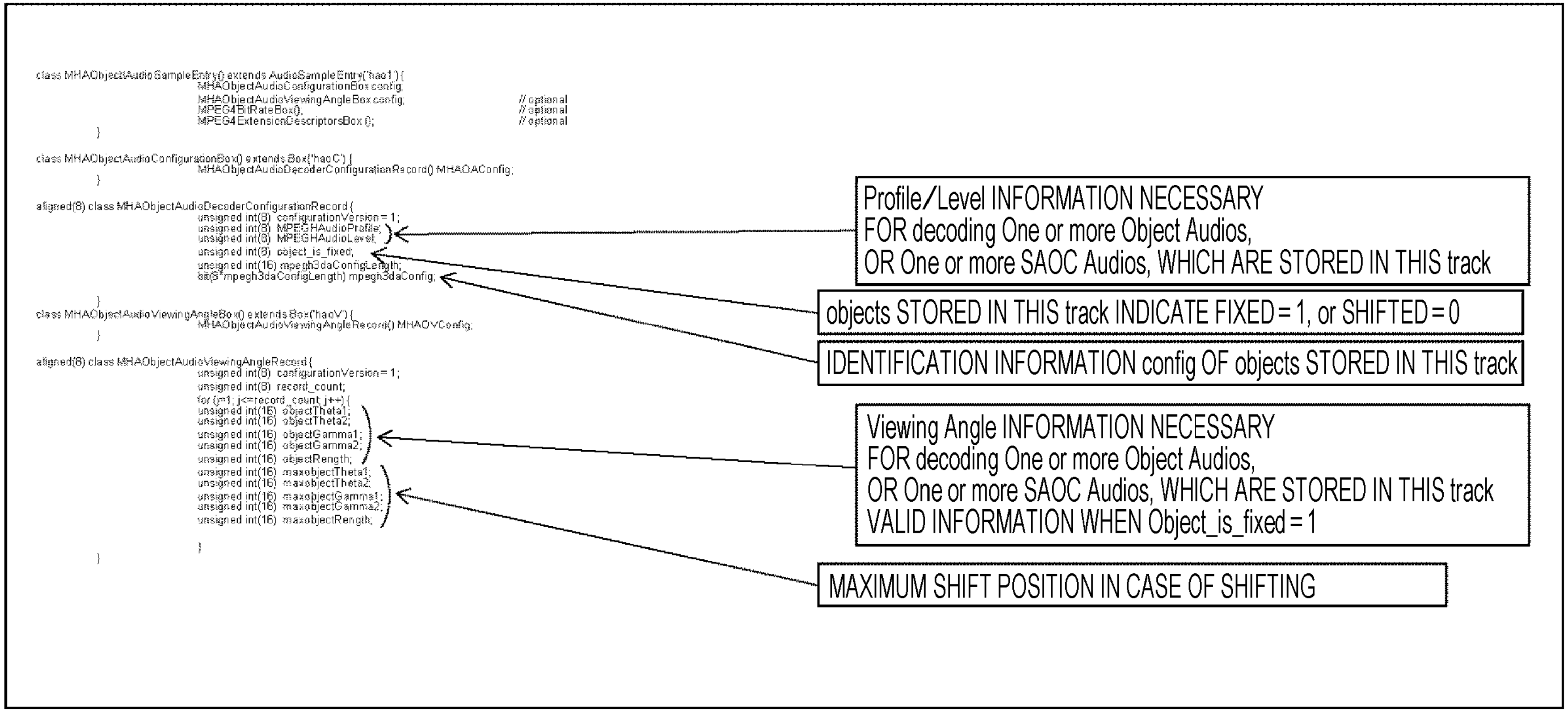
class MHAObjectAudioSampleEntry() extends AudioSampleEntry('hao1') {
MHAObjectAudioConfigurationBox config;
MHAObjectAudioViewingAngleBox config; // optional
MPEG4BitRateBox(); // optional
MPEG4ExtensionDescriptorsBox (); // optional
}
class MHAObjectAudioConfigurationBox() extends Box('haoC') {
MHAObjectAudioDecoderConfigurationRecord() MHAOAConfig;
}
aligned(8) class MHAObjectAudioDecoderConfigurationRecord {
unsigned int(8) configurationVersion = 1;
unsigned int(8) MPEGHAudioProfile;
unsigned int(8) MPEGHAudioLevel;
unsigned int(8) object_is_fixed;
unsigned int(16) mpegh3daConfigLength;
bit(8*mpegh3daConfigLength) mpegh3daConfig;
}
class MHAObjectAudioViewingAngleBox() extends Box('haoV') {
MHAObjectAudioViewingAngleRecord() MHAOVConfig;
}
aligned(8) class MHAObjectAudioViewingAngleRecord {
unsigned int(8) configurationVersion = 1;
unsigned int(8) record_count;
for (j=1; j<=record_count; j++) {
unsigned int(16) objectTheta1;
unsigned int(16) objectTheta2;
unsigned int(16) objectGamma1;
unsigned int(16) objectGamma2;
unsigned int(16) objectRength;
unsigned int(16) maxobjectTheta1;
unsigned int(16) maxobjectTheta2;
unsigned int(16) maxobjectGamma1;
unsigned int(16) maxobjectGamma2;
unsigned int(16) maxobjectRength;
}
}
Profile/Level INFORMATION NECESSARY FOR decoding One or more Object Audios, OR One or more SAOC Audios, WHICH ARE STORED IN THIS track
objects STORED IN THIS track INDICATE FIXED = 1, or SHIFTED = 0
IDENTIFICATION INFORMATION config OF objects STORED IN THIS track
Viewing Angle INFORMATION NECESSARY FOR decoding One or more Object Audios, OR One or more SAOC Audios, WHICH ARE STORED IN THIS track VALID INFORMATION WHEN Object_is_fixed = 1
MAXIMUM SHIFT POSITION IN CASE OF SHIFTING

FIG. 37

```
class MHAHOAAudioSampleEntry() extends AudioSampleEntry('hah1') {
        MHAHOAAudioConfigurationBox config;
        MPEG4BitRateBox();                      // optional
        MPEG4ExtensionDescriptorsBox ();        // optional
    }

class MHAHOAAudioConfigurationBox() extends Box('hahC') {
        MHAHOAAudioDecoderConfigurationRecord() MHAHAConfig;
    }

aligned(8) class MHAHOAtAudioDecoderConfigurationRecord {
        unsigned int(8)  configurationVersion = 1;
        unsigned int(8)  MPEGHAudioProfile;
        unsigned int(8)  MPEGHAudioLevel;
    }
```

Profile/Level INFORMATION
NECESSARY FOR HOA audio
STORED IN THIS track

FIG. 38

```
class MHAMetadataSampleEntry() extends AudioSampleEntry('ham1') {
        MHAMetadataConfigurationBox config;
        MPEG4BitRateBox();                      // optional
        MPEG4ExtensionDescriptorsBox ();        // optional
    }

class MHAMetadataConfigurationBox() extends Box('hahC') {
        MHAMetadataConfigurationRecord() MHAMConfig;
    }

aligned(8) class MHAMetadataConfigurationRecord {
        unsigned int(8)  configurationVersion = 1;
        unsigned int(16)  reserved
    }
```

FIG. 39

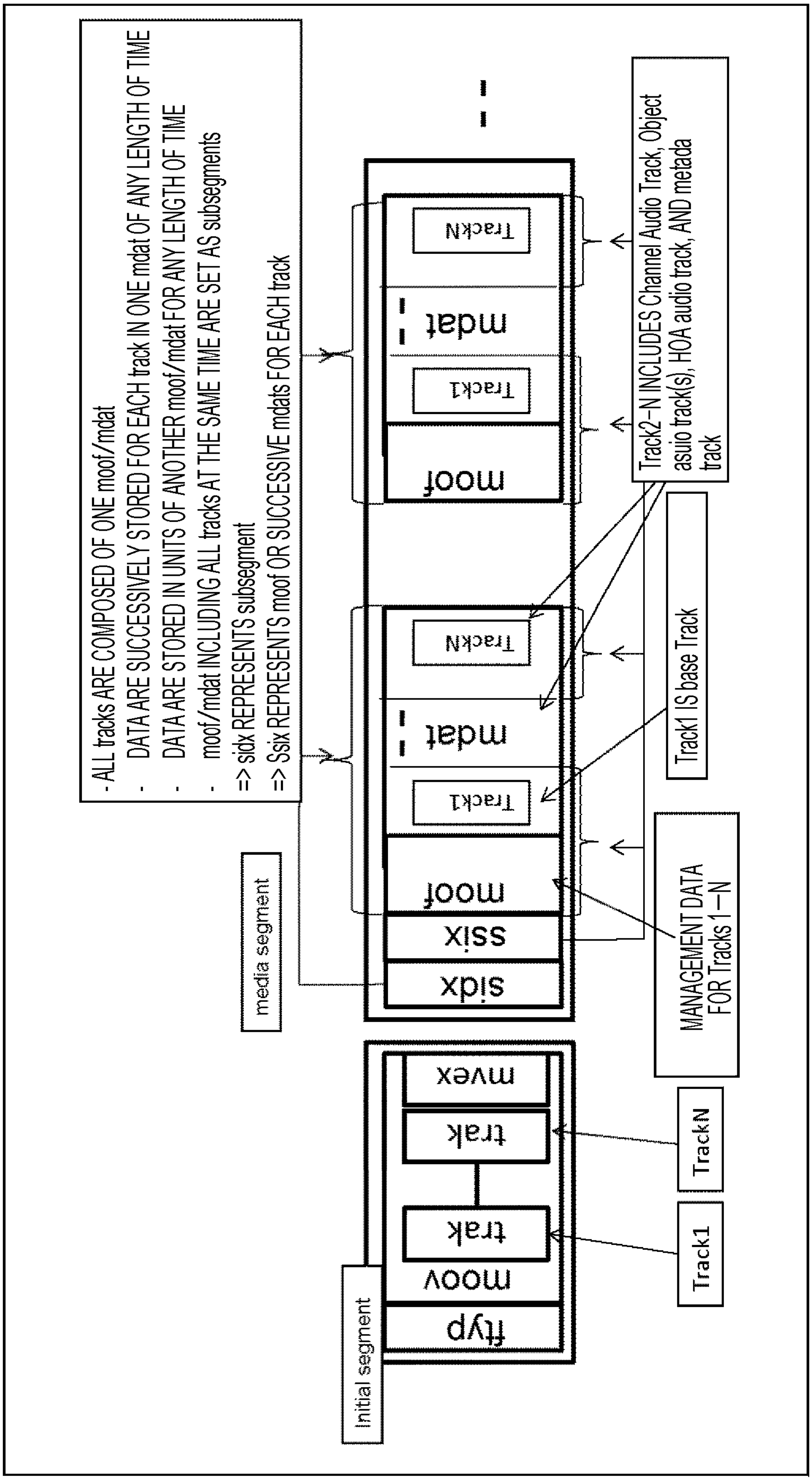
- ALL tracks ARE COMPOSED OF ONE moof/mdat
- DATA ARE SUCCESSIVELY STORED FOR EACH track IN ONE mdat OF ANY LENGTH OF TIME
- DATA ARE STORED IN UNITS OF ANOTHER moof/mdat FOR ANY LENGTH OF TIME
- moof/mdat INCLUDING ALL tracks AT THE SAME TIME ARE SET AS subsegments
=> sidx REPRESENTS subsegment
=> Ssix REPRESENTS moof OR SUCCESSIVE mdats FOR EACH track
media segment
Initial segment
ftyp
moov
trak
trak
mvex
sidx
ssix
moof
mdat
Track1
TrackN
Track1
TrackN
MANAGEMENT DATA FOR Tracks 1−N
Track1 IS base Track
Track2−N INCLUDES Channel Audio Track, Object asuio track(s), HOA audio track, AND metada track

FIG. 40

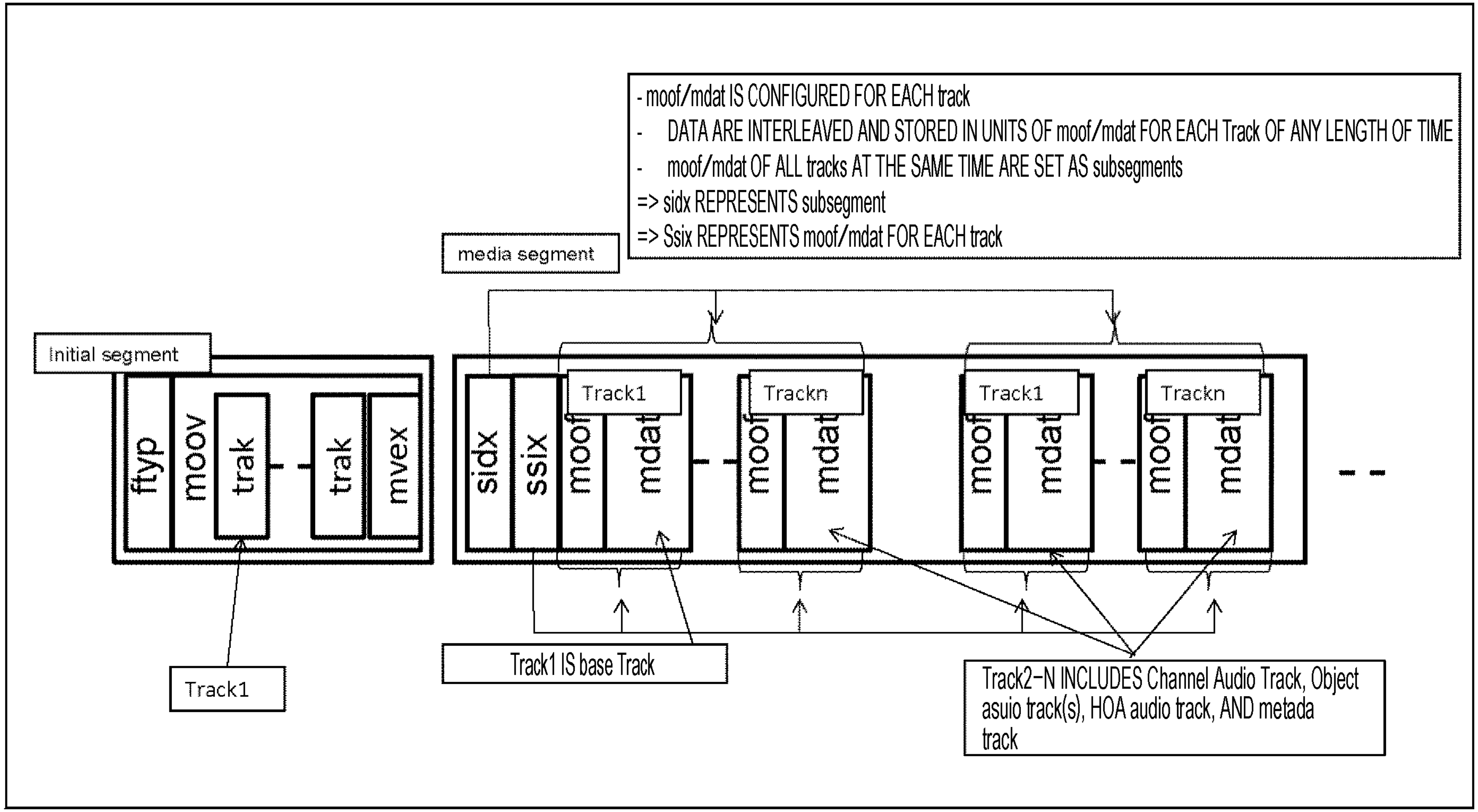
- moof/mdat IS CONFIGURED FOR EACH track
- DATA ARE INTERLEAVED AND STORED IN UNITS OF moof/mdat FOR EACH Track OF ANY LENGTH OF TIME
- moof/mdat OF ALL tracks AT THE SAME TIME ARE SET AS subsegments
=> sidx REPRESENTS subsegment
=> Ssix REPRESENTS moof/mdat FOR EACH track
media segment
Initial segment
ftyp
moov
trak
trak
mvex
sidx
ssix
moof
mdat
Track1
Trackn
Track1
Track1 IS base Track
Track2-N INCLUDES Channel Audio Track, Object asuio track(s), HOA audio track, AND metada track

FIG. 41

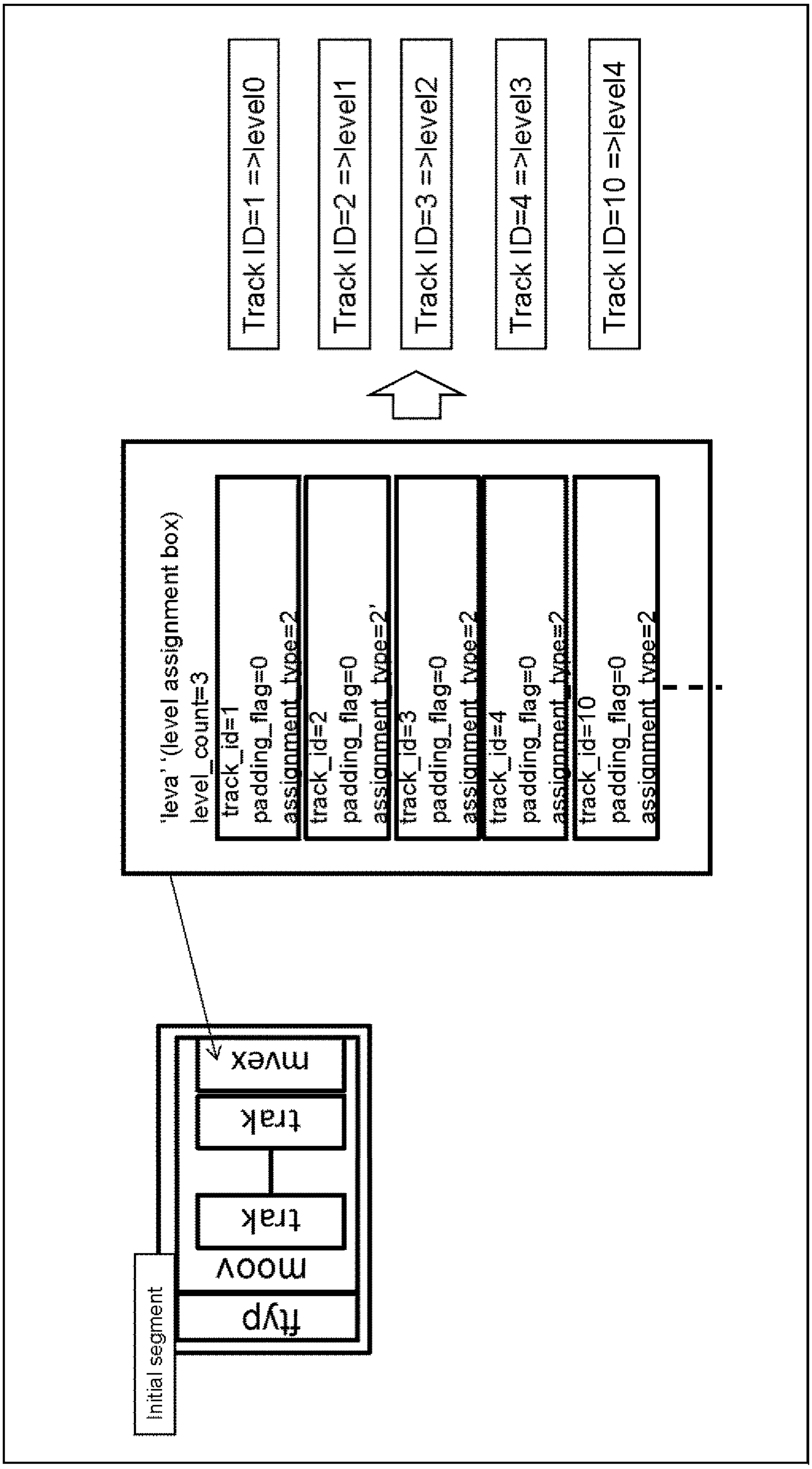
Initial segment
ftyp
moov
trak
trak
mvex
'leva' '(level assignment box)
level_count=3
track_id=1
padding_flag=0
assignment_type=2
track_id=2
padding_flag=0
assignment_type=2'
track_id=3
padding_flag=0
assignment_type=2
track_id=4
padding_flag=0
assignment_type=2
track_id=10
padding_flag=0
assignment_type=2
Track ID=1 =>level0
Track ID=2 =>level1
Track ID=3 =>level2
Track ID=4 =>level3
Track ID=10 =>level4

FIG. 42

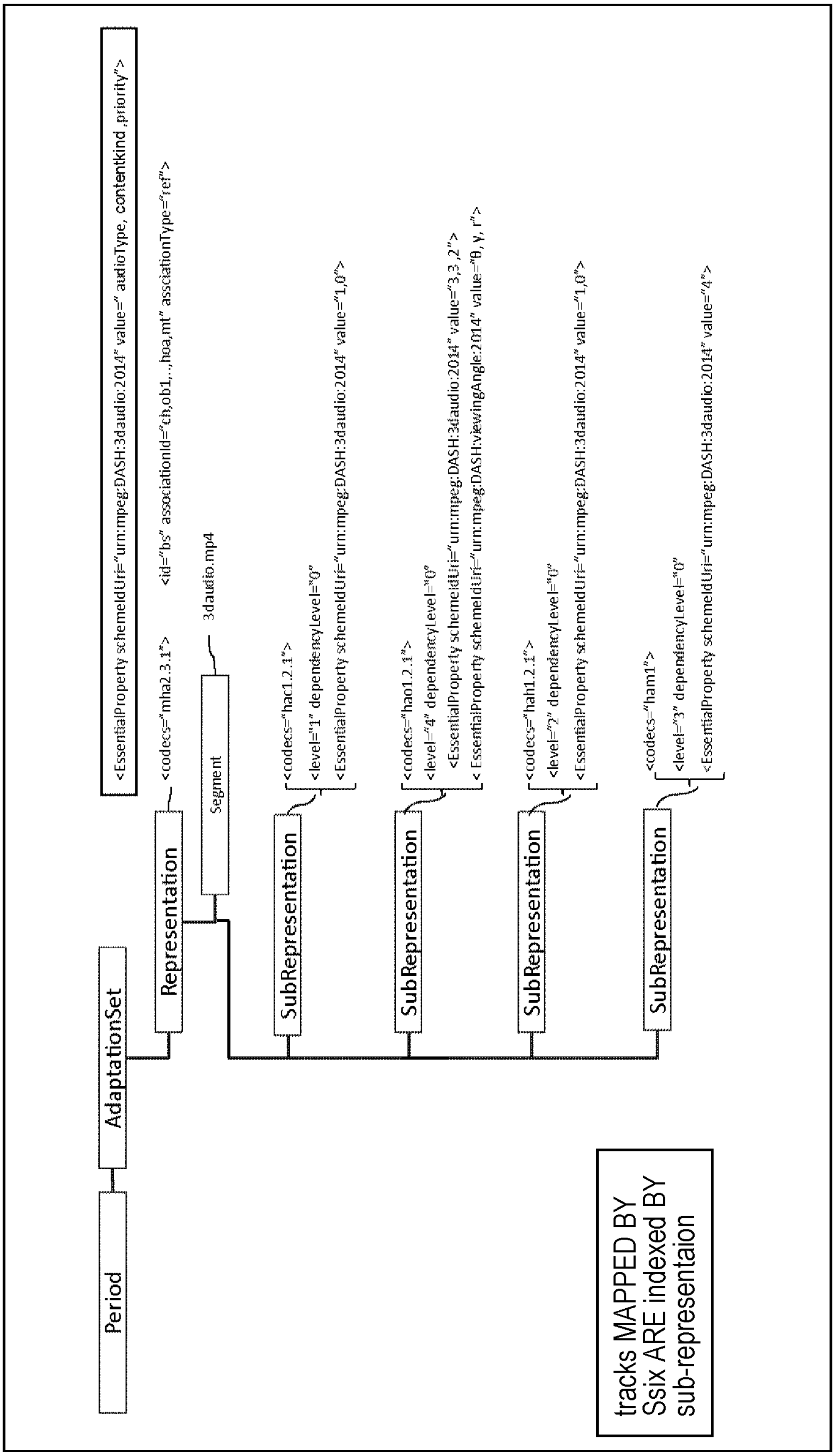
Period
AdaptationSet
Representation
<EssentialProperty schemeIdUri="urn:mpeg:DASH:3daudio:2014" value=" audioType, contentkind ,priority">
<codecs="mha2.3.1"> <id="bs" associationId="ch,ob1,..,hoa,mt" assciationType="ref">
Segment
3daudio.mp4
SubRepresentation
<codecs="hac1.2.1">
<level="1" dependencyLevel="0"
<EssentialProperty schemeIdUri="urn:mpeg:DASH:3daudio:2014" value="1,0">
SubRepresentation
<codecs="hao1.2.1">
<level="4" dependencyLevel="0"
<EssentialProperty schemeIdUri="urn:mpeg:DASH:3daudio:2014" value="3,3,2">
< EssentialProperty schemeIdUri="urn:mpeg:DASH:viewingAngle:2014" value="θ, γ, r">
SubRepresentation
<codecs="hah1.2.1">
<level="2" dependencyLevel="0"
<EssentialProperty schemeIdUri="urn:mpeg:DASH:3daudio:2014" value="1,0">
SubRepresentation
<codecs="ham1">
<level="3" dependencyLevel="0"
<EssentialProperty schemeIdUri="urn:mpeg:DASH:3daudio:2014" value="4">
tracks MAPPED BY
Ssix ARE indexed BY
sub-representaion

FIG. 43

AudioType
1 channel audio
2 HOA audio
3 object audio
4 metadata

Priority IS
DEFINED BY 23008−3

| contentKind | description |
|---|---|
| 0 | **undefined** |
| **1** | **complete main** |
| **2** | **dialogue** |
| 3 | **music** |
| 4 | **effect** |
| 5 | **mixed** |
| 6 | **LFE** |
| 7 | **voiceover** |
| 8 | **spokensubtitle** |
| 9 | **audiodescription/visually impaired** |
| 10 | **commentary** |
| 11 | **hearing impaired** |
| 12 | **emergency** |
| 13-15 | **reserved** |

FIG. 44

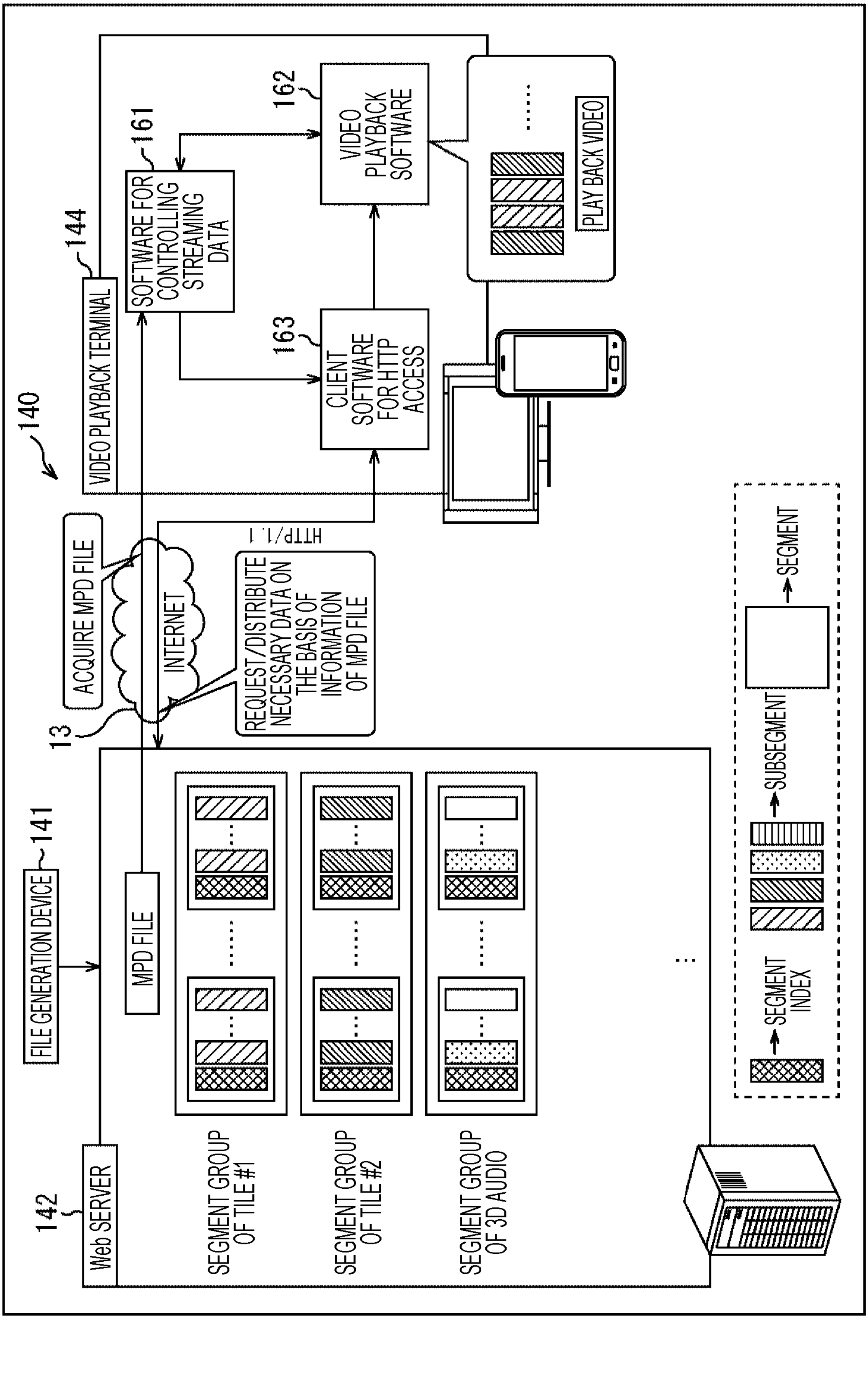
140
VIDEO PLAYBACK TERMINAL
144
SOFTWARE FOR CONTROLLING STREAMING DATA
161
VIDEO PLAYBACK SOFTWARE
162
CLIENT SOFTWARE FOR HTTP ACCESS
163
PLAY BACK VIDEO
ACQUIRE MPD FILE
INTERNET
13
HTTP/1.1
REQUEST/DISTRIBUTE NECESSARY DATA ON THE BASIS OF INFORMATION OF MPD FILE
FILE GENERATION DEVICE
141
Web SERVER
142
MPD FILE
SEGMENT GROUP OF TILE #1
SEGMENT GROUP OF TILE #2
SEGMENT GROUP OF 3D AUDIO
SEGMENT INDEX
SUBSEGMENT
SEGMENT

FIG. 45

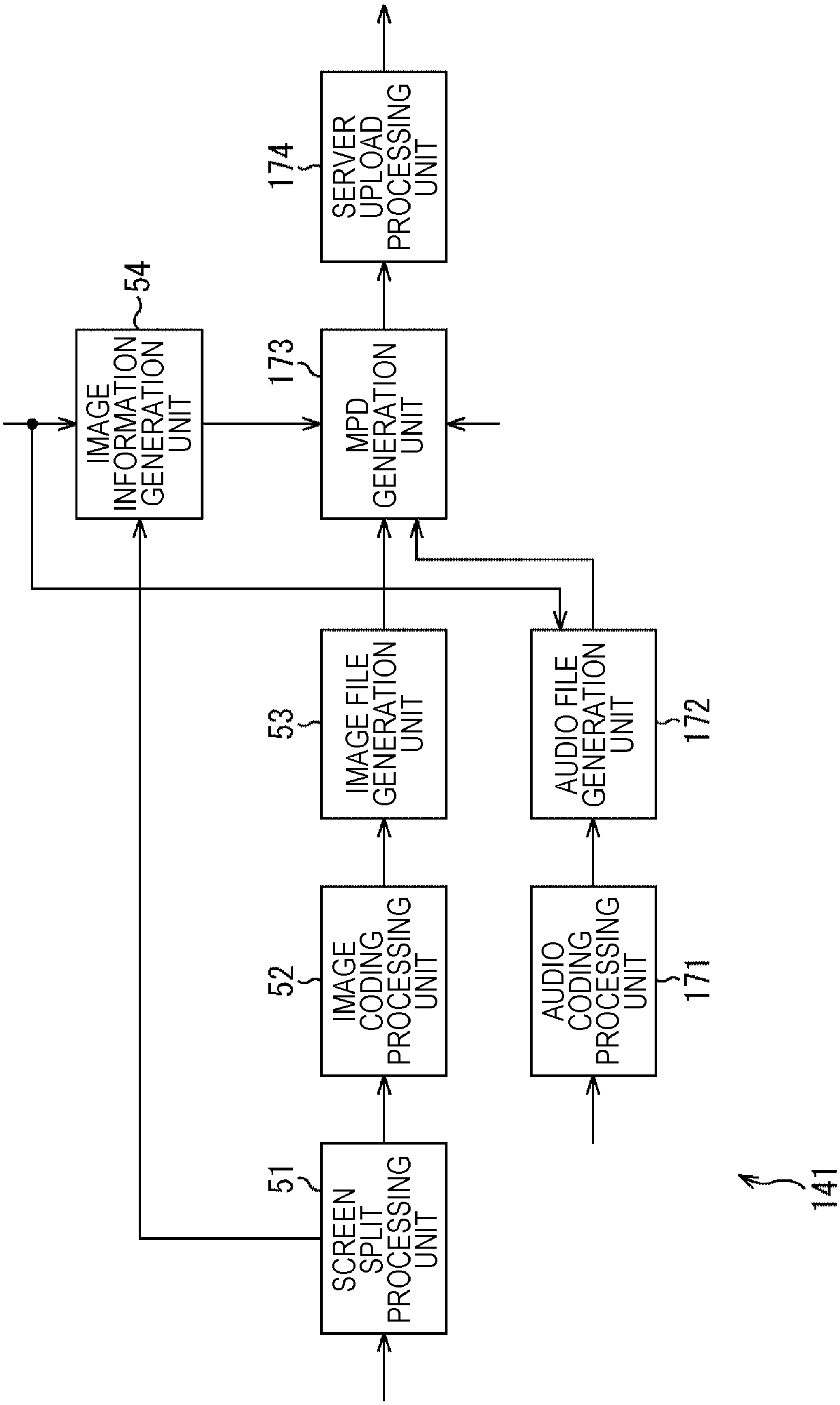
SCREEN SPLIT PROCESSING UNIT
51
IMAGE CODING PROCESSING UNIT
52
IMAGE FILE GENERATION UNIT
53
IMAGE INFORMATION GENERATION UNIT
54
MPD GENERATION UNIT
173
SERVER UPLOAD PROCESSING UNIT
174
AUDIO CODING PROCESSING UNIT
171
AUDIO FILE GENERATION UNIT
172
141

FIG. 46

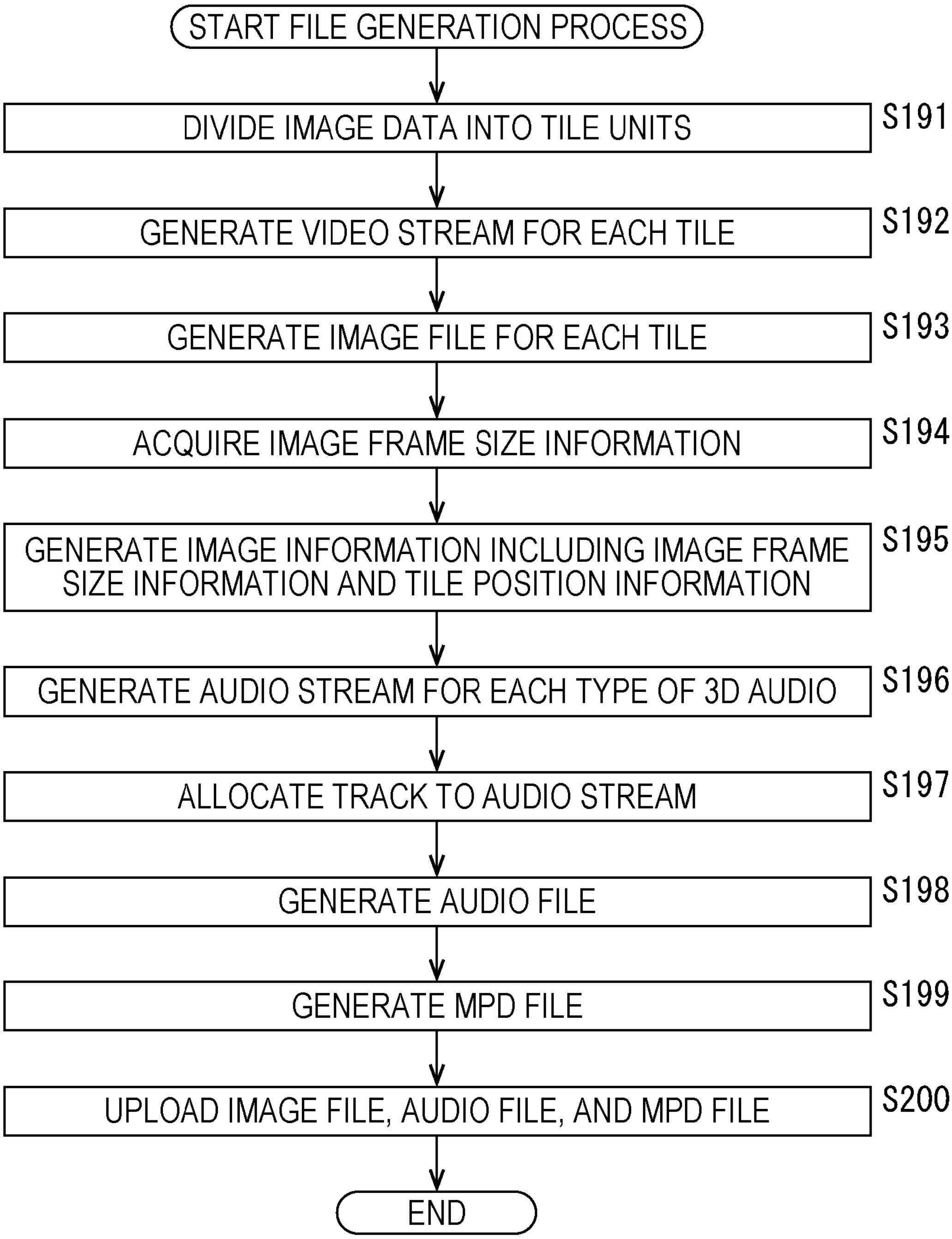
START FILE GENERATION PROCESS
DIVIDE IMAGE DATA INTO TILE UNITS
S191
GENERATE VIDEO STREAM FOR EACH TILE
S192
GENERATE IMAGE FILE FOR EACH TILE
S193
ACQUIRE IMAGE FRAME SIZE INFORMATION
S194
GENERATE IMAGE INFORMATION INCLUDING IMAGE FRAME SIZE INFORMATION AND TILE POSITION INFORMATION
S195
GENERATE AUDIO STREAM FOR EACH TYPE OF 3D AUDIO
S196
ALLOCATE TRACK TO AUDIO STREAM
S197
GENERATE AUDIO FILE
S198
GENERATE MPD FILE
S199
UPLOAD IMAGE FILE, AUDIO FILE, AND MPD FILE
S200
END

FIG. 47

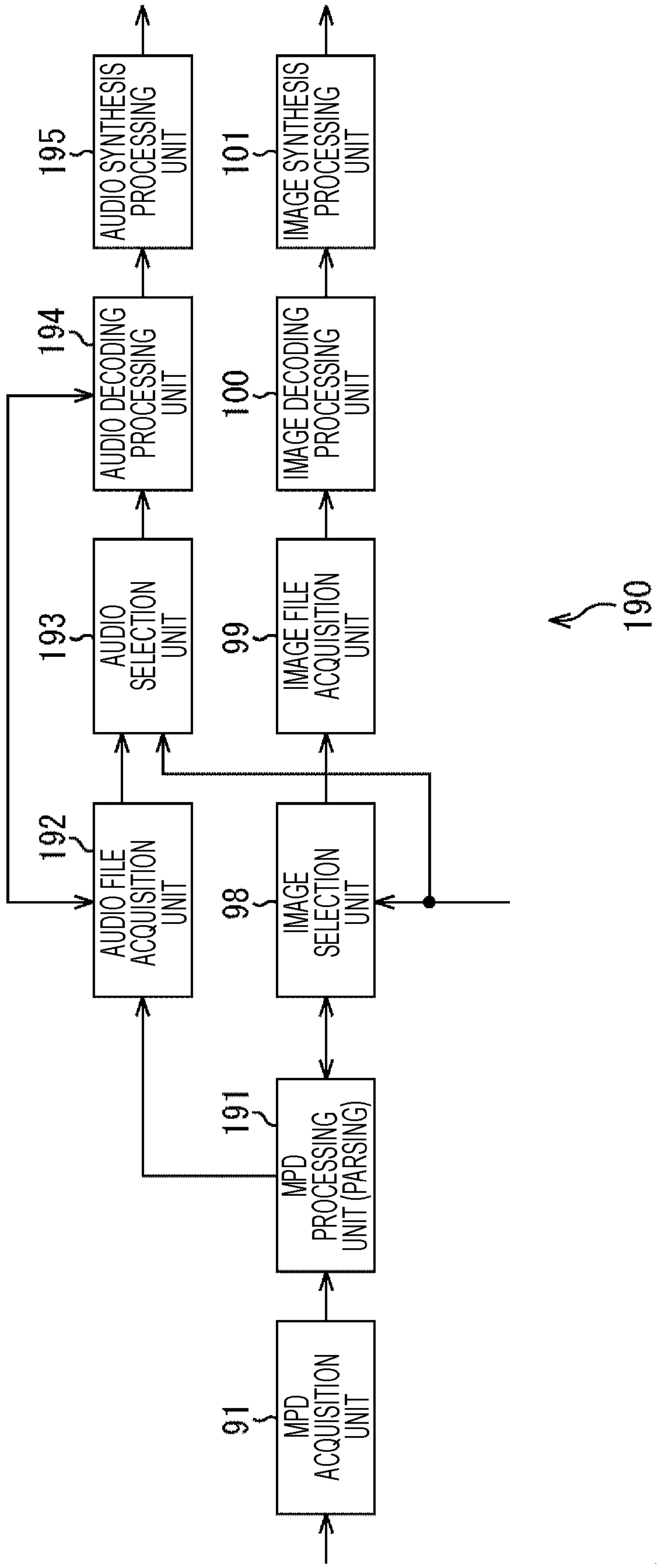

91
MPD ACQUISITION UNIT
191
MPD PROCESSING UNIT (PARSING)
98
IMAGE SELECTION UNIT
99
IMAGE FILE ACQUISITION UNIT
100
IMAGE DECODING PROCESSING UNIT
101
IMAGE SYNTHESIS PROCESSING UNIT
192
AUDIO FILE ACQUISITION UNIT
193
AUDIO SELECTION UNIT
194
AUDIO DECODING PROCESSING UNIT
195
AUDIO SYNTHESIS PROCESSING UNIT
190

FIG. 48

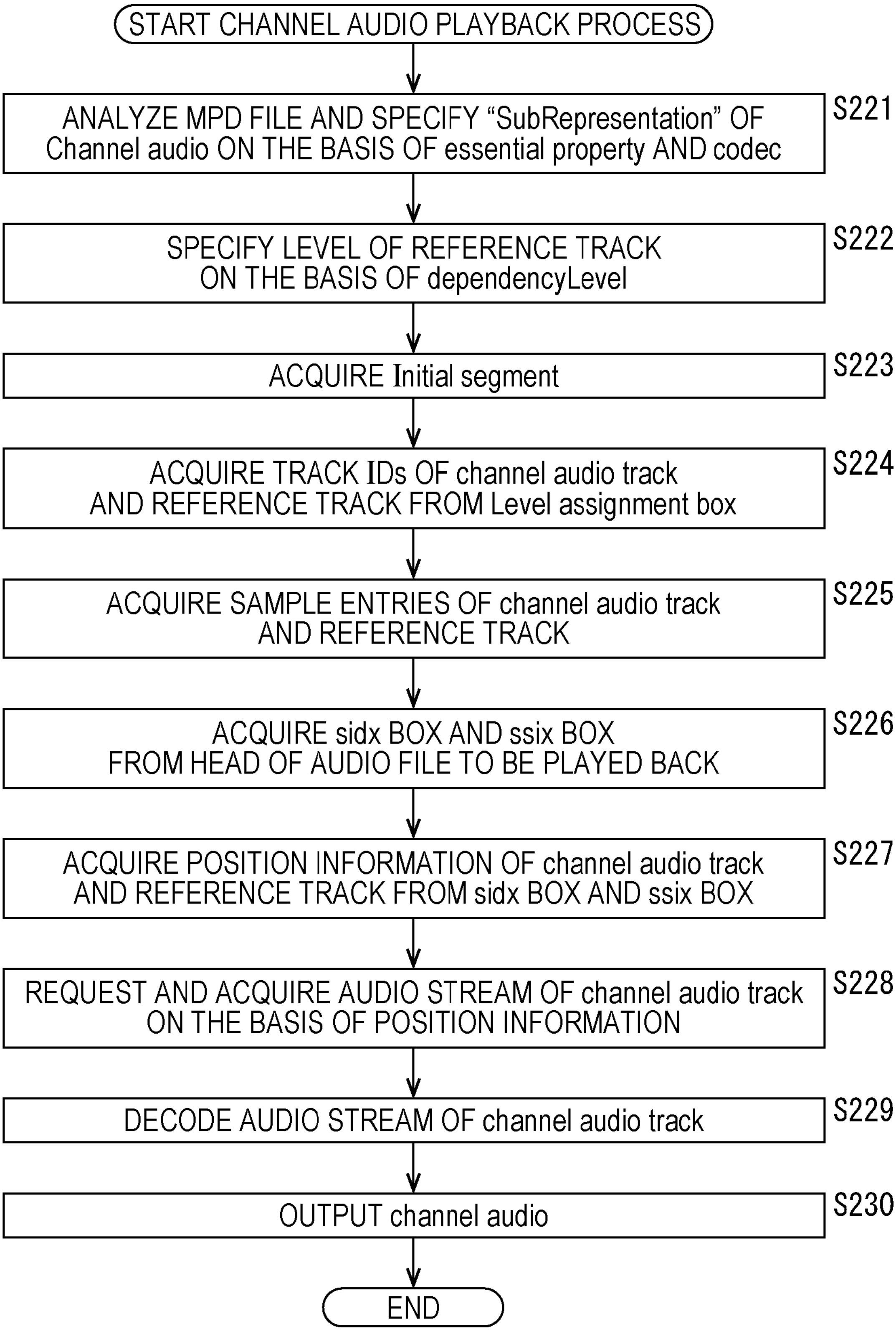
START CHANNEL AUDIO PLAYBACK PROCESS
ANALYZE MPD FILE AND SPECIFY "SubRepresentation" OF Channel audio ON THE BASIS OF essential property AND codec
S221
SPECIFY LEVEL OF REFERENCE TRACK ON THE BASIS OF dependencyLevel
S222
ACQUIRE Initial segment
S223
ACQUIRE TRACK IDs OF channel audio track AND REFERENCE TRACK FROM Level assignment box
S224
ACQUIRE SAMPLE ENTRIES OF channel audio track AND REFERENCE TRACK
S225
ACQUIRE sidx BOX AND ssix BOX FROM HEAD OF AUDIO FILE TO BE PLAYED BACK
S226
ACQUIRE POSITION INFORMATION OF channel audio track AND REFERENCE TRACK FROM sidx BOX AND ssix BOX
S227
REQUEST AND ACQUIRE AUDIO STREAM OF channel audio track ON THE BASIS OF POSITION INFORMATION
S228
DECODE AUDIO STREAM OF channel audio track
S229
OUTPUT channel audio
S230
END

FIG. 49

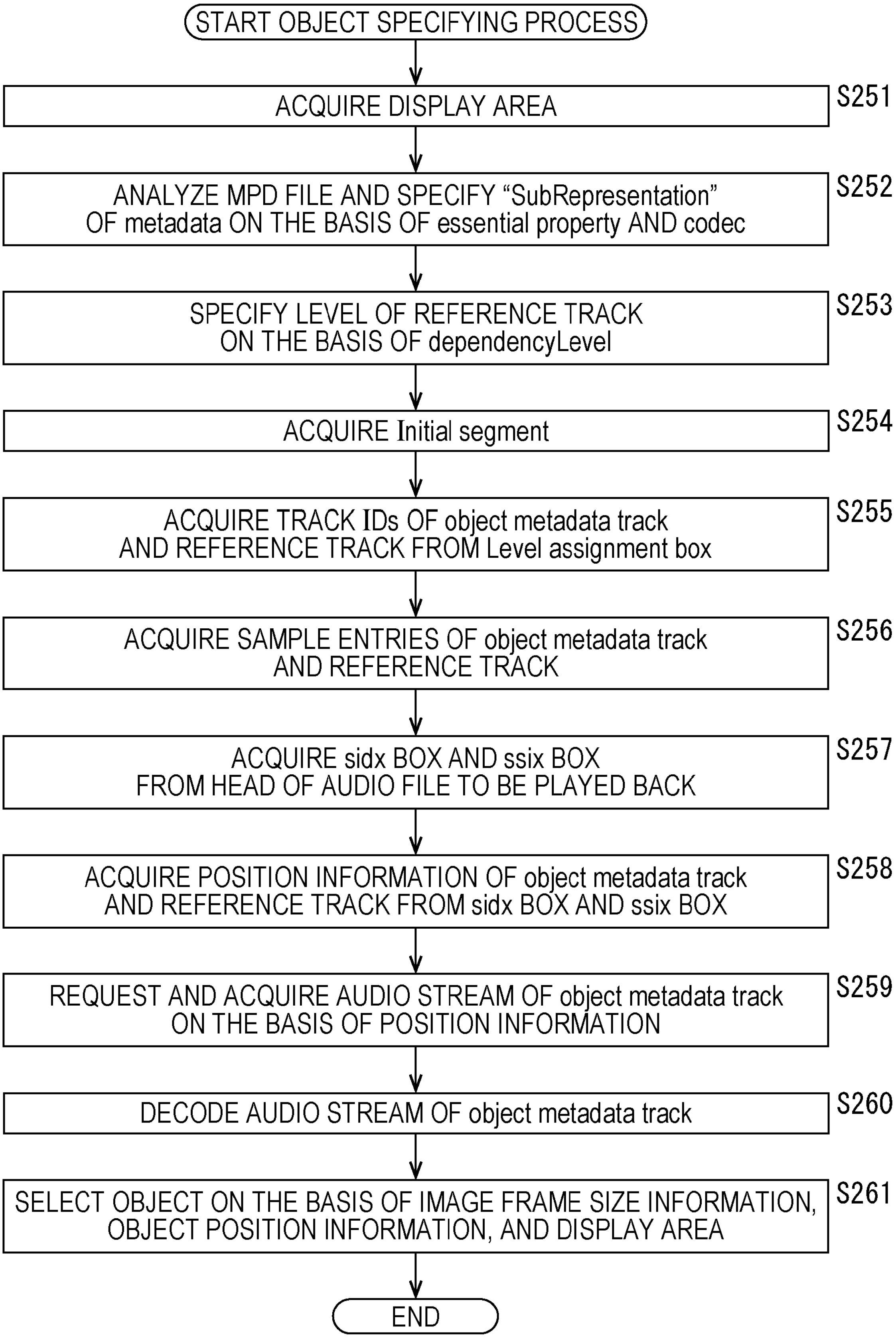
START OBJECT SPECIFYING PROCESS
ACQUIRE DISPLAY AREA
S251
ANALYZE MPD FILE AND SPECIFY "SubRepresentation" OF metadata ON THE BASIS OF essential property AND codec
S252
SPECIFY LEVEL OF REFERENCE TRACK ON THE BASIS OF dependencyLevel
S253
ACQUIRE Initial segment
S254
ACQUIRE TRACK IDs OF object metadata track AND REFERENCE TRACK FROM Level assignment box
S255
ACQUIRE SAMPLE ENTRIES OF object metadata track AND REFERENCE TRACK
S256
ACQUIRE sidx BOX AND ssix BOX FROM HEAD OF AUDIO FILE TO BE PLAYED BACK
S257
ACQUIRE POSITION INFORMATION OF object metadata track AND REFERENCE TRACK FROM sidx BOX AND ssix BOX
S258
REQUEST AND ACQUIRE AUDIO STREAM OF object metadata track ON THE BASIS OF POSITION INFORMATION
S259
DECODE AUDIO STREAM OF object metadata track
S260
SELECT OBJECT ON THE BASIS OF IMAGE FRAME SIZE INFORMATION, OBJECT POSITION INFORMATION, AND DISPLAY AREA
S261
END

FIG. 50

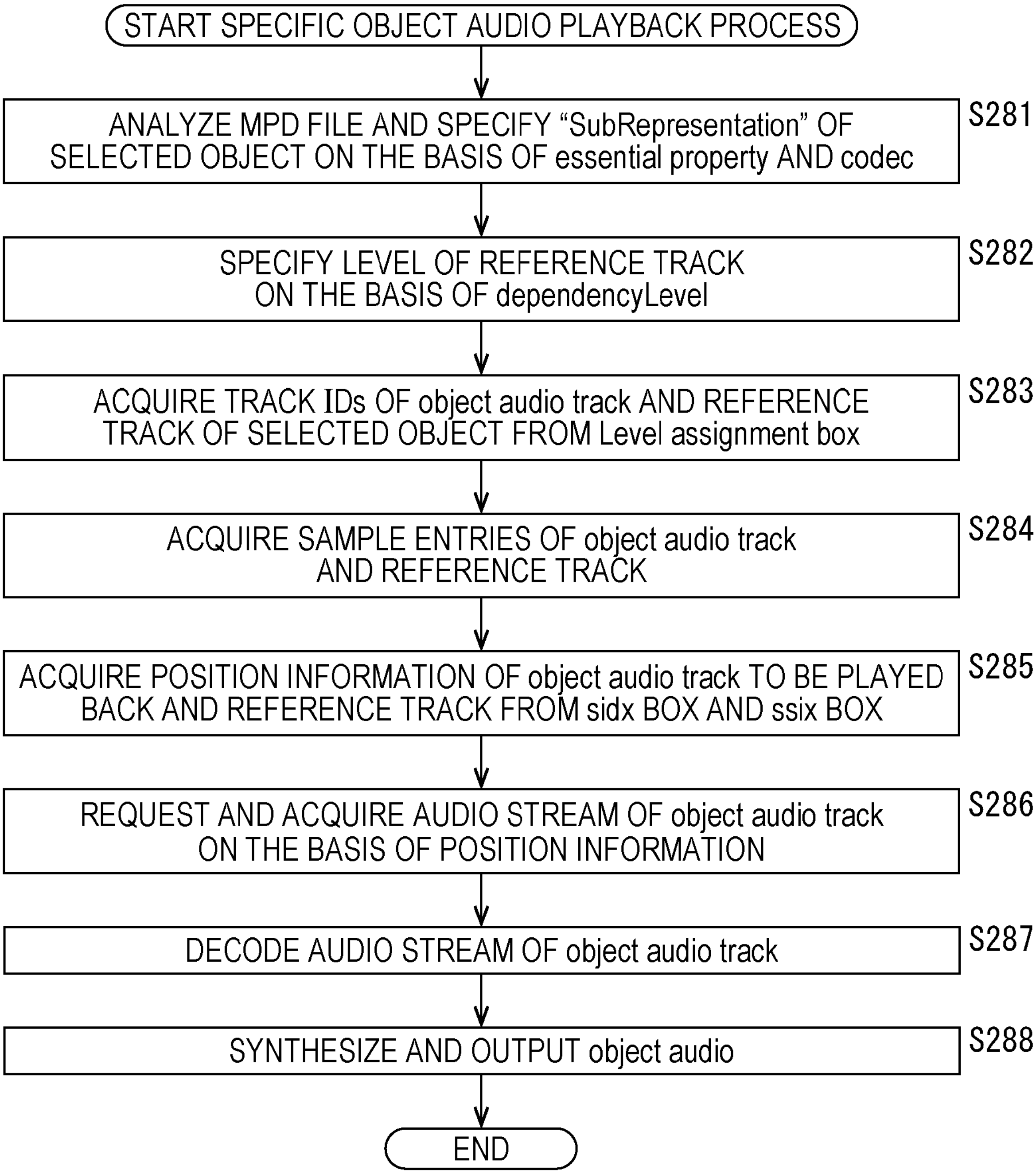
START SPECIFIC OBJECT AUDIO PLAYBACK PROCESS
ANALYZE MPD FILE AND SPECIFY "SubRepresentation" OF SELECTED OBJECT ON THE BASIS OF essential property AND codec
S281
SPECIFY LEVEL OF REFERENCE TRACK ON THE BASIS OF dependencyLevel
S282
ACQUIRE TRACK IDs OF object audio track AND REFERENCE TRACK OF SELECTED OBJECT FROM Level assignment box
S283
ACQUIRE SAMPLE ENTRIES OF object audio track AND REFERENCE TRACK
S284
ACQUIRE POSITION INFORMATION OF object audio track TO BE PLAYED BACK AND REFERENCE TRACK FROM sidx BOX AND ssix BOX
S285
REQUEST AND ACQUIRE AUDIO STREAM OF object audio track ON THE BASIS OF POSITION INFORMATION
S286
DECODE AUDIO STREAM OF object audio track
S287
SYNTHESIZE AND OUTPUT object audio
S288
END

FIG. 51

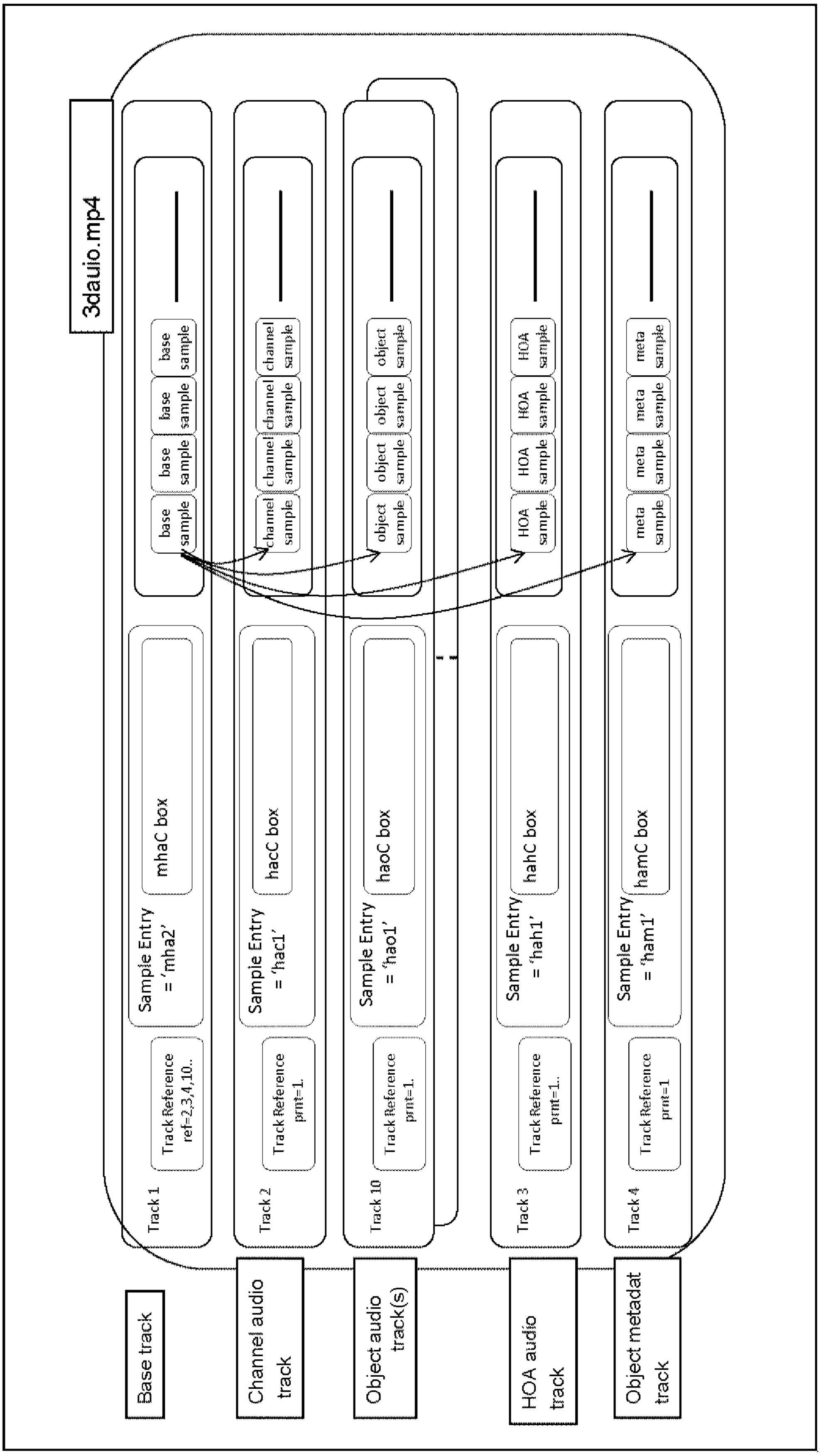
3dauio.mp4
Base track
Channel audio track
Object audio track(s)
HOA audio track
Object metadat track
Track 1
Track Reference ref=2,3,4,10..
Sample Entry = 'mha2'
mhaC box
base sample
Track 2
Track Reference prnt=1.
Sample Entry = 'hac1'
hacC box
channel sample
Track 10
Track Reference prnt=1.
Sample Entry = 'hao1'
haoC box
object sample
Track 3
Track Reference prnt=1..
Sample Entry = 'hah1'
hahC box
HOA sample
Track 4
Track Reference prnt=1
Sample Entry = 'ham1'
hamC box
meta sample

FIG. 52

```
class MHASampleEntry() extends AudioSampleEntry('mha2') {
            MHAConfigurationBox config;
            MPEG4BitRateBox();                          // optional
            MPEG4ExtensionDescriptorsBox ();            // optional
    }

class MHAConfigurationBox() extends Box('mhaC') {
            MHADecoderConfigurationRecord() MHAConfig;
    }

aligned(8) class MHADecoderConfigurationRecord {
            unsigned int(8)  configurationVersion = 1;
            unsigned int(8)  MPEGHAudioProfile;
            unsigned int(8)  MPEGHAudioLevel;
            unsigned int(8)  referenceChannelLayout;
            unsigned int(16) mpegh3daConfigLength;
            bit(8*mpegh3daConfigLength) mpegh3daConfig;
    }
```

FIG. 53

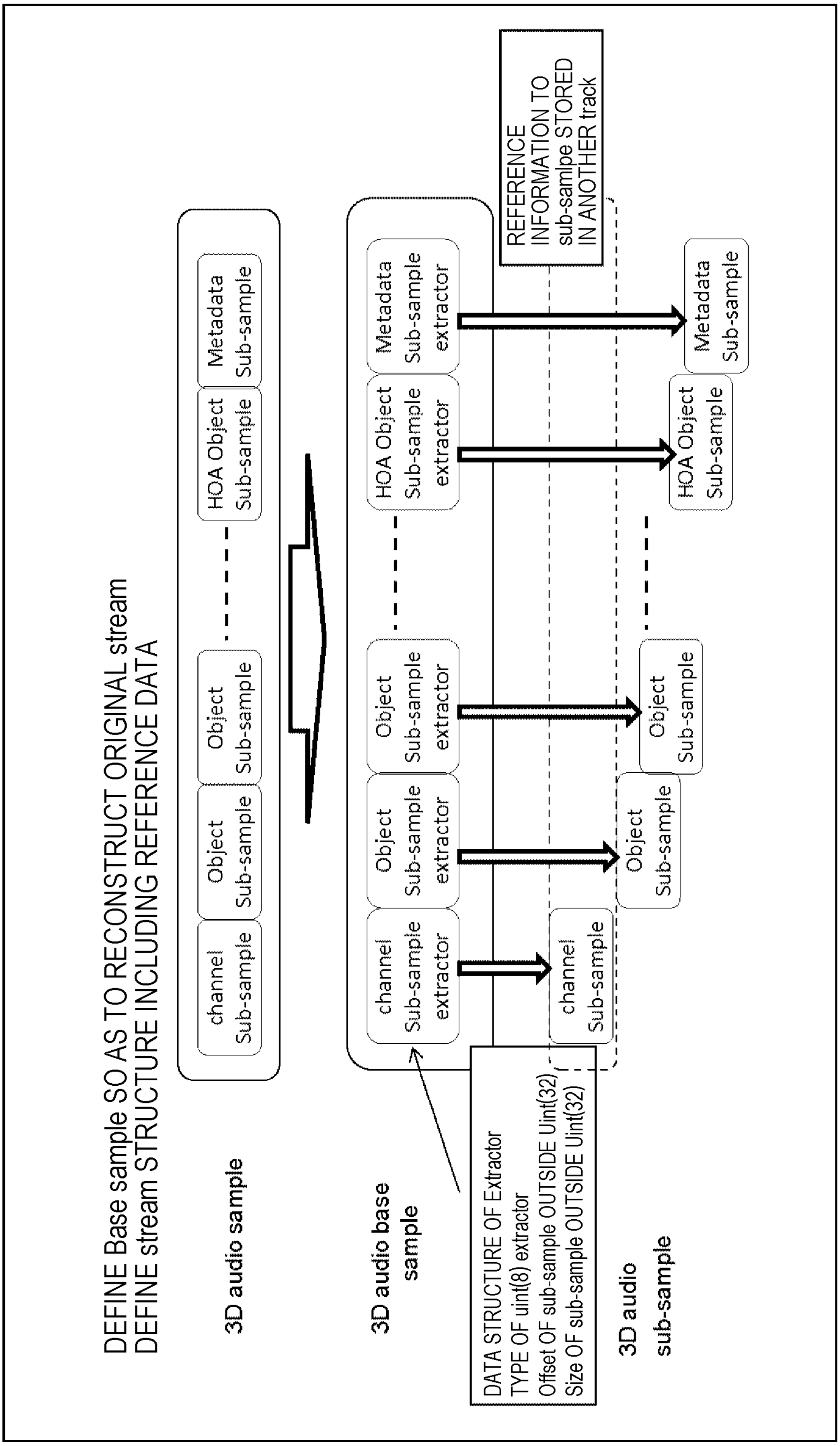
DEFINE Base sample SO AS TO RECONSTRUCT ORIGINAL stream
DEFINE stream STRUCTURE INCLUDING REFERENCE DATA
3D audio sample
channel Sub-sample
Object Sub-sample
Object Sub-sample
HOA Object Sub-sample
Metadata Sub-sample
3D audio base sample
channel Sub-sample extractor
Object Sub-sample extractor
Object Sub-sample extractor
HOA Object Sub-sample extractor
Metadata Sub-sample extractor
3D audio sub-sample
channel Sub-sample
Object Sub-sample
Object Sub-sample
HOA Object Sub-sample
Metadata Sub-sample
DATA STRUCTURE OF Extractor
TYPE OF uint(8) extractor
Offset OF sub-sample OUTSIDE Uint(32)
Size OF sub-sample OUTSIDE Uint(32)
REFERENCE INFORMATION TO sub-samlpe STORED IN ANOTHER track

# FIG. 54

| Syntax | No. of bits | Mnemonic |
|---|---|---|
| mpegh3daFrame() | | |
| { | | |
| **usacIndependencyFlag;** | **1** | **uimsbf** |
| for (elemIdx=0; elemIdx<numElements; ++elemIdx) { | | |
| if ( (usacElementType[elemIdx] != ID_USAC_EXT) && | | |
| (elementLengthPresent == 1) ) { | | |
| **elementLength** | **16** | **uimsbf** |
| } | | |
| switch (usacElementType[elemIdx]) { | | |
| case ID_USAC_SCE: | | |
| mpegh3daSingleChannelElement(usacIndependencyFlag); | **elementLength**, NOTE 1 | |
| break; | | |
| case ID_USAC_CPE: | | |
| mpegh3daChannelPairElement(usacIndependencyFlag); | **elementLength**, NOTE 1 | |
| break; | | |
| case ID_USAC_LFE: | | |
| mpegh3daLfeElement(usacIndependencyFlag); | **elementLength**, NOTE 1 | |
| break; | | |
| case ID_USAC_EXT: | | |
| mpegh3daExtElement(usacIndependencyFlag); | | |
| break;] | | |
| } | | |
| } | | |
| NOTE 1: If present, elementLength represents the length of the corresponding element it refers to in number of bits. | | |

DEFINE extractor TO REFER TO EXTERNAL sub-sample AS mpeg3daExtElement

FIG. 55

| Bitstream Field | Value |
|---|---|
| usacExtElementType | ID_EXT_ELE_EXTRACTOR |
| usacExtElementConfigLength | 0 |
| usacExtElementDefaultLengthPresent | 0 |
| usacExtElementPayloadFrag | 0 |

STORE TYPE, OFFSET, AND SIZE INFORMATION OF REFERENCE sub-sample AS ACTUAL DATA

FIG. 56

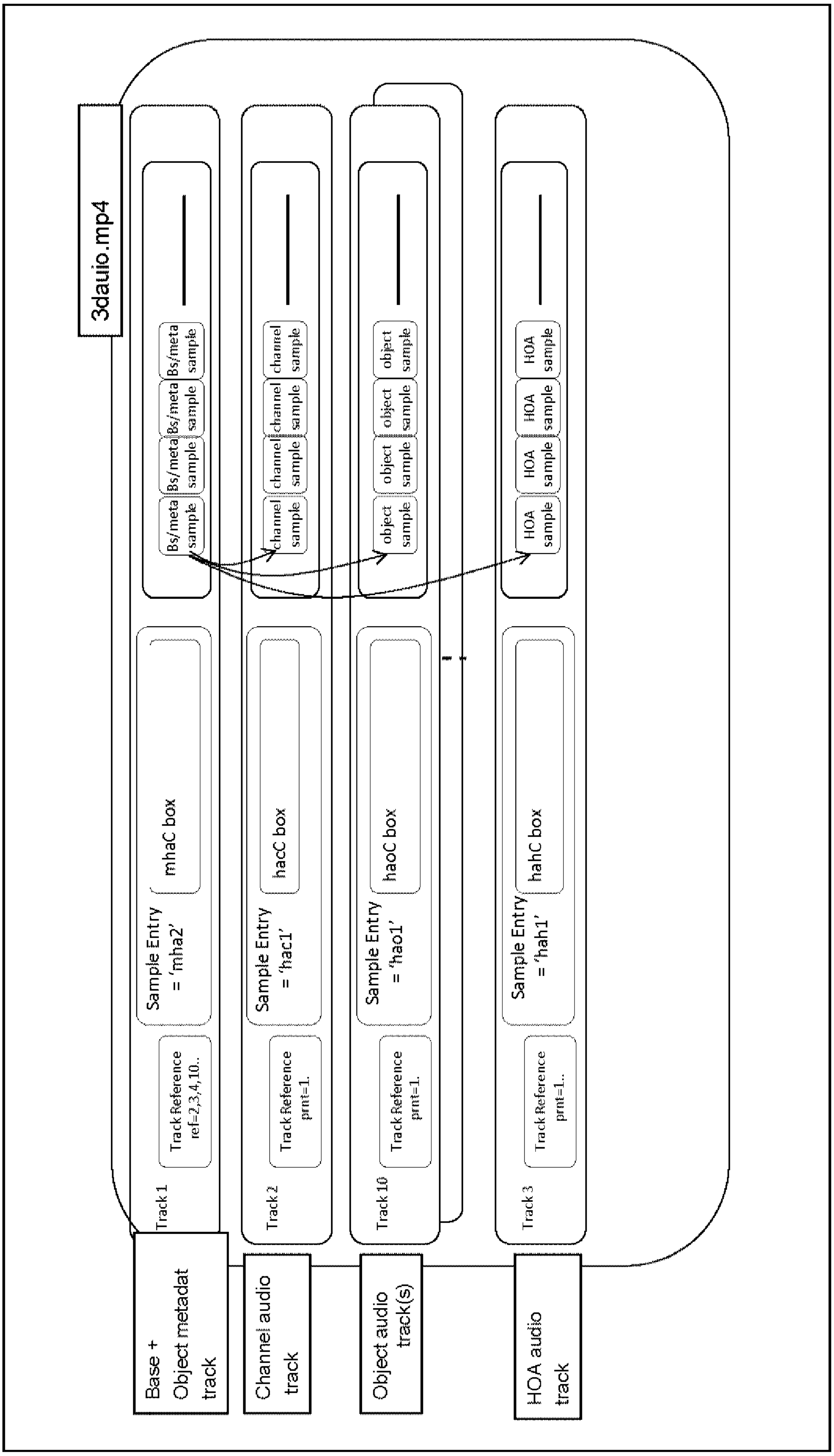
3dauio.mp4
Track 1
Track Reference ref=2,3,4,10..
Sample Entry = 'mha2'
mhaC box
Bs/meta sample
Bs/meta sample
Bs/meta sample
Bs/meta sample
Track 2
Track Reference prnt=1.
Sample Entry = 'hac1'
hacC box
channel sample
channel sample
channel sample
channel sample
Track 10
Track Reference prnt=1.
Sample Entry = 'hao1'
haoC box
object sample
object sample
object sample
object sample
Track 3
Track Reference prnt=1..
Sample Entry = 'hah1'
hahC box
HOA sample
HOA sample
HOA sample
HOA sample
Base + Object metadat track
Channel audio track
Object audio track(s)
HOA audio track

FIG. 57

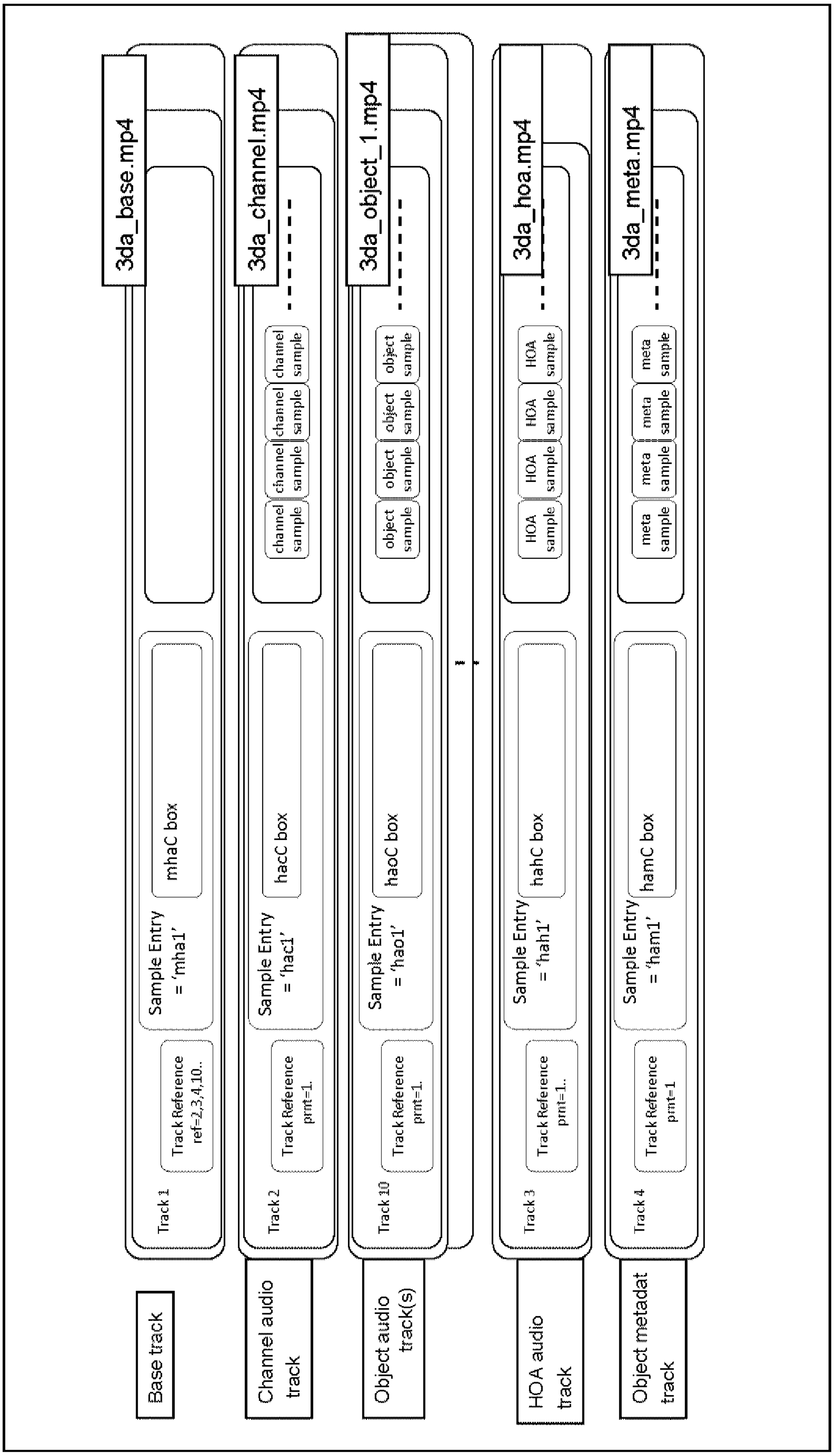
Base track
Track 1
Track Reference ref=2,3,4,10..
Sample Entry = 'mha1'
mhaC box
3da_base.mp4
Channel audio track
Track 2
Track Reference prnt=1.
Sample Entry = 'hac1'
hacC box
channel sample
channel sample
channel sample
channel sample
3da_channel.mp4
Object audio track(s)
Track 10
Track Reference prnt=1.
Sample Entry = 'hao1'
haoC box
object sample
object sample
object sample
object sample
3da_object_1.mp4
HOA audio track
Track 3
Track Reference prnt=1..
Sample Entry = 'hah1'
hahC box
HOA sample
HOA sample
HOA sample
HOA sample
3da_hoa.mp4
Object metadat track
Track 4
Track Reference prnt=1
Sample Entry = 'ham1'
hamC box
meta sample
meta sample
meta sample
meta sample
3da_meta.mp4

FIG. 58

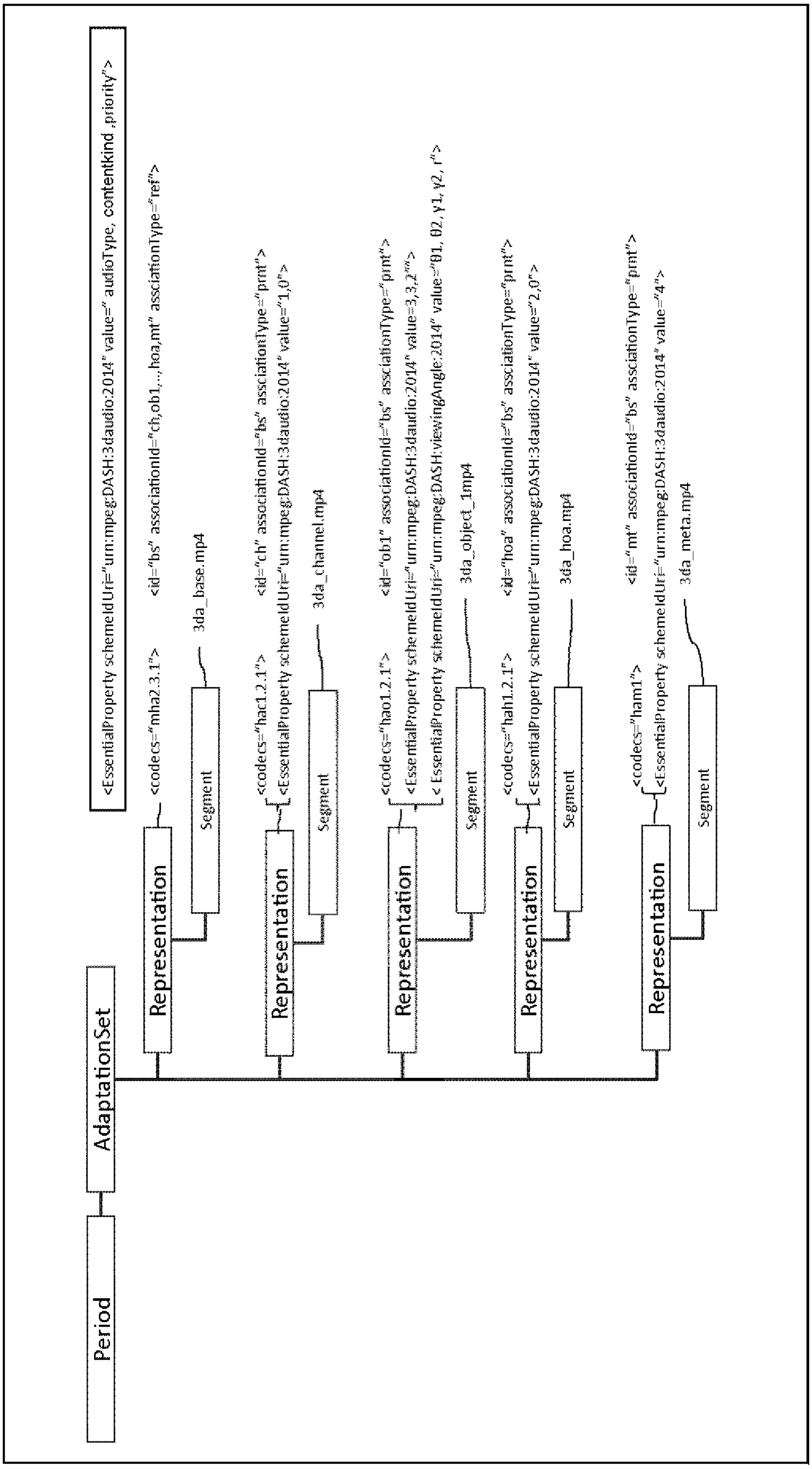
<EssentialProperty schemeIdUri="urn:mpeg:DASH:3daudio:2014" value=" audioType, contentkind ,priority">
Period
AdaptationSet
Representation
<codecs="mha2.3.1">
<id="bs" associationId="ch,ob1,..,hoa,mt" assciationType="ref">
Segment
3da_base.mp4
Representation
<codecs="hac1.2.1">
<EssentialProperty schemeIdUri="urn:mpeg:DASH:3daudio:2014" value="1,0">
<id="ch" associationId="bs" assciationType="prnt">
Segment
3da_channel.mp4
Representation
<codecs="hao1.2.1">
<EssentialProperty schemeIdUri="urn:mpeg:DASH:3daudio:2014" value=3,3,2"">
< EssentialProperty schemeIdUri="urn:mpeg:DASH:viewingAngle:2014" value="θ1, θ2, γ1, γ2, r">
<id="ob1" associationId="bs" assciationType="prnt">
Segment
3da_object_1.mp4
Representation
<codecs="hah1.2.1">
<EssentialProperty schemeIdUri="urn:mpeg:DASH:3daudio:2014" value="2,0">
<id="hoa" associationId="bs" assciationType="prnt">
Segment
3da_hoa.mp4
Representation
<codecs="ham1">
<EssentialProperty schemeIdUri="urn:mpeg:DASH:3daudio:2014" value="4">
<id="mt" associationId="bs" assciationType="prnt">
Segment
3da_meta.mp4

FIG. 59

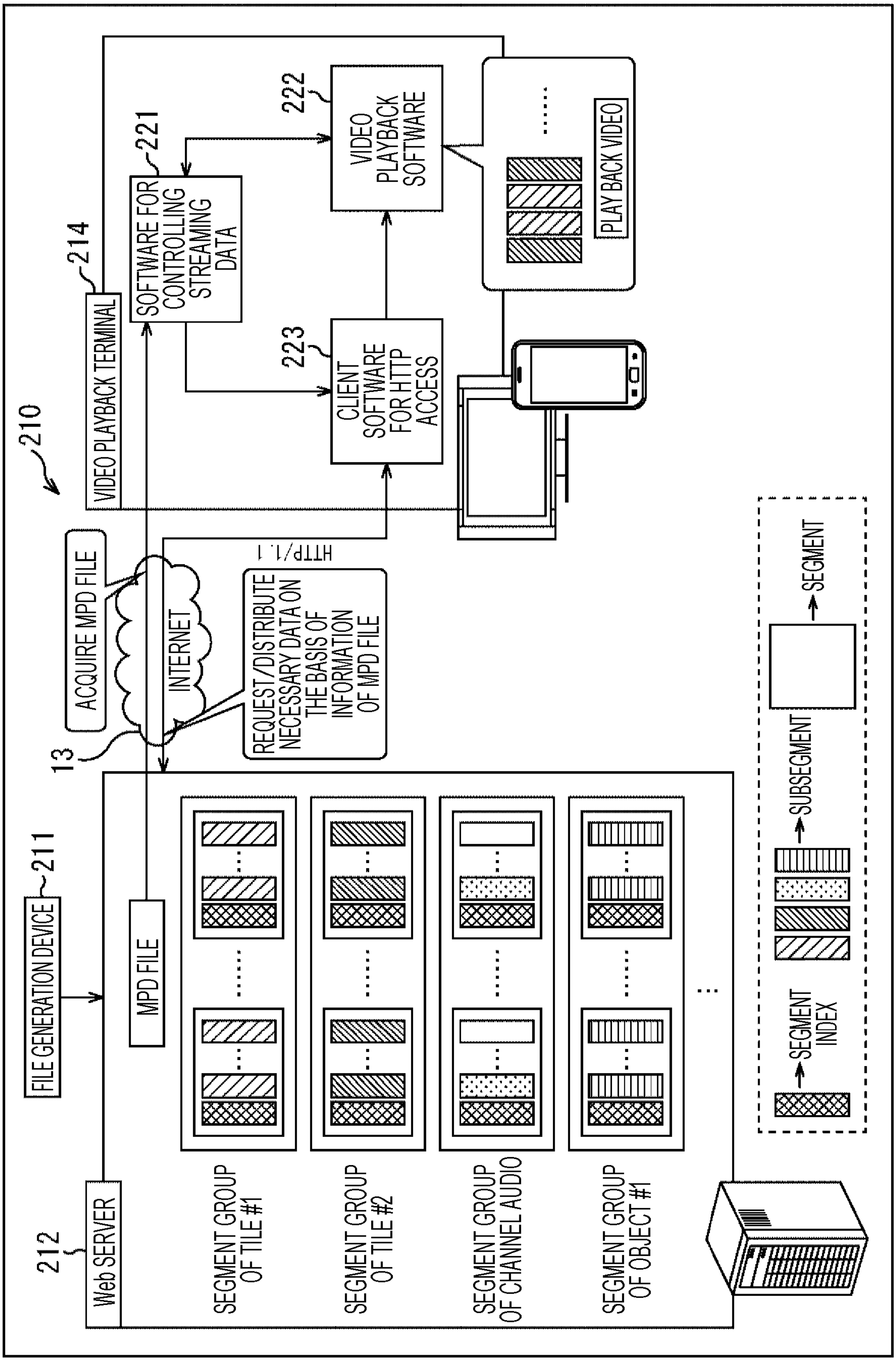
210
VIDEO PLAYBACK TERMINAL
214
SOFTWARE FOR CONTROLLING STREAMING DATA
221
VIDEO PLAYBACK SOFTWARE
222
CLIENT SOFTWARE FOR HTTP ACCESS
223
PLAY BACK VIDEO
ACQUIRE MPD FILE
INTERNET
13
HTTP/1.1
REQUEST/DISTRIBUTE NECESSARY DATA ON THE BASIS OF INFORMATION OF MPD FILE
FILE GENERATION DEVICE
211
Web SERVER
212
MPD FILE
SEGMENT GROUP OF TILE #1
SEGMENT GROUP OF TILE #2
SEGMENT GROUP OF CHANNEL AUDIO
SEGMENT GROUP OF OBJECT #1
SEGMENT INDEX
SUBSEGMENT
SEGMENT

FIG. 60

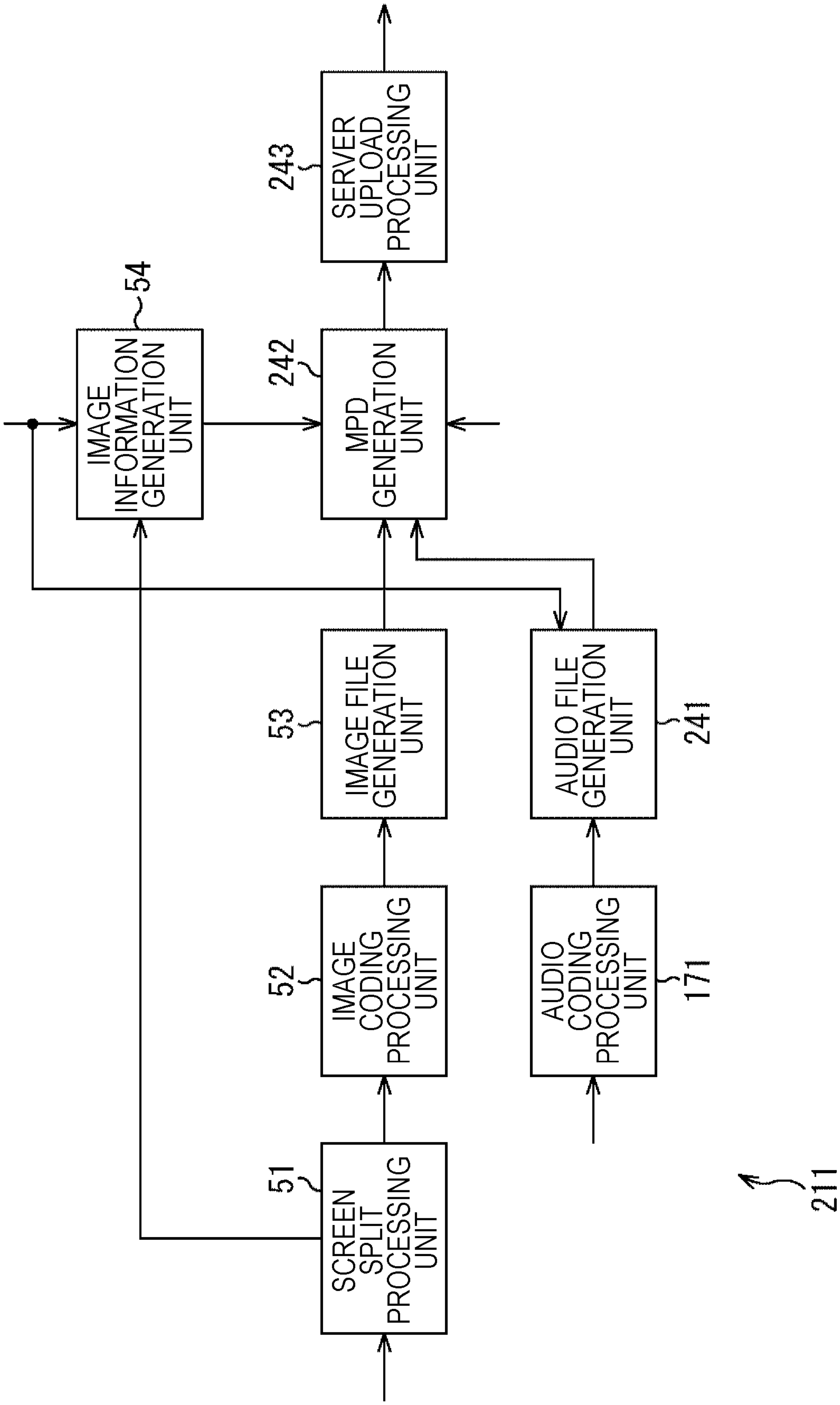
SCREEN SPLIT PROCESSING UNIT
51
IMAGE CODING PROCESSING UNIT
52
IMAGE FILE GENERATION UNIT
53
IMAGE INFORMATION GENERATION UNIT
54
AUDIO CODING PROCESSING UNIT
171
AUDIO FILE GENERATION UNIT
241
MPD GENERATION UNIT
242
SERVER UPLOAD PROCESSING UNIT
243
211

FIG. 61

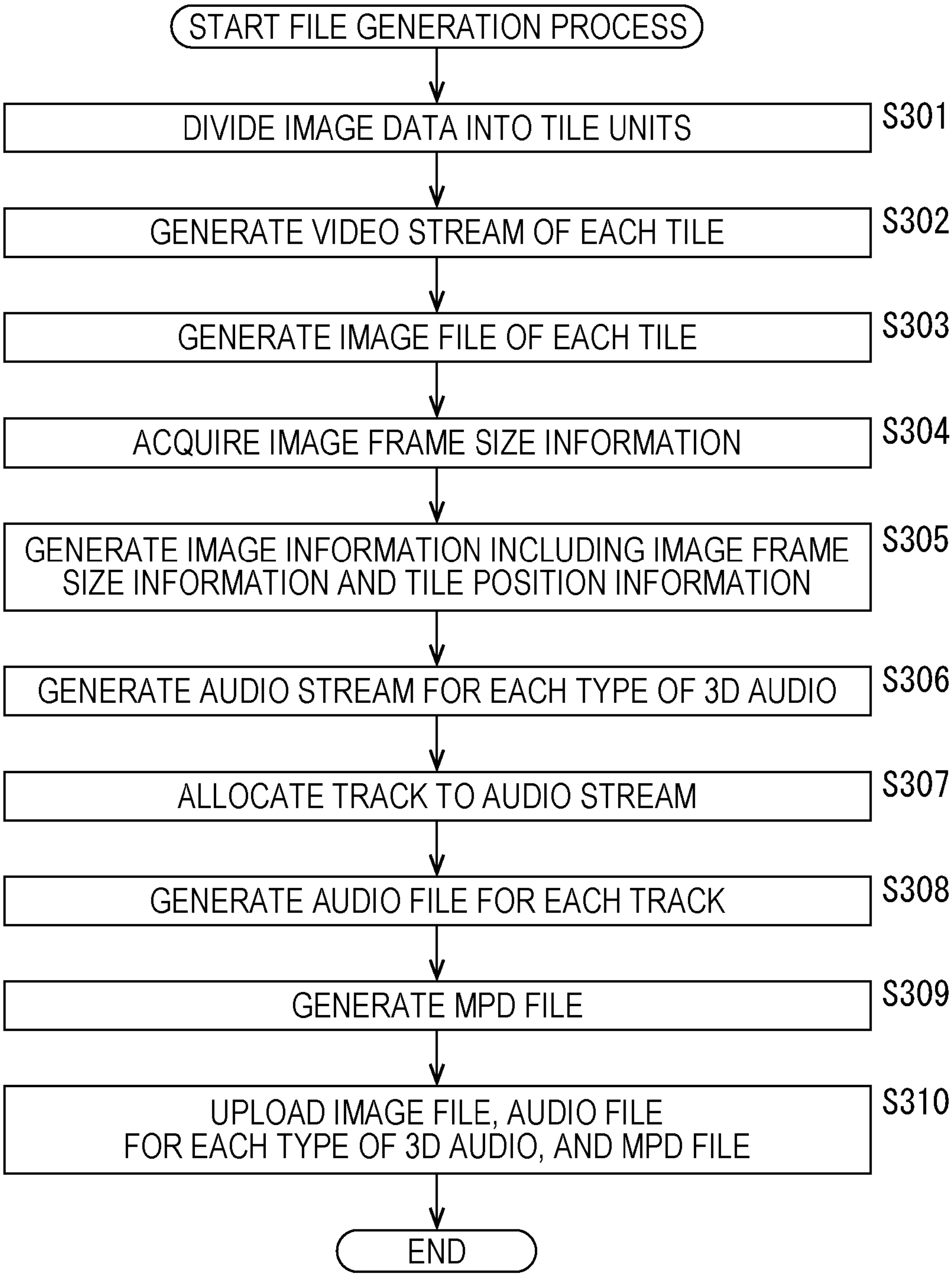
START FILE GENERATION PROCESS
DIVIDE IMAGE DATA INTO TILE UNITS
S301
GENERATE VIDEO STREAM OF EACH TILE
S302
GENERATE IMAGE FILE OF EACH TILE
S303
ACQUIRE IMAGE FRAME SIZE INFORMATION
S304
GENERATE IMAGE INFORMATION INCLUDING IMAGE FRAME SIZE INFORMATION AND TILE POSITION INFORMATION
S305
GENERATE AUDIO STREAM FOR EACH TYPE OF 3D AUDIO
S306
ALLOCATE TRACK TO AUDIO STREAM
S307
GENERATE AUDIO FILE FOR EACH TRACK
S308
GENERATE MPD FILE
S309
UPLOAD IMAGE FILE, AUDIO FILE FOR EACH TYPE OF 3D AUDIO, AND MPD FILE
S310
END

FIG. 62

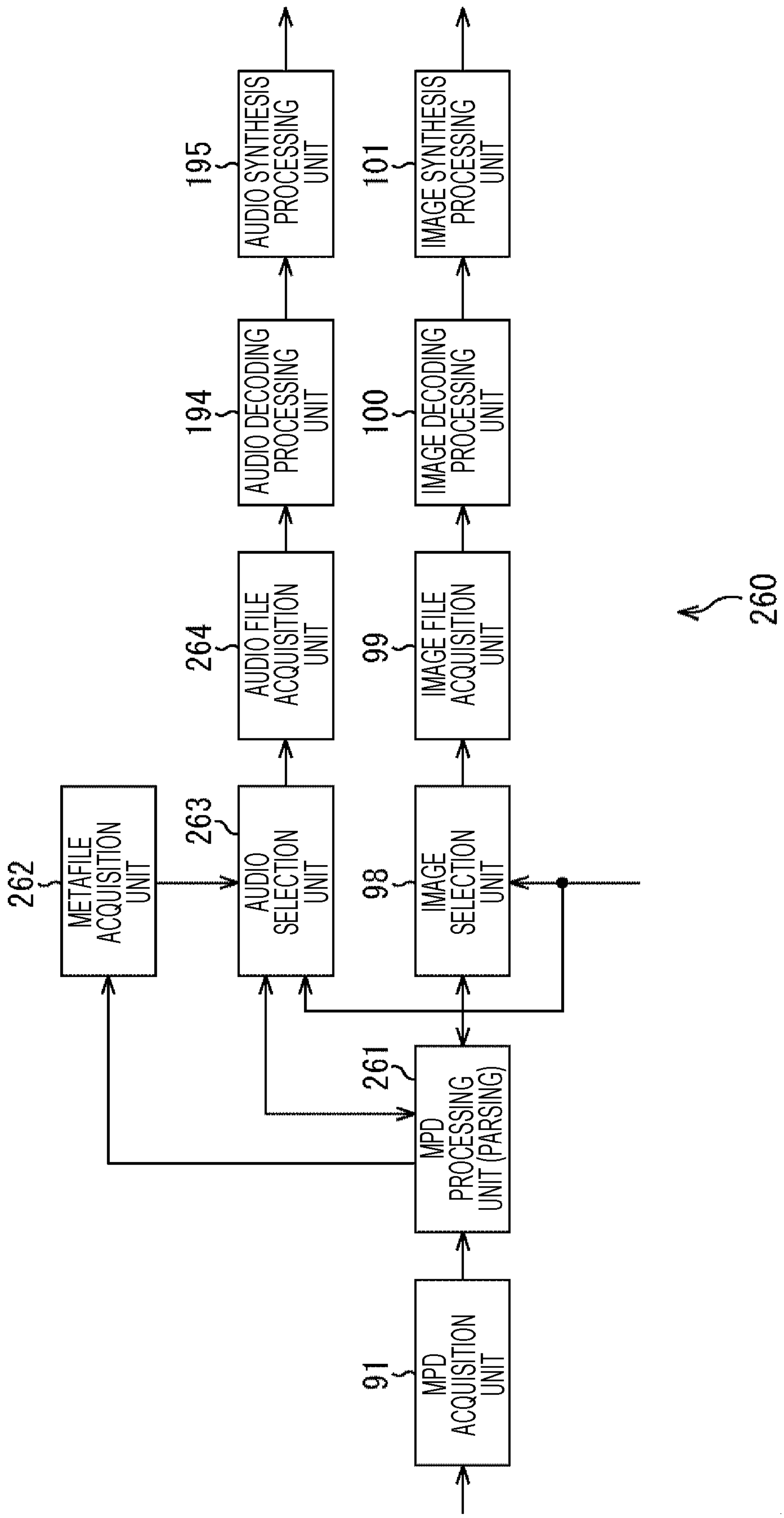
195
AUDIO SYNTHESIS PROCESSING UNIT
194
AUDIO DECODING PROCESSING UNIT
264
AUDIO FILE ACQUISITION UNIT
263
AUDIO SELECTION UNIT
262
METAFILE ACQUISITION UNIT
101
IMAGE SYNTHESIS PROCESSING UNIT
100
IMAGE DECODING PROCESSING UNIT
99
IMAGE FILE ACQUISITION UNIT
98
IMAGE SELECTION UNIT
261
MPD PROCESSING UNIT (PARSING)
91
MPD ACQUISITION UNIT
260

FIG. 63

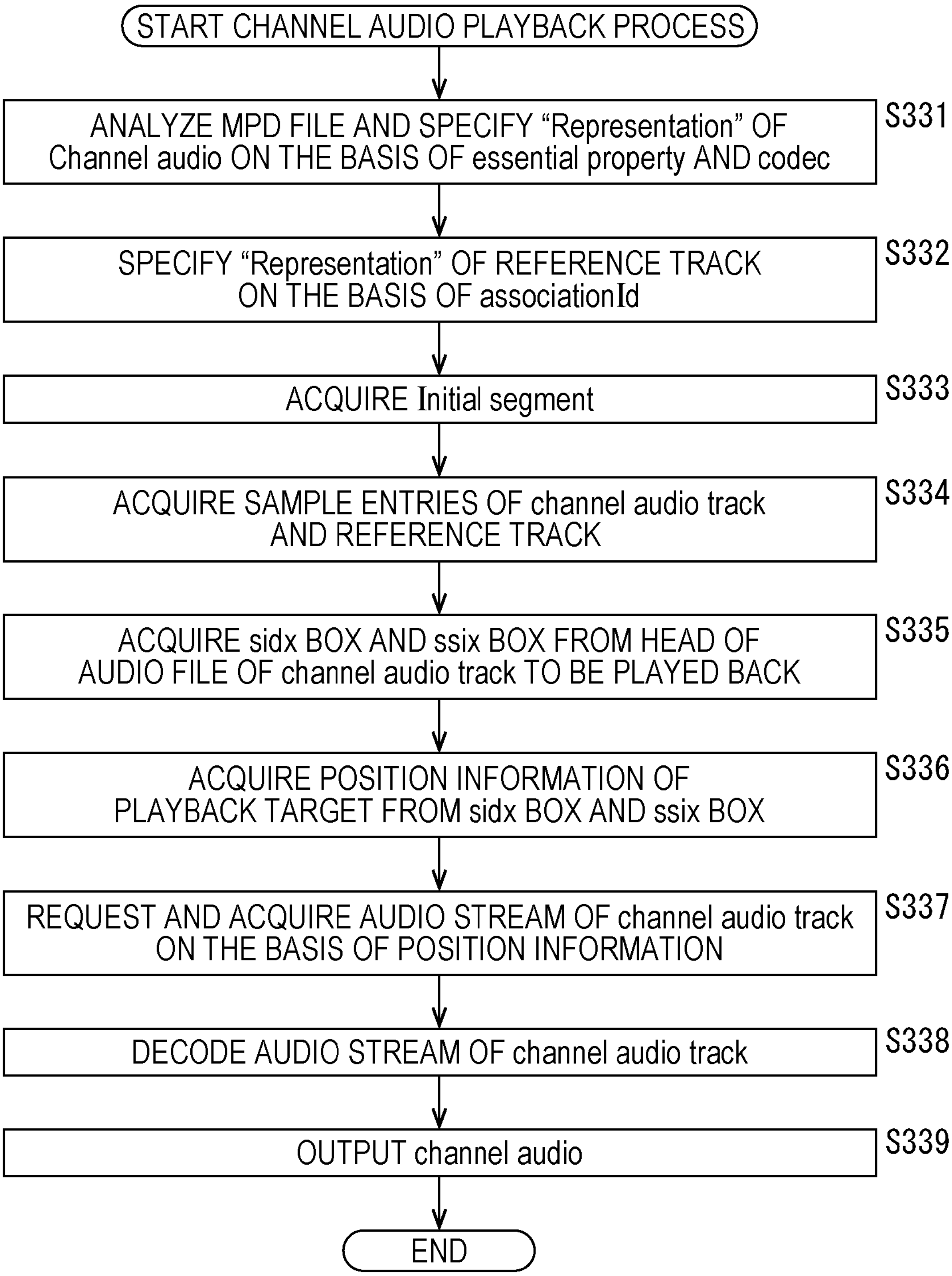
START CHANNEL AUDIO PLAYBACK PROCESS
ANALYZE MPD FILE AND SPECIFY "Representation" OF Channel audio ON THE BASIS OF essential property AND codec
S331
SPECIFY "Representation" OF REFERENCE TRACK ON THE BASIS OF associationId
S332
ACQUIRE Initial segment
S333
ACQUIRE SAMPLE ENTRIES OF channel audio track AND REFERENCE TRACK
S334
ACQUIRE sidx BOX AND ssix BOX FROM HEAD OF AUDIO FILE OF channel audio track TO BE PLAYED BACK
S335
ACQUIRE POSITION INFORMATION OF PLAYBACK TARGET FROM sidx BOX AND ssix BOX
S336
REQUEST AND ACQUIRE AUDIO STREAM OF channel audio track ON THE BASIS OF POSITION INFORMATION
S337
DECODE AUDIO STREAM OF channel audio track
S338
OUTPUT channel audio
S339
END

FIG. 64

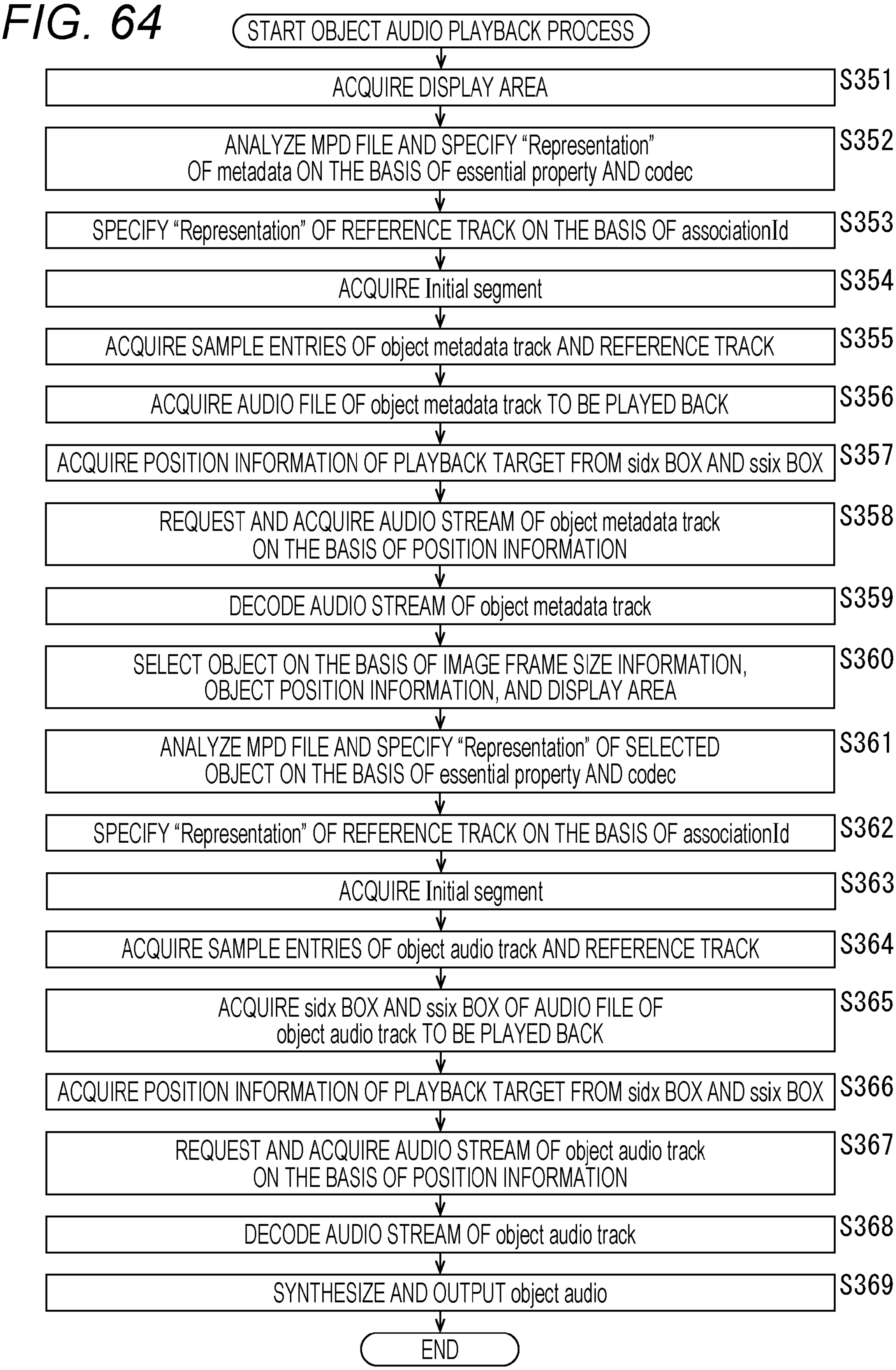
START OBJECT AUDIO PLAYBACK PROCESS
ACQUIRE DISPLAY AREA
S351
ANALYZE MPD FILE AND SPECIFY “Representation” OF metadata ON THE BASIS OF essential property AND codec
S352
SPECIFY “Representation” OF REFERENCE TRACK ON THE BASIS OF associationId
S353
ACQUIRE Initial segment
S354
ACQUIRE SAMPLE ENTRIES OF object metadata track AND REFERENCE TRACK
S355
ACQUIRE AUDIO FILE OF object metadata track TO BE PLAYED BACK
S356
ACQUIRE POSITION INFORMATION OF PLAYBACK TARGET FROM sidx BOX AND ssix BOX
S357
REQUEST AND ACQUIRE AUDIO STREAM OF object metadata track ON THE BASIS OF POSITION INFORMATION
S358
DECODE AUDIO STREAM OF object metadata track
S359
SELECT OBJECT ON THE BASIS OF IMAGE FRAME SIZE INFORMATION, OBJECT POSITION INFORMATION, AND DISPLAY AREA
S360
ANALYZE MPD FILE AND SPECIFY “Representation” OF SELECTED OBJECT ON THE BASIS OF essential property AND codec
S361
SPECIFY “Representation” OF REFERENCE TRACK ON THE BASIS OF associationId
S362
ACQUIRE Initial segment
S363
ACQUIRE SAMPLE ENTRIES OF object audio track AND REFERENCE TRACK
S364
ACQUIRE sidx BOX AND ssix BOX OF AUDIO FILE OF object audio track TO BE PLAYED BACK
S365
ACQUIRE POSITION INFORMATION OF PLAYBACK TARGET FROM sidx BOX AND ssix BOX
S366
REQUEST AND ACQUIRE AUDIO STREAM OF object audio track ON THE BASIS OF POSITION INFORMATION
S367
DECODE AUDIO STREAM OF object audio track
S368
SYNTHESIZE AND OUTPUT object audio
S369
END

FIG. 65

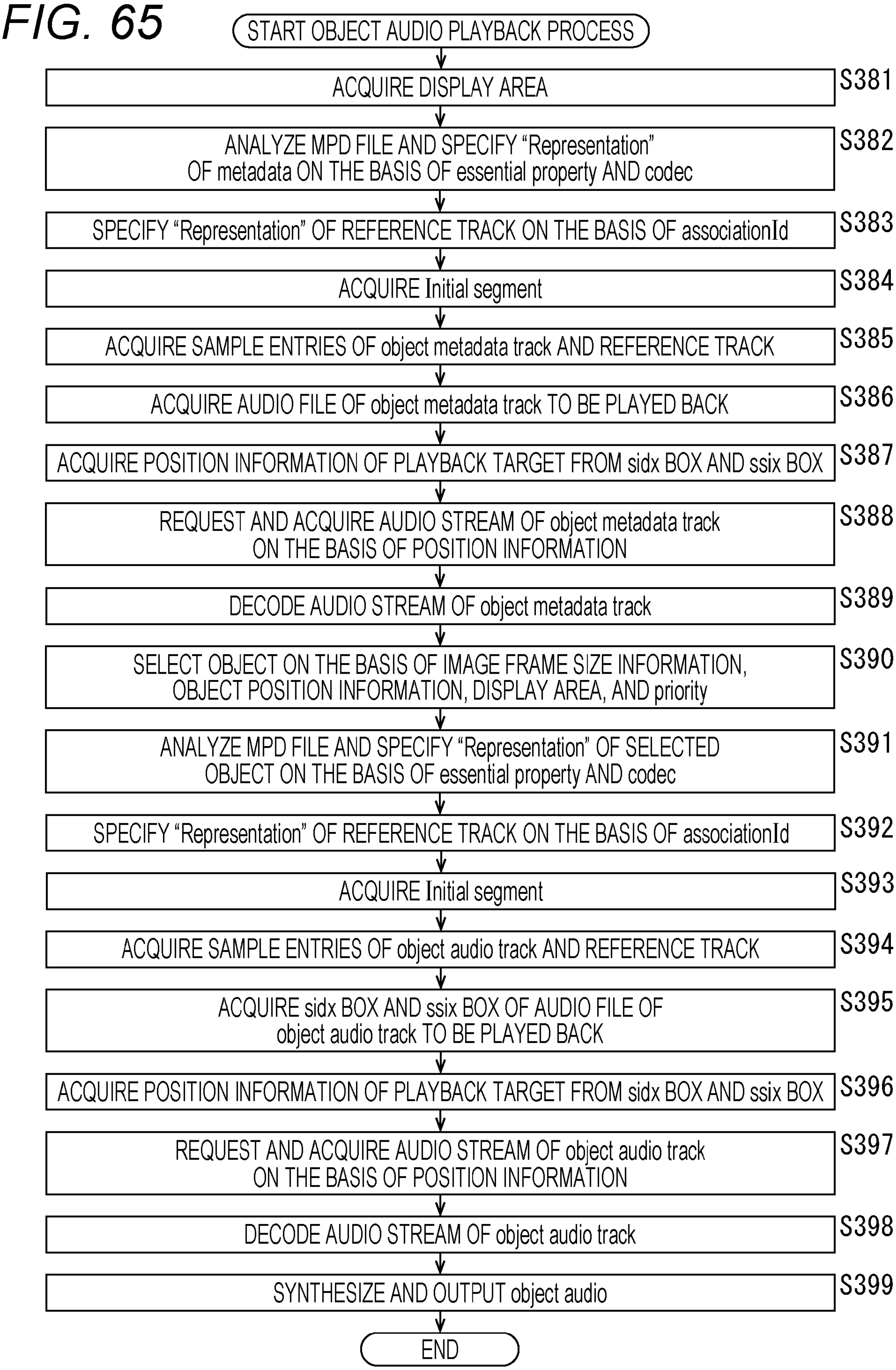
START OBJECT AUDIO PLAYBACK PROCESS
ACQUIRE DISPLAY AREA
S381
ANALYZE MPD FILE AND SPECIFY "Representation" OF metadata ON THE BASIS OF essential property AND codec
S382
SPECIFY "Representation" OF REFERENCE TRACK ON THE BASIS OF associationId
S383
ACQUIRE Initial segment
S384
ACQUIRE SAMPLE ENTRIES OF object metadata track AND REFERENCE TRACK
S385
ACQUIRE AUDIO FILE OF object metadata track TO BE PLAYED BACK
S386
ACQUIRE POSITION INFORMATION OF PLAYBACK TARGET FROM sidx BOX AND ssix BOX
S387
REQUEST AND ACQUIRE AUDIO STREAM OF object metadata track ON THE BASIS OF POSITION INFORMATION
S388
DECODE AUDIO STREAM OF object metadata track
S389
SELECT OBJECT ON THE BASIS OF IMAGE FRAME SIZE INFORMATION, OBJECT POSITION INFORMATION, DISPLAY AREA, AND priority
S390
ANALYZE MPD FILE AND SPECIFY "Representation" OF SELECTED OBJECT ON THE BASIS OF essential property AND codec
S391
SPECIFY "Representation" OF REFERENCE TRACK ON THE BASIS OF associationId
S392
ACQUIRE Initial segment
S393
ACQUIRE SAMPLE ENTRIES OF object audio track AND REFERENCE TRACK
S394
ACQUIRE sidx BOX AND ssix BOX OF AUDIO FILE OF object audio track TO BE PLAYED BACK
S395
ACQUIRE POSITION INFORMATION OF PLAYBACK TARGET FROM sidx BOX AND ssix BOX
S396
REQUEST AND ACQUIRE AUDIO STREAM OF object audio track ON THE BASIS OF POSITION INFORMATION
S397
DECODE AUDIO STREAM OF object audio track
S398
SYNTHESIZE AND OUTPUT object audio
S399
END

FIG. 66

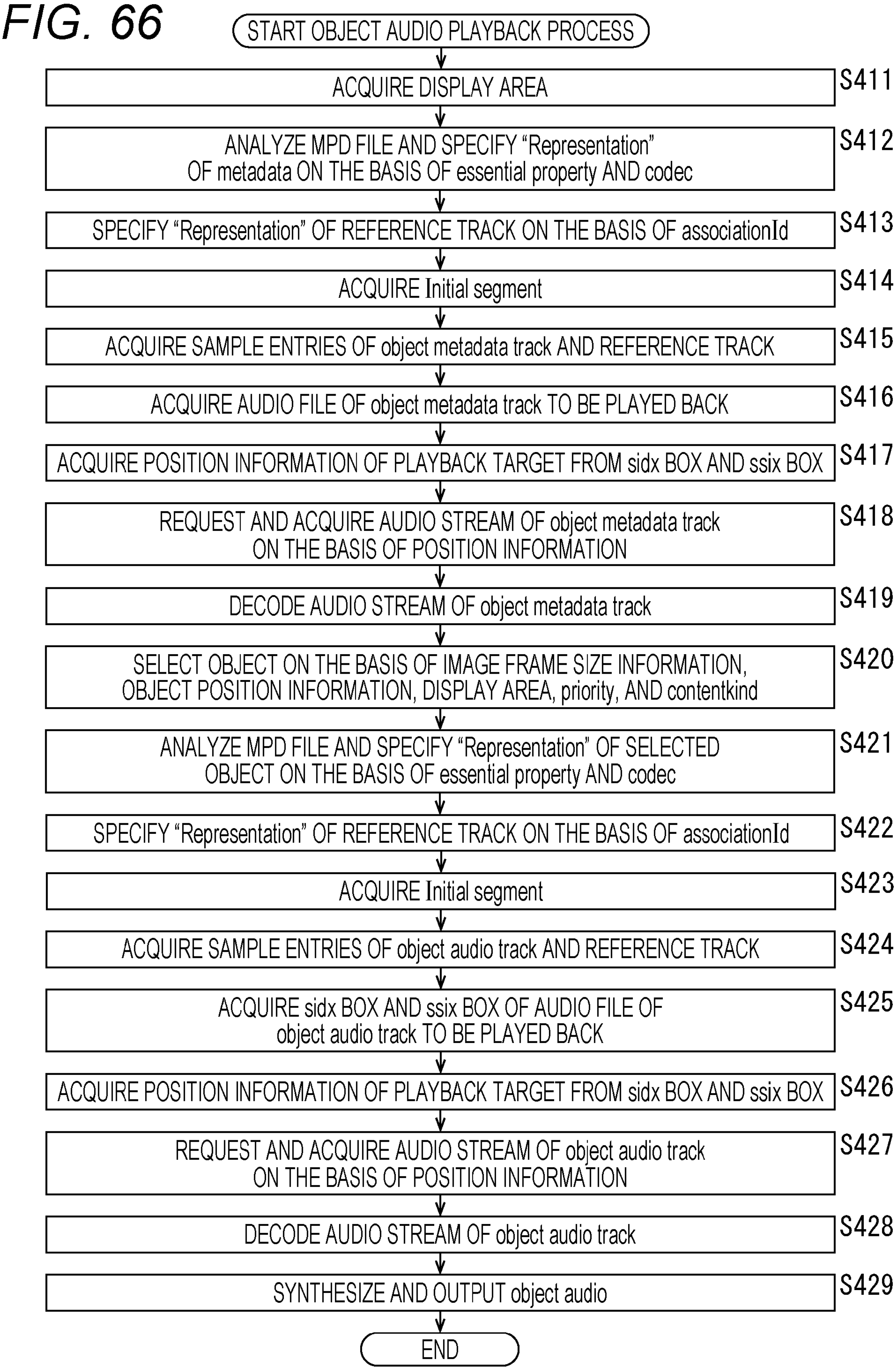
START OBJECT AUDIO PLAYBACK PROCESS
ACQUIRE DISPLAY AREA
S411
ANALYZE MPD FILE AND SPECIFY “Representation” OF metadata ON THE BASIS OF essential property AND codec
S412
SPECIFY “Representation” OF REFERENCE TRACK ON THE BASIS OF associationId
S413
ACQUIRE Initial segment
S414
ACQUIRE SAMPLE ENTRIES OF object metadata track AND REFERENCE TRACK
S415
ACQUIRE AUDIO FILE OF object metadata track TO BE PLAYED BACK
S416
ACQUIRE POSITION INFORMATION OF PLAYBACK TARGET FROM sidx BOX AND ssix BOX
S417
REQUEST AND ACQUIRE AUDIO STREAM OF object metadata track ON THE BASIS OF POSITION INFORMATION
S418
DECODE AUDIO STREAM OF object metadata track
S419
SELECT OBJECT ON THE BASIS OF IMAGE FRAME SIZE INFORMATION, OBJECT POSITION INFORMATION, DISPLAY AREA, priority, AND contentkind
S420
ANALYZE MPD FILE AND SPECIFY “Representation” OF SELECTED OBJECT ON THE BASIS OF essential property AND codec
S421
SPECIFY “Representation” OF REFERENCE TRACK ON THE BASIS OF associationId
S422
ACQUIRE Initial segment
S423
ACQUIRE SAMPLE ENTRIES OF object audio track AND REFERENCE TRACK
S424
ACQUIRE sidx BOX AND ssix BOX OF AUDIO FILE OF object audio track TO BE PLAYED BACK
S425
ACQUIRE POSITION INFORMATION OF PLAYBACK TARGET FROM sidx BOX AND ssix BOX
S426
REQUEST AND ACQUIRE AUDIO STREAM OF object audio track ON THE BASIS OF POSITION INFORMATION
S427
DECODE AUDIO STREAM OF object audio track
S428
SYNTHESIZE AND OUTPUT object audio
S429
END

FIG. 67

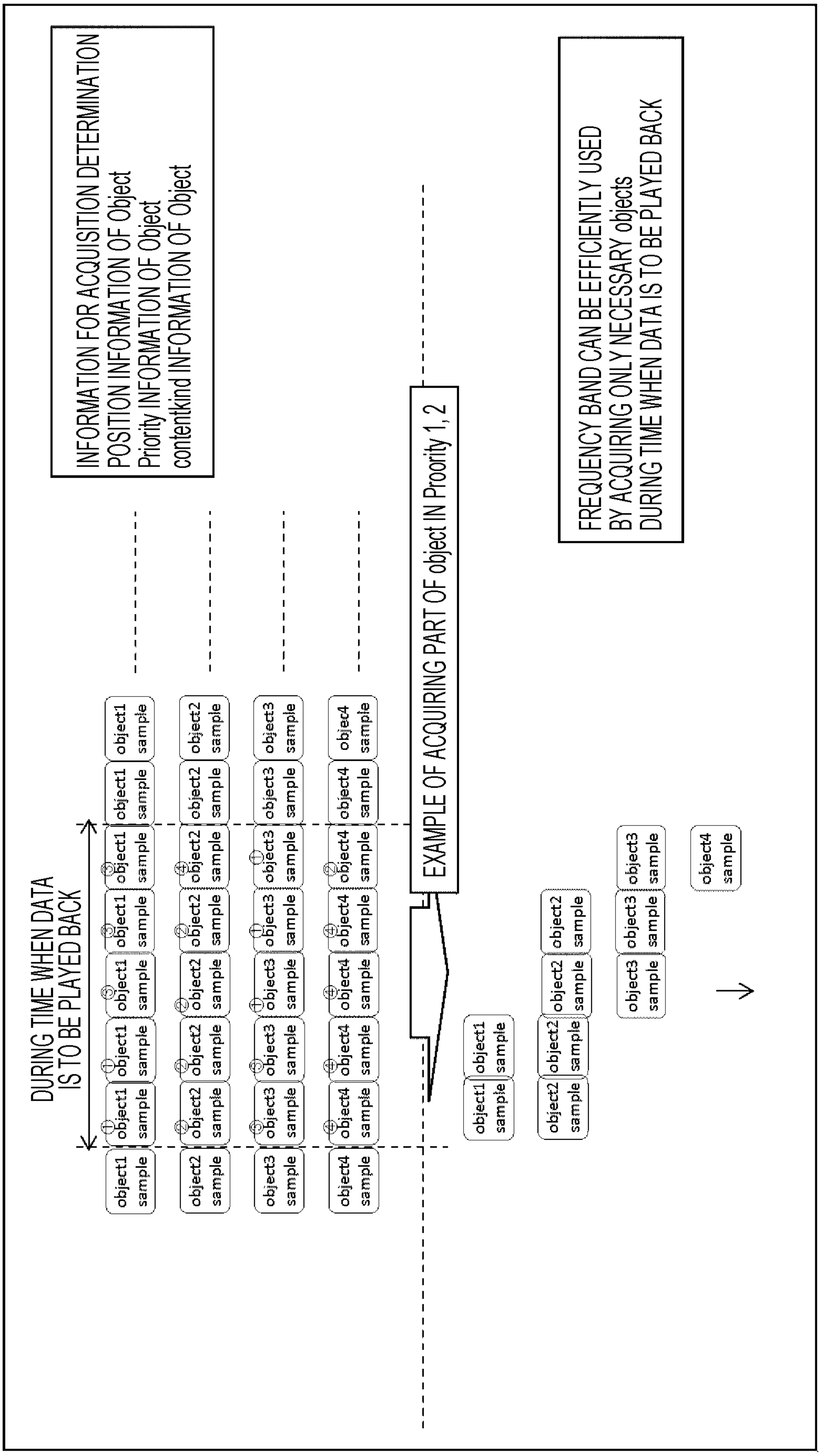
INFORMATION FOR ACQUISITION DETERMINATION
POSITION INFORMATION OF Object
Priority INFORMATION OF Object
contentkind INFORMATION OF Object
DURING TIME WHEN DATA IS TO BE PLAYED BACK
object1 sample
object2 sample
object3 sample
object4 sample
EXAMPLE OF ACQUIRING PART OF object IN Proority 1, 2
FREQUENCY BAND CAN BE EFFICIENTLY USED BY ACQUIRING ONLY NECESSARY objects DURING TIME WHEN DATA IS TO BE PLAYED BACK

FIG. 68

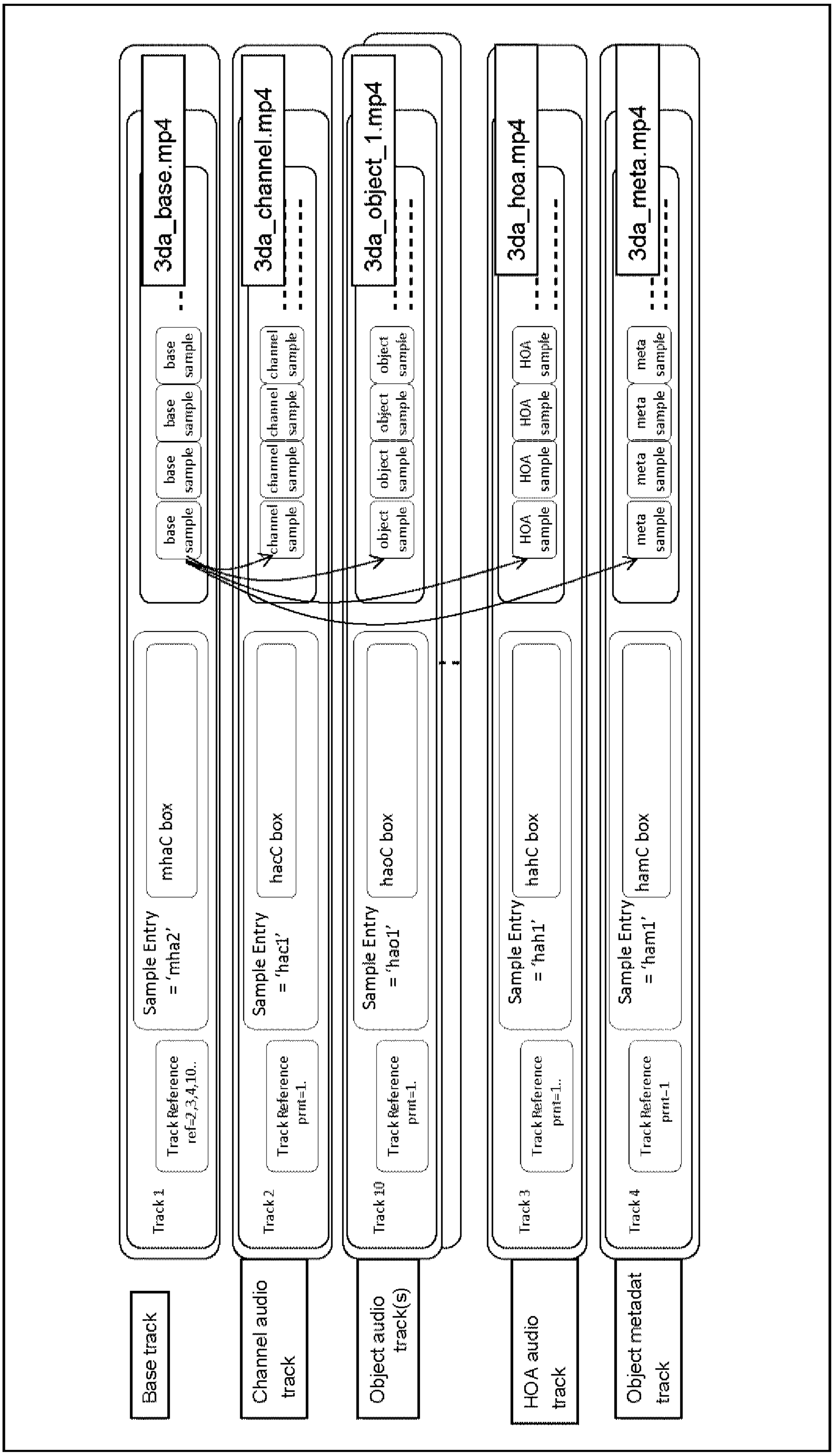
Base track
Track 1
Track Reference ref=2,3,4,10..
Sample Entry = 'mha2'
mhaC box
base sample
base sample
base sample
base sample
3da_base.mp4
Channel audio track
Track 2
Track Reference prnt=1.
Sample Entry = 'hac1'
hacC box
channel sample
channel sample
channel sample
channel sample
3da_channel.mp4
Object audio track(s)
Track 10
Track Reference prnt=1.
Sample Entry = 'hao1'
haoC box
object sample
object sample
object sample
object sample
3da_object_1.mp4
HOA audio track
Track 3
Track Reference prnt=1..
Sample Entry = 'hah1'
hahC box
HOA sample
HOA sample
HOA sample
HOA sample
3da_hoa.mp4
Object metadat track
Track 4
Track Reference prnt=1
Sample Entry = 'ham1'
hamC box
meta sample
meta sample
meta sample
meta sample
3da_meta.mp4

FIG. 69

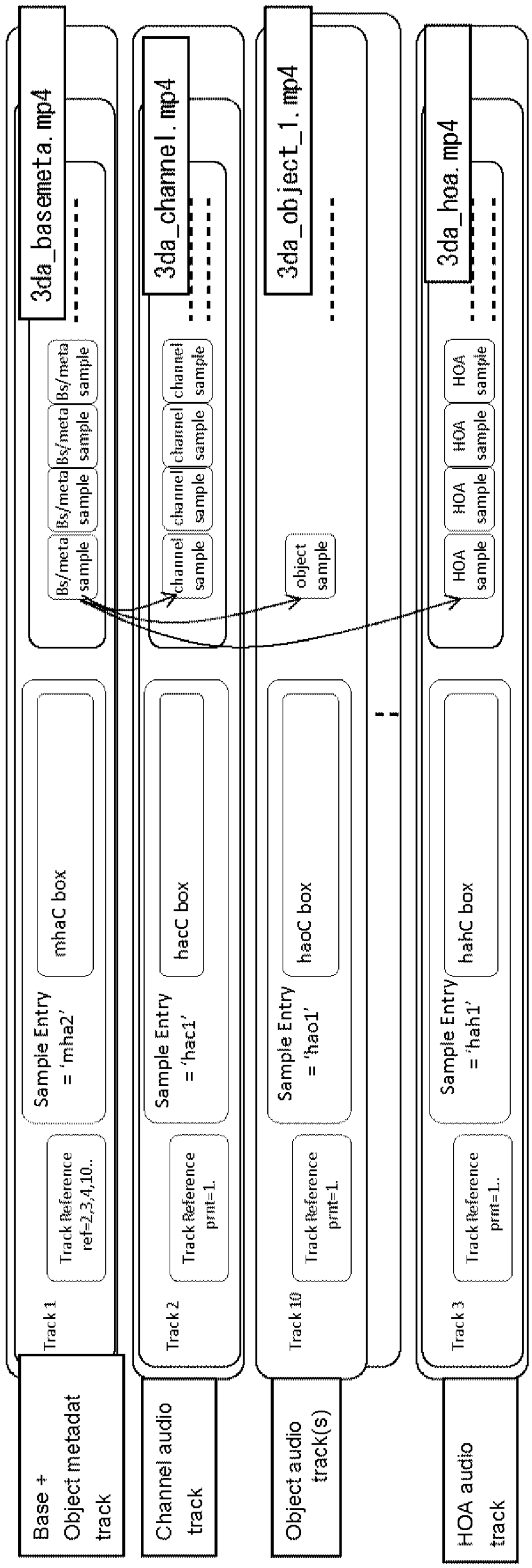
Base + Object metadat track
Channel audio track
Object audio track(s)
HOA audio track
Track 1
Track 2
Track 10
Track 3
Track Reference ref=2,3,4,10..
Track Reference prnt=1.
Track Reference prnt=1.
Track Reference prnt=1..
Sample Entry = 'mha2'
Sample Entry = 'hac1'
Sample Entry = 'hao1'
Sample Entry = 'hah1'
mhaC box
hacC box
haoC box
hahC box
Bs/meta sample
channel sample
object sample
HOA sample
3da_basemeta.mp4
3da_channel.mp4
3da_object_1.mp4
3da_hoa.mp4

FIG. 70

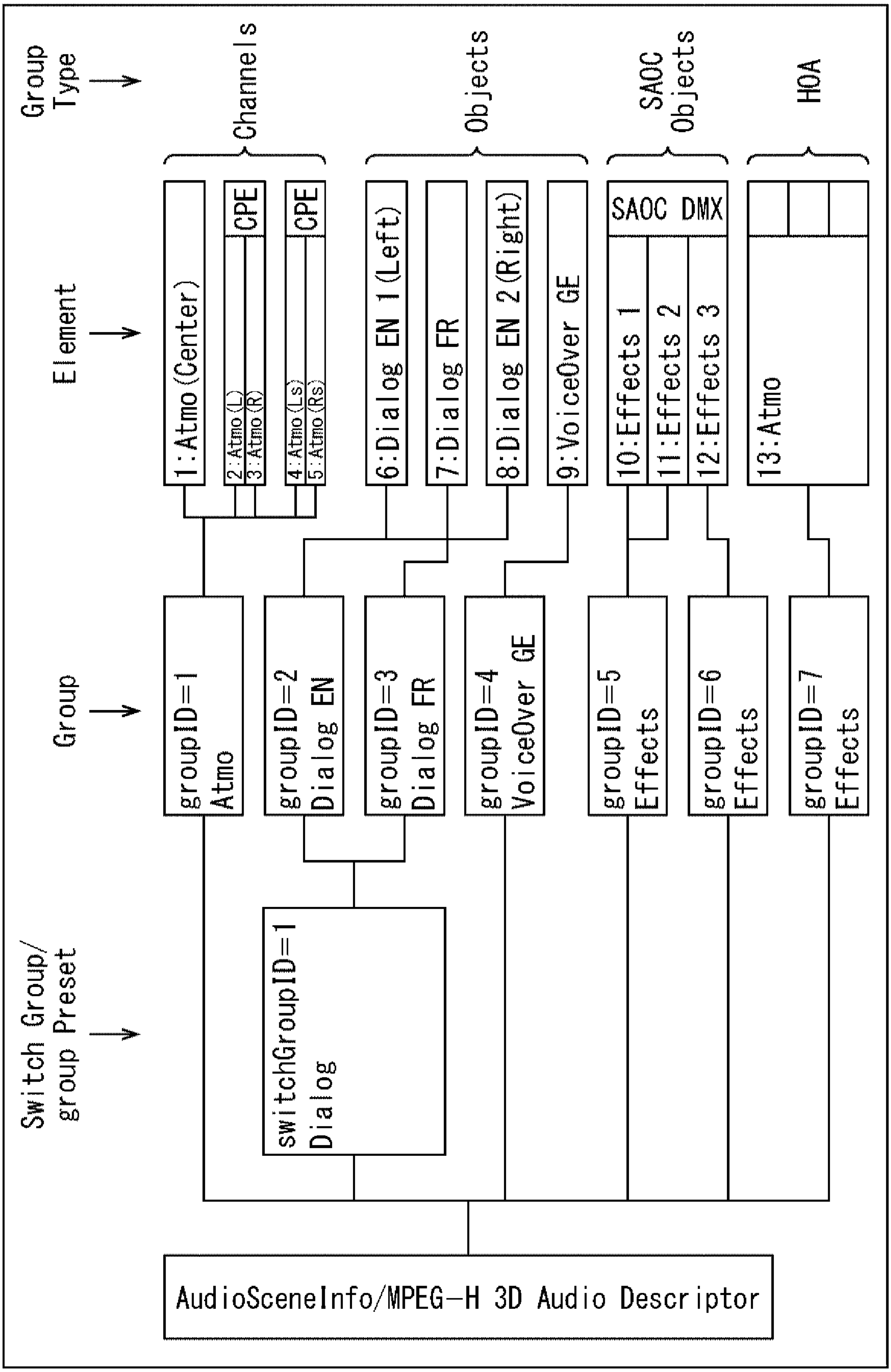
Group Type
Element
Group
Switch Group/ group Preset
Channels
Objects
SAOC Objects
HOA
CPE
CPE
SAOC DMX
1:Atmo(Center)
2:Atmo(L)
3:Atmo(R)
4:Atmo(Ls)
5:Atmo(Rs)
6:Dialog EN 1(Left)
7:Dialog FR
8:Dialog EN 2(Right)
9:VoiceOver GE
10:Effects 1
11:Effects 2
12:Effects 3
13:Atmo
groupID=1 Atmo
groupID=2 Dialog EN
groupID=3 Dialog FR
groupID=4 VoiceOver GE
groupID=5 Effects
groupID=6 Effects
groupID=7 Effects
switchGroupID=1 Dialog
AudioSceneInfo/MPEG-H 3D Audio Descriptor

FIG. 71

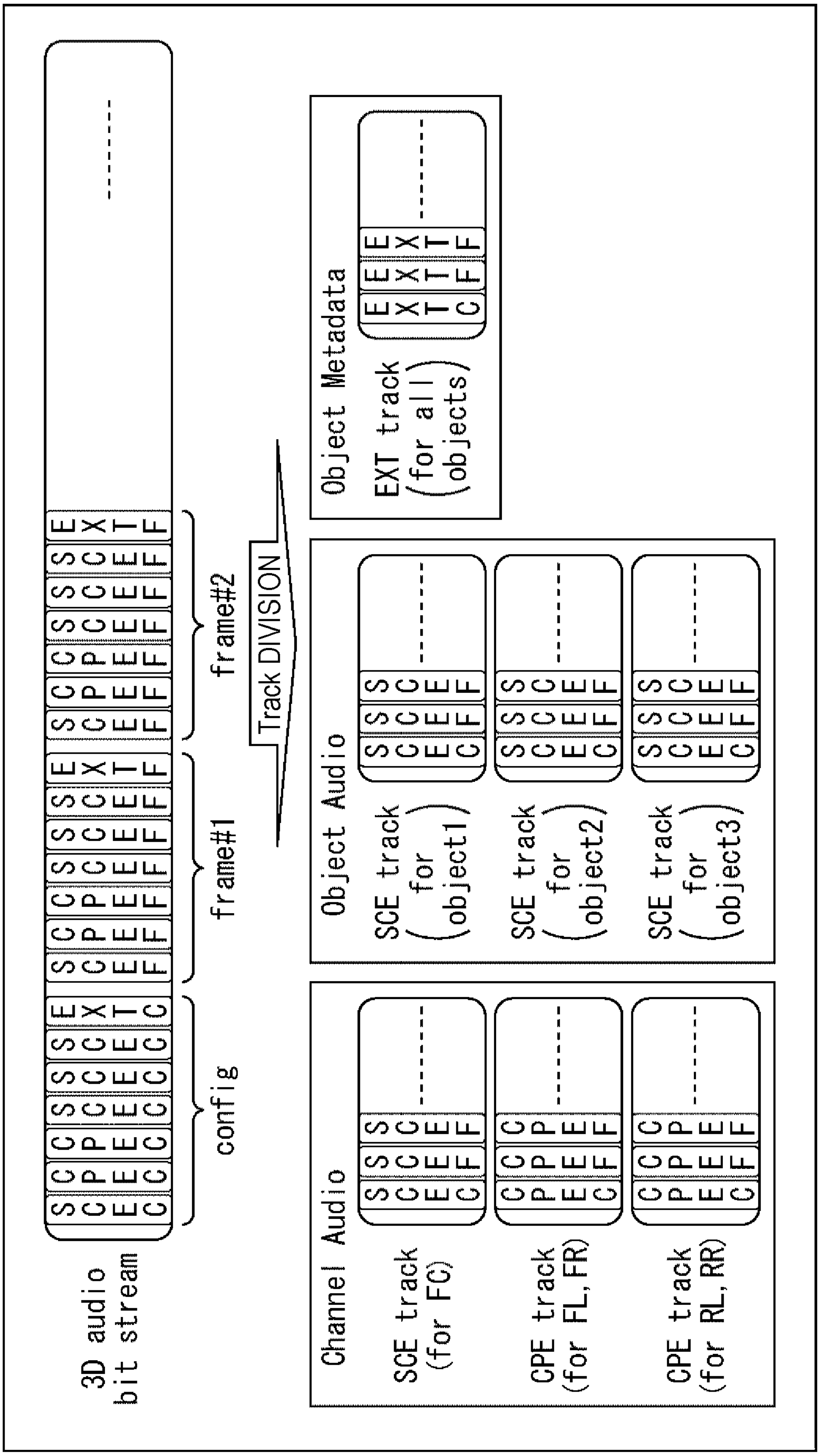
3D audio bit stream
SCEC CPEC CPEC SCEC SCEC SCEC EXTC
config
SCEF CPEF CPEF SCEF SCEF SCEF EXTF
frame#1
SCEF CPEF CPEF SCEF SCEF SCEF EXTF
frame#2
Track DIVISION
Channel Audio
SCE track (for FC)
SCEC SCEF SCEF
CPE track (for FL, FR)
CPEC CPEF CPEF
CPE track (for RL, RR)
CPEC CPEF CPEF
Object Audio
SCE track (for object1)
SCE track (for object2)
SCE track (for object3)
SCEC SCEF SCEF
Object Metadata
EXT track (for all objects)
EXTC EXTF EXTF

FIG. 72

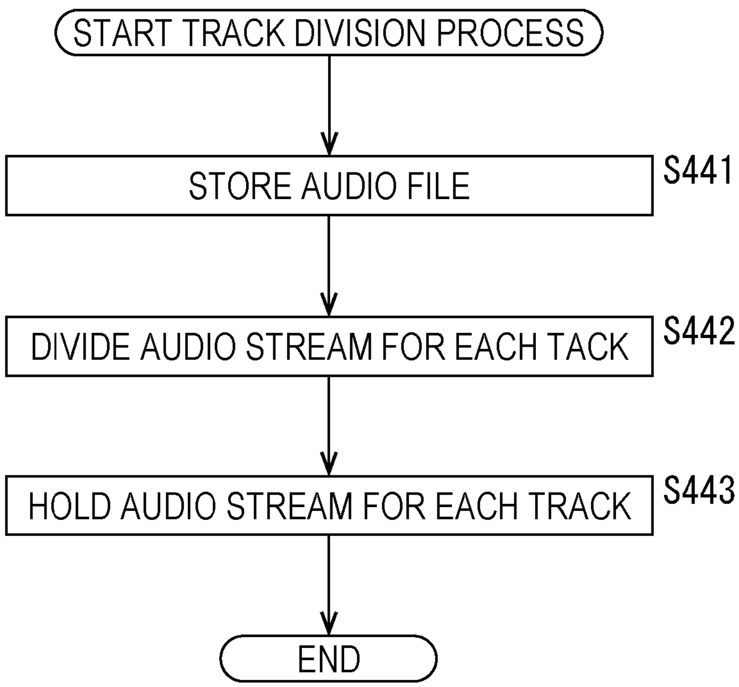
START TRACK DIVISION PROCESS
STORE AUDIO FILE
S441
DIVIDE AUDIO STREAM FOR EACH TACK
S442
HOLD AUDIO STREAM FOR EACH TRACK
S443
END

FIG. 73

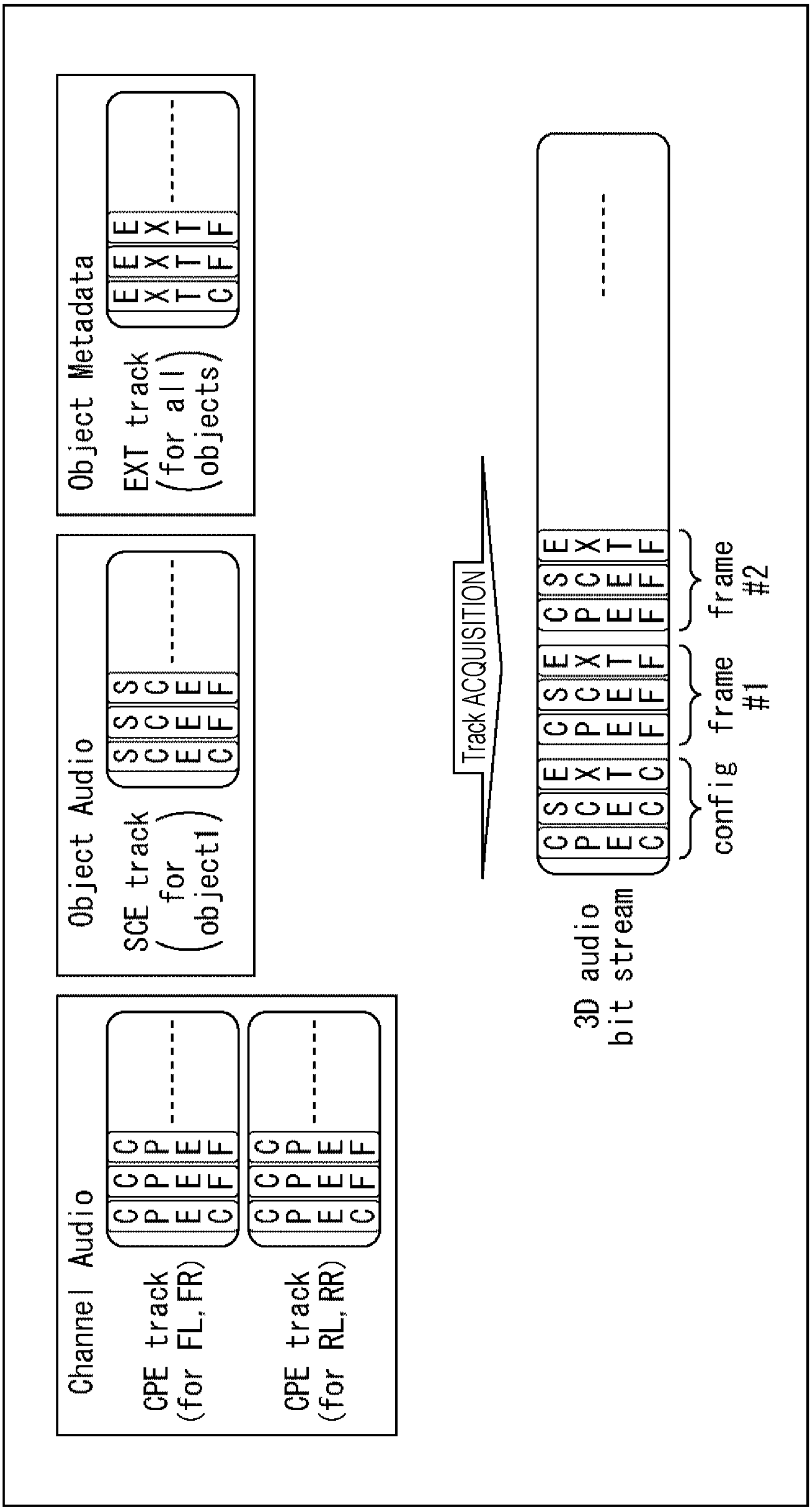
Channel Audio
CPE track (for FL, FR)
CPE track (for RL, RR)
CPEC
CPEF
Object Audio
SCE track (for object1)
SCEC
SCEF
Object Metadata
EXT track (for all objects)
EXTC
EXTF
Track ACQUISITION
3D audio bit stream
config
frame #1
frame #2

FIG. 74

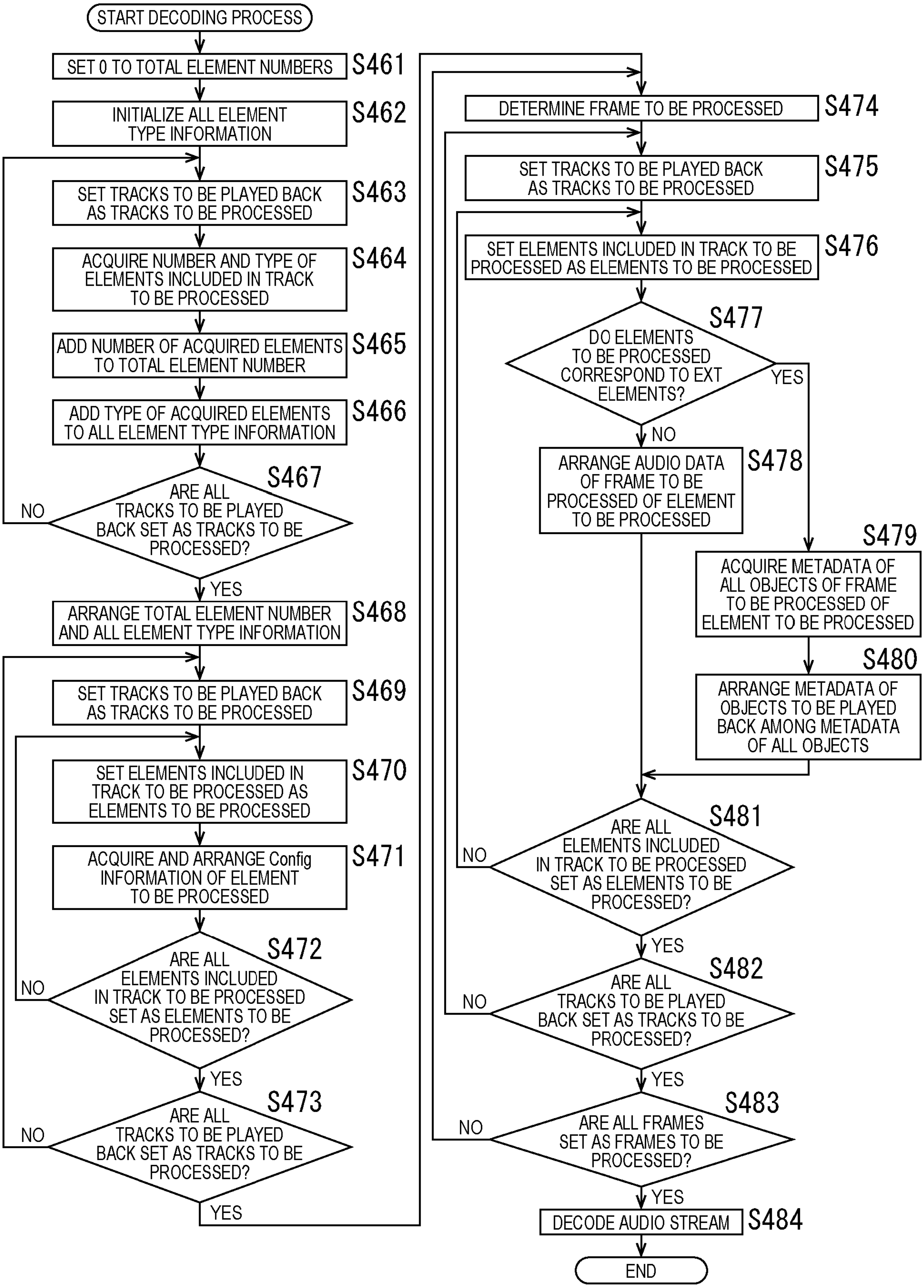
START DECODING PROCESS
SET 0 TO TOTAL ELEMENT NUMBERS
S461
INITIALIZE ALL ELEMENT TYPE INFORMATION
S462
SET TRACKS TO BE PLAYED BACK AS TRACKS TO BE PROCESSED
S463
ACQUIRE NUMBER AND TYPE OF ELEMENTS INCLUDED IN TRACK TO BE PROCESSED
S464
ADD NUMBER OF ACQUIRED ELEMENTS TO TOTAL ELEMENT NUMBER
S465
ADD TYPE OF ACQUIRED ELEMENTS TO ALL ELEMENT TYPE INFORMATION
S466
ARE ALL TRACKS TO BE PLAYED BACK SET AS TRACKS TO BE PROCESSED?
S467
NO
YES
ARRANGE TOTAL ELEMENT NUMBER AND ALL ELEMENT TYPE INFORMATION
S468
SET TRACKS TO BE PLAYED BACK AS TRACKS TO BE PROCESSED
S469
SET ELEMENTS INCLUDED IN TRACK TO BE PROCESSED AS ELEMENTS TO BE PROCESSED
S470
ACQUIRE AND ARRANGE Config INFORMATION OF ELEMENT TO BE PROCESSED
S471
ARE ALL ELEMENTS INCLUDED IN TRACK TO BE PROCESSED SET AS ELEMENTS TO BE PROCESSED?
S472
NO
YES
ARE ALL TRACKS TO BE PLAYED BACK SET AS TRACKS TO BE PROCESSED?
S473
NO
YES
DETERMINE FRAME TO BE PROCESSED
S474
SET TRACKS TO BE PLAYED BACK AS TRACKS TO BE PROCESSED
S475
SET ELEMENTS INCLUDED IN TRACK TO BE PROCESSED AS ELEMENTS TO BE PROCESSED
S476
DO ELEMENTS TO BE PROCESSED CORRESPOND TO EXT ELEMENTS?
S477
YES
NO
ARRANGE AUDIO DATA OF FRAME TO BE PROCESSED OF ELEMENT TO BE PROCESSED
S478
ACQUIRE METADATA OF ALL OBJECTS OF FRAME TO BE PROCESSED OF ELEMENT TO BE PROCESSED
S479
ARRANGE METADATA OF OBJECTS TO BE PLAYED BACK AMONG METADATA OF ALL OBJECTS
S480
ARE ALL ELEMENTS INCLUDED IN TRACK TO BE PROCESSED SET AS ELEMENTS TO BE PROCESSED?
S481
NO
YES
ARE ALL TRACKS TO BE PLAYED BACK SET AS TRACKS TO BE PROCESSED?
S482
NO
YES
ARE ALL FRAMES SET AS FRAMES TO BE PROCESSED?
S483
NO
YES
DECODE AUDIO STREAM
S484
END

FIG. 75

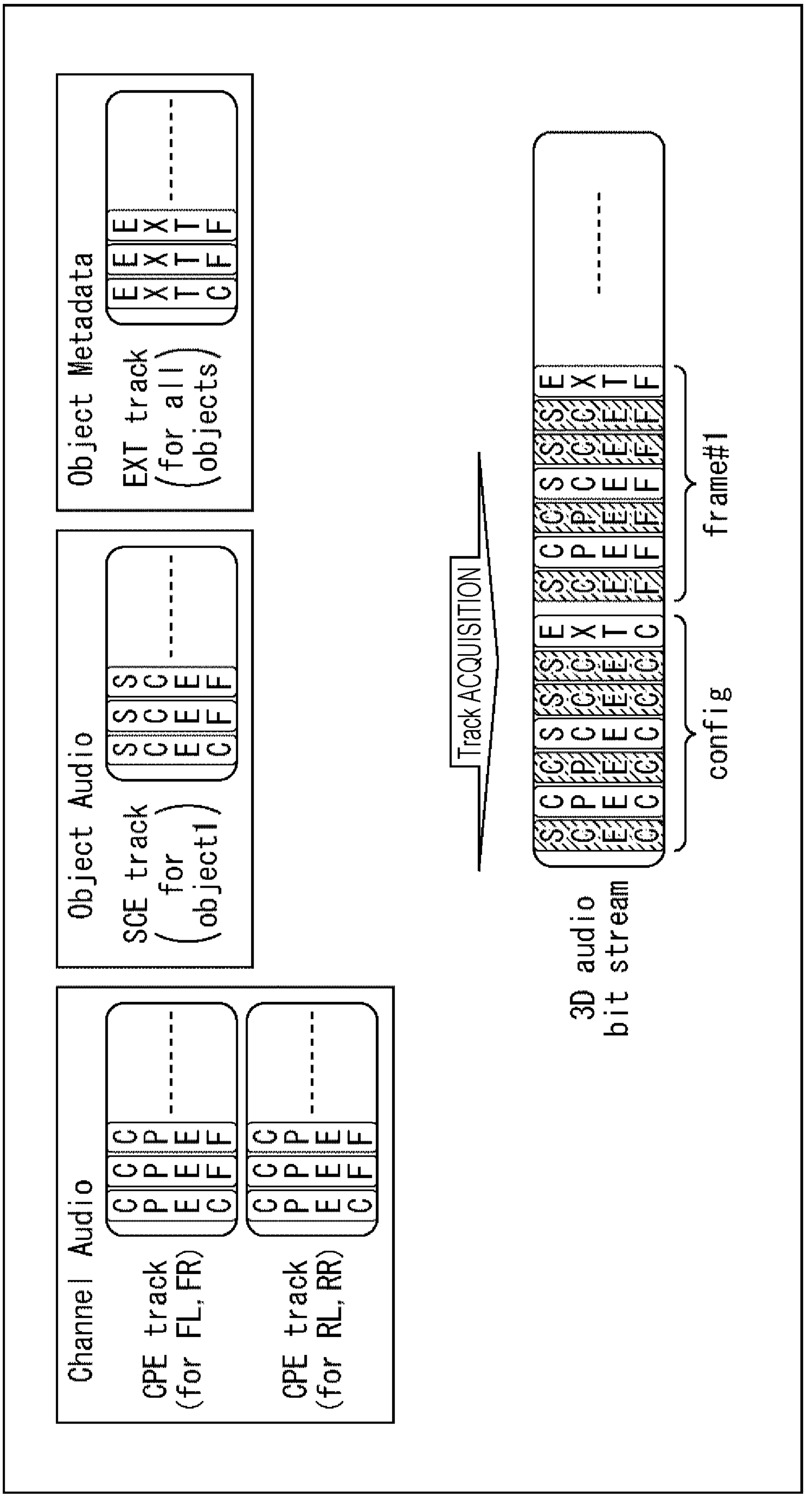
Channel Audio
CPE track (for FL, FR)
CPE track (for RL, RR)
Object Audio
SCE track (for object1)
Object Metadata
EXT track (for all objects)
Track ACQUISITION
3D audio bit stream
config
frame#1

FIG. 76

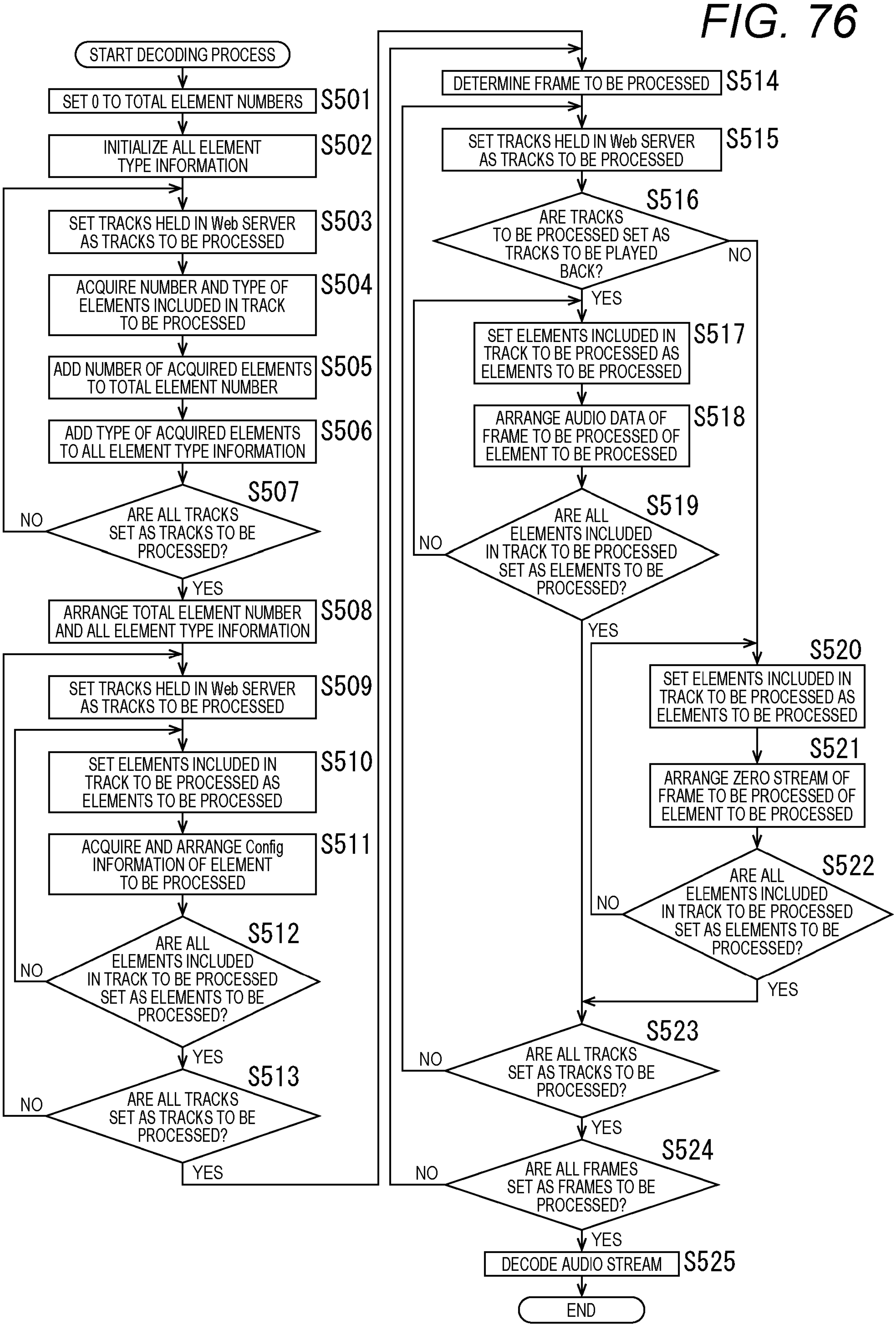
START DECODING PROCESS
SET 0 TO TOTAL ELEMENT NUMBERS
S501
INITIALIZE ALL ELEMENT TYPE INFORMATION
S502
SET TRACKS HELD IN Web SERVER AS TRACKS TO BE PROCESSED
S503
ACQUIRE NUMBER AND TYPE OF ELEMENTS INCLUDED IN TRACK TO BE PROCESSED
S504
ADD NUMBER OF ACQUIRED ELEMENTS TO TOTAL ELEMENT NUMBER
S505
ADD TYPE OF ACQUIRED ELEMENTS TO ALL ELEMENT TYPE INFORMATION
S506
ARE ALL TRACKS SET AS TRACKS TO BE PROCESSED?
S507
NO
YES
ARRANGE TOTAL ELEMENT NUMBER AND ALL ELEMENT TYPE INFORMATION
S508
SET TRACKS HELD IN Web SERVER AS TRACKS TO BE PROCESSED
S509
SET ELEMENTS INCLUDED IN TRACK TO BE PROCESSED AS ELEMENTS TO BE PROCESSED
S510
ACQUIRE AND ARRANGE Config INFORMATION OF ELEMENT TO BE PROCESSED
S511
ARE ALL ELEMENTS INCLUDED IN TRACK TO BE PROCESSED SET AS ELEMENTS TO BE PROCESSED?
S512
NO
YES
ARE ALL TRACKS SET AS TRACKS TO BE PROCESSED?
S513
NO
YES
DETERMINE FRAME TO BE PROCESSED
S514
SET TRACKS HELD IN Web SERVER AS TRACKS TO BE PROCESSED
S515
ARE TRACKS TO BE PROCESSED SET AS TRACKS TO BE PLAYED BACK?
S516
NO
YES
SET ELEMENTS INCLUDED IN TRACK TO BE PROCESSED AS ELEMENTS TO BE PROCESSED
S517
ARRANGE AUDIO DATA OF FRAME TO BE PROCESSED OF ELEMENT TO BE PROCESSED
S518
ARE ALL ELEMENTS INCLUDED IN TRACK TO BE PROCESSED SET AS ELEMENTS TO BE PROCESSED?
S519
NO
YES
SET ELEMENTS INCLUDED IN TRACK TO BE PROCESSED AS ELEMENTS TO BE PROCESSED
S520
ARRANGE ZERO STREAM OF FRAME TO BE PROCESSED OF ELEMENT TO BE PROCESSED
S521
ARE ALL ELEMENTS INCLUDED IN TRACK TO BE PROCESSED SET AS ELEMENTS TO BE PROCESSED?
S522
NO
YES
ARE ALL TRACKS SET AS TRACKS TO BE PROCESSED?
S523
NO
YES
ARE ALL FRAMES SET AS FRAMES TO BE PROCESSED?
S524
NO
YES
DECODE AUDIO STREAM
S525
END

FIG. 77

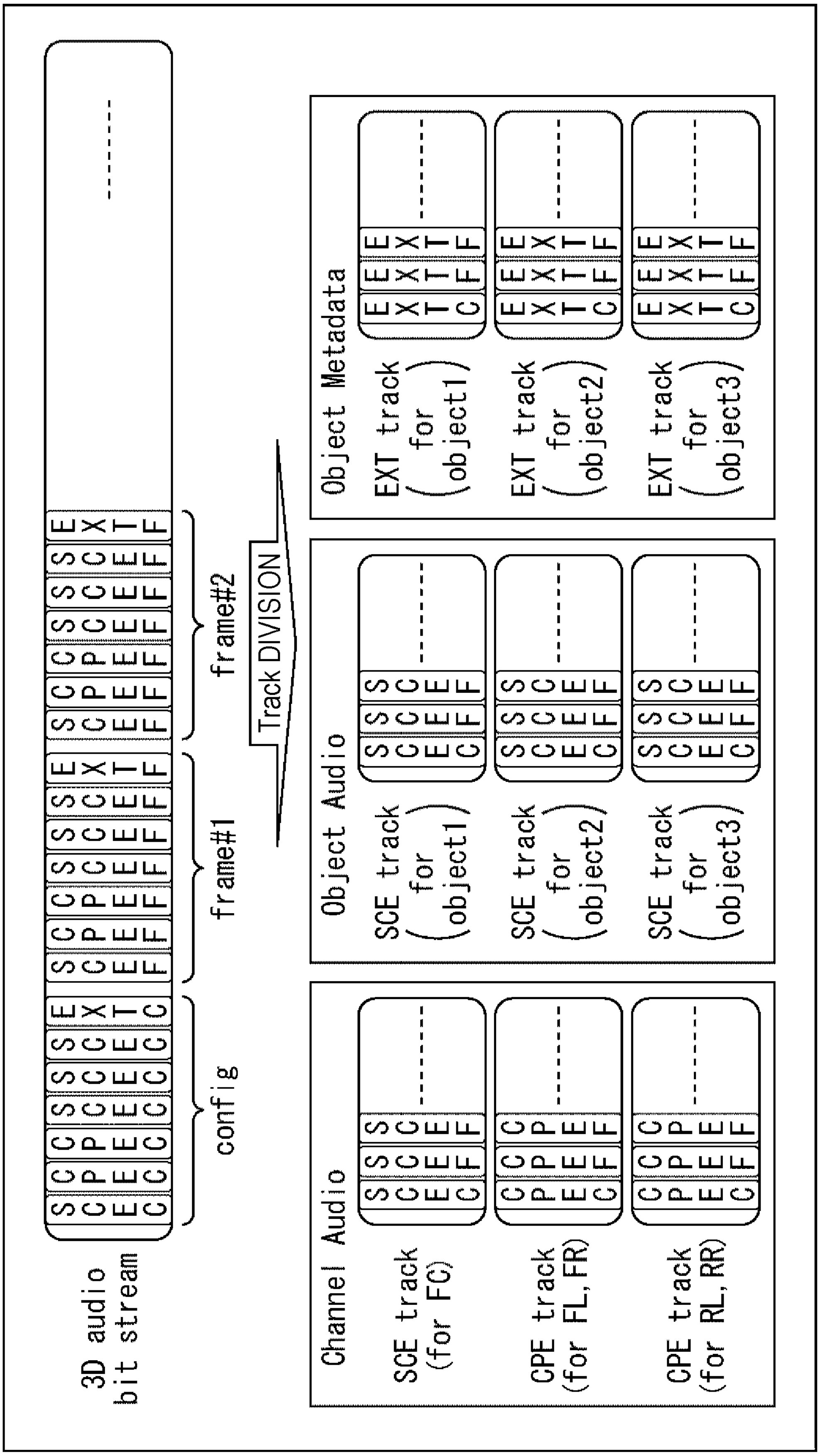
3D audio bit stream
SCEC
CPEC
CPEC
SCEC
SCEC
EXTC
config
SCEF
CPEF
CPEF
SCEF
SCEF
EXTF
frame#1
SCEF
CPEF
CPEF
SCEF
SCEF
EXTF
frame#2
Track DIVISION
Channel Audio
SCE track (for FC)
SCEC
SCEF
SCEF
CPE track (for FL, FR)
CPEC
CPEF
CPEF
CPE track (for RL, RR)
CPEC
CPEF
CPEF
Object Audio
SCE track (for object1)
SCE track (for object2)
SCE track (for object3)
SCEC
SCEF
SCEF
Object Metadata
EXT track (for object1)
EXT track (for object2)
EXT track (for object3)
EXTC
EXTF
EXTF

FIG. 78

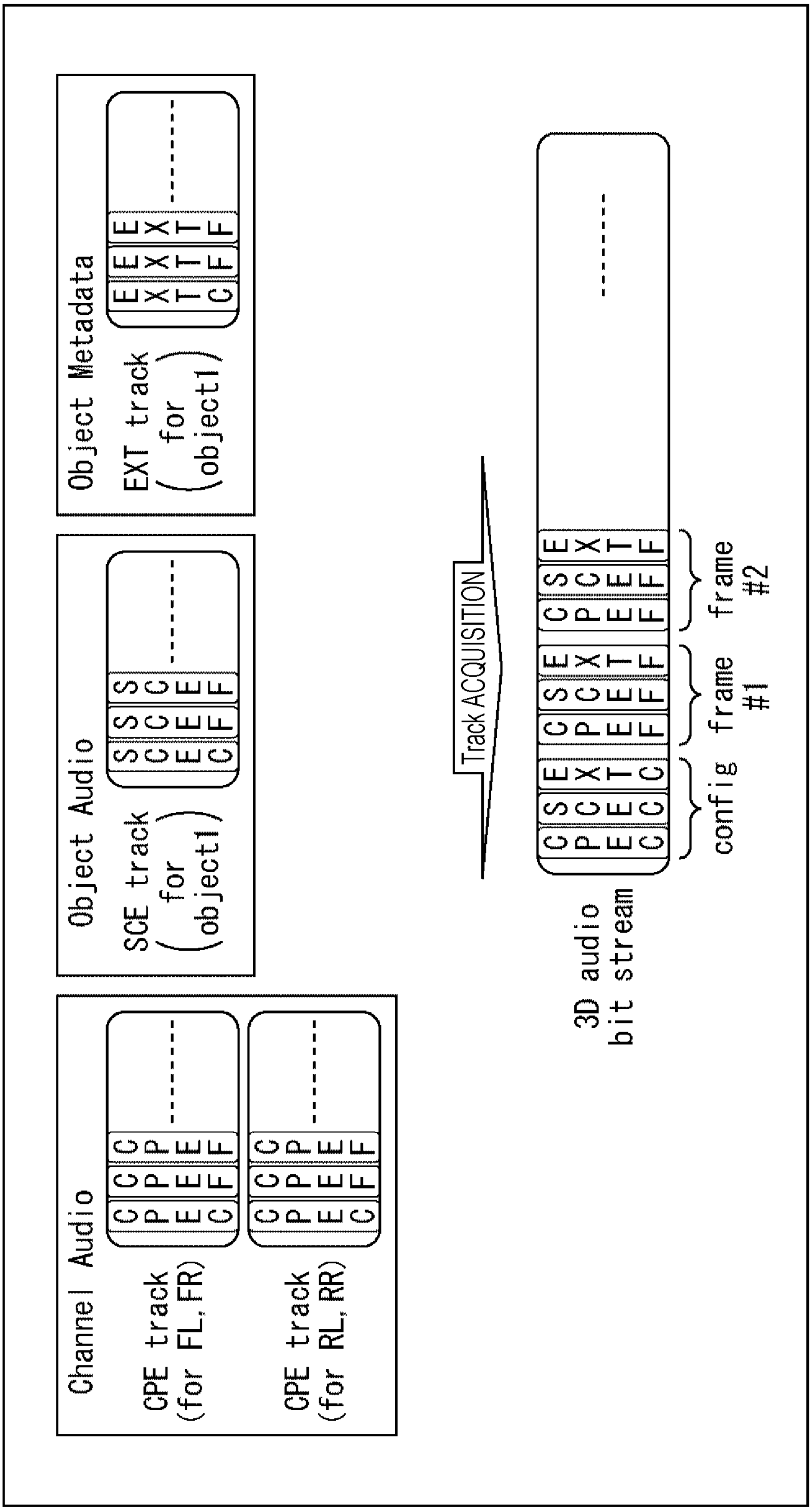
Channel Audio
CPE track (for FL, FR)
CPE track (for RL, RR)
CPEC
CPEF
Object Audio
SCE track (for object1)
SCEC
SCEF
Object Metadata
EXT track (for object1)
EXTC
EXTF
Track ACQUISITION
3D audio bit stream
config
frame #1
frame #2

FIG. 79

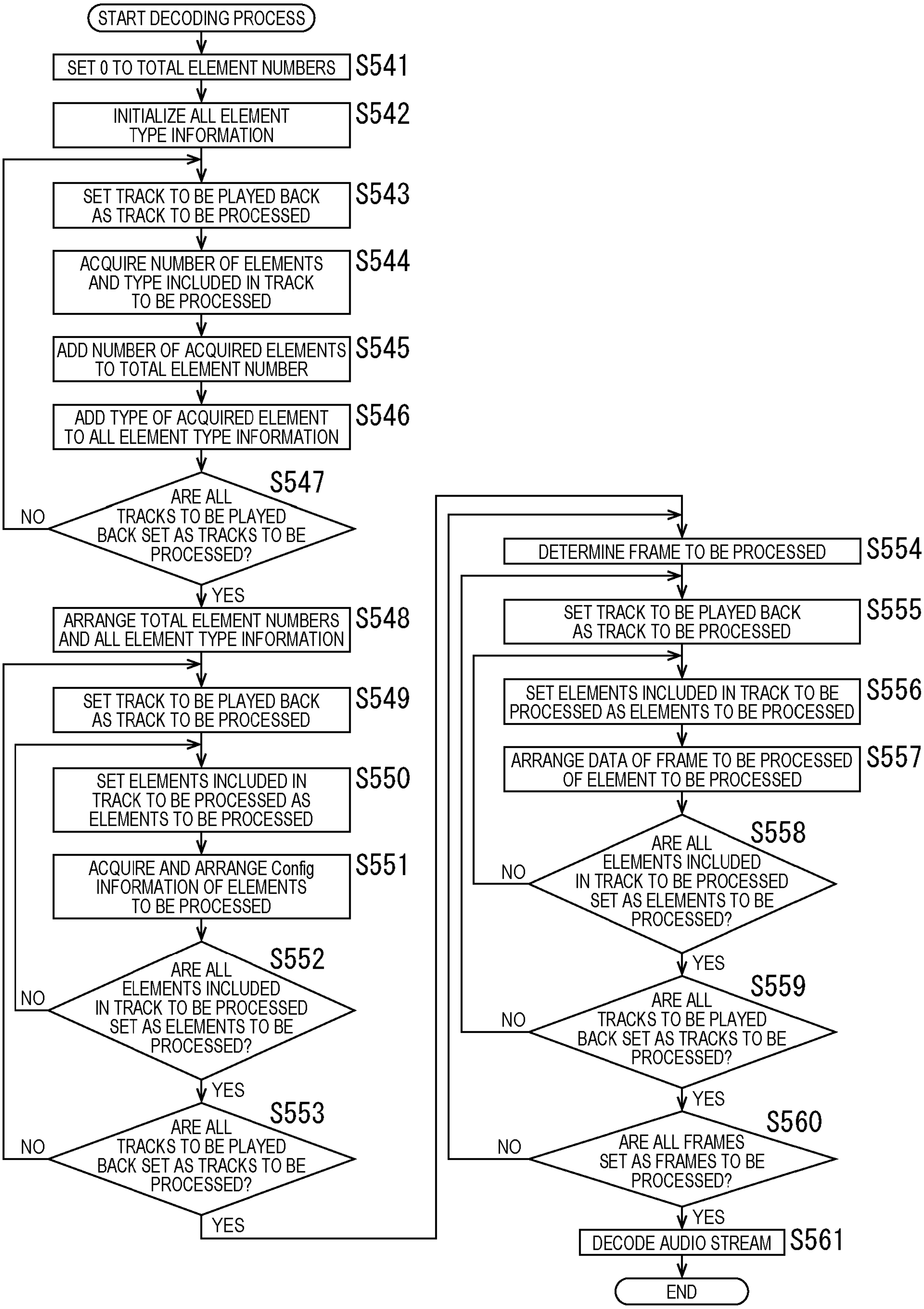
START DECODING PROCESS
SET 0 TO TOTAL ELEMENT NUMBERS
S541
INITIALIZE ALL ELEMENT TYPE INFORMATION
S542
SET TRACK TO BE PLAYED BACK AS TRACK TO BE PROCESSED
S543
ACQUIRE NUMBER OF ELEMENTS AND TYPE INCLUDED IN TRACK TO BE PROCESSED
S544
ADD NUMBER OF ACQUIRED ELEMENTS TO TOTAL ELEMENT NUMBER
S545
ADD TYPE OF ACQUIRED ELEMENT TO ALL ELEMENT TYPE INFORMATION
S546
ARE ALL TRACKS TO BE PLAYED BACK SET AS TRACKS TO BE PROCESSED?
S547
NO
YES
ARRANGE TOTAL ELEMENT NUMBERS AND ALL ELEMENT TYPE INFORMATION
S548
SET TRACK TO BE PLAYED BACK AS TRACK TO BE PROCESSED
S549
SET ELEMENTS INCLUDED IN TRACK TO BE PROCESSED AS ELEMENTS TO BE PROCESSED
S550
ACQUIRE AND ARRANGE Config INFORMATION OF ELEMENTS TO BE PROCESSED
S551
ARE ALL ELEMENTS INCLUDED IN TRACK TO BE PROCESSED SET AS ELEMENTS TO BE PROCESSED?
S552
NO
YES
ARE ALL TRACKS TO BE PLAYED BACK SET AS TRACKS TO BE PROCESSED?
S553
NO
YES
DETERMINE FRAME TO BE PROCESSED
S554
SET TRACK TO BE PLAYED BACK AS TRACK TO BE PROCESSED
S555
SET ELEMENTS INCLUDED IN TRACK TO BE PROCESSED AS ELEMENTS TO BE PROCESSED
S556
ARRANGE DATA OF FRAME TO BE PROCESSED OF ELEMENT TO BE PROCESSED
S557
ARE ALL ELEMENTS INCLUDED IN TRACK TO BE PROCESSED SET AS ELEMENTS TO BE PROCESSED?
S558
NO
YES
ARE ALL TRACKS TO BE PLAYED BACK SET AS TRACKS TO BE PROCESSED?
S559
NO
YES
ARE ALL FRAMES SET AS FRAMES TO BE PROCESSED?
S560
NO
YES
DECODE AUDIO STREAM
S561
END

# FIG. 80

| Syntax | No. of bits | Mnemonic |
|---|---|---|
| mpegh3daDecoderConfig() | | |
| { | | |
| numElements = escapedValue(4,8,16) + 1; | | |
| elementLengthPresent | 1 | |
| | | |
| for (elemIdx=0; elemIdx<numElements; ++elemIdx) { | | |
| usacElementType[elemIdx] | 2 | uimsbf |
| switch (usacElementType[elemIdx]) { | | |
| case ID_USAC_SCE: | | |
| mpegh3daSingleChannelElementConfig(sbrRatioIndex); | | |
| break; | | |
| case ID_USAC_CPE: | | |
| mpegh3daChannelPairElementConfig(sbrRatioIndex); | | |
| break; | | |
| case ID_USAC_LFE: | | |
| mpegh3daLfeElementConfig(); | | |
| break; | | |
| case ID_USAC_EXT: | | |
| mpegh3daExtElementConfig(); | | |
| break; | | |
| } | | |
| } | | |
| NOTE: mpegh3daSingleChannelElementConfig(), mpegh3daChannelPairElementConfig(), mpegh3daLfeElementConfig() and mpegh3daExtElementConfig() signaled at position elemIdx refer to the corresponding elements in mpegh3daFrame() at the respective position elemIdx. | | |

# FIG. 81

| Syntax | No. of bits | Mnemonic |
|---|---|---|
| mpegh3daExtElementConfig() | | |
| { | | |
|     usacExtElementType = escapedValue(4, 8, 16); | | |
|     usacExtElementConfigLength = escapedValue(4, 8, 16); | | |
| | | |
|     if (usacExtElementDefaultLengthPresent) { | 1 | uimsbf |
|         usacExtElementDefaultLength = escapedValue(8, 16, 0) + 1; | | |
|     } else { | | |
|         usacExtElementDefaultLength = 0; | | |
|     } | | |
| | | |
|     usacExtElementPayloadFrag; | 1 | uimsbf |
| | | |
|     switch (usacExtElementType) { | | |
|     case ID_EXT_ELE_FILL: | | |
|         break; | | |
|     case ID_EXT_ELE_MPEGS: | | |
|         SpatialSpecificConfig(); | | |
|         break; | | |
|     case ID_EXT_ELE_SAOC: | | |
|         SAOCSpecificConfig(); | | |
|         break; | | |
|     case ID_EXT_ELE_SAOC_3D: | | |
|         SAOC3DSpecificConfig(); | | |
|         break; | | |
|     case ID_EXT_ELE_AUDIOPREROLL: | | |
|         break; | | |
|     case ID_EXT_ELE_UNI_DRC: | | |
|         mpegh3daUniDrcConfig(); | | |
|         break; | | |
|     case ID_EXT_ELE_OBJ_METADATA: | | |
|         ObjectMetadataConfig(); | | |
|         break; | | |
|     case ID_EXT_ELE_HOA: | | |
|         HOAConfig(); | | |
|         break; | | |
|     **case ID_EXT_ELE_EXTRACTOR:** | | |
|         **ExtractorConfig();** | | |
|         **break;** | | |
|     default: | NOTE | |
|         while (usacExtElementConfigLength--) { | | |
|             tmp; | 8 | uimsbf |
|         } | | |
|         break; | | |
|     } | | |
| } | | |

FIG. 82

| Syntax | No. of bits | Mnemonic |
|---|---|---|
| ExtractorConfig() | | |
| { | | |
|   usacElementType Extractor ; | 2 | uimsbf |
|   switch (usacElementType[elemIdx]) { | | |
|     case ID_USAC_SCE: | | |
|       break; | | |
|     case ID_USAC_CPE: | | |
|       break; | | |
|     case ID_USAC_LFE: | | |
|       break; | | |
|     case ID_USAC_EXT: | | |
|       usacExtElementTypeExtractor = escapedValue(4, 8, 16); | | |
|       break; | | |
|   } | | |
|   configLength; | 16 | |
|   configOffset; | 64 | |
| } | | |

FIG. 83

| usacExtElementType | The concatenated usacExtElementSegmentData represents: |
|---|---|
| ID_EXT_ELE_FIL | Series of fill_byte |
| ID_EXT_ELE_MPEGS | SpatialFrame() |
| ID_EXT_ELE_SAOC | SaocFrame() |
| ID_EXT_ELE_AUDIOPREROLL | AudioPreRoll() |
| ID_EXT_ELE_UNI_DRC | uniDrcGain() as defined in ISO/IEC 23003-4 |
| ID_EXT_ELE_OBJ_METADATA | object_metadata() |
| ID_EXT_ELE_SAOC_3D | Saoc3DFrame() |
| ID_EXT_ELE_HOA | HOAFrame() |
| **ID_EXT_ELE_EXTRACTOR** | **ExtractorMetadata()** |
| unknown | unknown data. The data block shall be discarded. |

*FIG. 84*

| Syntax | No. of bits | Mnemonic |
|---|---|---|
| ExtractorMetadata() | | |
| { | | |
| **elementLength;** | **16** | **uimsbf** |
| **elementOffset;** | **64** | **uimsbf** |
| } | | |

*FIG. 85*

| Syntax | No. of bits | Mnemonic |
|---|---|---|
| mpegh3daDecoderConfig() | | |
| { | | |
| numElements = escapedValue(4,8,16) + 1; | | |
| elementLengthPresent | 1 | |
| **flagExtractor** | **1** | **uimsbf** |
| for (elemIdx=0; elemIdx<numElements; ++elemIdx) { | | |
| usacElementType[elemIdx] | 2 | uimsbf |
| switch (usacElementType[elemIdx]) { | | |
| case ID_USAC_SCE: | | |
| **if (!flagExtractor) {** | | |
| mpegh3daSingleChannelElementConfig(sbrRatioIndex); | | |
| **}** | | |
| break; | | |
| case ID_USAC_CPE: | | |
| **if (!flagExtractor) {** | | |
| mpegh3daChannelPairElementConfig(sbrRatioIndex); | | |
| **}** | | |
| break; | | |
| case ID_USAC_LFE: | | |
| **if (!flagExtractor) {** | | |
| mpegh3daLfeElementConfig(); | | |
| **}** | | |
| break; | | |
| case ID_USAC_EXT: | | |
| **if (flagExtractor) {** | | |
| **usacExtElementType = escapedValue(4, 8, 16);** | | |
| **} else {** | | |
| mpegh3daExtElementConfig(); | | |
| **}** | | |
| break; | | |
| } | | |
| config length | | |
| config offset | | |
| } | | |
| } | | |

# *FIG. 86*

| Syntax | No. of bits | Mnemonic |
|---|---|---|
| mpegh3daFrame() | | |
| { | | |
|     usacIndependencyFlag; | 1 | uimsbf |
| | | |
|     for (elemIdx=0; elemIdx<numElements; ++elemIdx) { | | |
|         if ( (usacElementType[elemIdx] != ID_USAC_EXT) && | | |
|             (elementLengthPresent == 1) ) { | | |
|             elementLength | 16 | uimsbf |
|         } | | |
|         switch (usacElementType[elemIdx]) { | | |
|         case ID_USAC_SCE: | | |
|             **if (flagExtractor) {** | | |
|                 **element Offset** | **64** | **uimsbf** |
|             **} else {** | | |
|             mpegh3daSingleChannelElement(usacIndependencyFlag); | elementLength, NOTE 1 | |
|             **}** | | |
|             break; | | |
|         case ID_USAC_CPE: | | |
|             **if (flagExtractor) {** | | |
|                 **element Offset** | **64** | **uimsbf** |
|             **} else {** | | |
|             mpegh3daChannelPairElement(usacIndependencyFlag); | elementLength, NOTE 1 | |
|             **}** | | |
|             break; | | |
|         case ID_USAC_LFE: | | |
|             **if (flagExtractor) {** | | |
|                 **element Offset** | **64** | **uimsbf** |
|             **} else {** | | |
|             mpegh3daLfeElement(usacIndependencyFlag); | elementLength, NOTE 1 | |
|             **}** | | |
|             break; | | |
|         case ID_USAC_EXT: | | |
|             **if (flagExtractor) {** | | |
|                 **element Length** | **16** | **uimsbf** |
|                 **element Offset** | **64** | **uimsbf** |
|             **} else {** | | |
|             mpegh3daExtElement(usacIndependencyFlag); | | |
|             **}** | | |
|             break; | | |
|     } | | |
| } | | |
| NOTE 1: If present, elementLength represents the length of the corresponding element it refers to in number of bits. | | |

FIG. 87

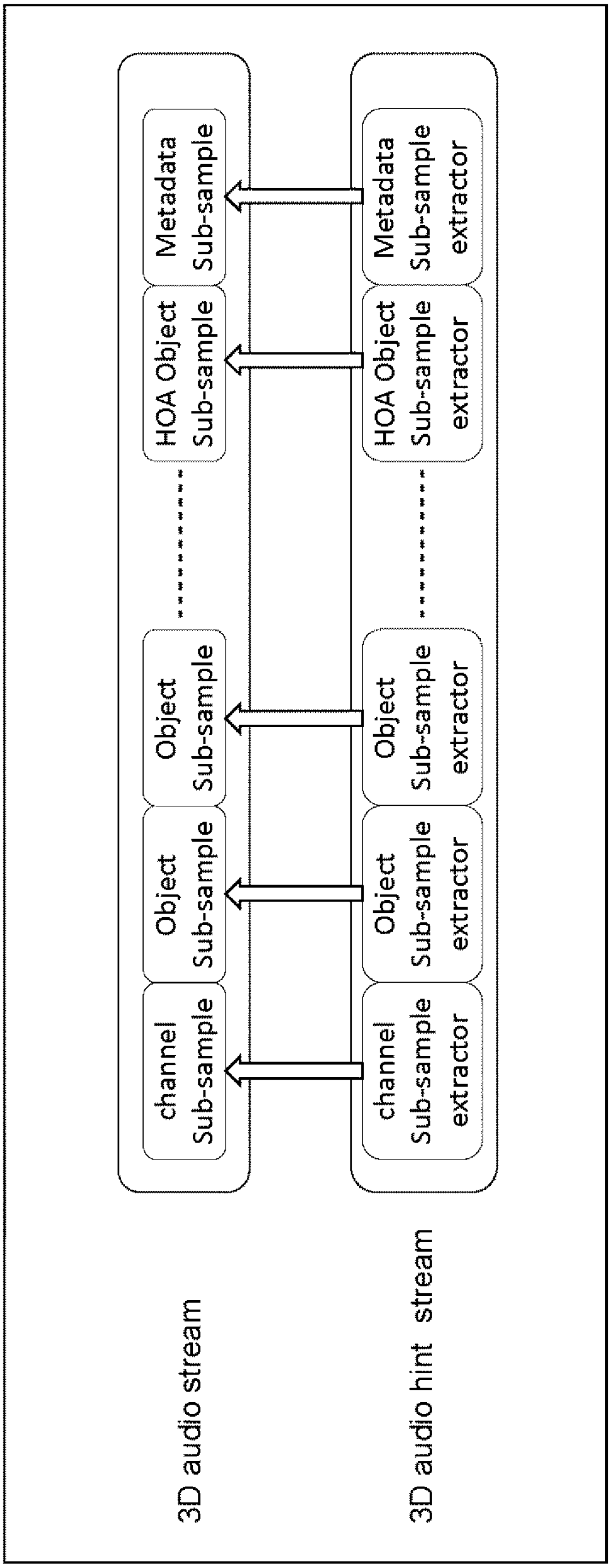
3D audio stream
3D audio hint stream
channel Sub-sample
Object Sub-sample
Object Sub-sample
HOA Object Sub-sample
Metadata Sub-sample
channel Sub-sample extractor
Object Sub-sample extractor
Object Sub-sample extractor
HOA Object Sub-sample extractor
Metadata Sub-sample extractor

FIG. 88

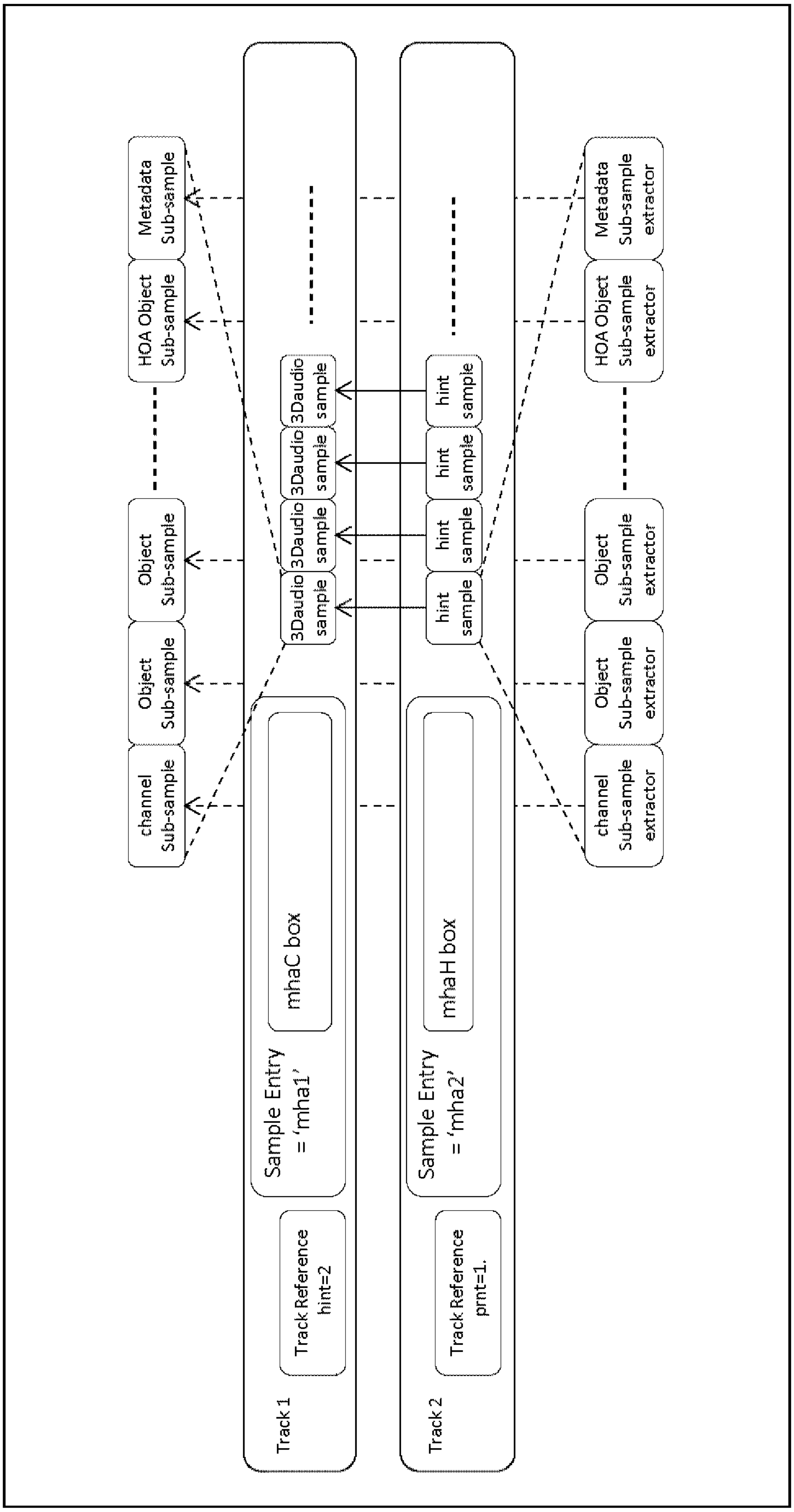
Track 1
Track Reference
hint=2
Sample Entry
= 'mha1'
mhaC box
3Daudio sample
3Daudio sample
3Daudio sample
3Daudio sample
channel Sub-sample
Object Sub-sample
Object Sub-sample
HOA Object Sub-sample
Metadata Sub-sample
Track 2
Track Reference
prnt=1.
Sample Entry
= 'mha2'
mhaH box
hint sample
hint sample
hint sample
hint sample
channel Sub-sample extractor
Object Sub-sample extractor
Object Sub-sample extractor
HOA Object Sub-sample extractor
Metadata Sub-sample extractor

FIG. 89

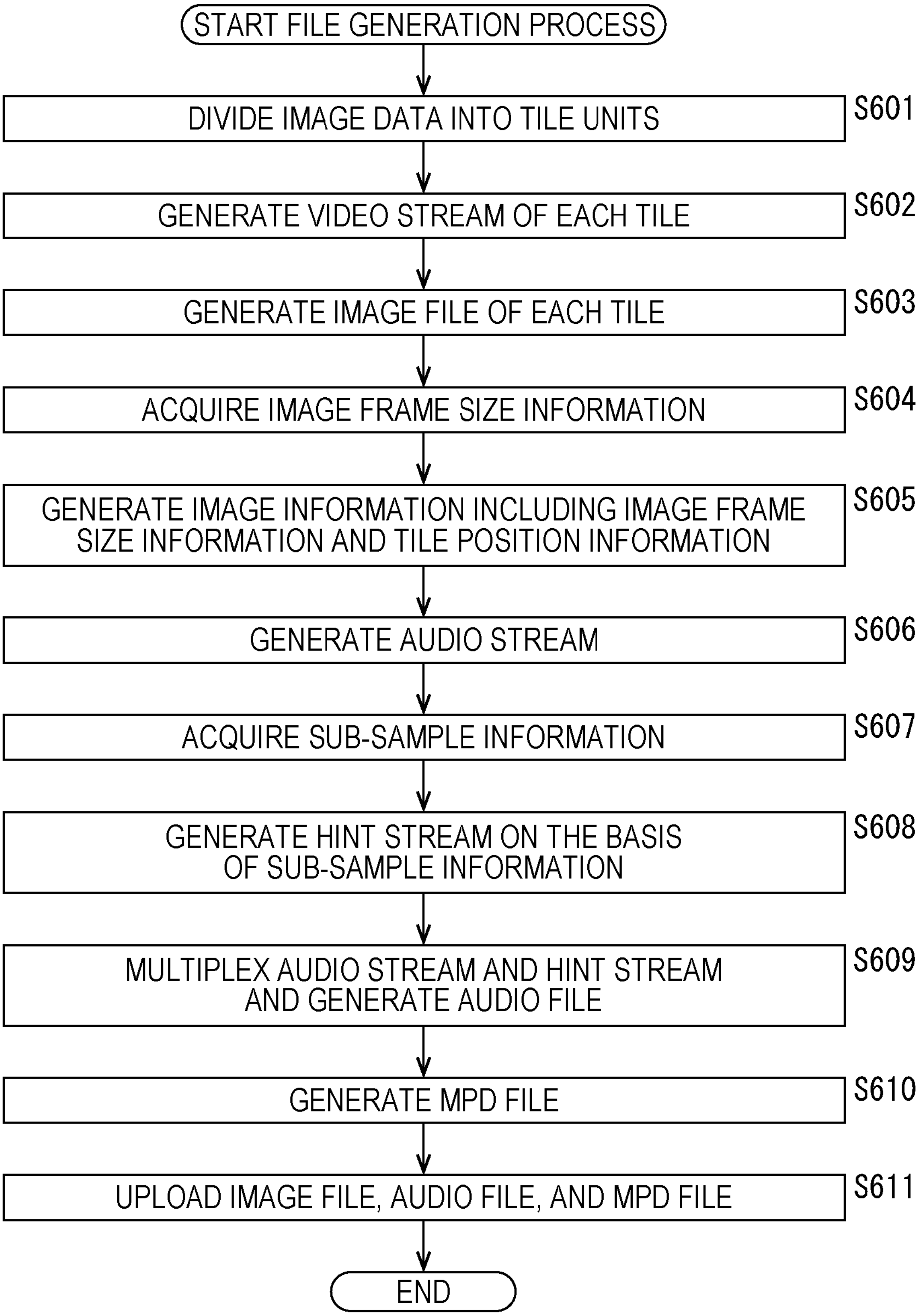
START FILE GENERATION PROCESS
DIVIDE IMAGE DATA INTO TILE UNITS
S601
GENERATE VIDEO STREAM OF EACH TILE
S602
GENERATE IMAGE FILE OF EACH TILE
S603
ACQUIRE IMAGE FRAME SIZE INFORMATION
S604
GENERATE IMAGE INFORMATION INCLUDING IMAGE FRAME SIZE INFORMATION AND TILE POSITION INFORMATION
S605
GENERATE AUDIO STREAM
S606
ACQUIRE SUB-SAMPLE INFORMATION
S607
GENERATE HINT STREAM ON THE BASIS OF SUB-SAMPLE INFORMATION
S608
MULTIPLEX AUDIO STREAM AND HINT STREAM AND GENERATE AUDIO FILE
S609
GENERATE MPD FILE
S610
UPLOAD IMAGE FILE, AUDIO FILE, AND MPD FILE
S611
END

FIG. 90

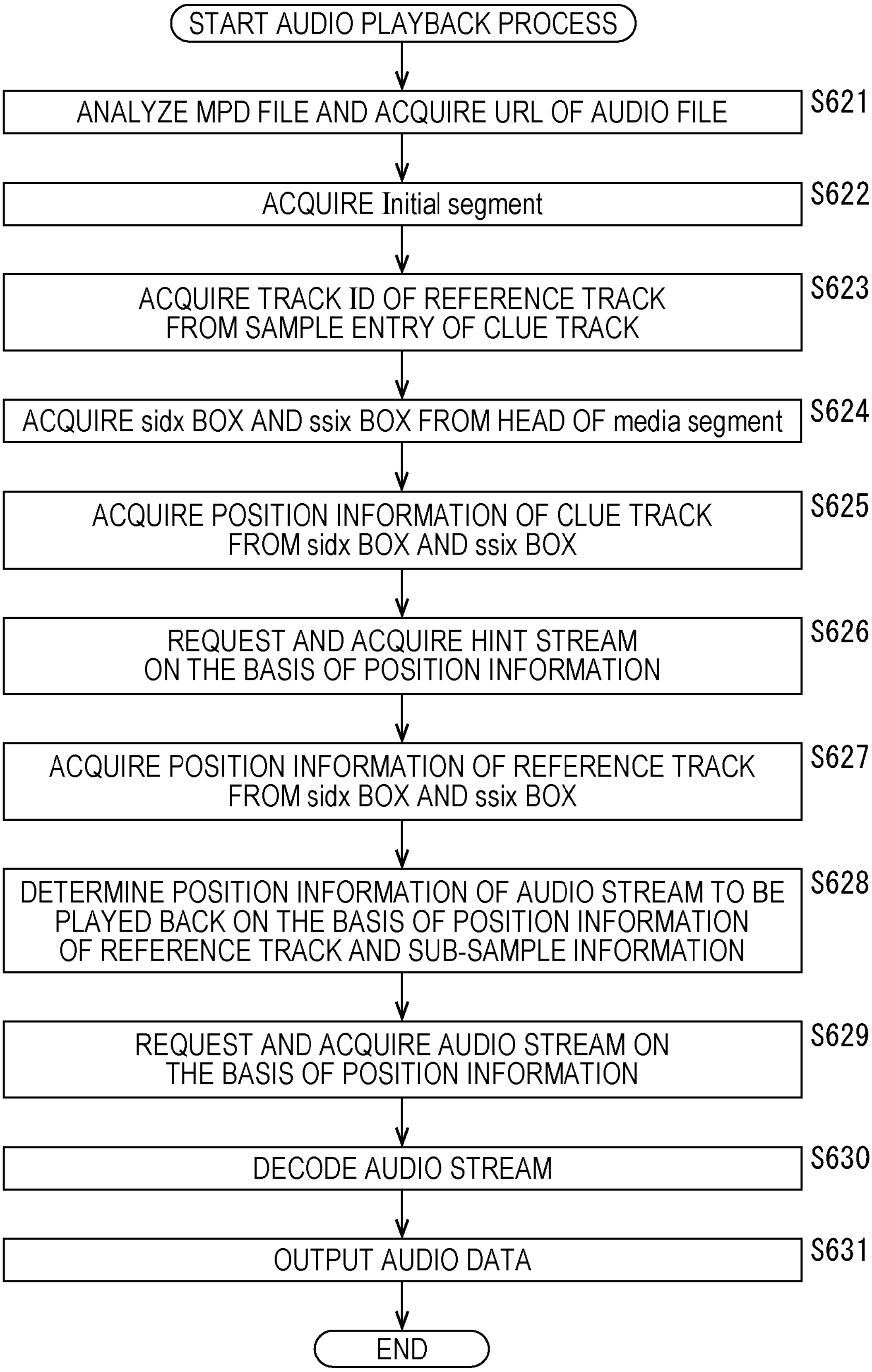
START AUDIO PLAYBACK PROCESS
ANALYZE MPD FILE AND ACQUIRE URL OF AUDIO FILE
S621
ACQUIRE Initial segment
S622
ACQUIRE TRACK ID OF REFERENCE TRACK FROM SAMPLE ENTRY OF CLUE TRACK
S623
ACQUIRE sidx BOX AND ssix BOX FROM HEAD OF media segment
S624
ACQUIRE POSITION INFORMATION OF CLUE TRACK FROM sidx BOX AND ssix BOX
S625
REQUEST AND ACQUIRE HINT STREAM ON THE BASIS OF POSITION INFORMATION
S626
ACQUIRE POSITION INFORMATION OF REFERENCE TRACK FROM sidx BOX AND ssix BOX
S627
DETERMINE POSITION INFORMATION OF AUDIO STREAM TO BE PLAYED BACK ON THE BASIS OF POSITION INFORMATION OF REFERENCE TRACK AND SUB-SAMPLE INFORMATION
S628
REQUEST AND ACQUIRE AUDIO STREAM ON THE BASIS OF POSITION INFORMATION
S629
DECODE AUDIO STREAM
S630
OUTPUT AUDIO DATA
S631
END

FIG. 91

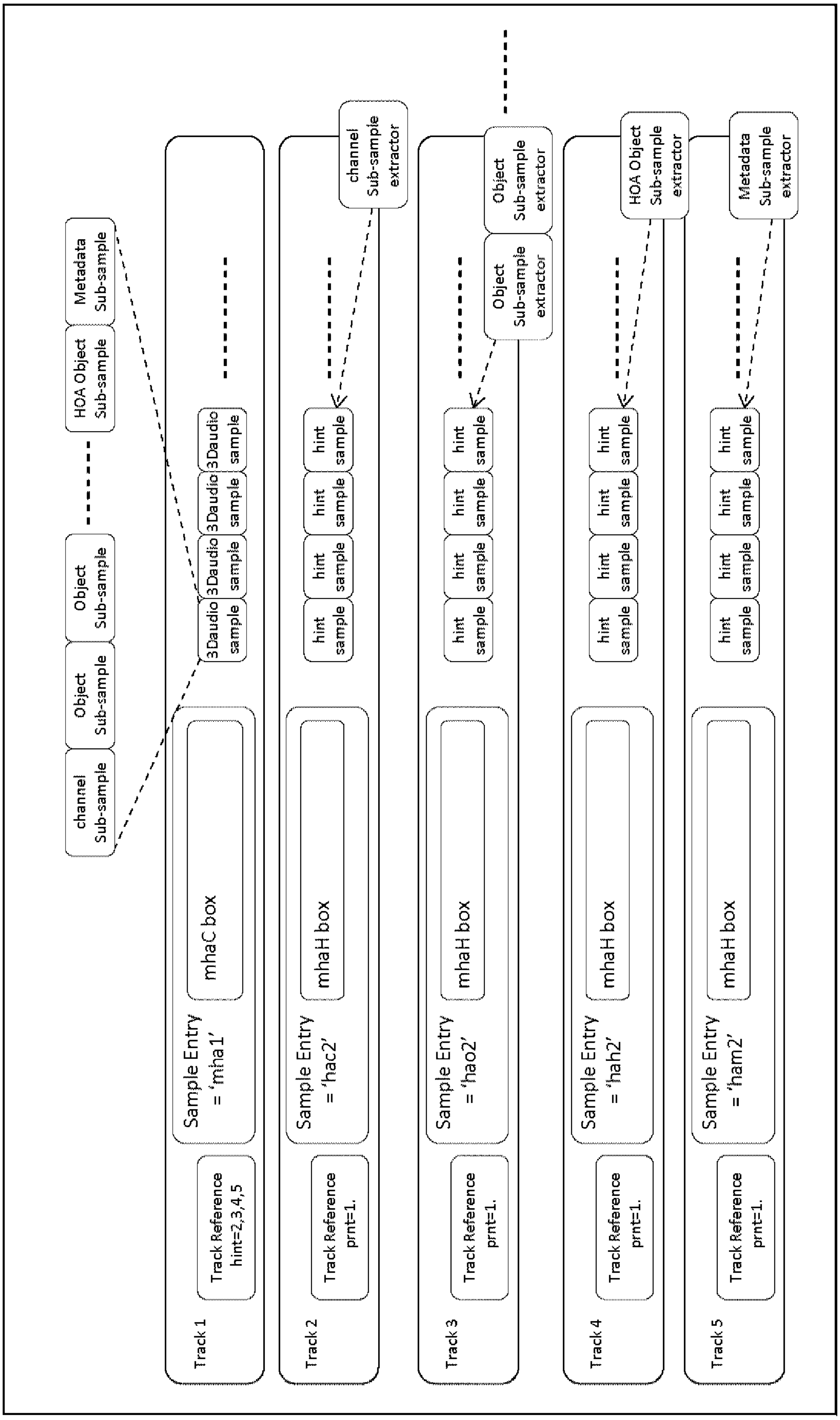
Track 1
Track Reference hint=2,3,4,5
Sample Entry = 'mha1'
mhaC box
3Daudio sample
channel Sub-sample
Object Sub-sample
Object Sub-sample
HOA Object Sub-sample
Metadata Sub-sample
Track 2
Track Reference prnt=1.
Sample Entry = 'hac2'
mhaH box
hint sample
channel Sub-sample extractor
Track 3
Track Reference prnt=1.
Sample Entry = 'hao2'
mhaH box
hint sample
Object Sub-sample extractor
Object Sub-sample extractor
Track 4
Track Reference prnt=1.
Sample Entry = 'hah2'
mhaH box
hint sample
HOA Object Sub-sample extractor
Track 5
Track Reference prnt=1.
Sample Entry = 'ham2'
mhaH box
hint sample
Metadata Sub-sample extractor

FIG. 92

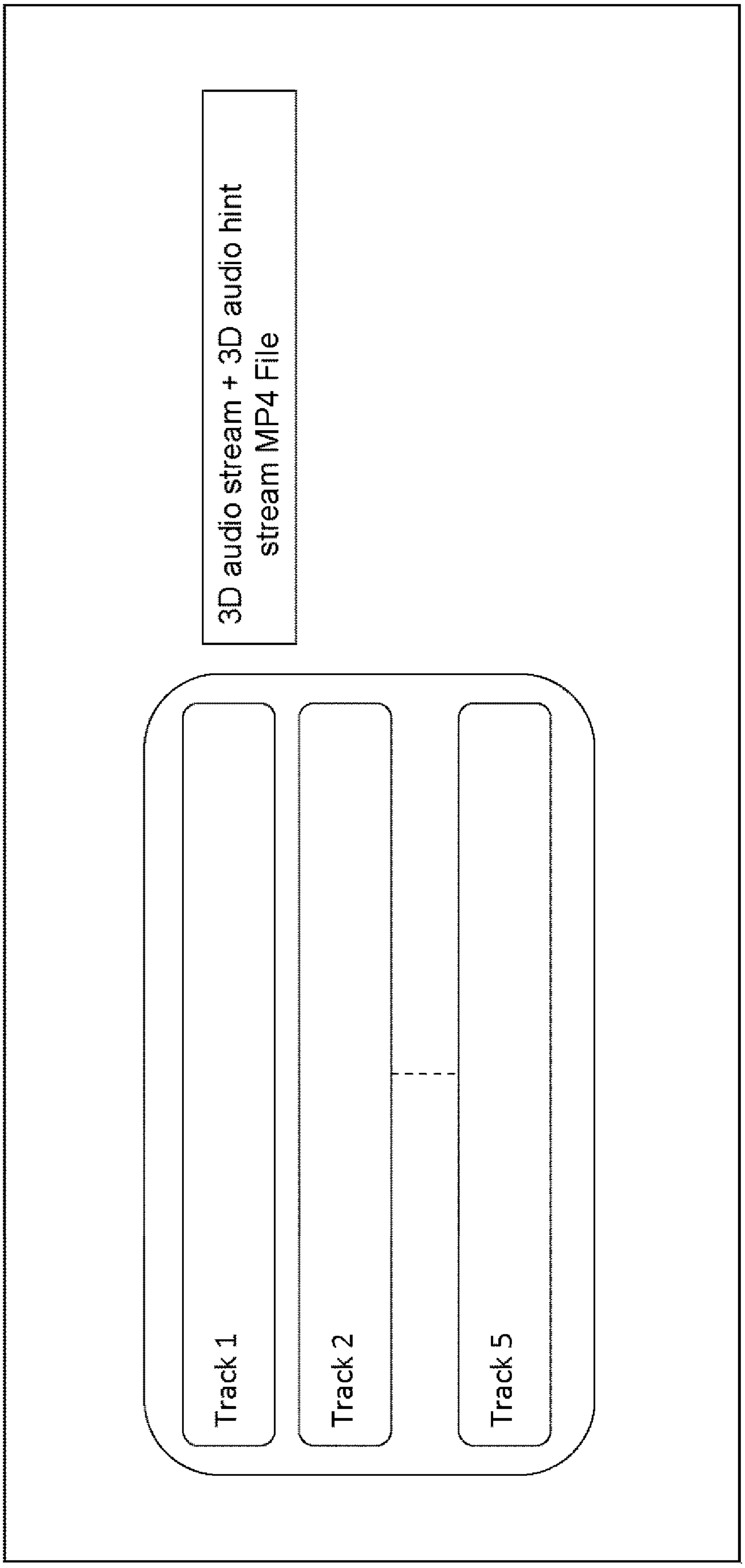
3D audio stream + 3D audio hint stream MP4 File
Track 1
Track 2
Track 5

FIG. 93

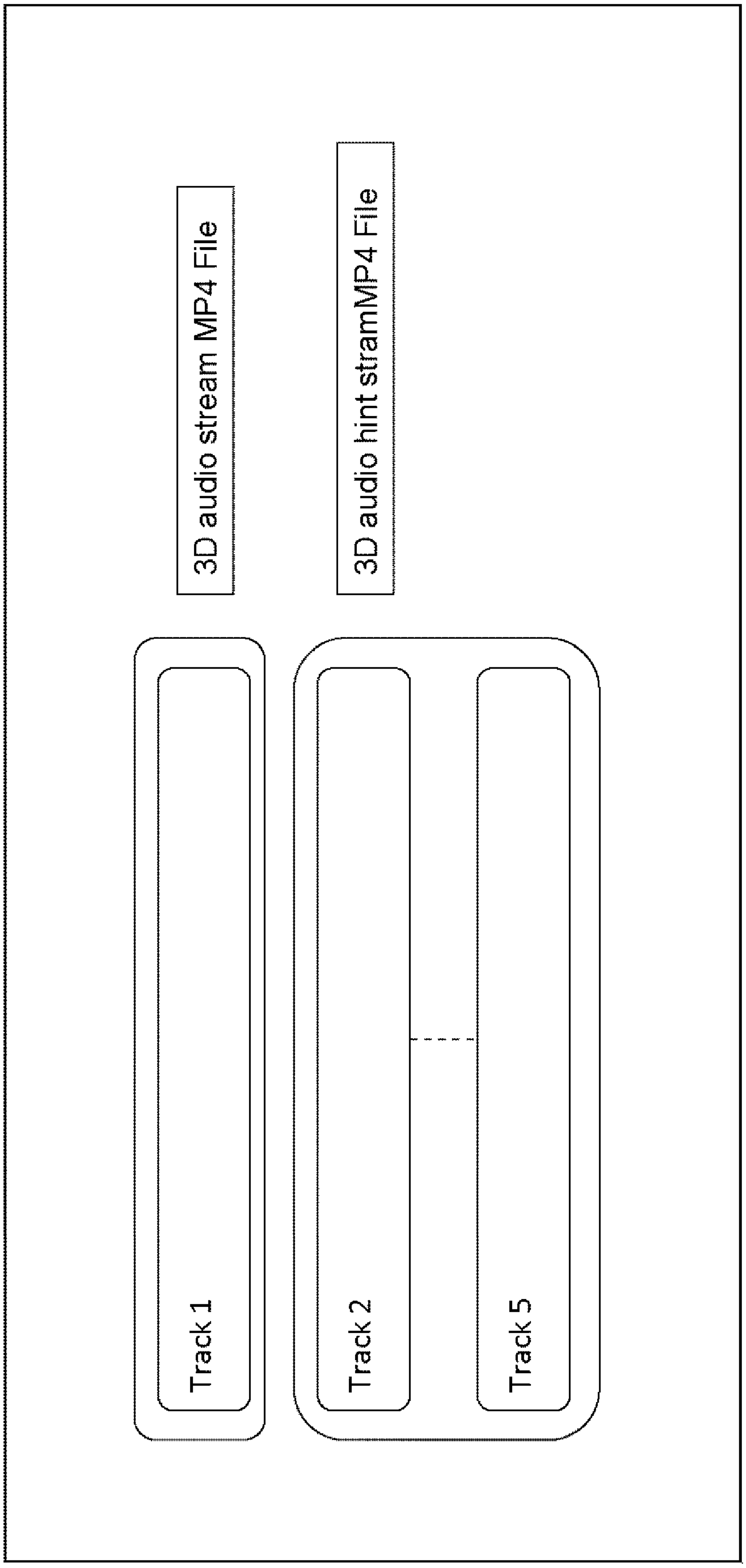
3D audio stream MP4 File
3D audio hint stramMP4 File
Track 1
Track 2
Track 5

FIG. 94

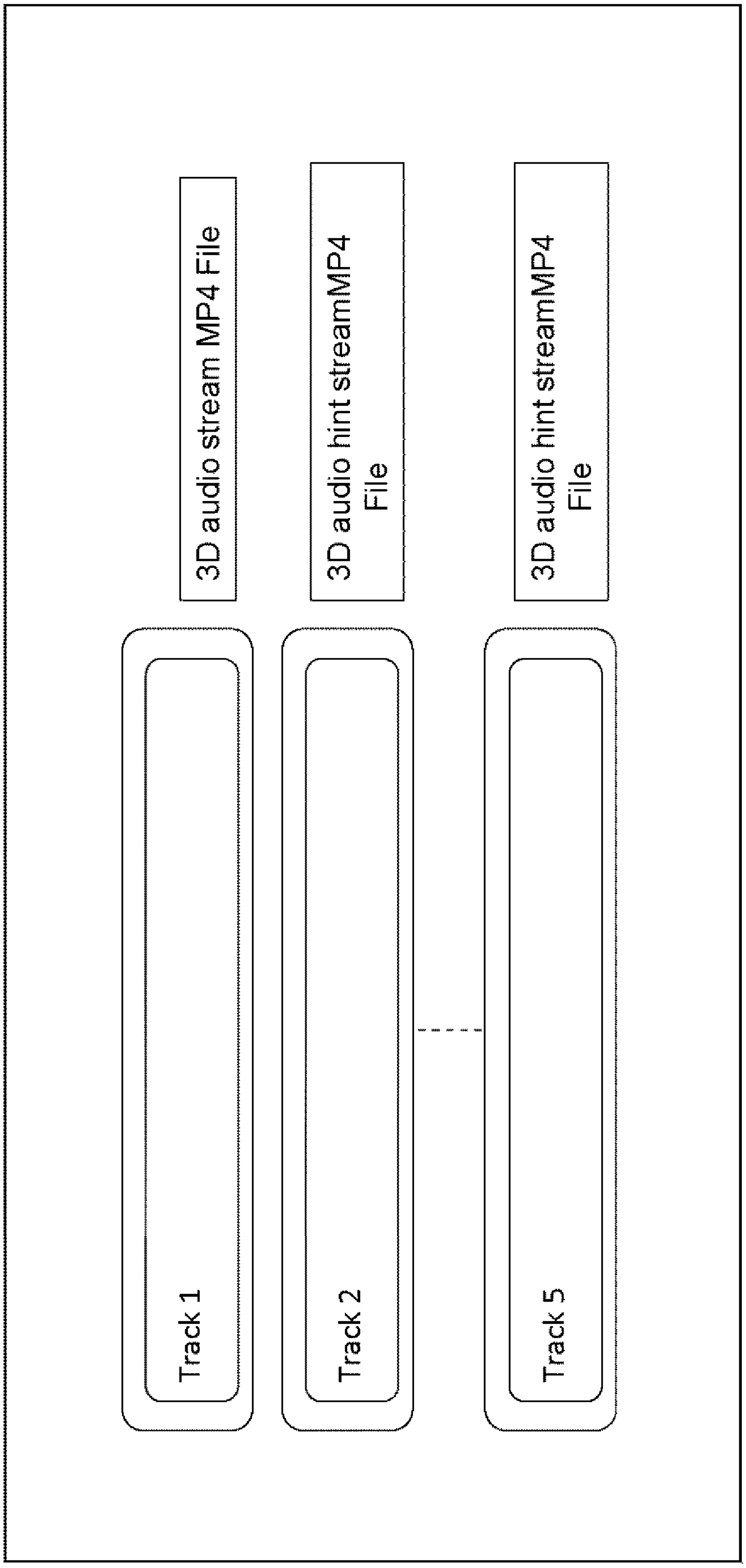
3D audio stream MP4 File
3D audio hint streamMP4 File
3D audio hint streamMP4 File
Track 1
Track 2
Track 5

FIG. 95

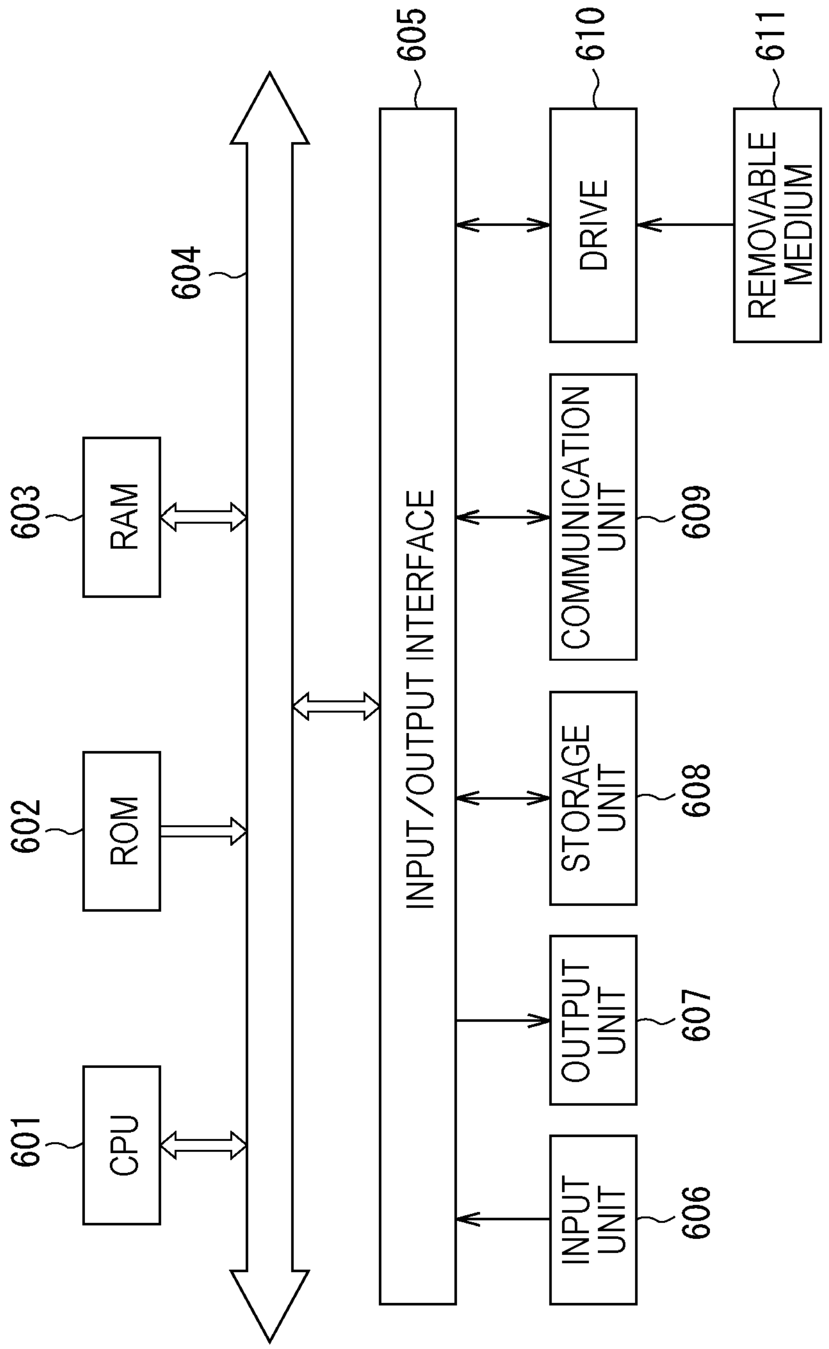
601
CPU
602
ROM
603
RAM
604
605
INPUT/OUTPUT INTERFACE
606
INPUT UNIT
607
OUTPUT UNIT
608
STORAGE UNIT
609
COMMUNICATION UNIT
610
DRIVE
611
REMOVABLE MEDIUM

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110069934 A1


### Non-patent literature cited in the description


- **VILLE PULKKI.** Virtual Sound Source Positioning Using Vector Base Amplitude Panning. *Journal of AES,* 1997, vol. 45 (6), 456-466